(19) Europäisches Patentamt
European Patent Office
Office européen des brevets

(11) **EP 2 100 258 B1**

(12) **EUROPÄISCHE PATENTSCHRIFT**

(45) Veröffentlichungstag und Bekanntmachung des Hinweises auf die Patenterteilung:
**03.08.2020   Patentblatt 2011/31**

(51) Int Cl.:
***G06K 9/46*** *(2006.01)*

(21) Anmeldenummer: **07866246.7**

(22) Anmeldetag: **18.12.2007**

(86) Internationale Anmeldenummer:
**PCT/EP2007/011131**

(87) Internationale Veröffentlichungsnummer:
**WO 2008/074476 (26.06.2008 Gazette 2008/26)**

(54) **VORRICHTUNG, VERFAHREN UND COMPUTERPROGRAMM ZUM IDENTIFIZIEREN EINES VERKEHRSZEICHENS IN EINEM BILD**

DEVICE, METHOD AND COMPUTER PROGRAM FOR IDENTIFYING A ROAD SIGN IN AN IMAGE

DISPOSITIF, PROCÉDÉ ET PROGRAMME D'ORDINATEUR POUR IDENTIFIER UN SIGNAL ROUTIER SUR UNE IMAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.12.2006   DE 102006059663**

(43) Veröffentlichungstag der Anmeldung:
**16.09.2009   Patentblatt 2009/38**

(73) Patentinhaber: **Fraunhofer-Gesellschaft zur Förderung der angewandten Forschung e.V.
80686 München (DE)**

(72) Erfinder: **KLEFENZ, Frank
68159 Mannheim (DE)**

(74) Vertreter: **Burger, Markus et al
Schoppe, Zimmermann, Stöckeler & Zinkler
Patentanwälte
Postfach 246
82043 Pullach bei München (DE)**

(56) Entgegenhaltungen:
- **GARCIA-GARRIDO M A ET AL: "Fast traffic sign detection and recognition under changing lighting conditions" 2006 IEEE INTELLIGENT TRANSPORTATION SYSTEMS CONFERENCE (IEEE CAT. NO. 06TH8865) IEEE PISCATAWAY, NJ, USA, 17. September 2006 (2006-09-17), - 20. September 2006 (2006-09-20) Seiten 811-816, XP002480123 ISBN: 1-4244-0093-7**
- **JUN MIURA ET AL: "An active vision system for real-time traffic sign recognition" INTELLIGENT TRANSPORTATION SYSTEMS, 2000. PROCEEDINGS. 2000 IEEE OCTOBER 1-3, 2000, PISCATAWAY, NJ, USA,IEEE, 1. Oktober 2000 (2000-10-01), Seiten 52-57, XP010520515 ISBN: 978-0-7803-5971-0**
- **KEHTARNAVAZ N ET AL: "Stop-sign recognition based on color/shape processing" MACHINE VISION AND APPLICATIONS USA, Bd. 6, Nr. 4, September 1993 (1993-09), Seiten 206-208, XP002480124 ISSN: 0932-8092**
- **LOY G ET AL: "Fast shape-based road sign detection for a driver assistance system" INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, Bd. 1, 28. September 2004 (2004-09-28), Seiten 70-75, XP010765785 ISBN: 978-0-7803-8463-7**

**Beschreibung**

Die vorliegende Erfindung bezieht sich allgemein auf eine Vorrichtung, ein Verfahren und ein Computerprogramm zum Identifizieren eines Verkehrszeichens in einem Bild, im Speziellen auf eine Verkehrszeichenerkennung unter Verwendung einer Hough-Transformation.

Mit dem stetig zunehmenden Verkehrsfluss auf den Straßen sowie auch mit den zunehmenden Anforderungen der Autofahrer an die Sicherheit der Fahrzeuge ergibt sich ein immer stärkeres Bedürfnis, Verkehrszeichen automatisch zu erkennen. Eine Erkennung von Verkehrszeichen durch ein elektronisches System ermöglicht es, einen Fahrer auf Anforderungen der jeweiligen Verkehrssituation hinzuweisen, und ermöglicht es somit, Gefährdungen im Straßenverkehr rechtzeitig zu erkennen und diesen entgegenzuwirken.

Beispielsweise ist es möglich, durch ein System zur Verkehrszeichenerkennung durch Verkehrszeichen angezeigte Geschwindigkeitsbegrenzungen bzw. die Aufhebung derselben zu erkennen. So kann ein Fahrzeug beispielsweise eine permanente Anzeige der gerade geltenden Geschwindigkeitsbegrenzung liefern, so dass ein Fahrer von der Geschwindigkeitsbegrenzung in Kenntnis gesetzt wird, selbst wenn er das die Geschwindigkeitsbegrenzung anordnende Verkehrszeichen übersehen hat. Zusätzlich kann ein Fahrer beispielsweise durch ein optisches oder akustisches Signal gewarnt werden, wenn er die zulässige Höchstgeschwindigkeit (beispielsweise um mehr als eine maximal zulässige Abweichung) überschreitet.

Alternativ dazu ist es auch möglich, andere Verkehrsregelungen zu erkennen, beispielsweise eine Vorfahrtsregelung. Übersieht der Fahrer somit ein vorfahrts-regelndes Verkehrszeichen, was beispielsweise basierend auf der Erkennung des Verkehrszeichens und ferner basierend auf der Geschwindigkeit des Fahrzeugs ermittelt werden kann, so kann der Fahrer wiederum vor den sich daraus ergebenden Gefährdungen gewarnt werden. In ähnlicher Weise können beispielsweise Verkehrszeichen, die auf besondere Gefahren hinweisen (z. B. Schleudergefahr, starkes Gefälle, scharfe Kurve, und Ähnliches) automatisch erkannt werden. Wiederum kann eine Mitteilung an den Benutzer bzw. eine Warnung an den Benutzer erfolgen, wenn dieser sein Fahrverhalten nicht an die durch das Verkehrszeichen angezeigte Situation anpasst (beispielsweise zu schnell auf eine scharfe Kurve zufährt).

Es bestehen bereits verschiedene Ansätze zur Erkennung von Verkehrszeichen. Dabei tritt jedoch typischerweise die Schwierigkeit auf, dass die Erkennung von Verkehrszeichen in komplexen Umgebungssituationen nicht mit der erforderlichen sehr hohen Sicherheit erfolgen kann. Außerdem bestehen bei herkömmlichen Systemen große Probleme, wenn Verkehrszeichen beispielsweise teilweise verdeckt sind, teilweise in einem Schattenbereich liegen, oder verschmutzt bzw. beschädigt (z. B. verbogen) sind.

Die Veröffentlichung "Fast traffic sign detection and recognition under chancing lighting conditions" von M.A. Garcia-Garrido u.a. (veröffentlicht in : Proceedings of the IEEE ITSC 2006, 2006 IEEE intelligent transportation systems conference, Toronto, Kanada, September 17 - 20, 2006) beschreibt ein System zur Verkehrszeichendetektion und Klassifikation. Das System ist in drei Stufen unterteilt: zuerst erfolgt eine Detektion unter Verwendung der Hough-Transformation von einer Information über die Kanten des Bildes; als zweites erfolgt eine Klassifikation unter Verwendung eines neuronalen Netzwerks; als drittes erfolgt eine Verfolgung unter Verwendung eines Kalman-Filters, was das System mit einem Gedächtnis versieht.

Die Veröffentlichung "An active vision system für real-time traffic sign recognition" von J. Miura (veröffentlicht in : 2000 IEEE intelligent transportation systems, Conference Proceedings, Dearborn (MI), USA, October 1- 3, 2000) beschreibt ein System zur Realzeit-Verkehrszeichen-Erkennung. Das System umfasst zwei Kameras, wobei eine mit einer Weitwinkel-Linse ausgestattet ist, und wobei die andere mit einer Teleobjektivlinse ausgestattet ist. Das System umfasst ferner einen Personalcomputer mit einer Bildverarbeitungskarte. Das System detektiert zunächst Kandidaten für Verkehrszeichen in dem Weitbwinkelbild unter Verwendung von Farbe, Intensität und Forminformation. Für jeden Kandidaten wird die Teleobjektiv-Kamera auf seine vorausgesagte Position ausgerichtet, um den Kandidaten größer in dem Bild aufzunehmen. Der Erkennungsalgorithmus ist entworfen, indem eingebaute Funktionen einer herkömmlichen Bildverarbeitungskarte intensiv genutzt werden, um sowohl eine einfache Implementierung als auch eine schnelle Erkennung zu realisieren.

Die Veröffentlichung "Stop-sign recognition based on color/shape processing" von N. Kehtarnavaz u.a. beschreibt ein optisches Konzept zur Stoppschilderkennung, basierend auf einer sequentiellen Verarbeitung von Farbe und Form. Das primäre Rot-Grün-Blau-Farbkoordinatensystem wird zunächst in das Sättigungs-Farbe-Helligkeitsfarbkoordinatensystem transformiert. Eine Kombination eines Mittelwerts-Filters, eines morphologischen Filters, eines Sobel-Tandem-Operators und einer Hough-Transformation wird dann angewendet, um die Begrenzungskontur zu erhalten.

Die Veröffentlichung "Fast shape-based road sign detection for a driver assistance system" von G. Loy und N. Barns (veröffentlicht in: Proceedings of 2004 IEEE/RSJ International Conference on Intelligent Robots and Systems, September 28 - October 2, 2004 Sendai, Japan) beschreibt ein Verfahren zur Erkennung von dreieckigen, quadratischen und oktagonalen Verkehrszeichen. Das Verfahren verwendet die symmetrische Natur dieser Formen, zusammen mit dem Muster von Kanten-Orientierungen der gleichwinkligen Polygone mit einer bekannten Anzahl von Seiten, um mögliche Form-Mittelpunkt-Orte in dem Bild zu bestimmen.

Die Veröffentlichung "Automatic traffic sign recognition in digital images" von J. Hatzidimos (veröffentlicht in: Proceedings of the international conference on Theory and Applications of Mathematics and Informatics- ICTAMI 2004, Thessaloniki, Greece) beschreibt einen Algorithmus zur automatischen Erkennung von Verkehrszeichen in digitalen Bildern. Das Verfahren erkennt den Ort des Zeichens in dem Bild, basierend auf seine geometrischen Charakteristik und erkennt das Zeichen unter Verwendung von Farbinformation. Eine teilweise Überdeckung wird durch die Verwendung der Hough-Transformation behandelt.

Die Veröffentlichung "Fast and Robust Traffic Sign Detection" von A. Soetedjo und K. Yamada beschreibt die Detektion von Verkehrszeichen. Die äußeren Ellipsen des Zeichens werden durch Kombination der linken Fragmente und der rechten Fragmente des Ellipsenobjekts erhalten. Eine Suche basierend auf der geometrischen Fragmentierung wird verwendet, um Ellipsenfragmente zu finden. Diese Suche ist einem genetischen Algorithmus ähnlich und verwendet eine individuelle Population, eine Kreuzung und eine Zielfunktion.

In Anbetracht der oben beschriebenen Herausforderungen ist es die Aufgabe der vorliegenden Erfindung, ein Konzept zur Erkennung von Verkehrszeichen zu schaffen, das einen guten Kompromiss zwischen einer zuverlässigen Erkennung von Verkehrszeichen und einem erforderlichen Rechenaufwand liefert.

Diese Aufgabe wird durch eine Vorrichtung zum Identifizieren von Verkehrszeichen gemäß Anspruch 1, durch ein Verfahren zum Identifizieren von Verkehrszeichen gemäß Anspruch 13 und durch ein Computerprogramm gemäß Anspruch 15 gelöst.

Die vorliegende Erfindung schafft eine Vorrichtung zum Identifizieren eines Verkehrszeichens in einem Bild. Die

Vorrichtung umfasst einen Hough-Transformator, der ausgelegt ist, um eine Mehrzahl von in verschiedenen Richtungen durch das Bild verlaufenden Strecken in dem Bild oder in einem davon abgeleiteten Kantenbild zu identifizieren. Die Vorrichtung umfasst ferner einen Formenerkenner, der ausgelegt ist, um basierend auf den identifizierten Strecken eine vorgegebene Form in dem Bild oder in dem davon abgeleiteten Kantenbild zu erkennen. Die Vorrichtung umfasst außerdem einen Musteridentifizierer, der ausgelegt ist, um basierend auf der erkannten vorgegebenen Form einen der erkannten vorgegebenen Form entsprechenden Bildausschnitt auszuwählen, und um basierend auf dem ausgewählten Bildausschnitt ein Verkehrszeichen zu identifizieren.

Es ist ein wichtiger Gedanke der vorliegenden Erfindung, dass eine Erkennung zum Formen besonders zuverlässig erfolgen kann, wenn in verschiedene Richtungen durch das Bild verlaufende Strecken durch einen Hough-Transformator identifiziert werden, da ein Hough-Transformator eine besonders zuverlässige Information über verschiedene Strecken liefert. Insbesondere ist ein Hough-Transformator in der Lage, auch unterbrochene Strecken als eine einzige Strecke zu erkennen, so lange gewährleistet ist, dass ein ausreichendes Teilstücke einer Strecke in dem Bild noch vorhanden ist. Somit wird durch die Verwendung einer Hough-Transformation insgesamt sichergestellt, dass der Formenerkenner eine Information über in dem Bild verlaufende Strecken in einer möglichst kompakten und nicht in viele kleine Einzelstrecken zersplitterten Form erhält.

Diese Vorgehensweise ist besonders im Zusammenhang mit einer Verkehrszeichenerkennung besonders vorteilhaft, da die äußeren Umrisse der relevanten Verkehrszeichen im Wesentlichen durch eine Mehrzahl von geraden Linien beschrieben werden. Sofern Verkehrszeichen nicht rund sind, weisen diese überwiegend dreieckige oder quadratische Formen auf, wobei die Berandungen der Verkehrszeichen durch gerade Linien bzw. gerade Strecken gegeben sind. Ist daher in einem Bild eine unterbrochene gerade Strecke vorhanden, so kann davon ausgegangen werden, dass diese möglicherweise eine geradlinige Begrenzung eines Verkehrszeichens ist, die durch eine Störung (z. B. durch eine Abschattung oder eine Verschmutzung) unterbrochen ist.

Somit ist festzuhalten, dass gemäß einem wichtigen Gedanken der vorliegenden Erfindung ein Hough-Transformator dem Formenerkenner genau die Information über gerade Strecken in dem Bild liefert, die der Formenerkenner zur Erkennung der Verkehrszeichen benötigt.

Ferner wurde gemäß einem weiteren wichtigen Gedanken der vorliegenden Erfindung erkannt, dass eine Erkennung eines Verkehrszeichens allein aufgrund der Form eines äußeren Umrisses nicht möglich ist, da eine Mehrzahl von verschiedenen Verkehrszeichen die gleiche Form (rund, dreieckig oder quadratisch) aufweisen. Vielmehr ist es vorteilhaft, einen Musteridentifizierer zu verwenden, der basierend auf der erkannten vorgegebenen Form einen der erkannten vorgegebenen Form entsprechenden Bildausschnitt auswählt, um basierend auf dem ausgewählten Bildausschnitt ein Verkehrszeichen zu identifizieren. Somit gewährleistet die erfindungsgemäße Vorrichtung, dass eine Musteridentifikation nicht über dem gesamten Bild durchgeführt werden muss. Vielmehr wird ein einzelner Bildausschnitt ausgewählt, dessen Berandungen so gewählt sind, dass die durch die Berandungen beschriebene Form der Form eines Verkehrszeichen (z. B. rund, dreieckig oder quadratisch) entspricht.

In anderen Worten, der Formenerkenner identifiziert basierend auf der von dem Hough-Transformator gelieferten Information über durch das Bild verlaufende Strecken Formen, die auf das Vorhandensein von Verkehrszeichen hindeuten, und der Musteridentifizierer identifiziert das in dem durch den Formenerkenner beschriebenen Bildausschnitt enthaltene Muster.

Somit wird insgesamt in einem zweistufigen Prozess ein Verkehrszeichen in einem Bild identifiziert. Der Hough-Transformator liefert typischerweise eine besonders zuverlässige Aussage über gerade Linien, wie sie typischerweise die Umrisse von Verkehrszeichen beschreiben. Im Übrigen ermöglicht der zweistufige Prozess, der zunächst eine Erkennung von Linien bzw. Formen und daraufhin eine Identifikation eines Musters umfasst, eine besonders hohe Effizienz des erfindungsgemäßen Konzepts.

So erfolgt eine Vor-Identifizierung eines Verkehrszeichens basierend auf der Formenerkennung unter Verwendung der von dem Hough-Transformator gelieferten Strecken aus dem Gesamtbild, während eine zweite Stufe der Verkehrszeichenidentifizierung nur noch auf einem Bildausschnitt arbeitet und daher mit vergleichsweise geringer Rechenleistung auskommt.

Im Vergleich zu herkömmlichen Verfahren der Mustererkennung bringt das erfindungsgemäße Konzept somit eine besonders hohe Zuverlässigkeit mit sich, da ja der Hough-Transformator außerordentlich unempfindlich gegen Abschattungen oder Unterbrechungen von Linienzügen ist. Im Übrigen ist eine Hough-Transformation in effizienter Weise in Hardware oder in Software implementierbar.

Zusätzliche Effizienzvorteile ergeben sich durch das zweistufige Konzept, wodurch eine Musteridentifikation nur noch auf einzelnen Ausschnitten des Gesamtbildes durchgeführt werden muss, die als Kandidaten-Ausschnitte für ein Verkehrszeichen erkannt wurden.

Bei einem bevorzugten Ausführungsbeispiel der vorliegenden Erfindung ist der Formenerkenner ausgelegt, um basierend auf einer relativen Lage der identifizierten Strecken die vorgegebene Form in dem Bild oder in dem davon abgeleiteten Kantenbild zu erkennen. Es hat sich nämlich gezeigt, dass gerade die relative Lage von einzelnen Strecken zueinander ein Verkehrszeichen beschreibt, während hingegen eine absolute Lage des Verkehrszeichens in dem Bild weniger aussagekräftig ist. So können nämlich Verkehrszeichen sich in verschiedener Entfernung von einem Fahrzeug, von dem aus das Bild aufgenommen wird, befinden. Im Übrigen können Verkehrszeichen links oder rechts der Straße angeordnet sein. Ferner ist insbesondere auf mehrspurigen Straßen, wie z. B. auf Autobahnen, eine Lage des Verkehrszeichen in Bezug auf das Fahrzeug, aus dem heraus das Bild aufgenommen wird, wenig aussagekräftig. Ferner sei darauf hingewiesen, dass das Verkehrszeichen nicht notwendigerweise gerade steht, sondern gegenüber dem Fahrzeug geneigt sein kann. Dadurch ist auch eine Orientierung des Verkehrszeichens in dem Bild nicht von vorne herein klar. Vielmehr ist lediglich die Form an sich des Verkehrszeichens von wesentlicher Aussagekraft bzw. von wesentlichem Informationswert. Die Form des Verkehrszeichens aber wird durch die relative Lage der identifizierten Strecken, die als Umrisse des Verkehrszeichens angesehen werden können, gekennzeichnet.

Gemäß einem weiteren Ausführungsbeispiel der vorliegenden Erfindung ist der Formenerkenner ausgelegt, um aus einer Gesamtheit von identifizierten Strecken eine Teilmenge von ausgewählten identifizierten Strecken auszuwählen, um für die ausgewählten identifizierten Strecken relative Lageparameter zu bestimmen, die eine relative Lage der ausgewählten identifizierten Strecken zueinander oder eine relative Lage von Schnittpunkten der ausgewählten identifizierten Strecken beschreiben, und um basierend auf den relativen Lageparametern zu entscheiden, ob die ausgewählten identifizierten Strecken eine vorgegebene Vergleichsform beschreiben. Dabei werden bevorzugt die relativen Lageparameter für die ausgewählten identifizierten Strecken mit relativen Lageparametern von zu identifizierenden Vergleichs-Formen verglichen, um eine quantitative Beschreibung einer Abweichung zwischen den relativen Lageparametern für die ausgewählten identifizierten Strecken und den relativen Lageparametern der zu identifizierenden Vergleichs-Formen zu erhalten. In dem Bild oder in dem davon abgeleiteten Kantenbild wird bevorzugt dann eine der Vergleichs-Form entsprechende Form erkannt, wenn die relativen Lageparameter für die ausgewählten identifizierten Strecken von den relativen Lageparametern der Vergleichsform um höchstens eine vorgegebene, maximal zulässige Abweichung abweichen.

Das entsprechende Konzept ermöglicht es somit, aus einer vergleichsweise großen Anzahl von insgesamt identifizierten geraden Strecken durch Auswählen von einzelnen Kombinationen (bevorzugt einer vorgegebenen Anzahl von geraden Strecken) solche gerade Strecken zu identifizieren, die einen Umriss eines Verkehrszeichens beschreiben. Die Entscheidung darüber, ob ausgewählte gerade Strecken einen Umriss eines Verkehrszeichens beschreiben, erfolgt beispielsweise anhand von Verhältnissen der Längen der Strecken und/oder anhand von Winkeln zwischen den Strecken (also anhand von relativen Lageparametern).

Der Musteridentifizierer ist bei einem bevorzugten Ausführungsbeispiel ausgelegt, um basierend auf der Kantenform ein Bildmuster, das die erkannte Form ausfüllt, oder dessen Berandung durch die erkannte Form bestimmt wird, durch Vergleichen mit zumindest einem Vergleichs-Bildmuster zu identifizieren. In anderen Worten, der Musteridentifizierer vergleicht das Bildmuster in dem durch den Formenerkenner festgelegten Bildausschnitt mit einem Vergleichs-Bildmuster, z. B. einem Bild eines bekannten Verkehrszeichens. Eine Information über eine Ähnlichkeit zwischen dem Bildmuster in dem Bildausschnitt und dem Vergleichs-Bildmuster kann dann als ein zuverlässiges Kriterium dafür verwendet werden, ob das durch das Vergleichs-Bildmuster beschriebene Verkehrszeichen in dem Bildausschnitt gezeigt ist.

Bei einem weiteren bevorzugten Ausführungsbeispiel ist der Musteridentifizierer ausgelegt, um einen der erkannten Form entsprechenden Ausschnitt des Bildes auszuwählen, und um den Ausschnitt des Bildes und ein Vergleichs-Bildmuster durch eine Abbildung aneinander im Hinblick auf eine Größe und/oder eine Form und/oder eine Lage anzupassen. Somit wird erreicht, dass die Erkennung eines Verkehrszeichens davon unabhängig wird, welche relative Lage, Entfernung, Drehung oder Neigung das zu identifizierende Verkehrszeichen im Verhältnis zu dem Kraftfahrzeug, aus dem heraus das Bild aufgenommen wird, hat. Ist nämlich die Form des Bildausschnitts bekannt, so kann leicht bestimmt werden, wie der Bildausschnitt abgebildet (z. B. verzerrt, gedreht oder vergrößert) werden muss, so dass der Bildausschnitt mit dem Vergleichs-Bildmuster zumindest von seiner äußeren Form her übereinstimmt. Alternativ kann freilich auch das Vergleichsmuster so abgebildet werden, dass es dem identifizierten Bildausschnitt von seiner äußeren Umrandung entspricht.

Bei einem weiteren bevorzugten Ausführungsbeispiel ist der Hough-Transformator ferner ausgelegt, um gebogene Kreissegmente oder Ellipsensegmente, also Kreisbogensegmente (das heißt, Ausschnitte aus einer Kreislinie, im folgenden auch kurz als Kreissegment bzw. Kreisbogen bezeichnet) oder Ellipsenbogensegmente (das heißt, Ausschnitte aus einer Ellipsen-Linie, im Folgenden auch kurz als Ellipsensegment bzw. Ellipsenbogen bezeichnet), in dem Bild oder in dem davon abgeleiteten Kantenbild zu identifizieren. Die Vorrichtung umfasst in diesem Fall bevorzugt einen Ellipsenerkenner, der ausgelegt ist, um basierend auf den identifizierten gebogenen Kreissegmenten oder Ellipsensegmenten eine Lage einer Ellipse in dem Bild oder in dem davon abgeleiteten Kantenbild zu erkennen.

Eine zusätzliche Funktionalität zur Erkennung von Ellipsen ist besonders vorteilhaft, da eine Vielzahl von Verkehrszeichen eine runde Form aufweisen. Diese runde Form führt in dem Kamerabild aufgrund von perspektivischen Verzerrungen typischerweise zu einer ovalen bzw. elliptischen Form der an sich runden Verkehrszeichen. Daher führt der Einsatz eines Ellipsenerkenners zu einer besonders zuverlässigen Erkennung von Verkehrszeichen, auch wenn diese gegenüber dem Fahrzeug, aus dem heraus das Bild aufgenommen wird, beispielsweise geneigt oder anderweitig perspektivisch verzerrt sind. Die Erkennung der Ellipsen basierend auf einer durch einen Hough-Transformator gelieferten Information bringt die oben schon beschriebenen Vorteile, dass nämlich auch bei teilweiser Überdeckung oder Abschattung des Umrisses der Verkehrszeichen eine Erkennung immer noch gewährleistet ist. Ein Hough-Transformator ist nämlich besonders unempfindlich gegenüber derartigen Störungen eines Bildes. Im Übrigen sei darauf hingewiesen, dass durch die Verwendung einer Hough-Transformation zur Erkennung sowohl von Kreisen als auch von Ellipsen ein besonders effizienter Algorithmus vorliegt, da durch den Einsatz einer Hough-Transformation keine explizite Unterscheidung zwischen einer Erkennung von Kreisen oder Ellipsen gemacht werden muss. Dies beruht auf der Tatsache, dass durch eine Hough-Transformation bevorzugt Extrempunkte der Ellipsen identifiziert werden, an denen die Ellipsen durch Kreisbogensegmente angenähert werden können.

Die vorliegende Erfindung schafft ferner ein Verfahren zum Identifizieren von Verkehrszeichen in einem Bild. Das entsprechende Verfahren realisiert die Funktionalität der oben beschriebenen Vorrichtung und weist daher gegenüber herkömmlichen Verfahren dieselben Vorteile auf.

Die vorliegende Erfindung schafft ferner ein Computerprogramm zum Durchführen des genannten Verfahrens.

Bevorzugte Ausführungsbeispiele der vorliegenden Erfindung werden nachfolgend Bezug nehmend auf die beiliegenden Zeichnungen näher erläutert. Es zeigen:

Fig. 1     ein Blockschaltbild einer erfindungsgemäßen Vorrichtung zum Ermitteln einer Information über eine Form und/oder eine Lage einer Ellipse in ei- nem graphischen Bild gemäß dem ersten Ausfüh- rungsbeispiel der vorliegenden Erfindung;

Fig. 2a    eine graphische Darstellung einer Ellipse sowie der Koordinaten eines ersten Ellipsenpunktes, ei- nes zweiten Ellipsenpunktes, eines dritten Ellip- senpunktes, eines vierten Ellipsenpunktes sowie eines Mittelpunktes der Ellipse;

Fig. 2b    eine graphische Darstellung einer in den Ursprung verschobenen Ellipse sowie von transformierten Koordinaten von zwei Ellipsenpunkten;

Fig. 3     eine graphische Darstellung eines beispielhaften Rasterbildes sowie von nacheinander verarbeiteten Bildausschnitten;

Fig. 4a    ein Blockschaltbild einer erfindungsgemäßen Vorrichtung zum Ermitteln Koordinaten eines El- lipsenpunktes gemäß einem zweiten Ausführungsbei- spiel der vorliegenden Erfindung;

Fig. 4b    eine graphische Darstellung von drei beispielhaf- ten Referenzkurven zur Verwendung in einer erfin- dungsgemäßen Mustererkennungseinrichtung;

Fig. 5a    eine erste graphische Darstellung eines beispiel- haften Rasterbildes mit darin markierten erkann- ten gebogenen Liniensegmenten;

Fig. 5b    eine zweite graphische Darstellung eines bei- spielhaften Rasterbildes mit darin gekennzeichne- ten erkann- ten gebogenen Liniensegmenten;

Fig. 6    ein Blockschaltbild einer Mustererkennungsein- richtung zur Verwendung in einer erfindungsgemä- ßen Vorrichtung zum Ermitteln einer Information über eine Form und/oder eine Lage einer Ellipse in einem graphischen Bild;

Fig. 7a    eine graphische Darstellung einer Vorgehensweise zum Durchschieben eines graphischen Bildes durch die Mustererkennungseinrichtung gemäß Fig. 6;

Fig. 7b    eine graphische Darstellung von Zeitsignale, die bei der Umwandlung eines Rasterbildes in paralle- le Zeitsignale entstehen;

Fig. 8    ein Blockschaltbild einer erfindungsgemäßen Vorrichtung zum Ermitteln einer Information über eine Form und/oder einer Lage einer Ellipse in einem graphischen Bild gemäß einem dritten Aus- führungsbeispiel der vorliegenden Erfindung;

Fig. 9    einen Ausschnitt aus einem Blockschaltbild einer erfindungsgemäßen Vorrichtung zum Ermitteln einer Information über eine Form und/oder eine Lage ei- ner Ellipse in einem graphischen Bild gemäß einem vierten Ausführungsbeispiel der vorliegenden Er- findung;

Fig. 10    ein Blockschaltbild einer erfindungsgemäßen Vorrichtung zum Identifizieren eines Verkehrszei- chens in einem Bild, gemäß einem Ausführungsbei- spiel der vorliegenden Erfindung;

Fig. 11a    ein Blockschaltbild eines Kantenerkenners zum Einsatz in der erfindungsgemäßen Vorrichtung zum Identifizieren eines Verkehrszeichens in einem Bild;

Fig. 11b    eine schematische Darstellung eines Bildes eines teilweise verdeckten Verkehrszeichens;

Fig. 11c    eine graphische Darstellung des durch eine Hough- Transformation verarbeiteten Bildes gemäß der Fig. 11b;

Fig. 12    ein Blockschaltbild eines erfindungsgemäßen Formenerkenners zum Einsatz in einer erfindungs- gemäßen Vorrichtung zum Identifizieren eines Ver- kehrszeichens, gemäß einem Ausführungsbeispiel der vorliegenden Erfindung;

Fig. 13a    eine schematische Darstellung einer Kreuzung mit einem Verkehrszeichen;

Fig. 13b    eine schematische Darstellung eines ersten Satzes von drei ausgewählten geraden Strecken;

Fig. 13c    eine schematische Darstellung eines zweiten Satzes von ausgewählten Strecken;

Fig. 13d    eine schematische Darstellung eines dritten Satzes von ausgewählten Strecken;

Fig. 14a    eine schematische Darstellung einer Beschrei- bungsform für einen Satz von drei Strecken;

Fig. 14b    eine schematische Darstellung einer Beschrei- bungsform für ein gleichseitiges Dreieck;

Fig. 15    eine schematische Darstellung einer Auswahl eines Bildausschnittes sowie einer Abbildung des Bild- ausschnittes auf eine vorgegebene Form;

Fig. 16    ein Blockschaltbild einer erfindungsgemäßen Vorrichtung zum Identifizieren eines Verkehrszei- chens in einem Bild, gemäß einem Ausführungsbei- spiel der vorliegenden Erfindung;

Fig. 17    ein Blockschaltbild eines erfindungsgemäßen Ellipsen-Erkenners zum Einsatz in einer erfin- dungsgemäßen Vorrichtung zum Identifizieren eines Verkehrszeichens in einem Bild;

Fig. 18    eine schematische Darstellung einer Vorgehenswei- se bei einer Identifizierung von vier Punkten, die zu einer Ellipse gehören;

Fig. 19    ein Flussdiagramm eines erfindungsgemäßen Verfah- rens zum Identifizieren eines Verkehrszeichens in einem Bild, gemäß einem Ausführungsbeispiel der vorliegenden Erfindung;

Fig. 20a    eine graphische Darstellung eines Bildes mit einem Verkehrszeichen;

Fig. 20b    eine graphische Darstellung eines zu dem Bild gemäß Fig. 20a gehörigen Kantenbilds;

Fig. 21a    eine graphische Darstellung eines zu einem Bild mit einem Verkehrszeichen gehörigen Kantenbilds, zusammen mit einer Markierung für eine identifi- zierte Ellipse;

Fig. 21b    eine graphische Darstellung des zu dem Kantenbild gemäß Fig. 21a gehörigen Bildes, zusammen mit einer Markierung einer Ellipse;

Fig. 21c    eine graphische Darstellung eines ellipsenförmi- gen Ausschnitts aus dem Bild gemäß Fig. 21b;

Fig. 22a    eine graphische Darstellung von verschiedenen Verkehrszeichen einer Verkehrszeichendatenbank;

Fig. 22b    eine schematische Darstellung eines Fuzzy-Farb- Histogramms, zur Verwendung in einer Mustererken- nung;

Fig. 23a    eine graphische Darstellung eines schwellwert- bewerteten Bildes eines Verkehrszeichens, zusam- men mit einer Markierung einer Ellipse;

Fig. 23b    eine graphische Darstellung eines Kantenbilds eines Verkehrszeichens, zusammen mit einer Mar- kierung einer Ellipse;

Fig. 24a    eine graphische Darstellung eines teilweise abgeschatteten Verkehrszeichen;

Fig. 24b    eine graphische Darstellung eines Kantenbildes eines Verkehrszeichens, zusammen mit einer Mar- kierung einer erkannten Ellipse;

Fig. 25a    eine graphische Darstellung eines Kantenbildes eines Verkehrszeichens, zusammen mit einer Mar- kierung einer erkannten Ellipse;

Fig. 25b    ein Kantenbild eines Verkehrszeichens;

Fig. 26    ein Flussdiagramm eines erfindungsgemäßen Verfah- rens zum Identifizieren eines Verkehrszeichens in einem Bild, gemäß einem Ausführungsbeispiel der vorliegenden Erfindung;

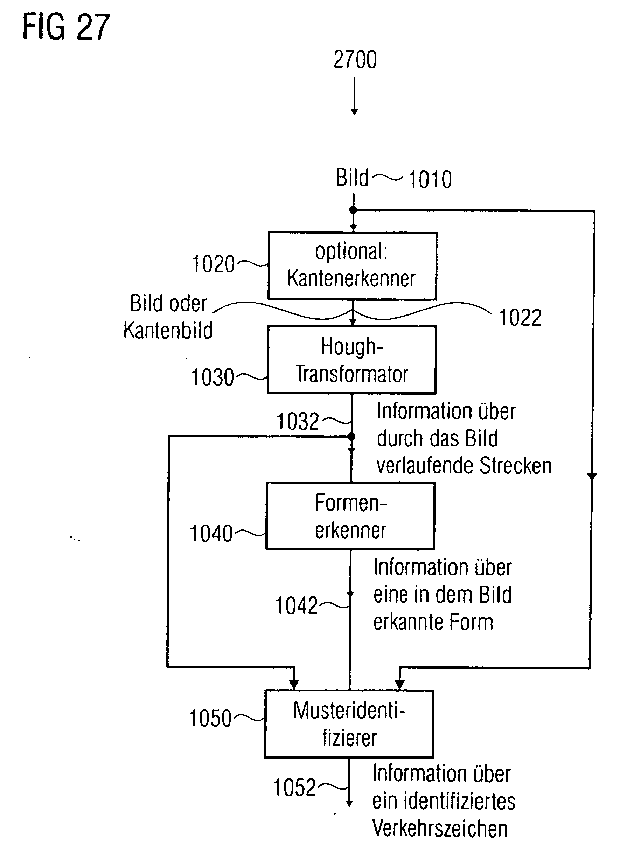

Fig. 27    ein Blockschaltbild einer erfindungsgemäßen Vorrichtung zum Identifizieren eines Verkehrszei- chens in einem Bild, gemäß einem Ausführungsbei- spiel der vorliegenden Erfindung;

Fig. 28    ein Blockschaltbild einer erfindungsgemäßen Vorrichtung zur Erkennung von Schriftzeichen in einem Bild, gemäß einem Ausführungsbeispiel der vorliegenden Erfindung;

Fig. 29    ein Blockschaltbild einer erfindungsgemäßen Vorrichtung zur Erkennung von Schriftzeichen in einem Bild, gemäß einem Ausführungsbeispiel der vorliegenden Erfindung;

Fig. 30a    eine graphische Darstellung von drei Schriftzei- chen "a" "c" "d";

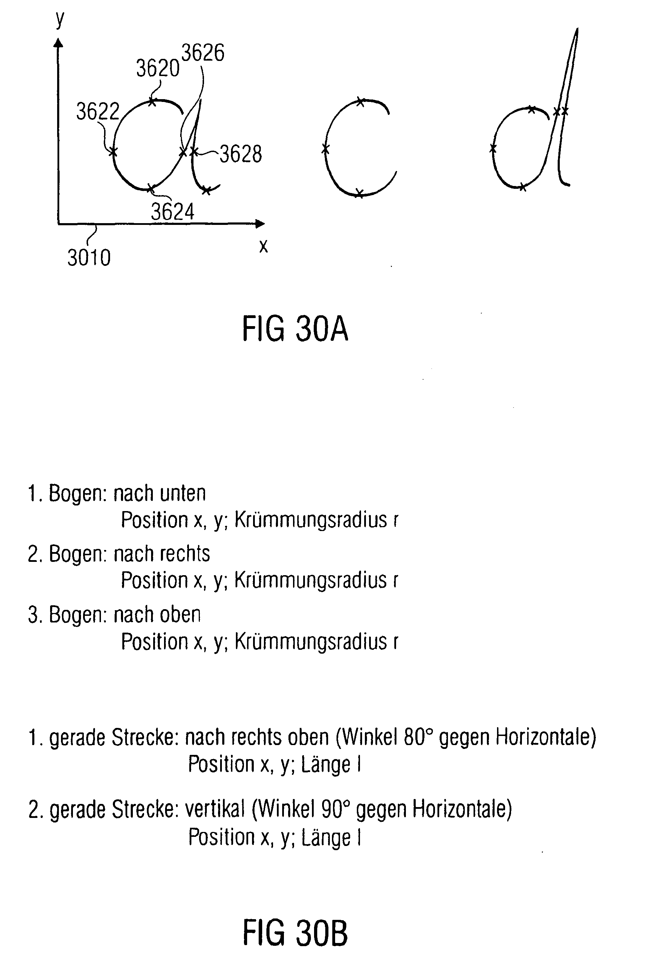

Fig. 30    eine Darstellung einer Schriftzeichen- Beschreibung des Schriftzeichens "a";

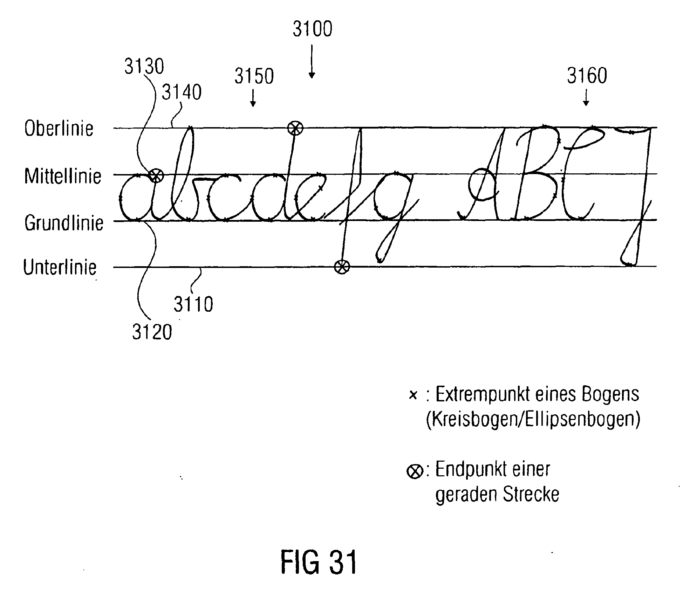

Fig. 31    eine graphische Darstellung einer Folge von zusammenhängenden Schriftzeichen sowie einer in dem Schriftbild auftretenden Unterlinie, Grundli- nie, Mittellinie und Oberlinie;

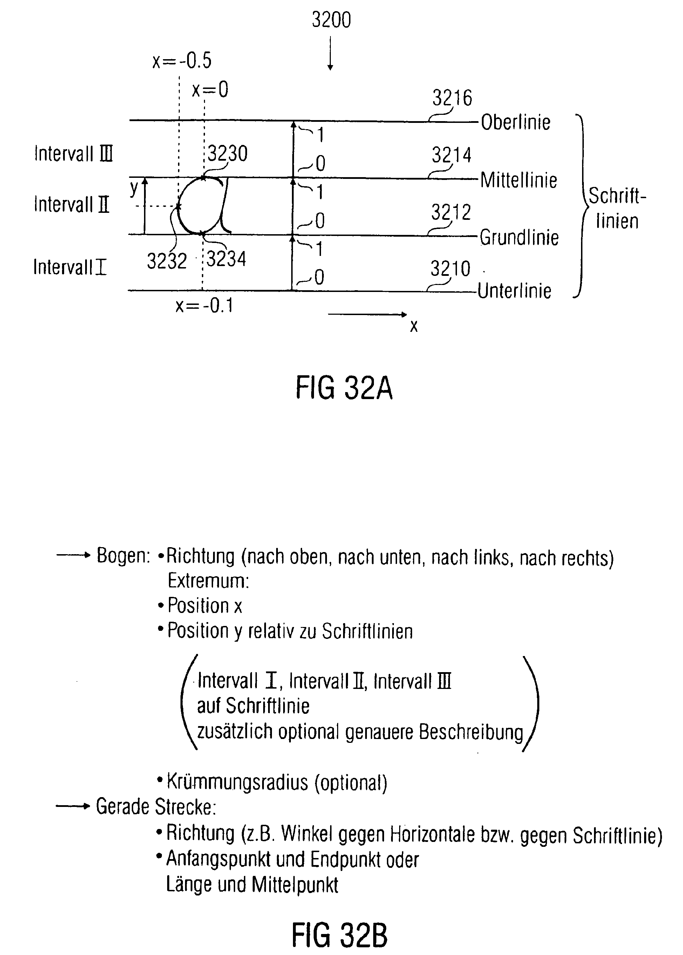

Fig. 32a    eine graphische Darstellung eines Schriftzeichens "a" in einem Liniensystem bestehend aus einer Un- terlinie, einer Grundlinie, einer Mittellinie und einer Oberlinie;

Fig. 32b    eine Darstellung einer beispielhaften Beschrei- bung eines Schriftzeichens;

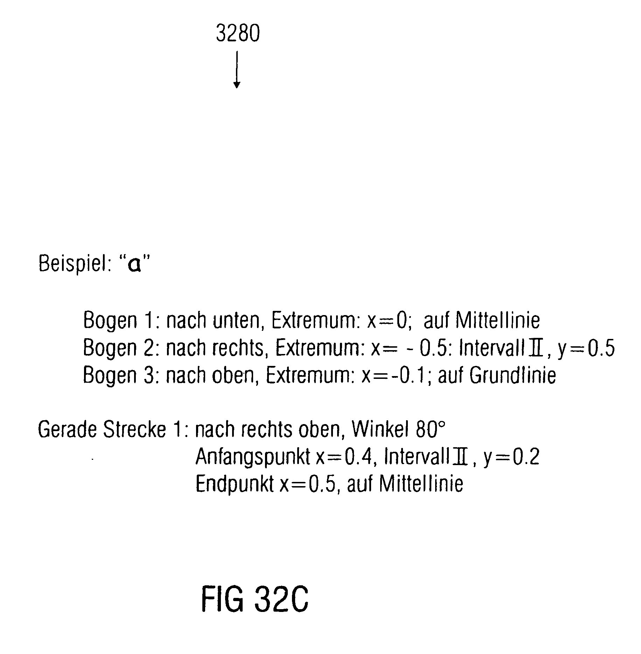

Fig. 32c    eine Darstellung einer beispielhaften Beschrei- bung des in der Fig. 32a gezeigten Schriftzei- chens "a";

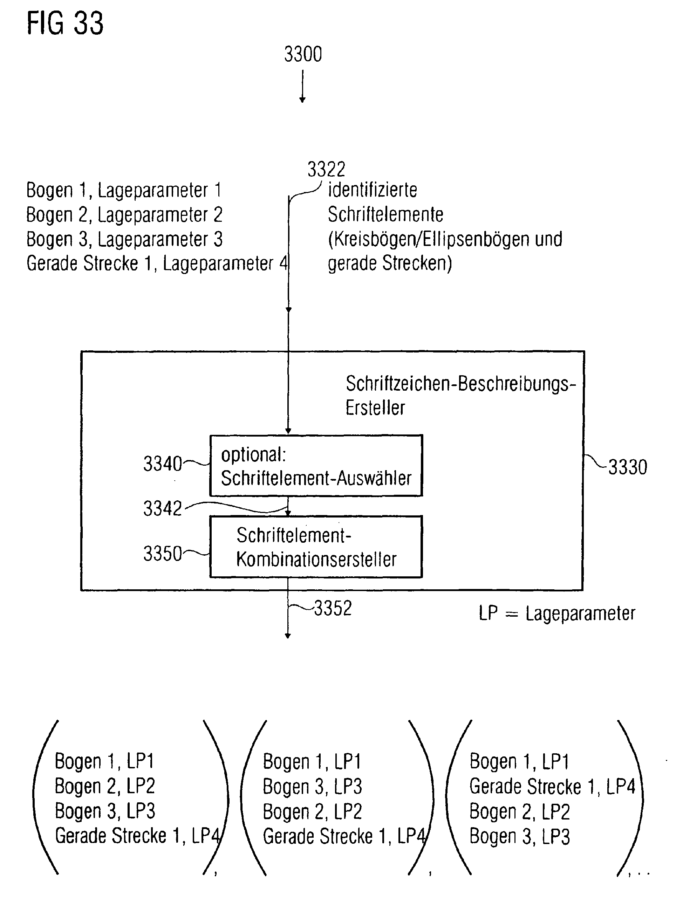

Fig. 33    ein Blockschaltbild eines erfindungsgemäßen Schriftzeichen-Beschreibungs-Erstellers, gemäß einem Aus- führungsbeispiel der vorliegenden Erfin- dung;

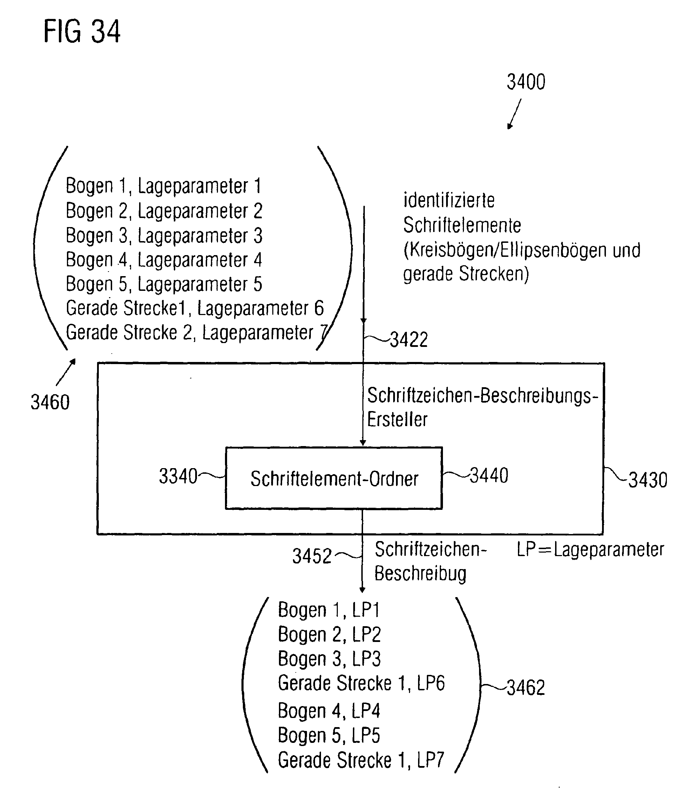

Fig. 34    ein Blockschaltbild eines erfindungsgemäßen Schriftzeichen-Beschreibungs-Erstellers, gemäß einem Aus- führungsbeispiel der vorliegenden Erfin- dung;

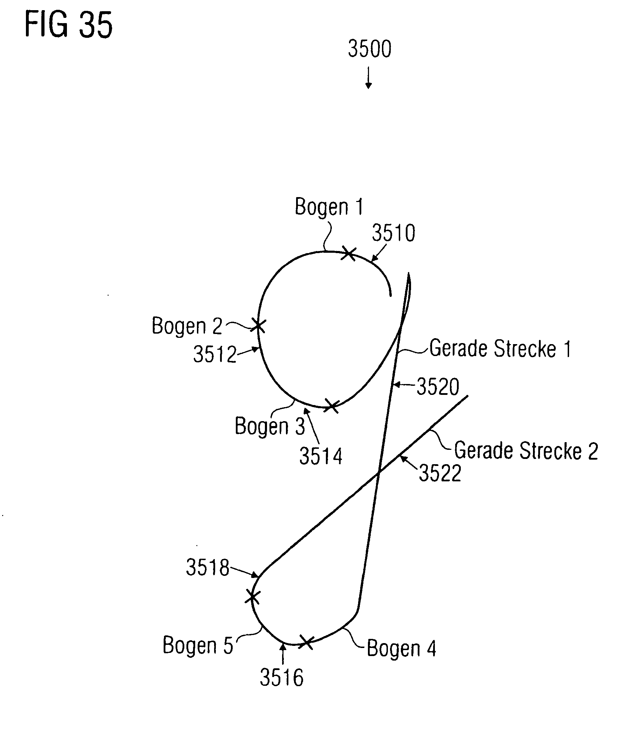

Fig. 35    eine graphische Darstellung eines Schriftzeichens "g";

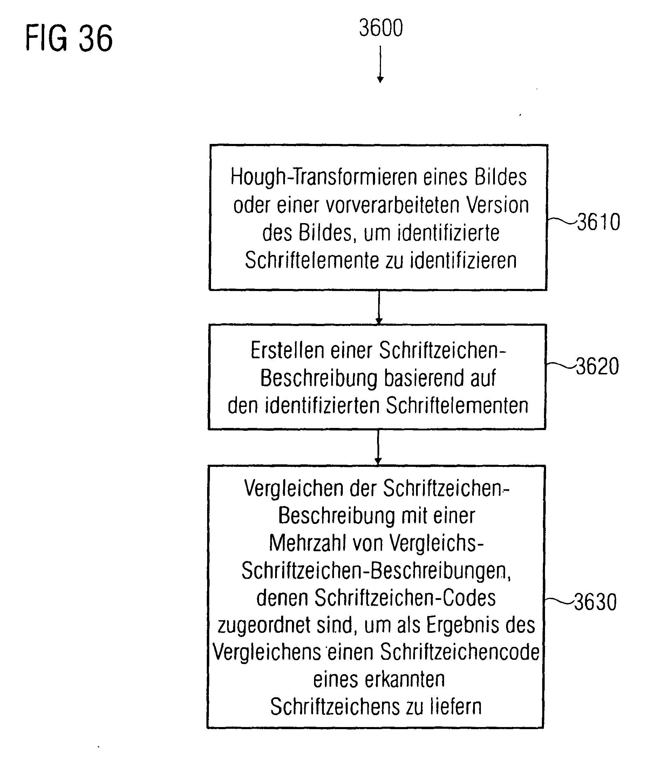

Fig. 36    ein Flussdiagramm eines erfindungsgemäßen Verfah- rens zur Erkennung eines Schriftzeichens in einem Bild;

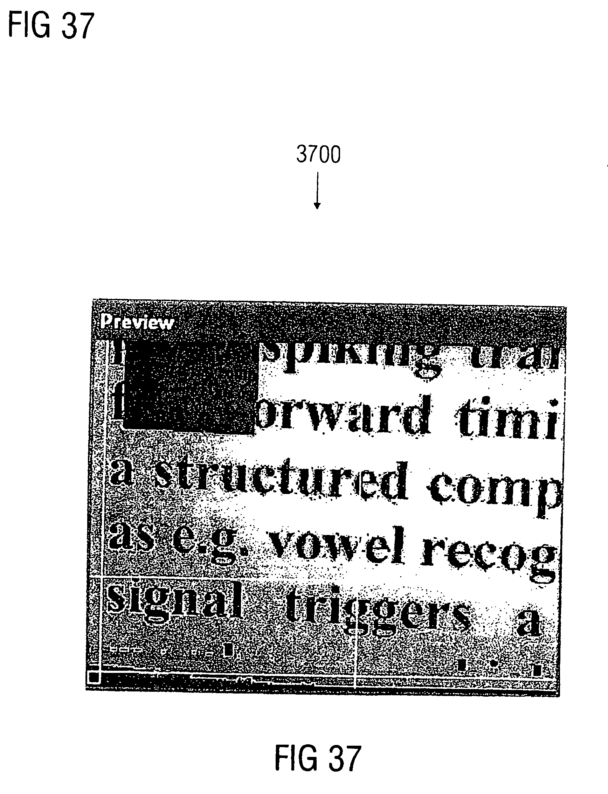

Fig. 37    eine graphische Darstellung von in einem Bild erkannten Extrempunkten; und

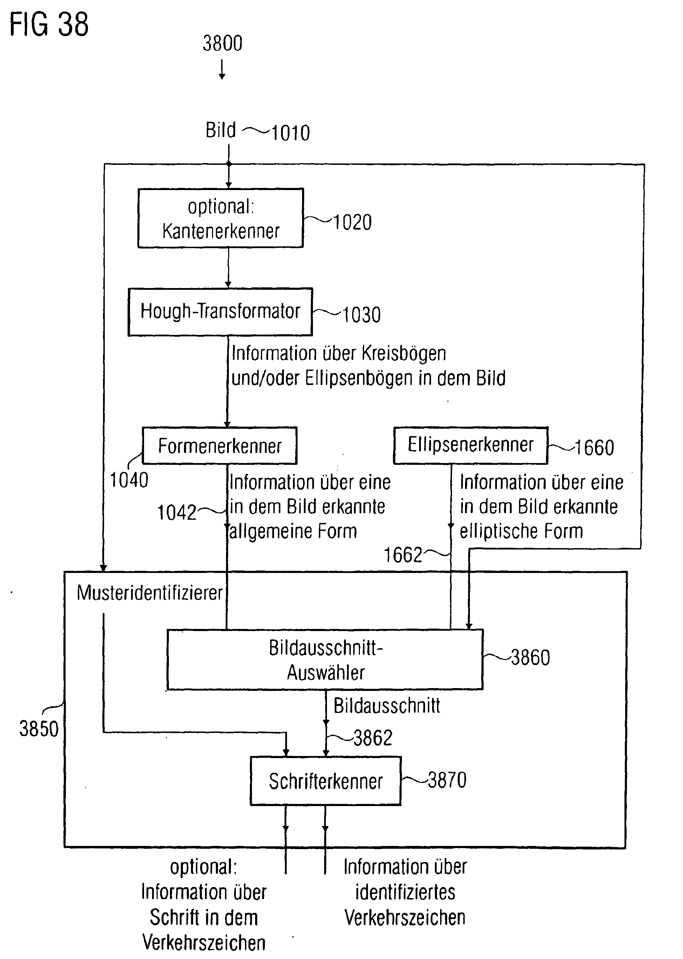

Fig. 38    ein Blockschaltbild einer erfindungsgemäßen Vorrichtung zum Identifizieren eines Verkehrszei- chens in einem Bild, gemäß einem Ausführungsbei- spiel der vorliegenden Erfindung.

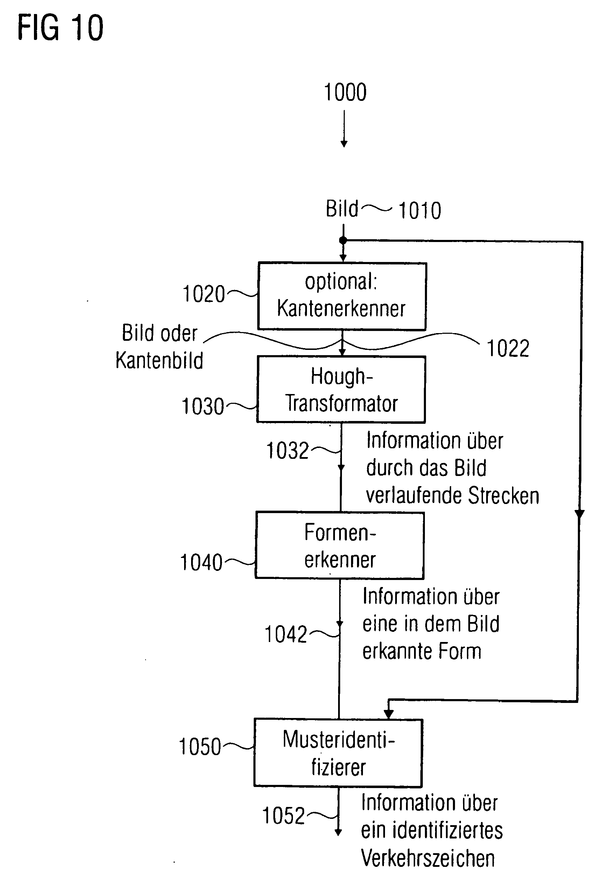

Fig. 10 zeigt ein Blockschaltbild einer erfindungsgemäßen Vorrichtung zum Identifizieren eines Verkehrszei- chens in einem Bild, gemäß einem Ausführungsbeispiel der vorliegenden Erfindung. Die Vorrichtung gemäß der Fig. 10 ist in ihrer Gesamtheit mit 1000 bezeichnet. Die Vorrichtung 1000 ist ausgelegt, um ein Bild 1010 zu empfangen. Die Vorrichtung 1000 umfasst ferner optional einen Kantenerkenner 1020. Der Kantenerkenner 1020 ist ausgelegt, um das Bild 1010 zu empfangen, und um aus dem Bild 1010 ein Kantenbild 1022 zu erzeugen. Die Vorrichtung 1000 umfasst ferner einen Hough-Transformator 1030. Der Hough-Transformator 1030 ist ausgelegt, um das Kantenbild 1022 zu empfangen. In dem Falle, dass der Kantenerkenner 1020 entfällt, ist der Hough-Transformator 1030 ausgelegt, um unmittelbar das Bild 1010 zu empfangen. Im Übrigen ist festzuhalten, dass der Hough-Transformator 1030 ausgelegt ist, um eine Mehrzahl von in verschiedenen Richtungen durch das Bild verlaufenden Strecken in dem Bild oder in einem davon abgeleiteten Kantenbild zu identifizieren. Der Hough-Transformator liefert daher eine Information 1032 über durch das Bild verlaufende gerade Strecken an einen Formenerkenner 1040. Der Formenerkenner 1040 ist ausgelegt, um basierend auf der Information über die identifizierten Strecken eine vorgegebene Form in dem Bild 1010 oder in dem davon abgeleiteten Kantenbild 1022 zu identifizieren. Der Formenerkenner 1040 liefert eine Information 1042 über eine in dem Bild erkannte Form.

Die Vorrichtung 1000 umfasst ferner einen Musteridentifizierer 1050, der ausgelegt ist, um die Information 1042 über eine in dem Bild erkannte Form sowie das Bild 1010 zu empfangen. Der Musteridentifizierer 1050 ist ferner ausgelegt, um basierend auf der erkannten vorgegebenen Form einen der erkannten vorgegebenen Form entsprechenden Bildausschnitt auszuwählen, und um basierend auf dem ausgewählten Bildausschnitt ein Verkehrszeichen zu identifizieren. Somit liefert der Musteridentifizierer 1050 eine Information 1052 über ein in dem Bild bzw. in dem Bildausschnitt identifiziertes Verkehrszeichen.

Basierend auf der obigen strukturellen Beschreibung wird im Folgenden die Funktionsweise der Vorrichtung 1000 beschrieben.

Die Vorrichtung 1000 realisiert eine mehrstufige Identifizierung eines Verkehrszeichens in einem Bild. Dabei wird zunächst die Form einer äußeren Umrandung des Verkehrszeichens ausgewertet. Der Hough-Transformator 1030 extrahiert aus dem Bild 1010 bzw. aus dem Kantenbild 1022 eine Information über gerade Strecken bzw. Linien, die beispielsweise Berandungen von Verkehrszeichen beschreiben. Aufgrund der Mehrzahl bzw. Vielzahl von geraden Strecken, die in dem Bild 1010 bzw. in dem Kantenbild 1022 durch den Hough-Transformator 1030 identifiziert werden, werden dann solche Linien bzw. geraden Strecken durch den Formenerkenner 1040 identifiziert, die zusammen eine Form beschreiben, die einer vorgegebenen Form eines Verkehrszeichen (z. B. Dreieck, Rechteck oder Quadrat) entsprechen. Somit wird insgesamt in dem Bild eine einem Verkehrszeichen entsprechende Form identifiziert. Die Information über die in dem Bild bzw. Kantenbild erkannte Form wird dann dem Musteridentifizierer zugeführt. Die Information über eine in dem Bild erkannte Form beschreibt somit einen Ausschnitt des Bildes, dessen Berandung eine Form aufweist, die einem Verkehrszeichen entspricht. Somit ist ein Bildausschnitt identifiziert, in dem potentiell ein Verkehrszeichen enthalten ist, vorausgesetzt, der Bildinhalt entspricht der Darstellung eines Verkehrszeichens. Der Musteridentifizierer verarbeitet somit lediglich solche Bildausschnitte, deren Berandung die Form eines Verkehrszeichens aufweist (deren Berandung also beispielsweise die Form eines Dreiecks, eines Rechtecks oder eines Quadrats aufweist). Somit ist der Musteridentifizierer 1050 von der Aufgabe entlastet, das gesamte Bild nach Verkehrszeichen zu durchsuchen, da gemäß einem Kerngedanken der vorliegenden Erfindung ein Verkehrszeichen ja nur innerhalb einer durch den Formenerkenner 1040 identifizierten bzw. erkannten Form liegen kann. Die Anwendung eines Bildvergleichs auf die durch den Formenerkenner 1040 erkannte Form ist wesentlich einfacher realisierbar als ein Bildvergleich mit dem gesamten Bild, da ja bei Durchführung eines Bildvergleichs mit dem gesamten Bild ein Vergleichsbild z.B. über das gesamte Bild hinweg verschoben werden muss. Im Übrigen ermöglicht der Einsatz des Formenerkenners 1040 auch eine Herstellung einer möglichst großen Übereinstimmung zwischen der in dem Bild erkannten Form und einer bekannten Form eines Verkehrszeichens, beispielsweise durch eine Abbildung, wie im Folgenden noch beschrieben wird. Zusammenfassend lässt sich somit festhalten, dass die Vorrichtung 1000 im Vergleich zu herkömmlichen Vorrichtungen eine wesentlich zuverlässigere Erkennung eines Verkehrszeichens ermöglicht, da einerseits durch die Verwendung des Hough-Transformators 1030 Störungen in dem Bild, z. B. eine teilweise Abdeckung von Verkehrszeichen, wirkungsvoll ausgeglichen werden, und da andererseits durch die zweistufige Vorgehensweise unter Verwendung eines Formenerkenners 1040 und eines Musteridentifizierers 1050 ein erforderlicher Rechenaufwand drastisch minimiert werden kann.

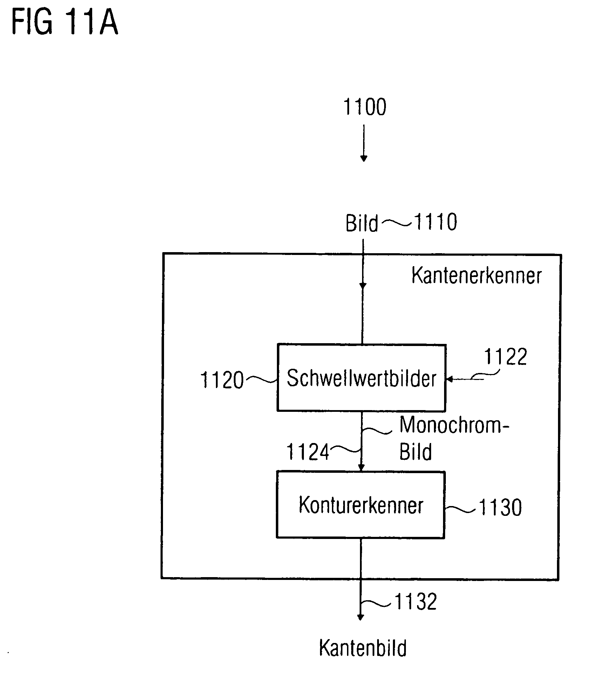

Fig. 11a zeigt ein Blockschaltbild eines erfindungsgemäßen Kantenerkenners zum Einsatz in Verbindung mit der Vorrichtung 1000 zum Identifizieren eines Verkehrszeichens in einem Bild.

Der Kantenerkenner gemäß der Fig. 11a ist in seiner Gesamtheit mit 1100 bezeichnet. Der Kantenerkenner 1100 ist ausgelegt, um ein Bild 1010 zu empfangen. Der Kantenerkenner 1100 umfasst einen Schwellwertbilder 1120, der ausgelegt ist, um einen Schwellwert auf das Bild anzuwenden. Zu diesem Zweck wird das Bild 1010, das beispielsweise als ein Farbbild vorliegt, in ein Helligkeitsbild umgewandelt. In anderen Worten, aus einem Farbbild wird beispielsweise ein Graustufenbild erzeugt, sofern das Bild 1010 nicht schon als Graustufenbild vorliegt. Der Schwellwertbilder 1120 ist ausgelegt, um beispielsweise eine Binarisierung eines Graustufenbildes, das auf dem Bild 1010 basiert (oder, alternativ, eines Farbbildes, das auf dem Bild 1010 basiert) durchzuführen. Zu diesem Zweck empfängt der Schwellwertbilder 1120 bevorzugt einen Schwellwert 1122 und wendet diesen auf das von dem Bild 1010 abgeleitete Graustufenbild oder Farbbild an. Somit liefert der Schwellwertbilder 1120 ein Monochrombild 1124, das auf dem Bild 1110 basiert. Gemäß einem Ausführungsbeispiel der vorliegenden Erfindung kann die durch den Schwellwertbilder 1120 durchgeführte Binarisierung adaptiv sein. Beispielsweise kann die Binarisierung gemäß einer Histogrammverteilung von Grauwerten in einem von dem Bild 1010 abgeleiteten Graustufenbild angepasst werden. Somit kann der Schwellwert adaptiv und ansprechend auf die Histogrammverteilung der Grauwerte gesetzt werden.

Empfängt der Kantenerkenner 1100 bzw, der Schwellwertbilder 1120 ein Video, also eine Folge von Bildern 1110, so wird es bevorzugt, den Schwellwert 1122 wiederholt (z. B. regelmäßig) nachzujustieren. So ist es möglich, den Schwellwert nach einer vorgegebenen Anzahl von x Bild-Rahmen- bzw. Bild-Frames des Videos nachzujustieren. Alternativ dazu kann auch für jedes Bild eine optimale Schwelle bzw. ein optimaler Schwellenwert 1120 ermittelt werden. Eine derartige Bildverarbeitung wird beispielsweise von Jähne beschrieben.

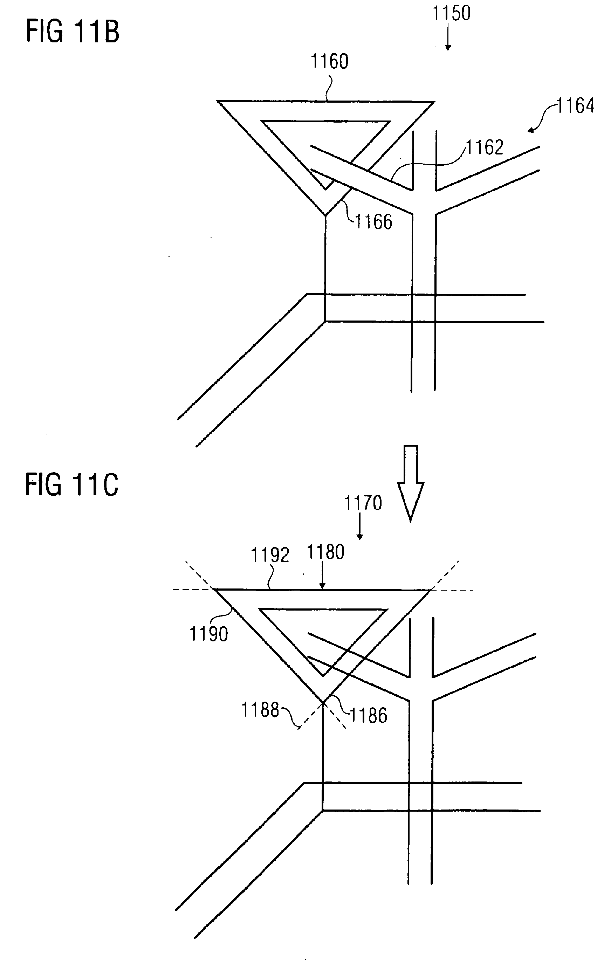

Der Kantenerkenner 1100 gemäß Fig. 11 umfasst ferner bevorzugt einen Konturerkenner 1130. Der Konturerkenner 1130 ist ausgelegt, um das Monochrom-Bild 1124 zu empfangen und um unter Verwendung eines Kantendetektionsalgorithmus aus dem Monochrombild 1124 ein Kantenbild 1132 zu erzeugen. Der Konturerkenner 1130 ist somit ausgelegt, um eine Kontur bzw. eine Kante in dem Monochrombild 1124 zu finden. Der dabei verwendete Kantenfinderalgorithmus bzw. KonturFinderalgorithmus ist beispielsweise aus morphologischen Operatoren zusammengesetzt. In anderen Worten, das Monochrombild 1124 wird durch einen oder mehrere morphologische Operatoren verarbeitet, so dass das Kantenbild 1132 entsteht. Zusammenfassend kann somit festgehalten werden, dass der Konturerkenner 1130 das Kantenbild 1132 unter Verwendung eines Kantendetektionsalgorithmus aus dem Monochrombild 1142 erzeugt.

Im Folgenden werden die Vorteile, die sich durch die Verwendung des Hough-Transformators 1030 in der Vorrichtung 1000 ergeben, anhand der graphischen Darstellungen der Fig. 11b und 11c erläutert. So zeigt die Fig. 11b eine graphische Darstellung eines Bildes bzw. Kantenbildes, in dem ein Teil eines Verkehrszeichens beispielsweise durch einen Baum teilweise verdeckt ist. Die graphische Darstellung gemäß der Fig. 11b ist in ihrer Gesamtheit mit 1150 bezeichnet. Die Fig. 11c zeigt ferner eine graphische Darstellung einer durch den Hough-Transformator 1030 aus dem Kantenbild 1150 gemäß Fig. 11b erzeugten Information. Die graphische Darstellung gemäß der Fig. 11c ist in ihrer Gesamtheit mit 1170 bezeichnet.

Das Kantenbild 1150 gemäß der Fig. 11 zeigt eine Darstellung einer Kreuzung oder Einmündung mit einem Verkehrszeichen 1160, das durch einen Ast 1162 eines Baums 1164 teilweise verdeckt ist. Somit ist die Dreiecksform des Verkehrszeichens 1160 unterbrochen. Dies ist insbesondere bei einer rechten unteren Kante 1066 des Verkehrszeichens 1160 klar ersichtlich.

Die graphische Darstellung 1170 gemäß der Fig. 11c zeigt die aus dem Kantenbild 1150 gemäß der Fig. 11b durch den Hough-Transformator 1030 erzeugte Information. Der Hough-Transformator 1030 ist dabei in der Lage, gerade Strecken, die unter verschiedenen Winkeln durch das Kantenbild 1150 verlaufen, zu erkennen und zu beschreiben. Dies gilt auch dann, wenn eine gerade Strecke unterbrochen ist, wie dies bei der rechten unteren Kante 1166 des Verkehrszeichens 1160 der Fall ist. Diese Fähigkeit des Hough-Transformators 1030 basiert auf der Tatsache, dass der Hough-Transformator 1030 beispielsweise dann eine gerade Strecke erkennt, wenn entlang einer Geraden zumindest eine vorgegebene Mindestanzahl von Kantenpunkten liegt. Dabei ist es zunächst unerheblich, ob der Hough-Transformator die Länge der Kanten (z. B. der Kante 1166) genau erkennt.

Es sei allerdings darauf hingewiesen, dass eine gerade Strecke typischerweise zumindest eine vorbestimmte MindestLänge haben muss, um von dem Hough-Transformator 1030 erkannt zu werden.

Im Übrigen sein darauf hingewiesen, dass ein Hough-Transformator 1030, der ausgelegt ist, um gerade Strecken zu erkennen, beispielsweise eine Anzahl von Punkten bestimmt, die auf einer vorgegebenen geraden Linie oder geraden Strecke liegen, und basierend auf der ermittelten Anzahl von Punkten auf der geraden Linie bzw. der geraden Strecke entscheidet, ob entlang der geraden Linie bzw. der geraden Strecke eine Kante vorliegt oder nicht.

Der Hough-Transformator 1030 führt beispielsweise die genannte Operation für gerade Strecken bzw. gerade Linien unterschiedlicher Richtung und/oder unterschiedlicher Länge durch und ist somit in der Lage, gerade Strecken bzw. gerade Linien unterschiedlicher Länge und/oder unterschiedlicher Richtung zu ermitteln. Die entsprechenden identifizierten geraden Strecken beschreibt der Hough-Transformator 1030 bevorzugt durch Parameter, die z. B. Länge und/oder Richtung und/oder Anfangspunkt und/oder Endpunkt der identifizierten Strecken angeben.

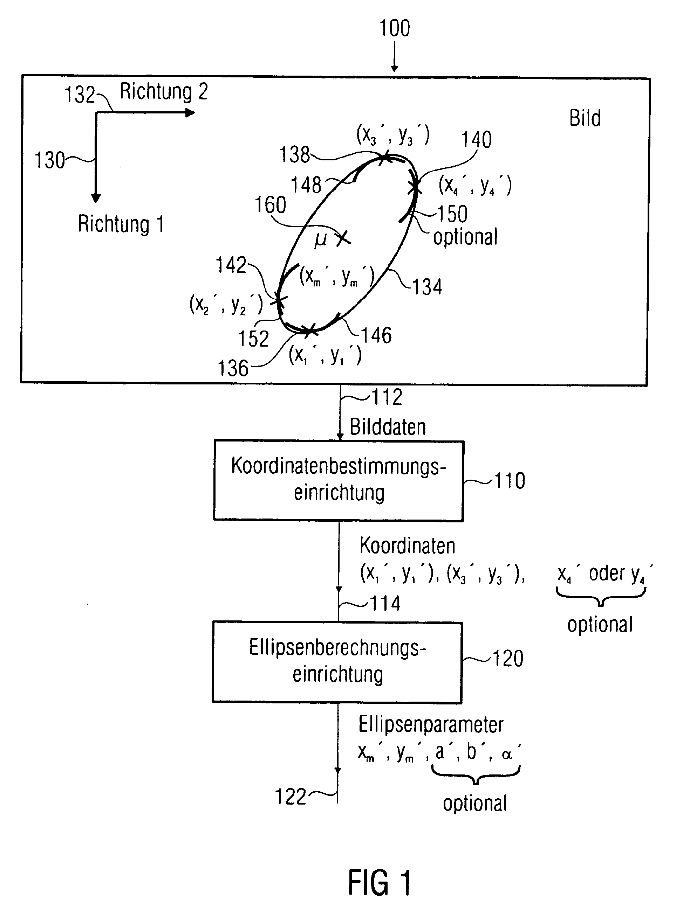

Somit erkennt der Hough-Transformator 1030 beispielsweise die in der graphischen Darstellung 1150 gezeigte untere rechte Kante 1166 des Verkehrszeichens 1160 als eine durchgehende Kante. Je nach Ausgestaltung des Hough-Transformators 1030 kann der Hough-Transformator 1030 dabei eine präzise Länge der Kante 1166 bestimmen, oder die Länge auch nur ungefähr angeben. In jedem Fall ist der Hough-Transformator 1030 allerdings in der Lage, die Richtung der Kante 1166 zu identifizieren und ferner eine Gerade zu beschreiben, auf der die Kante 1166 liegt. Somit beschreibt die durch den Hough-Transformator 1030 gelieferte Information 1032 beispielsweise die in der graphischen Darstellung 1170 gemäß Fig. 1c gezeigte untere rechte Kante 1186 des Verkehrszeichens 1180 als eine durchgehende Linie. Ob die genauen Anfangspunkte und Endpunkte der Linie 1186 bekannt sind, hängt, wie schon erläutert, von Details in der Ausführung des Hough-Transformators 1030 ab. Es ist allerdings sichergestellt, dass der Hough-Transformator erkennt, dass die Kante entlang einer Gerade 1188 verläuft, die in der graphischen Darstellung 1070 gestrichelt dargestellt ist.

Somit lässt sich zusammenfassend festhalten, dass durch den Hough-Transformator 1030 die teilweise Verdeckung der Kante 1166 behoben wird, und dass somit die Berandung des Verkehrszeichens 1160 bevorzugt durch drei durchgehende Linien 1186, 1190, 1192 beschrieben wird.

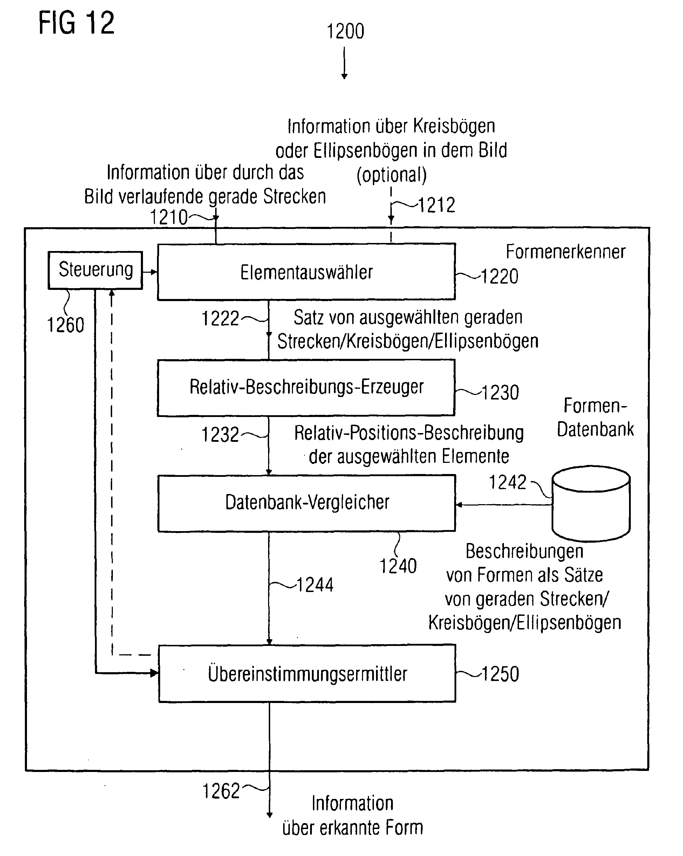

Im Folgenden wird anhand der Fig. 12 beschrieben, wie basierend auf der durch den Hough-Transformator 1030 gelieferten Information über durch das Bild verlaufende gerade Strecken (also beispielsweise basierend auf Informationen über die geraden Strecken 1186, 1190, 1192) eine Form erkannt werden kann.

Die Fig. 12 zeigt zu diesem Zweck ein Blockschaltbild eines erfindungsgemäßen Formenerkenners, wie er beispielsweise in der Vorrichtung 1000 gemäß der Fig. 10 eingesetzt werden kann. Der Formenerkenner gemäß der Fig. 12 ist in seiner Gesamtheit mit 1200 bezeichnet.

Der Formenerkenner 1200 ist ausgelegt, um eine Information 1210 über die durch das Bild verlaufenden geraden Strecken, die beispielsweise durch den Hough-Transformator 1030 geliefert wird, zu empfangen. Die Information 1210 umfasst dabei beispielsweise eine Information über eine Richtung, über einen Anfangspunkt, über einen Endpunkt, über eine Länge und/oder über eine Richtung von durch den Hough-Transformator 1030 in dem Bild 1010 bzw. in dem Kantenbild 1022 erkannten geraden Strecken.

Optional ist der Formenerkenner 1200 ferner ausgelegt, um eine Information über Kreisbogensegmente oder Ellipsenbogensegmente in dem Bild 1010 bzw. in dem Kantenbild 1022 zu empfangen. Die entsprechende Information ist mit 1212 bezeichnet.

Der Formenerkenner 1200 umfasst einen Elementauswähler 1220, der ausgelegt ist, um die Information 1210, sowie, optional, die Information 1212 zu empfangen. Der Elementauswähler 1220 ist ausgelegt, um aus den durch die Information 1210 und/oder die Information 1212 beschriebenen geraden Strecken und gegebenenfalls zusätzlich Kreisbögen oder Ellipsenbögen eine Mehrzahl von Elementen auszuwählen. In anderen Worten, bei einem bevorzugten Ausführungsbeispiel ist der Elementauswähler 1220 ausgelegt, um eine vorgegebene Anzahl von geraden Strecken aus den durch die Information 1210 beschriebenen geraden Strecken auszuwählen, um somit ausgewählte gerade Strecken zu erhalten. Der Elementauswähler 1220 kann ferner bevorzugt ausgelegt sein, um zueinander benachbarte Strecken (und gegebenenfalls zusätzlich Kreisbögen oder Ellipsenbögen) auszuwählen. So ist der Elementauswähler 1220 bevorzugt ausgelegt, um gerade Strecken (und gegebenenfalls zusätzlich Kreisbögen oder Ellipsenbögen) auszuwählen, die zusammen einen fortgesetzten Linienverlauf bilden (wobei von geringen Unterbrechungen zwischen den aufeinander folgenden geraden Strecken (und gegebenenfalls zusätzlich Kreisbögen oder Ellipsenbögen) abgesehen werden kann.

Somit liefert der Elementauswähler 1220 einen Satz von ausgewählten Elementen, d. h. von ausgewählten geraden Strecken und gegebenenfalls zusätzlich von Kreisbögen oder Ellipsenbögen. Die Beschreibung des Satzes von ausgewählten Elementen ist mit 1222 bezeichnet. Ein Relativ-Beschreibungs-Erzeuger 1230 empfängt die Information 1222 und ist ferner ausgelegt, um basierend auf der Information 1222 eine Relativ-Positions-Beschreibung 1232 der ausgewählten Elemente zu erzeugen. Die Relativ-Positions-Beschreibung 1232 beschreibt dabei eine relative Position der ausgewählten Elemente zueinander oder von Schnittpunkten der ausgewählten Elemente zueinander. So kann die Relativ-Positions-Beschreibung 1232 beispielsweise eine Beschreibung von Längen und Richtungen der Elemente aus dem Satz von ausgewählten Elementen umfassen. Ferner kann die Relativ-Positions-Beschreibung 1232 Winkel zwischen geraden Strecken des Satzes 1222 von ausgewählten geraden Strecken beschreiben. Alternativ oder zusätzlich kann die Relativ-Positions-Beschreibung relative Längen der ausgewählten geraden Strecken beschreiben. Umfassen die ausgewählten Elemente zusätzlich Kreisbögen oder Ellipsenbögen, so kann die Relativ-Positionsbeschreibung beispielsweise noch eine Information über Krümmungsradien oder Winkel der Kreisbögen oder Ellipsenbögen umfassen.

Der Formenerkenner 1200 umfasst ferner einen Datenbank-vergleicher 1240, der ausgelegt ist, um die Relativ-Positionsbeschreibung 1232 zu empfangen. Der Datenbank-vergleicher 1240 ist ferner mit einer Formendatenbank 1242 gekoppelt, um von der Formendatenbank 1242 Beschreibungen von Formen als Beschreibungs-Sätze von geraden Strecken, Kreisbögen und/oder Ellipsenbögen (beispielsweise in einer Relativ-Positions-Beschreibung) zu empfangen. Der Datenbankvergleicher 1240 ist ferner ausgelegt, um eine Vergleichsinformation 1244 zu liefern, die eine Abweichung zwischen den durch die Relativ-Positions-Beschreibung 1232 beschriebenen Elementen und einem aus der Formendatenbank 1242 ausgelesenen Satz von Referenzelementen beschreibt.

Der Formenerkenner 1200 umfasst ferner einen Übereinstimmungsermittler 1250, der ausgelegt ist, um das Ergebnis 1244 des Datenbankvergleichers 1240 zu empfangen, und um zu entscheiden, ob die Übereinstimmung zwischen dem durch die Relativ-Positions-Beschreibung 1232 beschriebenen Satz von Elementen und dem aus der Formendatenbank 1242 gewonnenen Satz von Elementen ausreichend groß ist.

Der Formenerkenner 1200 umfasst ferner bevorzugt eine Steuerung 1260, die ausgelegt ist, um mit dem Elementauswähler 1220 und dem Übereinstimmungsermittler 1250 zusammenzuwirken. So ist die Steuerung 1260 beispielsweise ausgelegt, um den Elementauswähler 1220 anzusteuern, um verschiedene Sätze von ausgewählten Elementen auszuwählen. Ferner ist die Steuerung 1260 bevorzugt ausgelegt, um dem Übereinstimmungsermittler 1250 eine Information darüber zukommen zu lassen, welche Elemente durch den Elementauswähler 1220 ausgewählt worden sind. Der Übereinstimmungsermittler 1250 liefert an die Steuerung 1260 bevorzugt eine Information, wie gut eine Übereinstimmung zwischen der Relativ-Positions-Beschreibung 1232 und einer in der Formendatenbank 1242 enthaltenen Beschreibung der Form bzw. der Vergleichsform ist.

Ferner ist der Übereinstimmungsermittler 1250 ausgelegt, um eine Information 1262 über eine erkannte Form zu liefern. Die Information 162 über die erkannte Form beschreibt beispielsweise eine Lage der erkannten Form und einen Typ (z.B. Dreieck, Rechteck, Quadrat)der erkannten Form.

Basierend auf der obigen strukturellen Beschreibung wird im Folgenden die Funktionsweise des Formenerkenners 1200 beschrieben, die im Übrigen mit einer beliebige Topologie implementiert werden kann, und die daher beispielsweise unabhängig von der Topologie des anhand der Fig. 12 beschriebenen Formenerkenners 1200 realisiert werden kann. Bezugnahmen auf einzelne Einrichtungen bzw. Blöcke des Formenerkenners 1200 sind daher als beispielhaft anzusehen.

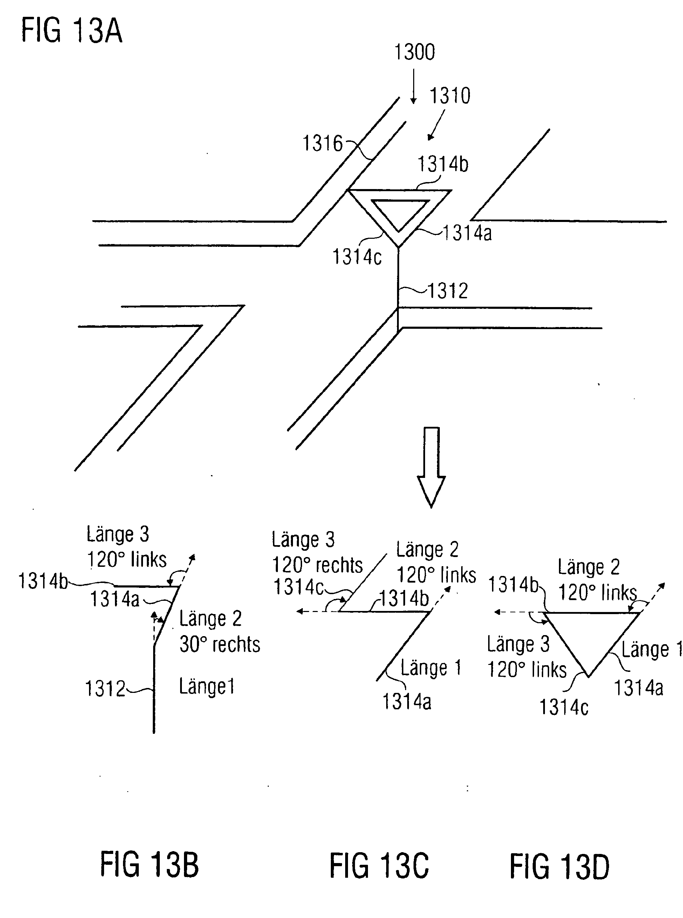

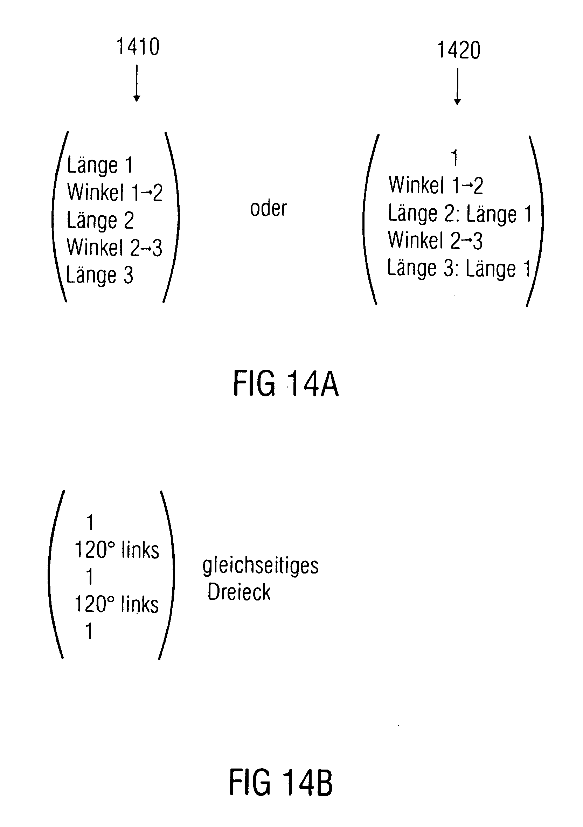

Zur weiteren Veranschaulichung wird im Übrigen auf die Fig. 13a, 13b, 13c, 13d, 14a und 14b Bezug genommen. Fig. 13a zeigt eine graphische Darstellung eines Kreizung mit einem Verkehrszeichen. Fig. 13b zeigt eine graphische Darstellung des ersten Satzes von drei geraden Strecken, Fig. 13c zeigt einen graphische Darstellung eines zweiten Satzes von drei geraden Strecken, und Fig. 13d zeigt eine graphische Darstellung eines dritten Satzes von drei geraden Strecken. Die geraden Strecken der drei Sätze von geraden Strecken gemäß den Fig. 13b, 13c und 13d sind im Übrigen der graphischen Darstellung gemäß der Fig. 13a entnommen.

Ferner zeigt die Fig. 14a eine schematische Darstellung von zwei Möglichkeiten für Relativ-Positions-Beschreibungen von drei geraden Strecken.

Die Fig. 14b zeigt eine schematische Darstellung einer möglichen Relativ-Positions-Beschreibung für ein gleichseitiges Dreieck.

Bezug nehmend auf die Fig. 13a wird davon ausgegangen, dass beispielsweise der Hough-Transformator 1030 eine Beschreibung eines Bildes als eine Darstellung einer Mehrzahl von geraden Strecken liefert. Die entsprechende Beschreibung gemäß der Fig. 13a ist in ihrer Gesamtheit mit 1300 bezeichnet. Die graphische Darstellung 1300 zeigt ein Verkehrszeichen 1310, dessen Umrisse durch eine Mehrzahl von geraden Strecken beschrieben sind. So wird beispielsweise ein Rohr, das das Verkehrsschild trägt, durch eine erste gerade Strecke 1312 beschrieben. Ein Umriss des im Wesentlichen dreieckigen Verkehrszeichens wird durch drei gerade Strecken 1314a, 1314b, 1314c beschrieben. Ein Straßenrand wird beispielsweise durch eine gerade Strecke 1316 beschrieben. Die Beschreibung der geraden Strecken 1312, 1314a, 1314b, 1314c, 1316 bildet somit die Information 1210 über durch das Bild verlaufende gerade Strecken. Beispielsweise durch den Elementauswähler 1220 werden aus den geraden Strecken, die durch das Bild gemäß der Fig. 13a verlaufen (allgemein: aus den durch den Hough-Transformator in dem Bild erkannten Elementen, wie geraden Strecken, Kreisbögen oder Ellipsenbögen), beispielsweise drei gerade Strecken (allgemein: eine vorgegebene Anzahl von geraden Strecken, oder eine vorgegebene Anzahl von Elementen) ausgewählt. Bevorzugt werden drei aneinander grenzende gerade Strecken (allgemein: Elemente) ausgewählt die einen fortlaufenden Streckenverlauf bilden. Werden beispielsweise die Strecken 1312, 1314a, 1314b ausgewählt, so ergibt sich der in der Fig. 13b dargestellte Satz von drei geraden Strecken. Werden hingegen die geraden Strecke 1314a, 1314b, 1316 ausgewählt, so ergibt sich der in der Fig. 13c dargestellte Satz von drei geraden Strecken. Werden hingegen die geraden Strecken 1314a, 1314b, 1314c ausgewählt, so ergibt sich der in der Fig. 13b gezeigte Satz von drei ausgewählten Strecken.

Ein Satz von ausgewählten geraden Strecken (allgemein: von ausgewählten Elementen) kann beispielsweise durch eine Länge einer ersten ausgewählten Strecke, eine Winkel zwischen der ersten ausgewählten Strecken und einer zweiten ausgewählten Strecke, eine Länge der zweiten ausgewählten Strecke, einen Winkel zwischen der zweiten ausgewählten Strecke und einer dritten ausgewählten Strecke, sowie durch eine Länge der dritten ausgewählten Strecke beschrieben werden. Eine entsprechende Beschreibung ist schematisch in einer ersten graphische Darstellung 1410 der Fig. 14a gezeigt. Alternativ dazu können die Längen relativ zueinander bzw. relativ zu einer Länge beispielsweise der ersten ausgewählten Strecke angegeben werden, so dass sich beispielsweise eine in der zweiten graphischen Darstellung 1420 der Fig. 14a gezeigte Darstellung ergibt.

Eine entsprechende Beschreibung Für ein gleichzeitiges Dreieck, die beispielsweise als Vergleichs-Beschreibung in der Datenbank 1242 gespeichert sein kann, ist in der Fig. 14b schematisch dargestellt.

Im Hinblick auf die ausgewählten geraden Strecken entsprechend dem ersten Satz von ausgewählten geraden Strecken, ist festzuhalten, dass diese beispielsweise in einer Form

"Länge 1; Winkel 30 Grad rechts; Länge 2; Winkel 120 Grad links; Länge 3"

dargestellt werden können. Die ausgewählten Strecken gemäß dem dritten Satz von ausgewählten Strecken können beispielsweise durch eine Beschreibung der Form

"Länge 1; Winkel 120 Grad links; Länge 2; Winkel 120 Grad links; Länge 3"

beschrieben werden. Eine normierte Beschreibung der ausgewählten Strecken des dritten Satzes von ausgewählten Strecken (Normierung der Länge) lautet wie folgt:

"1; Winkel 120 Grad links; 1; Winkel 120 Grad links; 1".

Die Winkel und relativen Längen können freilich geringfügig variieren, da beispielsweise das Verkehrszeichen 1310 beispielsweise leicht gedreht sein kann, und somit beispielsweise verzerrt abgebildet sein kann, wodurch sich relative Längen und Winkel verändern.

Ist beispielsweise in der Formendatenbank 1242 als Vergleichsmuster eine Beschreibung eines gleichschenkligen Dreiecks gemäß der Fig. 14b gespeichert, so liefert beispielsweise ein Vergleich zwischen einer Beschreibung der drei geraden Strecken des ersten Satzes von ausgewählten Elementen (vergleiche Fig. 13b) eine große Abweichung bzw. eine geringe Übereinstimmung. In ähnlicher Weise liefert ein Vergleich zwischen einer Beschreibung der geraden Strecken des zweiten Satzes von geraden Strecken (vergleiche Fig. 13c) mit einer Beschreibung eines gleichseitigen Dreiecks eine geringe Übereinstimmung bzw. eine große Abweichung. Hingegen liefert ein Vergleich zwischen einer Beschreibung der drei gerade Strecken des dritten Satzes von geraden Strecken (vergleiche Fig. 13d) und einer Beschreibung eines gleichseitigen Dreiecks eine gute Übereinstimmung bzw. eine geringe Abweichung. Wird somit beispielsweise zuerst der erste Satz von drei geraden Strecken (vergleiche Fig. 13b) ausgewählt, und anschließend durch einen Vergleich mit einer Beschreibung des gleichseitigen Dreiecks aus der Formendatenbank 1242 festgestellt, dass eine Abweichung unzulässig groß (beispielsweise größer als eine vorgegebene oder dynamisch eingestellte maximal zulässige Abweichung ist), so wird beispielsweise ein weiterer Satz von Elementen bzw. von geraden Strecken ausgewählt, beispielsweise der zweite Satz von geraden Strecken (vergleiche Fig. 13c). Ist eine Abweichung zwischen dem zweiten Satz von geraden Strecken und einer in der Formendatenbank 1242 gespeicherten Vergleichsform immer noch unzulässig groß, wird beispielsweise der dritte Satz von ausgewählten Elementen ausgewählt (vergleiche Fig. 13d). Wird somit für einen der Sätze von ausgewählten Elementen festgestellt, dass eine Abweichung zwischen dem Satz von ausgewählten Elementen und einer in der Formendatenbank 1242 gespeicherten Form ausreichend gering ist (also dass sich beispielsweise relative Positionsbeschreibungen ausreichend wenig unterscheiden) so wird beispielsweise der entsprechende Satz von ausgewählten Elementen als eine erkannte Form markiert, und es wird eine zugehörige Information (beispielsweise als die Information 1262 über eine erkannte Form) bereitgestellt.

Die Auswahl von Sätzen von ausgewählten Elementen kann beispielsweise beendet werden, sobald ein Satz von ausgewählten Elementen sich von einem in der Formendatenbank 1242 definierten Satz von Elementen ausreichend wenig unterscheidet. Alternativ dazu können aber auch nach der Identifikation einer erkannten Form weitere erkannte Formen gesucht werden, bis ein Abbruchkriterium erreicht ist. Somit kann der Formenerkenner beispielsweise eine Information über genau eine erkannte Form oder eine Information über mehrere erkannten Formen liefern.

Die Information 1262 beschreibt daher die erkannte Form in einer beliebigen Beschreibungsform. Wird beispielsweise ein Dreieck identifiziert, so kann die Information 1262 Koordinaten von Expunkten des Dreiecks in dem Bild 1010 bzw. in dem Kantenbild 1022 angeben. Eine andere Form der Beschreibung kann allerdings gewählt werden, soweit die entsprechende Beschreibung auf die Umrisse der erkannten Form schließen lässt.

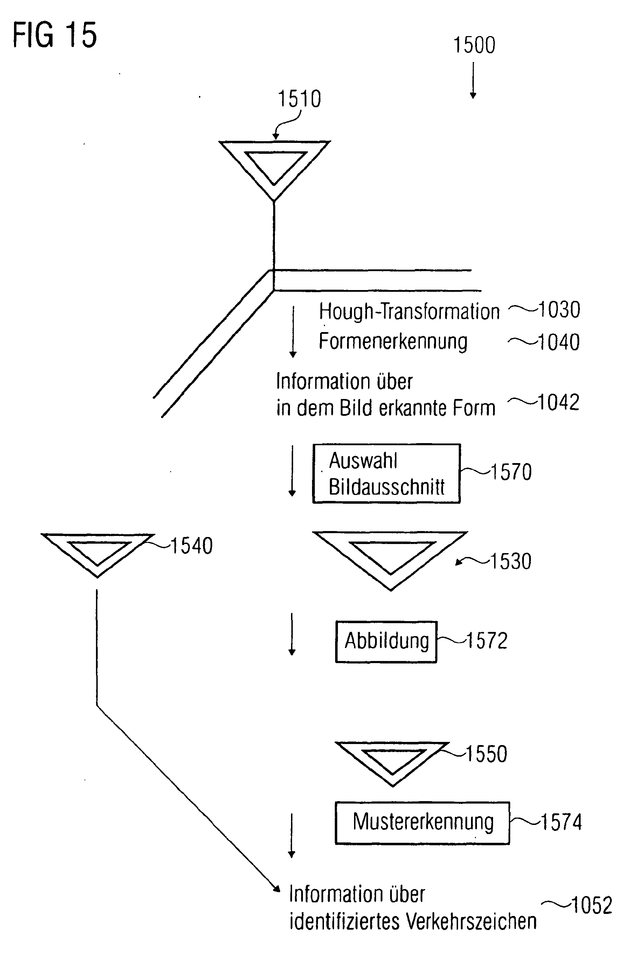

Im Folgenden wird anhand der Fig. 15 beschrieben, wie eine Musteridentifikation durch den Musteridentifizierer 1050 verbessert werden kann, indem ein Bildausschnitt des Bildes 1010 unter Verwendung einer durch den Formenerkenner 1050 erkannten Form ausgewählt und ferner abgebildet wird.

Die Fig. 15 zeigt daher eine schematische Darstellung einer Vorgehensweise bei der Identifikation eines Verkehrszeichens. Die schematische Darstellung gemäß der Fig. 15 ist in ihrer Gesamtheit mit 1500 bezeichnet. Ein Bild (beispielsweise das Bild 1010) enthält dabei ein Verkehrszeichen 1510, das beispielsweise gegenüber dem Beobachter gedreht und daher verzerrt ist. Die Verzerrung ist dadurch angedeutet, dass das Verkehrszeichen, das idealerweise näherungsweise die Form eines gleichschenkligen Dreiecks aufweist, verzerrt dargestellt ist. Die Verzerrung ist hier aus Gründen der Veranschaulichung übertrieben dargestellt.

Auf das Bild des Verkehrszeichens wird erfindungsgemäß optional eine Kantenerkennung, beispielsweise in einem Kantenerkenner 1020, angewendet. Anschließend wird in dem Hough-Transformator 1330 eine Hough-Transformation durchgeführt, um gerade Strecken in dem Bild zu erkennen. Die Information 1032 über die durch das Bild verlaufenden geraden Strecken wird an den Formenerkenner 1040 geliefert, um eine Formenerkennung durchzuführen. Der Formenerkenner liefert in dem gezeigten Beispiel eine Information über ein in dem Bild erkanntes Dreieck. Das in dem Bild erkannte Dreieck weicht zwar von der in der Musterdatenbank gespeicherten idealen Form (beispielsweise: gleichseitiges Dreieck) ab, die Abweichung ist allerdings so gering, dass der Formenerkenner aufgrund eines von ihm verwendeten Toleranzbereichs trotz der Verzerrung des Verkehrszeichens 1510 ein Dreieck erkennt. Der Formenerkenner 1040 liefert somit als die Information 1042 über eine in dem Bild erkannte Form eine Information, die die Position des Dreiecks in dem Bild, beispielsweise durch Angabe von Koordinaten der Eckpunkte, beschreibt.

Der Musteridentifizierer 1050 wählt daraufhin einen Bildausschnitt des Bildes 1010 aus, wobei der ausgewählte Bildausschnitt durch die Information 1042 über die in dem Bild erkannte Form definiert ist. Beispielsweise kann der Musteridentifizierer 1050 ausgelegt sein, um den Rest des Bildes, der außerhalb der durch den Formenerkenner 1040 identifizierten Form liegt, zu maskieren. Somit erhält der Musteridentifizierer 1050 im Idealfall einen Bildausschnitt, dessen Form der durch den Formenerkenner 1040 identifizierten Form entspricht. Bei dem gezeigten Beispiel erhält der Musteridentifizierer 1050 einen dreieckigen Bildausschnitt 1530.

Diesbezüglich ist anzumerken, dass der dreieckige Bildausschnitt gegenüber den in der Bild-Datenbank gespeicherten Bildern (z.B. durch eine affine Abbildung) verzerrt ist. Ein in der Bild-Datenbank gespeichertes Bild ist beispielsweise mit 1540 bezeichnet. Aus dem Vergleich der Formen des in der Bilddatenbank gespeicherten Bildes 1540 und des Bildausschnitts 1530 ist ersichtlich, dass die Formen unterschiedlich sind, so dass ein direkter Vergleich nicht möglich ist bzw. zu unzuverlässigen Ergebnissen führen würde. Allerdings ist aus den Formen des in der Bilddatenbank gespeicherten Vergleichsbilds 1540 und des Bildausschnitts 1530 eine Abbildungsvorschrift bestimmbar, durch die das in der Bilddatenbank gespeicherte Referenzbild bzw. Vergleichsbild 1540 und der Bildausschnitt 1530 auf gleiche Formen gebracht werden können. Liegt beispielsweise eine affine Verzerrung des Bildausschnitts 1530 vor, so kann diese durch eine entgegengesetzte affine Abbildung rückgängig gemacht werden. So kann der Musteridentifizierer 1050 beispielsweise ausgelegt sein, um den Bildausschnitt 1530 affin abzubilden (also zu drehen, zu rotieren, zu strecken und/oder zu verzerren), so dass der Bildausschnitt 1530 zumindest näherungsweise auf die Form des Referenzbildes bzw. Vergleichsbildes 1540 gebracht wird. Eine entsprechend affin gebildete bzw. affin verzerrte Version des Bildausschnitts 1530 ist in der Fig. 15 mit 1550 bezeichnet. Somit weisen der affin abgebildete Bildausschnitt 1550 sowie das Referenzbild 1540 gleiche Formen bzw. Umrisse auf, so dass eine besonders zuverlässige Mustererkennung bzw. ein besonders zuverlässiger Mustervergleich durchgeführt werden kann. Basierend auf der Mustererkennung kann somit eine Information 1052 über ein identifiziertes Verkehrszeichen erhalten werden.

Zusammenfassend ist somit festzuhalten, dass der Musteridentifizierer 1050 beispielsweise basierend auf der Information 1052 über eine in dem Bild erkannte Form eine Auswahl 1570 eines Bildausschnitts, eine Abbildung 1572 des Bildausschnittes, um Formen des Bildausschnittes und des Vergleichsbildes bzw. Referenzbildes 1540 aneinander anzugleichen, und eine Mustererkennung 1574, bei der der abgebildete Bildausschnitt 1550 mit dem Vergleichsbild bzw. Referenzbild 1540 verglichen wird, durchführen kann, um die Information 1052 über das identifizierte Verkehrszeichen zu erhalten.

Alternativ zu der Abbildung 1572 des ausgewählten Bildausschnitts 1530 kann der Musteridentifizierer allerdings auch das Vergleichsbild bzw. Referenzbild 1540 abbilden, um die Formen des ausgewählten Bildausschnittes 1530 und eines entsprechend abgebildeten Vergleichsbildes bzw. Referenzbildes 1540 aneinander anzunähern bzw. aneinander anzugleichen.

Im Folgenden wird beschrieben, wie das anhand der Fig. 10 bis 15 beschriebene Konzept weiter verbessert werden kann, indem zusätzlich zu den oben beschriebenen Schritte eine Erkennung von Extrempunkten von Kreisen oder Ellipsen erfolgt.

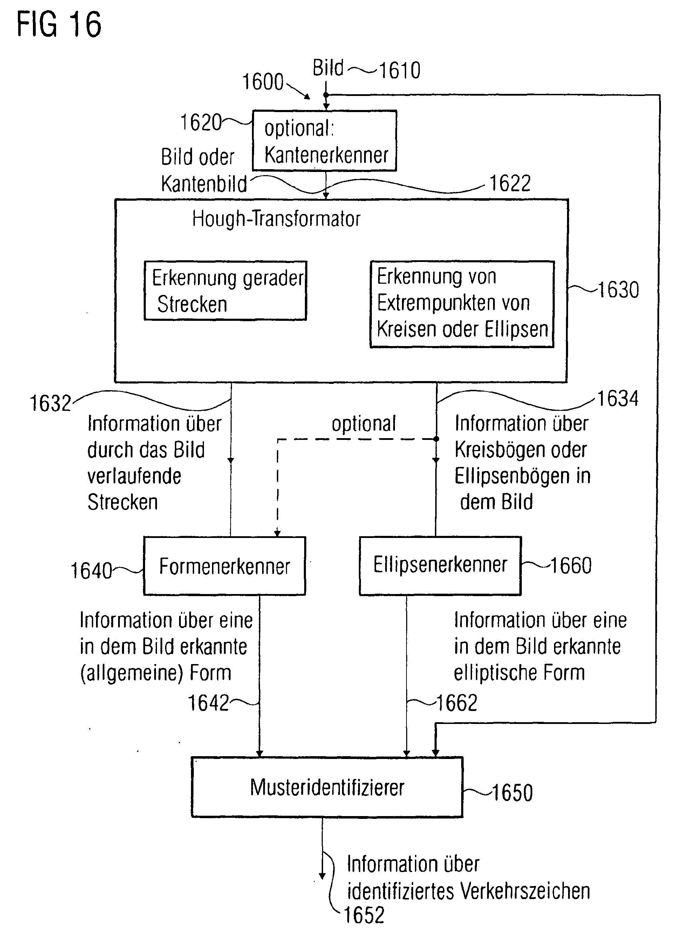

Zu diesem Zweck zeigt die Fig. 16 ein Blockschaltbild einer erfindungsgemäßen Vorrichtung zum Identifizieren eines Verkehrszeichens in einem Bild, gemäß einem Ausführungsbeispiel der vorliegenden Erfindung.

Die Vorrichtung gemäß der Fig. 16 ist in ihrer Gesamtheit mit 1600 bezeichnet.

Die Vorrichtung 1600 ist ausgelegt, um ein Bild 1610 zu empfangen. Die Vorrichtung 1600 umfasst ferner optional einen Kantenerkenner 1620, der von seiner Funktion her dem Kantenerkenner 1020 der Vorrichtung 1000 entspricht. Die Vorrichtung 1600 umfasst ferner einen erweiterten Hough-Transformator 1630, der ausgelegt ist, um das Bild 1610 oder das durch den optionalen Kantenerkenner 1620 gelieferte Kantenbild 1622 zu empfangen. Der erweiterte Hough-Transformator ist dabei ausgelegt, um gerade Strecken in dem Bild 1610 oder in dem Kantenbild 1622 zu erkennen und entspricht insoweit der Funktionalität des Hough-Transformators 1030. Der erweiterte Hough-Transformator 1630 ist ferner zusätzlich in der Lage, Extrempunkte von Kreisen oder Ellipsen in dem Bild 1610 oder in dem Kantenbild 1622 zu erkennen, und somit eine Information über Extrempunkte von Kreisbögen oder Ellipsenbögen in dem Bild bereitzustellen. Die entsprechende Information ist mit 1634 bezeichnet. Der erweitere Hough-Transformator 1630 ist freilich zusätzlich ausgelegt, um eine Information 1632 über durch das Bild 1610 oder durch das Kantenbild 1622 verlaufende gerade Strecken zu liefern, wobei die Information 1632 im Wesentlichen der Information 1032 des Hough-Transformators 1030 entspricht.

Die Vorrichtung 1600 umfasst ferner einen Formenerkenner 1640, der die Information 1632 über die durch das Bild verlaufenden Strecken von dem Hough-Transformator 1630 empfängt. Der Formenerkenner 1640 kann dabei identisch dem Formenerkenner 1040 der Vorrichtung 1000 sein. Alternativ kann der Formenerkenner 1620 ausgelegt sein, um zusätzlich zu der Information 1632 über die durch das Bild verlaufenden geraden Strecken die Information 1634 über in dem Bild vorhandene Kreisbögen oder Ellipsenbögen zu empfangen.

Der Formenerkenner 1640 liefert in jedem Fall eine Information 1642 über eine in dem Bild erkannte Form an einen Musteridentifizierer 1650, sofern basierend auf der Information 1632 (und gegebenenfalls der Information 1634) eine Form in dem Bild erkannt wird. Die grundsätzliche Funktionalität des Musteridentifizierers 1650 umfasst dabei die Funktionalität des Musteridentifizierers 1050 ist, ist gegenüber dieser aber optional erweitert, wie im Folgenden noch beschrieben werden wird.

Die Vorrichtung 1600 umfasst zusätzlich den Ellipsenerkenner 1660. Der Ellipsenerkenner 1660 empfängt die Information 1634 über Kreisbögen oder Ellipsenbögen in dem Bild, bevorzugt in Form einer Beschreibung von Koordinaten von Extrempunkten sowie zusätzlich, optional, von zugehörigen Krümmungsradien und Krümmungsrichtungen.

Die Funktion des Ellipsenerkenners 1660 wird im Folgenden noch ausführlicher beschrieben. Der Ellipsenerkenner 1660 ist allgemein ausgelegt, um eine Information über eine in dem Bild erkannte elliptische Form an dem Musteridentifizierer 1650 zu liefern.

Der Musteridentifizierer 1650 ist im Übrigen ausgelegt, um basierend auf der Information 1642 über eine in dem Bild erkannte (allgemeine) Form, oder basierend auf der durch den Ellipsenerkenner 1660 gelieferten Information 1662 über eine in dem Bild erkannte elliptische Form eine Information 1652 über ein identifiziertes Verkehrszeichen bereitzustellen.

In Hinblick auf den erweiterten Formenerkenner 1640, der optional zum Einsatz kommt, wenn durch den Formenerkenner 1640 die Information 1634 über Kreisbögen oder Ellipsenbögen in dem Bild verwendet werden soll, ist festzustellen, dass der erweiterte Formenerkenner 1640 bevorzugt ausgelegt ist, um als den Satz 1222 von ausgewählten Elementen einen Satz von Elementen auszuwählen, der sowohl gerade Strecken einerseits als auch Kreisbögen oder Ellipsenbögen andererseits umfasst.

Beispielsweise ist der Formenerkenner 1640 zur Identifizierung eines näherungsweise dreieckigen Verkehrszeichens mit abgerundeten Ecken bevorzugt ausgelegt, um aus der durch den Hough-Transformator gelieferten Information drei geraden und drei Kreisbögen oder Ellipsenbögen auszuwählen, so dass sich gerade Strecken und Kreisbögen abwechseln und einen geschlossenen Linienverlauf bilden. Eine Beschreibung eines idealen, gleichschenklig-dreieckigen Verkehrszeichens mit abgerundeten Ecken kann dann beispielsweise wie folgt aussehen:

"gerade Strecke, Länge 1; Kreisbogen 120 Grad, linksgekrümmt, Krümmungsradius 0,05; gerade Strecke, Länge 1; Kreisbogen 120 Grad, linksgekrümmt, Krümmungsradius 0,05; gerade Strecke, Länge 1; Kreisbogen 120 Grad, linksgekrümmt, Krümmungsradius 0,05".

Entsprechend ist in diesem Fall die Formendatenbank 1242 bevorzugt ausgelegt, um Vergleichsformen durch eine Kombination von geraden Strecken und Kreisbögen oder Ellipsenbögen zu beschreiben. Ein Vergleich kann wiederum bevorzugt erfolgen, indem ein Vektor erstellt wird, der die Eigenschaften der genannten Elemente (gerade Strecken, Kreisbögen, Ellipsenbögen) in einer vorgegebenen Folge zusammenfasst.

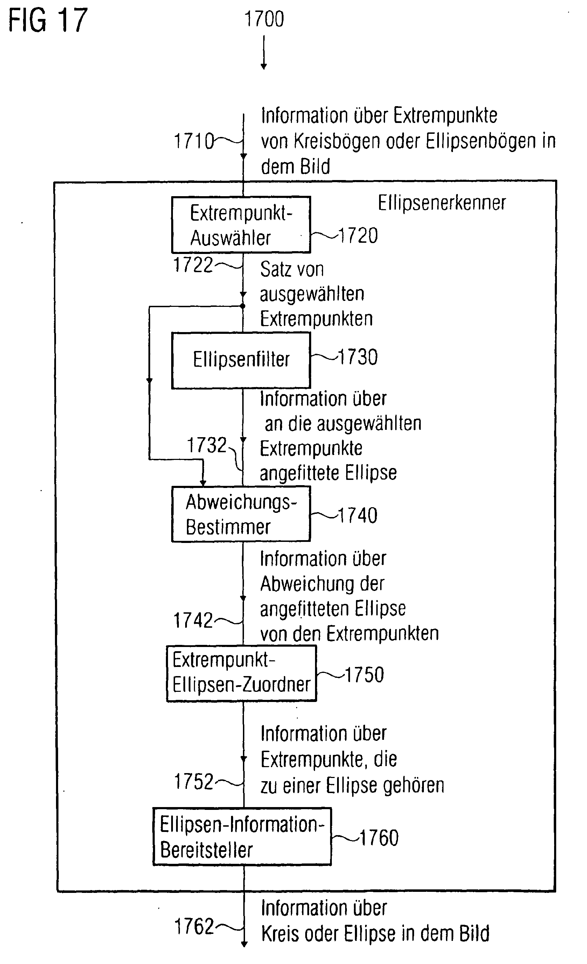

Im Folgenden wird beispielhaft ein Aufbau eines Ellipsenerkenners 1660 beschrieben. Zu diesem Zweck zeigt die Fig. 17 ein Blockschaltbild eines erfindungsgemäßen Ellipsenerkenners zum Einsatz in einer erfindungsgemäßen Vorrichtung zum Identifizieren eines Verkehrszeichens in einem Bild, gemäß einem Ausführungsbeispiel der vorliegenden Erfindung.

Der Ellipsenerkenner gemäß der Fig. 17 ist in seiner Gesamtheit mit 1700 bezeichnet. Der Ellipsenerkenner 1700 ist ausgelegt, um eine Information 1710 über Extrempunkte von Kreisbögen oder Ellipsenbögen in dem Bild zu empfangen. Die Information 1710 kann beispielsweise der durch den Hough-Transformator 1630 gelieferten Information 1634 entsprechen.

Der Ellipsenerkenner 1700 umfasst ferner einen Extrempunkt-Auswähler 1720, der die Information über Extrempunkte von Kreisbögen oder Ellipsenbögen in dem Bild empfängt. Der Extrempunkt-Auswähler 1720 ist dabei ausgelegt, um einen Satz 1722 von ausgewählten Extrempunkten aus den insgesamt durch den Hough-Transformator 1630 gelieferten Extrempunkten auszuwählen, und um dem Satz 1722 von ausgewählten Extrempunkten (bzw. eine Information, die den Satz von ausgewählten Extrempunkten beschreibt) an einen Ellipsen-Fitter 1730 zu liefern.

Der Ellipsen-Fitter 1730 ist ausgelegt, um eine Information über eine an die ausgewählten Extrempunkte (des Satzes 1722 von ausgewählten Extrempunkten) angefittete Ellipse zu liefern. Die entsprechen Information ist mit 1732 bezeichnet. Ein Abweichungs-Bestimmer 1740 ist ausgelegt, um die Information 1732 und ferner die Information 1722 zu empfangen. Der Abweichungs-Bestimmer 1740 ist dabei ausgelegt, um eine Abweichung zwischen den ausgewählten Extrempunkten eines Satzes von ausgewählten Extrempunkten und der an die ausgewählten Extrempunkte angefitteten Ellipse zu bestimmen und um entsprechend eine Information 1742 über die Abweichung der angefitteten Ellipse von den Extrempunkten des Satzes von ausgewählten Extrempunkten bereitzustellen.

Der Ellipsenerkenner 1700 weist ferner einen Extrempunkt-Ellipsen-Zuordner 1750 auf, der ausgelegt ist, um basierend auf der Information über die Abweichung der angefitteten Ellipse von den Extrempunkten eine Zuordnung zwischen Extrempunkten und Ellipsen vorzunehmen. In anderen Worten, umfasst die Information 1710 eine Beschreibung von Extrempunkten, die zu mehreren Ellipsen gehören, so liefert der Extrempunkt-Ellipsen-Zuordner 1750 eine Information 1752, welche Extrempunkte zu der gleichen Ellipse gehören. Somit liefert der Extrempunkt-Ellipsen-Zuordner 1750 bevorzugt eine Information, die vier Extrempunkte beschreibt bzw. anzeigt, die zu einer einzigen Ellipse gehören.

Der Ellipsenerkenner 1700 ist ferner ausgelegt, um basierend auf der Information 1752 eine Information 1762 über einen Kreis oder eine Ellipse in dem Bild bereitzustellen, wobei die Information 1762 zumindest einen Lageparameter, bevorzugt aber eine vollständige Lagebeschreibung, der in dem Bild vorhandenen Ellipse umfasst. Somit stellt der Ellipsenerkenner insgesamt basierend auf einer Information über Extrempunkte von Kreisbögen oder Ellipsenbögen in dem Bild eine Lageinformation 1762 für einen Kreis oder für eine Ellipse in dem Bild zur Verfügung.

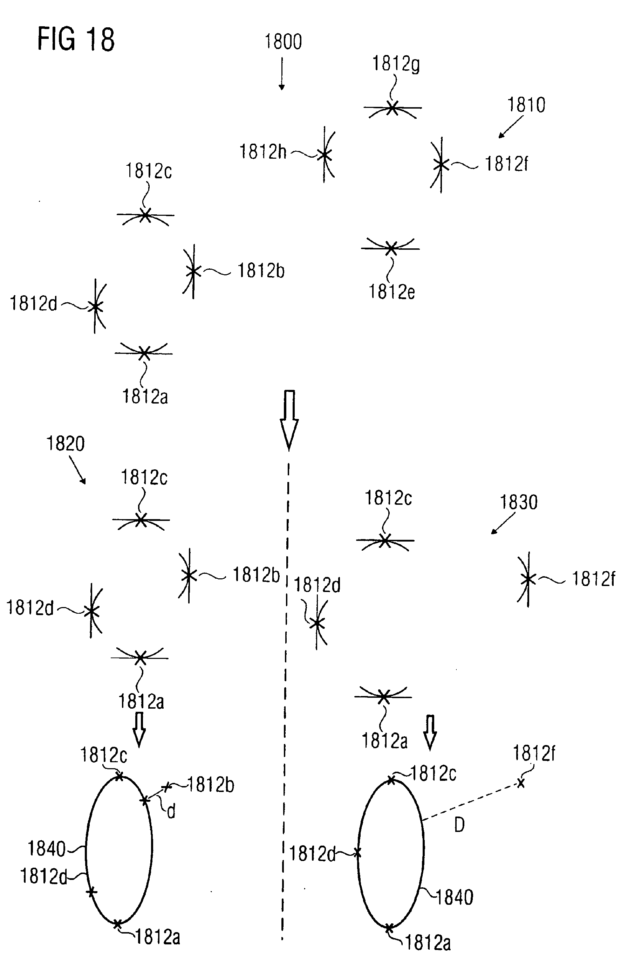

Details im Hinblick auf eine Vorgehensweise bei einer Zuordnung von Extrempunkten zu Ellipsen werden im Folgenden Bezug nehmend auf die Fig. 18 beschrieben. Diesbezüglich zeigt die Fig. 18 eine graphische Darstellung einer Vorgehensweise bei einer Identifizierung von Extrempunkten, die zu einer Ellipse gehören. Die graphische Darstellung der Fig. 18 ist in ihrer Gesamtheit mit 1800 bezeichnet.

Eine erste graphische Darstellung 1810 zeigt dabei acht Extrempunkte 1812a bis 1812h, die zu insgesamt zwei Ellipsen gehören. Eine graphische Darstellung 1820 zeigt eine erste Auswahl bzw. einen ersten Satz von vier Ellipsenpunkten 1812a, 1812b, 1812c, 1812d. Eine weitere graphische Darstellung 1830 zeigt eine Auswahl von vier Ellipsenpunkten 1812a, 1812f, 1812c, 1812d. Es ist bekannt dass es sich bei drei der Punkte eines Satzes von Extrempunkten um Extrempunkte handelt. Somit kann durch die drei Extrempunkte (beispielsweise durch die Extrempunkte 1812a, 1812c, 1812d) eine Ellipse gefittet werden. Diesbezüglich sei darauf hingewiesen, dass es sich bei Extrempunkten definitionsgemäß um Ellipsenpunkte handelt, die am weitesten in einer ersten Richtung, in einer der ersten Richtung entgegengesetzten Richtung, am weitesten in einer zweiten Richtung oder am weitesten in einer der zweiten Richtung entgegengesetzten Richtung gelegen sind. Eine Fit-Ellipse durch die drei Extrempunkte 1812a, 1812c, 1812d ist mit 1840 bezeichnet. Es ist ersichtlich, dass der Punkt 1812b sehr nahe bei der Fitt-Ellipse 1840 liegt. Die Abweichung d (Abstand) zwischen der Fit-Ellipse 1840 und dem Extrempunkt 1812b ergibt sich im Übrigen im Wesentlichen durch numerische Fehler bei der Berechnung des Ellipsen-Fits 1840 bzw. durch Toleranzen bei der Bestimmung der Koordinaten der Extrempunkte. Im Gegensatz dazu ist ein Abstand D zwischen dem Extrempunkt 1812f und der Fitt-Ellipse 1840 wesentlich größer als der Abstand d. Typischerweise ist der Abstand D größer als ein vorgegebener maximaler zulässiger Abstand, während hingegen der Abstand d kleiner aus ein vorgegebener zulässiger Abstand ist.

Diesbezüglich ist festzuhalten, dass bei einem bevorzugten Ausführungsbeispiel der Abstand zwischen der Fit-Ellipse durch drei Extrempunkte und einem vierten, ausgewählten Extrempunkt bestimmt und mit einem vorgegebenen Grenzwert verglichen wird. Ist der Abstand kleiner als der vorgegebene Grenzwert, so wird daraus geschlossen, dass der vierte Ellipsenpunkt zu der Ellipse gehört. Andernfalls wird davon ausgegangen, dass der vierte Ellipsenpunkt nicht zu der Ellipse durch die drei weiteren Ellipsenpunkte gehört.

Somit kann bei dem gezeigten Beispiel festgestellt werden, dass die Extrempunkte 1812a, 1812b, 1812c, 1812d zu der gleichen Ellipse gehören, während hingegen die Extrempunkte 1812a, 1812f, 1812c, 1812d nicht zu der gleichen Ellipse gehören.

Des Weiteren sei darauf hingewiesen, dass der Musteridentifizierer 1650 ausgelegt sein kann, um den Ausschnitt des Bildes 1610 in Abhängigkeit davon auszuwählen, ob in dem Bild eine allgemeine Form erkannt wurde, die durch die Information 1642 beschrieben wird, oder ob in dem Bild eine elliptische Form erkannt wurde, die durch die Information 1662 beschrieben wird. In anderen Worten, der Musteridentifizierer 1650 ist ausgelegt, um den entsprechende Algorithmus zur Auswahl des Bildausschnitts und zur Abbildung (beispielsweise zur affinen Verzerrung) des Bildausschnitts in Abhängigkeit von in dem Bild erkannten Form (allgemeine Form oder elliptische Formen) anpassen.

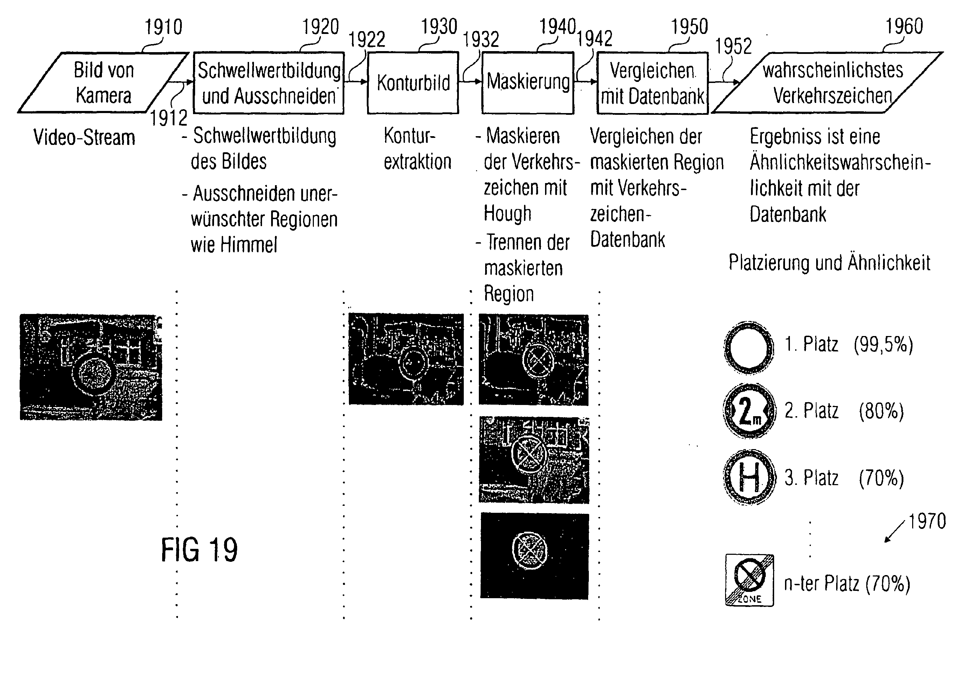

Fig. 19 zeigt ein Flussdiagramm eines erfindungsgemäßen Verfahrens zum Identifizieren eines Verkehrszeichen in einem Bild, gemäß eine Ausführungsbeispiel der vorliegenden Erfindung. Das Verfahren gemäß der Fig. 19 ist in seiner Gesamtheit mit 1900 bezeichnet. Das Verfahren 1900 umfasst ein Empfangen 1900 eines Bilds von einer Kamera. Bevorzugt allerdings wird von der Kamera nicht nur ein einzelnes Bild, sondern ein Strom von Bildern (auch als Video-Stream bezeichnet) empfangen.

Das Verfahren 1900 umfasst einen zweiten Schritt 1920 mit einer Schwellwertbildung, die auf das Bild angewendet wird, sowie mit einem Ausschneiden unerwünschter Regionen. So wird beispielsweise aus dem Bild der Himmel entfernt, so dass eine insgesamt zu verarbeitende Informationsmenge verringert wird. Die Schwellwertbildung kann im Übrigen so erfolgen, wie dies bereits weiter oben erläutert wurde. Das Verfahren 1900 umfasst in einem dritten Schritt eine Konturextraktion. Bei der Konturextraktion 1930 werden Kanten bzw. Konturen in dem durch den Schritt 1920 aufgrund des Kamerabildes 1912 ermittelten schwellwert-behandelten Bild 1922 erzeugt bzw. markiert. Somit entsteht in dem Schritt 1930 der Konturextraktion ein Kantenbild bzw. Konturbild 1932. In einem darauf folgenden Schritt 1940 werden Verkehrszeichen mit Hilfe einer Hough-Transformation maskiert. In anderen Worten, in dem Schritt 1940 werden beispielsweise dreieckige Formen, rechteckige Formen, quadratische Formen, runde Formen und/oder elliptische Formen erkannt und es wird eine Information bereitgestellt, die die entsprechenden Formen beschreibt. Anschließend werden die Bereiche, in denen die genannten Formen erkannt wurden, maskiert, so dass ein Bild entsteht, in dem beispielsweise nur der Bildinhalt innerhalb einer einzigen identifizierten Form vorhanden ist, während ein Bildinhalt in einer Umgebung der identifizierten Form ausgeblendet bzw. unterdrückt ist. Bei dem bevorzugten Ausführungsbeispiel wird die entsprechend maskierte Region aus dem Bild herausgetrennt, um beispielsweise ein verkleinertes Bild zu erhalten, das den Bildbereich innerhalb der erkannten Form umfasst, wobei allerdings nur ein kleiner Teil der Umgebung der erkannten Form enthalten ist als in dem ursprünglichen Kamerabild 1912. Somit entsteht durch den Schritt 1940 der Maskierung eine maskierte Region 1942.

In einem weiteren Schritt 1950 wird dann die maskierte Region mit Einträgen einer Datenbank bzw. einer Verkehrszeichendatenbank verglichen, um in der maskierten Region 1942 ein Verkehrszeichen zu erhalten. Durch den Vergleich 1950 mit Einträgen der Datenbank entsteht eine Information 1952, die Ähnlichkeiten zwischen einem Bildinhalt in der maskierten Region 1952 und verschiedenen in der Datenbank gespeicherten Verkehrszeichen beschreibt. Die Information 1952, die beispielsweise eine Platzierung verschiedener Verkehrszeichen (geordnet nach der Ähnlichkeit mit dem Bildinhalt der maskierten Region) und die dazugehörige Ähnlichkeit angibt, ist mit 1970 bezeichnet. Der Vergleich 1950 mit der Datenbank liefert somit als Ergebnis 1952 eine Ähnlichkeitswahrscheinlichkeit zwischen dem Bildinhalt der maskierten Region 1942 und Verkehrszeichen (bzw. Bildern von Verkehrszeichen) in der Bilddatenbank. Somit entsteht als Ergebnis eine Information über ein wahrscheinlichstes Verkehrszeichen. Die entsprechende Information ist mit 1960 bezeichnet.

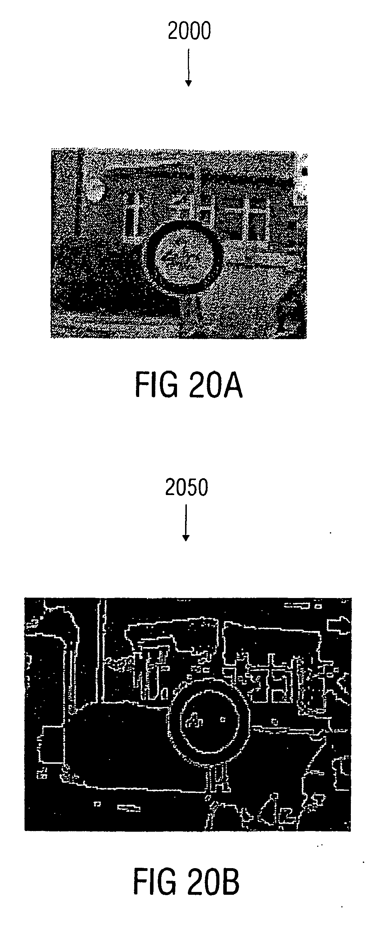

Im Folgenden wird auf Details des Verfahrens 1900 gemäß der Fig. 19 eingegangen. Zu diesem Zweck zeigt die Fig. 20a eine graphische Darstellung eines Kamerabilds, das ein Verkehrszeichen umfasst. Das in der Fig. 20a dargestellte Kamerabild ist in seiner Gesamtheit mit 2000 bezeichnet und kann beispielsweise dem Bild 1912 bei dem Verfahren 1900 entsprechen.

Fig. 20b zeigt eine graphische Darstellung eines Kantenbilds bzw. Konturbilds, wie es bei der Anwendung des Verfahrens 1900 gemäß Fig. 19 auftritt. Das Kantenbild bzw. Konturbild der Fig. 20 ist in seiner Gesamtheit mit 2050 bezeichnet, und entspricht im Wesentlichen dem Konturbild 1932.

Im Hinblick auf das Kantenbild 2050 ist anzumerken, dass die vorliegende Erfindung in der Lage ist, stabile Kantenbilder 1932 aus dem aufgenommenen Videostrom 1912 zu erzeugen. Ferner werden bei der Erstellung des Kantebilds auch Markierungen, die auf die Straße gemalt sind (z. B. auf die Straße gemalte Geschwindigkeitsbegrenzungen oder Warnzeichen) und Begrenzungen der Spur berücksichtigt. Eine besondere Herausforderung bei der Erstellung des Kantenbilds ergibt sich daraus, dass das Kantebild von den Lichtverhältnissen unabhängig sein soll. Eine solche Herausforderung kann beispielsweise durch eine automatische Einstellung des Schwellwerts bei der Schwellwertbildung 1920 gelöst werden. Im Übrigen müssen ferner schnelle Kamerabewegungen berücksichtigt werden.

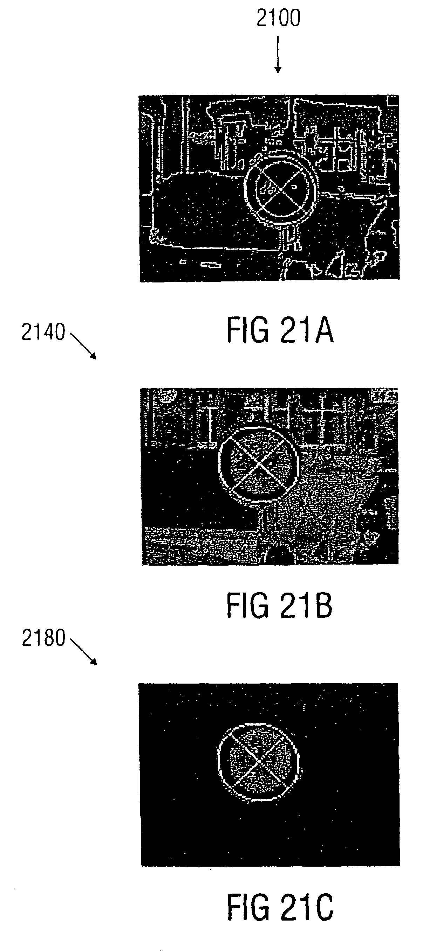

Die Fig. 21a zeigt eine graphische Darstellung eines Kantenbilds mit einer darin markierten kreisförmigen bzw. ellipsenförmigen Form. Das markierte Kantenbild gemäß der Fig. 21a ist in seiner Gesamtheit mit 2100 bezeichnet. Die Markierung einer runden bzw. elliptischen Form kann beispielsweise unter Verwendung einer Hough-Transformation erfolgen. Mit Hilfe einer Hough-Transformation können nämlich Kurven in Kantenbildern gefunden werden. Ferner ist eine Formerkennung bei runden Objekten möglich.

Fig. 21b zeigt eine graphische Darstellung eines Bildes (z. B. des Kamerabildes 1912) mit einer darin markierten kreisförmigen oder ellipsenförmigen Form. Das markierte Kamerabild gemäß der Fig. 21 ist in seiner Gesamtheit mit 2140 bezeichnet. Im Hinblick auf das markierte Kamerabild 2140 sei darauf hingewiesen, dass die erkannten Formen die interessanten bzw. relevanten Regionen des Bildes darstellen.

Fig. 21c zeigt eine graphische Darstellung eines maskierten Kamerabildes. Das maskierte Kamerabild ist gemäß der Fig. 21c in seiner Gesamtheit 2180 bezeichnet. In dem maskierten Kamerabild sind Bereiche außerhalb der erkannten kreisförmigen bzw. ellipsenförmigen Form unterdrückt bzw. beispielsweise auf Schwarz oder auf einen anderen vorgegebenen Farbwert gesetzt. Somit ist die erkannte Region bzw. der erkannte, z. B. kreisförmige oder ellipsenförmige Bereich, maskiert. Der erkannte bzw. detektierte Bereich kann somit maskiert und gegebenenfalls zusätzlich abgetrennt werden. Somit ist festzuhalten, dass die graphische Darstellung 2180 beispielsweise das durch die Maskierung 1940 entstehende maskierte Bild 1942 beschreibt.

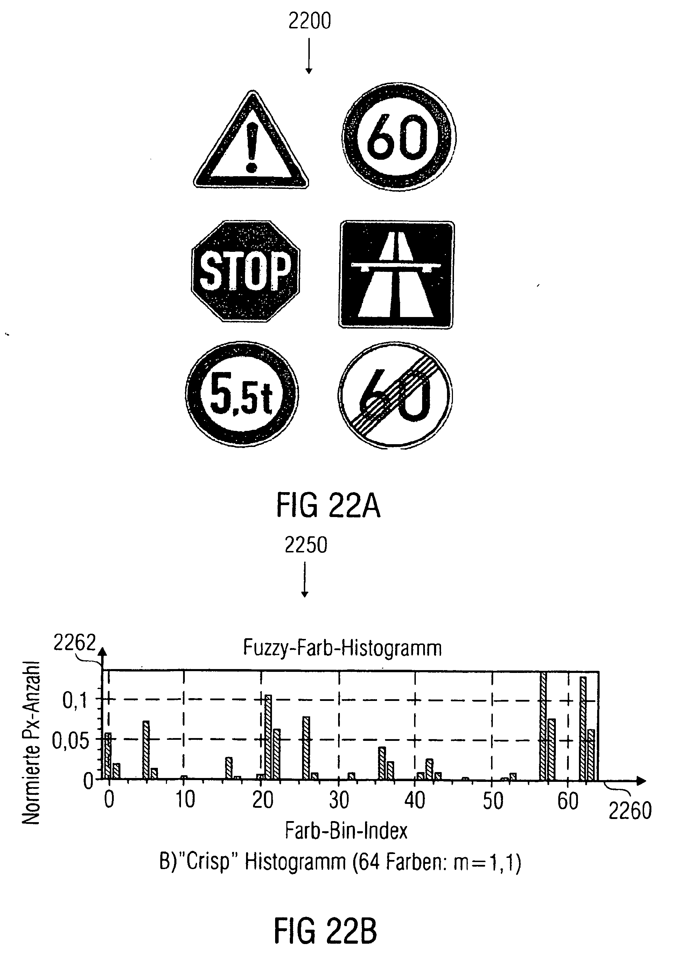

Im Folgenden wird beschrieben, wie der Vergleich der Verkehrszeichen-Datenbank erfolgen kann. Zu diesem Zweck zeigt die Fig. 22a eine graphische Darstellung von verschiedenen Verkehrszeichen, deren Abbild beispielsweise in der Verkehrszeichendatenbank gespeichert sein kann. Die Verkehrszeichendatenbank kann Schilder verschiedener Formen umfassen. Typische Formen für Verkehrszeichen sind dreieckig, rechteckig, quadratisch, rund und achteckig (vgl. Stop-Schild).

Der Vergleich mit der Verkehrszeichendatenbank, der in dem Schritt 1950 des Verfahrens 1900 erfolgt, kann beispielsweise dadurch erfolgen, dass Merkmale aus dem maskierten Bereich extrahiert werden, und dass die extrahierten Merkmale mit in der Datenbank gespeicherten Merkmalen verglichen werden.

Bei einem bevorzugten Ausführungsbeispiel umfasst die Verkehrszeichen-Datenbank beispielsweise Farb-Histogramme der gespeicherten Verkehrszeichen. Die Farb-Histogramme geben dabei an, in welchem Verhältnis zueinander die einzelnen Farben in den Verkehrszeichen auftreten. Dabei kann beispielsweise eine Richtungsabhängigkeit der Farbverteilung berücksichtigt sein, und es kann beispielsweise eine Gewichtung der Farbverteilung in Abhängigkeit von der Position erfolgen.

Ein Beispiel für ein Farbhistogramm ist in der Fig. 22b gezeigt, wobei das Fuzzy-Farb-Histogramm gemäß der Fig. 22b in seiner Gesamtheit mit 2250 bezeichnet ist. Eine Abszisse 2260 zeigt dabei einen Farb-Kriterien-Index, der beispielsweise eine Farbe beschreibt. Eine Ordinate 2262 beschreibt beispielsweise eine normierte Pixelanzahl. Das Fuzzy-Farb-Histogramm 2250 beschreibt somit insgesamt, welchen relativen Anteil Farbpixel einer bestimmten Farbe an einem Gesamtbild haben.

Somit wird beispielsweise durch gespeicherte Farb-Histogramme 2250 ermöglicht, dass eine Mahrzahl von Vergleichen mit Einträgen bzw. Merkmalen in einer Datenbank erfolgen, wobei die Datenbank die Farb-Histogramme der gespeicherten Verkehrszeichen umfasst.

Es sei darauf hingewiesen, dass für eine Bestimmung einer Übereinstimmung verschiedene Verfahren zur Merkmalsextraktion und zum Merkmalsvergleich einsetzbar sind:

- Hough-Transformation zur Digit-Detektion bzw. Zahlendetektion;

- Farb-Histogramme: farbkonstante Indexierung (vergleiche [1], [2]) oder Fuzzy-Farb-Histogramme (vergleiche [3]);

- räumliche Farb-Histogramme: räumliches chromatisches Histogramm (vergleiche [1]), räumliches Fuzzy-Farb-Histogramm (vergleiche [3]).

Im Folgenden werden noch Beispielbilder von Verkehrszeichen kurz erläutert.

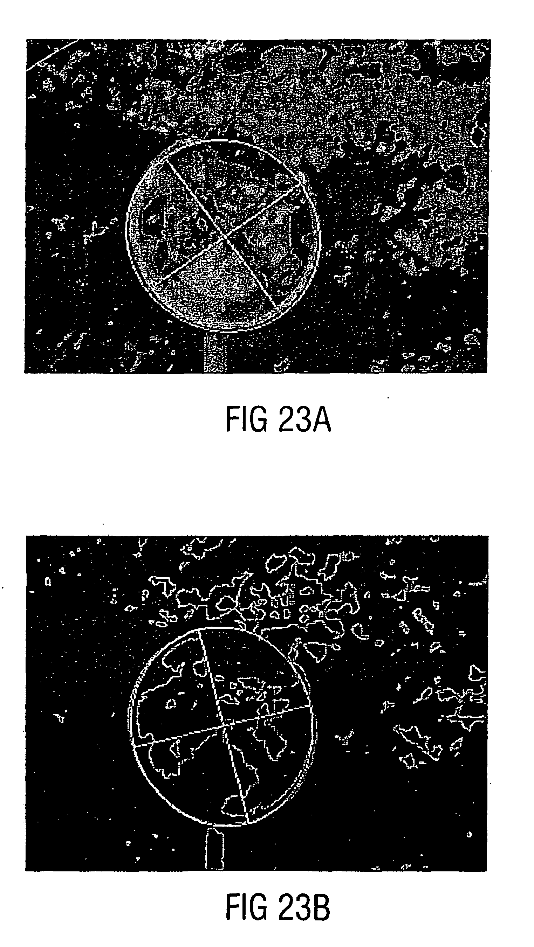

So zeigt die Fig. 23a eine graphische Darstellung eines abgeschatteten Verkehrszeichens. Die graphische Darstellung der Fig. 23a berücksichtigt dabei eine Schwellwertbildung. Es ist allerdings ersichtlich, dass mit Hilfe einer Hough-Transformation eine Form bzw. ein Umriss des Verkehrszeichens trotz der Abschattung erkannt und markiert werden kann. Die Erkennung des Verkehrszeichens ist aus der kreisförmigen bzw. ellipsenförmigen Markierung (weiße Linie) ersichtlich.

Fig. 23b zeigt eine graphische Darstellung des gleichen Verkehrszeichens als ein Konturbild. In dem Konturbild ist wiederum eine kreisförmige bzw. ellipsenförmige Form des Verkehrszeichens markiert (vergleiche weiße Linie).

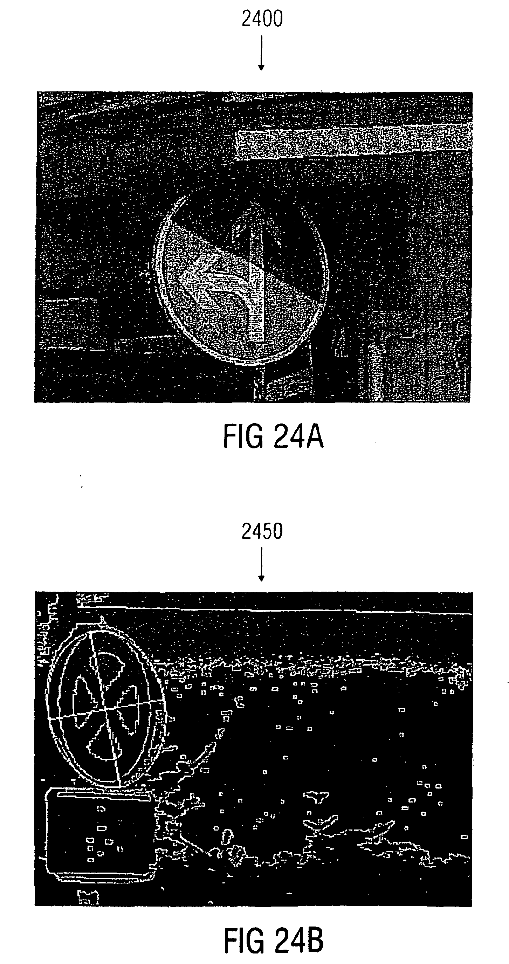

Fig. 24a zeigt eine graphische Darstellung eines halbabgeschatteten-Verkehrszeichens. Die graphische Darstellung der Fig. 24a ist in ihrer Gesamtheit mit 2400 bezeichnet.

Fig. 24b zeigt eine graphische Darstellung eines Konturbilds bzw. Kantenbilds, das auf dem Kamerabild basiert, das mit einer bewegten Kamera aufgenommen wurde. Die graphische Darstellung der Fig. 24b ist in ihrer Gesamtheit mit 2450 bezeichnet.

Aus den graphischen Darstellungen 2400 und 2450 ist ersichtlich, dass mit Hilfe einer Hough-Transformation in allen Fällen, also sowohl im Falle einer teilweisen Abschattung eines Verkehrszeichens als auch im Falle, dass das Verkehrszeichen mit einer bewegten Kamera aufgenommen wird, die runde Form des Verkehrszeichens detektiert werden kann.

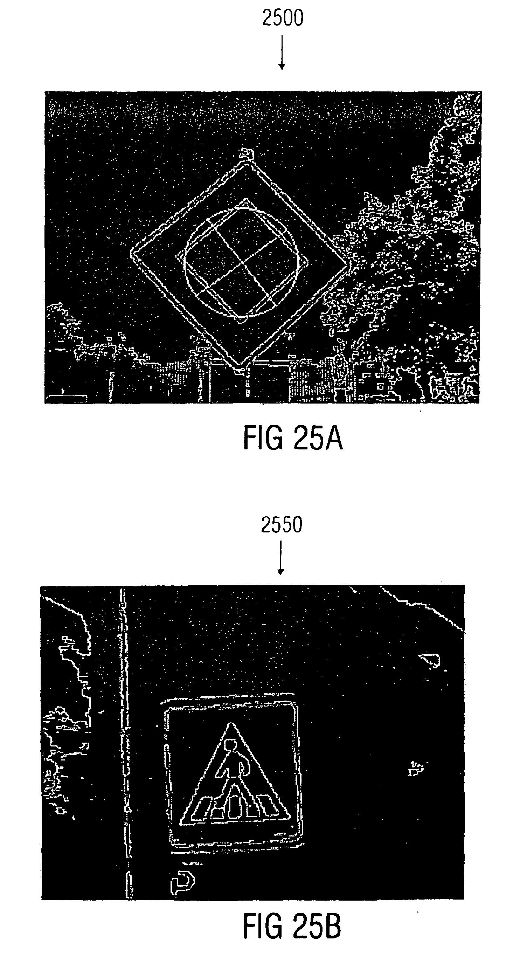

Fig. 25a zeigt eine graphische Darstellung eines rechtwinkligen bzw. quadratischen Verkehrszeichens, in dem durch eine Hough-Transformation ein zumindest näherungsweise elliptischer Teil markiert wird. Die graphische Darstellung gemäß der Fig. 25a ist im Übrigen in ihrer Gesamtheit 2500 bezeichnet.

Die Fig. 25b zeigt eine graphische Darstellung von Konturen bzw. Kanten eines weiteren rechteckigen bzw. quadratischen Verkehrszeichens. Die graphische Darstellung der Fig. 25b ist in ihrer Gesamtheit mit 2550 bezeichnet.

Anhand der graphischen Darstellungen 2500, 2550 sind die Herausforderungen ersichtlich, die sich im Hinblick auf rechteckige bzw. quadratische Verkehrszeichen ergeben, und die beispielsweise durch den erfindungsgemäßen Formenerkenner gelöst werden.

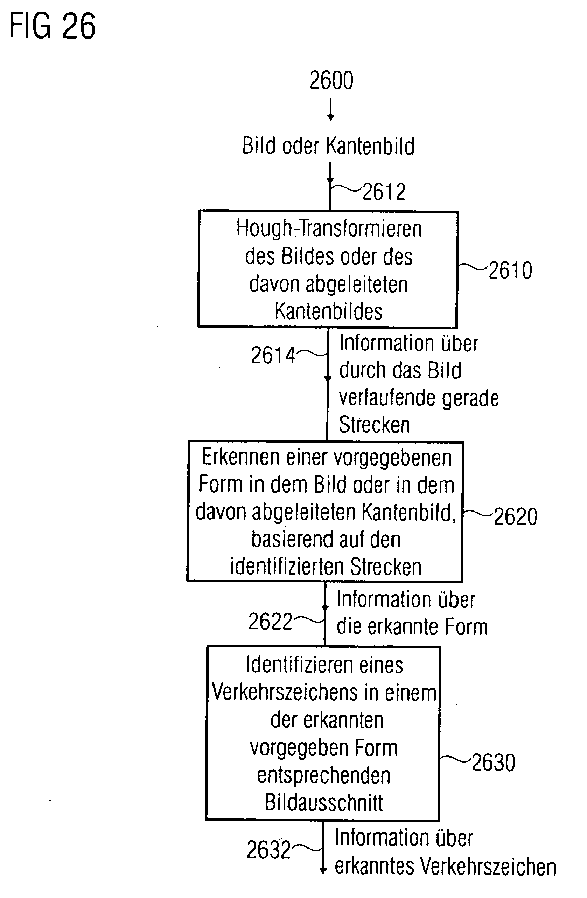

Fig. 26 zeigt ein Flussdiagramm eines des erfindungsgemäßen Verfahrens zum Erkennen eines Verkehrszeichens, gemäß einem Ausführungsbeispiel der vorliegenden Erfindung.

Das Verfahren gemäß der Fig. 26 ist in seiner Gesamtheit mit 2600 bezeichnet. Das Verfahren 2600 umfasst einen ersten Schritt 1610, in dem ein Bild oder Kantenbild 2612 Hough-transformiert wird. Das Hough-Transformieren 2610 des Bildes oder des davon abgeleiteten Kantenbildes liefert eine Information 2614 über durch das Bild verlaufende gerade Strecken. Das Verfahren 2600 umfasst ferner ein Erkennen 2620 einer vorgegebenen Form in dem Bild oder in dem davon abgeleiteten Kantenbild, basierend auf den identifizierten geraden Strecken bzw. basierend auf der Information 2614. Das Erkennen 2620 einer vorgegebenen Form liefert somit eine Information 2622 über die erkannte Form. Das Verfahren 2600 umfasst ferner in einem dritten Schritt 2630 ein Identifizieren eines Verkehrszeichens in einem der erkannten vorgegebenen Form entsprechenden Bildausschnitt. Durch das Identifizieren entsteht somit eine Information 2632 über ein erkanntes Verkehrszeichen. Es sei darauf hingewiesen, dass das Verfahren 2600 um all diejenigen Schritte ergänzt werden kann, die durch die im Rahmen der vorliegenden Beschreibung beschriebenen erfindungsgemäßen Vorrichtungen durchgeführt werden. Ebenso kann das Verfahren 2600 um Schritte ergänzt werden, die anhand des Verfahrens 1900 erläutert wurden.

Das Verfahren der parallelen Hough-Transformation sowie ein alternativer Algorithmus zur Erkennung von Ellipsen in einem Bild werden im Folgenden Bezug nehmend auf die Fig. 1 bis 9 näher erläutert. Dabei wird auch eine Hardware-Implementierung der parallelen Hough-Transformation beschrieben, die beispielsweise in einem FPGA implementiert werden kann.

Fig. 1 zeigt ein Blockschaltbild einer erfindungsgemäßen Vorrichtung zum Ermitteln einer Information über eine Form und/oder eine Lage einer Ellipse in einem graphischen Bild gemäß einem ersten Ausführungsbeispiel der vorliegenden Erfindung. Das Blockschaltbild der Fig. 1 ist in seiner Gesamtheit mit 100 bezeichnet. Die erfindungsgemäße Vorrichtung 100 umfasst im Wesentlichen eine Koordinatenbestimmungseinrichtung 110, die ausgelegt ist, um Bilddaten 112 zu empfangen. Koordinatenbestimmungseinrichtung 110 ist ausgelegt, um Koordinaten 114 von ausgezeichneten Ellipsenpunkten einer in den Bilddaten 112 enthaltenen Ellipse zu extrahieren und diese Koordinaten 114 sodann einer Ellipsenberechnungseinrichtung 120 zur Verfügung zu stellen. Die Ellipsenberechnungseinrichtung 120 ist hierbei ausgelegt, um aus den von der Koordinatenbestimmungseinrichtung 110 gelieferten Koordinaten 114 Ellipsenparameter 122 zu berechnen, und die Ellipsenparameter 122 für eine weitere Verarbeitung auszugeben.

Basierend auf der obigen strukturellen Beschreibung wird im Folgenden die Funktionsweise der erfindungsgemäßen Vorrichtung näher erläutert. Es wird hierbei davon ausgegangen, dass die Bilddaten 112, die ein graphisches Bild beschreiben, eine Ellipse enthalten. Ferner wird davon ausgegangen, dass in den Bilddaten 112 eine erste Richtung 130 sowie eine zweite Richtung, 132 definiert ist. Eine in den Bilddaten 112 enthaltende Ellipse 134 weist dabei einen ersten Ellipsenpunkt 136 mit zugehörigen Koordinaten $(x_1', y_1')$ auf, wobei der erste Ellipsenpunkt 136 den am weitesten in der ersten Richtung gelegenen Ellipsenpunkt darstellt. Die Lage ist hierbei beispielsweise durch ein rechtwinkliges oder schiefes Koordinatensystem definiert, das die erste Richtung 130 und die zweite Richtung 132 als bevorzugte Richtungen bzw. als Koordinatenachsen aufweist. Ferner weist die Ellipse 134 einen zweiten Ellipsenpunkt 138 mit zugehörigen Koordinaten $(x_3', y_3')$ auf, der einen am weitesten in einer der ersten Richtung 130 entgegengesetzten Richtung gelegenen Punkt der Ellipse darstellt. Ferner weist die Ellipse einen dritten Ellipsenpunkt 140 mit zugehörigen Koordinaten $(x_4', y_4')$ auf, der einen am weitesten in der zweiten Richtung 132 gelegenen Punkt der Ellipse darstellt. Schließlich weist die Ellipse 134 auch noch einen vierten Ellipsenpunkt 142 mit zugehörigen Koordinaten $(x_2', y_2')$ auf, der einen am weitesten in einer der zweiten Richtung 132 entgegengesetzten Richtung gelegenen Punkt der Ellipse darstellt.

Weiterhin wird darauf hingewiesen, dass die Ellipse 134 an den vier vorher beschriebenen ausgezeichneten Ellipsenpunkten 136, 138, 140, 142 jeweils durch gebogene Liniensegmente 146, 148, 150, 152 angenähert werden kann. Die gebogenen Liniensegmente 146, 148, 150, 152 können jeweils durch eine Mehrzahl von Parametern beschrieben werden. So kann beispielsweise das erste Liniensegment 146 durch zwei skalare Lage-Parameter, beispielsweise eine x-Koordinate und eine y-Koordinate, und einen Krümmungsparameter, beispielsweise einen Krümmungsradius, beschrieben werden. Ferner kann das erste Liniensegment 146 beispielsweise die Ellipse in dem ersten Ellipsenpunkt 136 berühren. Es ist allerdings auch möglich, dass das erste Liniensegment 136 die Ellipse 134 an dem ersten Ellipsenpunkt 136 schneidet, wobei allerdings bevorzugt die Ellipse 134 und das erste gebogene Liniensegment 146 an dem ersten Ellipsenpunkt 136 eine gemeinsame Tangente aufweisen. Die gemeinsame Tangente kann dabei durch eine Linie gegeben sein, die so beschaffen ist, dass ihre Punkte in der ersten Richtung eine konstante Koordinate aufweisen. Dies entspricht der Definition des ersten Ellipsenpunktes als dem am weitesten in der ersten Richtung gelegenen Punkt der Ellipse. Weiterhin wird darauf hingewiesen, dass das erste Liniensegment 146 bevorzugt zu einer schar von parametrisierten gebogenen Liniensegmenten gehört, wobei die Parameter beispielsweise die Lage und/oder die Krümmung der einzelnen Liniensegmente der Schar beschreiben.

Die Parameter des ersten Liniensegments 146, also die Lage und/oder Krümmung des ersten Liniensegments 146, hängen somit mit der Lage und/oder der Form der Ellipse 134 eng zusammen.

Zusammenfassend wird darauf hingewiesen, dass ein Liniensegment dann als das erste Liniensegment 146 angesehen wird, das die Ellipse 134 an dem ersten Ellipsenpunkt 136 annähert, wenn es der Ellipse in einer Umgebung des ersten Ellipsenpunktes bezüglich eines Abstandsmaßes hinreichend ähnlich ist. Zusätzlich kann verlangt sein, dass weitere Kriterien erfüllt sind, dass also beispielsweise ein Liniensegment nur dann als das erste Liniensegment 146 identifiziert wird, wenn es eine gemeinsame Tangente mit der Linie der Ellipse 134 an dem ersten Ellipsenpunkt 136 aufweist.

In analoger Weise sind das zweite gebogene Liniensegment 148, das dritte gebogene Liniensegment 150 und das vierte gebogene Liniensegment 152 definiert, wobei das zweite gebogene Liniensegment 148 ein gebogenes Liniensegment ist, das die Ellipse an dem zweiten Ellipsenpunkt 138 annähert, wobei das dritte gebogene Liniensegment 140 ein gebogenes Liniensegment ist, das die Ellipse an dem dritten Ellipsenpunkt 150 annähert, und wobei das vierte gebogene Liniensegment ein gebogenes Liniensegment ist, das die Ellipse 134 an dem vierten Ellipsenpunkt 142 annähert.

Die Koordinatenbestimmungseinrichtung 110 ist weiterhin ausgelegt, um mindestens einen Parameter des ersten gebogenen Liniensegments 146 zu bestimmen, und um basierend auf dem mindestens einen bestimmten Parameter des ersten gebogenen Liniensegments 146 die Koordinaten $(x_1', y_1')$ des ersten Ellipsenpunktes 136 zu bestimmen. Ferner ist die Koordinatenbestimmungseinrichtung 110 auch noch ausgelegt, um mindestens einen Parameter des zweiten gebogenen Liniensegments 148 zu bestimmen, und um basierend auf dem mindestens einen Parameter des zweiten gebogenen Liniensegments 148 die Koordinaten $(x_3', y_3')$ des zweiten Ellipsenpunktes 138 zu bestimmen.

Gehört beispielsweise das erste gebogene Liniensegment 146 zu einer parametrisierten Schar von gebogenen Liniensegmenten, so entspricht die Bestimmung der Parameter des ersten gebogenen Liniensegments dem Identifizieren eines gebogenen Liniensegments aus der Schar von gebogenen Liniensegmenten, das die Ellipse 134 an dem ersten Ellipsenpunkt 136 hinreichend gut und/oder bestmöglich annähert. Eine Güte der Annäherung kann hierbei beispielsweise durch ein mathematisches Abstandsmaß bestimmt sein, und es kann ein Schwellwert für das Abstandsmaß festgelegt sein, wobei bei einem Überschreiten oder Unterschreiten des Schwellwerts davon ausgegangen wird, dass ein gebogenes Liniensegment aus der parametrisierten Schar von gebogenen Liniensegmenten die Ellipse 134 an dem ersten Ellipsenpunkt 136 hinreichend gut annähert.

In vergleichbarer Weise kann die Koordinatenbestimmungseinrichtung 110 die Parameter des zweiten gebogenen Liniensegments 148, das die Ellipse 134 in einer Umgebung des zweiten Ellipsenpunktes 138 annähert, bestimmen. Eine parametrisierte Schar von gebogenen Liniensegmenten, die beispielsweise bei der Bestimmung der Parameter des zweiten gebogenen Liniensegments 148 verwendet wird, kann hierbei gleich der parametrisierten Scharr von Liniensegmenten, die für eine Bestimmung der Parameter des ersten gebogenen Liniensegments 146 verwendet wird, sein, oder sich davon, beispielsweise hinsichtlich der Krümmungsrichtung, unterscheiden.

Hat die Koordinatenbestimmungseinrichtung 110 den mindestens einen Parameter des ersten gebogenen Liniensegments 146 und den mindestens einen Parameter des zweiten gebogenen Liniensegments 148 bestimmt, so kann die Koordinatenbestimmungseinrichtung 110 davon die Koordinaten $(x_1', y_1')$ des ersten Ellipsenpunktes 136 sowie die Koordinaten $(x_3', y_3')$ des zweiten Ellipsenpunktes 138 ableiten. Die Koordinatenbestimmungseinrichtung 110 leitet daraufhin die Koordinaten $(x_1', y_1')$ des ersten Ellipsenpunktes 136 sowie die Koordinaten $(x_3', y_3')$ des zweiten Ellipsenpunktes 138 an die Ellipsenberechnungseinrichtung 120 weiter.

Die Ellipsenberechnungseinrichtung 120 kann dann, basierend auf den Koordinaten $(x_1', y_1')$ des ersten Ellipsenpunktes 136 und den Koordinaten $(x_3', y_3')$ des zweiten Ellipsenpunktes 138 zumindest die Mittelpunktkoordinaten $(x_m', y_m')$ der Ellipse 134 berechnen. Damit ist ein Mittelpunkt 160 der Ellipse 134 bekannt.

Die Koordinatenbestimmungseinrichtung 110 kann ferner bevorzugt ausgelegt sein, um weiterhin mindestens einen Parameter des dritten gebogenen Liniensegments 150, das die Ellipse aus dem dritten Ellipsenpunkt 140 annähert, zu ermitteln. Hierbei kann wiederum bestimmt werden, welches gebogene Liniensegment aus einer Schar von gebogenen Liniensegmenten die Ellipse 134 an dem dritten Ellipsenpunkt 140 am besten annähert. Der zugehörige Scharparameter stellt dann beispielsweise wiederum den Parameter des identifizierten dritten Liniensegments 150 dar, und kann von der Koordinatenbestimmungseinrichtung verwendet werden, um mindestens eine Koordinate $x_4'$ oder $y_4'$ des dritten Ellipsenpunktes 140 zu ermitteln. Die Koordinatenbestimmungseinrichtung 110 kann diese Koordinate $x_4'$ oder $y_4'$ dann wiederum an die Ellipsenberechnungseinrichtung 120 weitergeben, wodurch es der Ellipsenberechnungseinrichtung 120 ermöglicht wird, in Verbindung mit den Koordinaten $(x_1', y_1')$ und $(x_3', y_3')$ des ersten Ellipsenpunktes 136 und des zweiten Ellipsenpunktes 138 sämtliche Parameter der Ellipse, also die beiden Koordinaten $(x_m', y_m')$ des Ellipsenmittelpunktes 160, die Längen a', b' der beiden Halbachsen der Ellipse 134 sowie einen Rotationswinkel $\alpha'$ zu bestimmen bzw. unter Verwendung von analytischen Formeln zu berechnen.

Es sei hier noch einmal explizit darauf hingewiesen, dass für die Bestimmung der Parameter des ersten Liniensegments 146 a-prio-Wissen über die Gestalt des ersten Liniensegments 146 verwendet werden kann. Es ist nämlich von vorneherein bekannt, dass das erste Liniensegment 146 die Ellipse 134 an dem ersten Ellipsenpunkt 136 annähern muss, dass also das erste Liniensegment 146 die gleiche Krümmungseigenschaft oder zumindest die gleiche Krümmungsrichtung aufweisen muss, die die Ellipse 134 an dem ersten Ellipsenpunkt 136 aufweist. Ferner ist das erste Liniensegment 146 bevorzugt dadurch definiert, dass es die Ellipse an dem ersten Ellipsenpunkt 136 tangiert oder zumindest eine gemeinsame Tangente mit der Ellipse 134 an dem ersten Ellipsenpunkt 136 aufweist. Somit ist die Koordinatenbestimmungseinrichtung allgemein bevorzugt ausgelegt, um in dem graphischen Bild einen Kurvenverlauf als das erste gebogene Liniensegment zu identifizieren, der obige die genannten Bedingungen (Krümmungseigenschaft, Tangentenrichtung) erfüllt. Die Verwendung einer parametrisierten Kurvenschar ist hier lediglich als Beispiel zu sehen, es können aber vielmehr alle Mustererkennungsalgorithmen verwendet werden, die in der Lage sind, Parameter eines gebogenen Liniensegments mit vorgegebener Krümmungsrichtung und vorgegebener Tangenten-Richtung zu identifizieren und durch zumindest einen Lage-Parameter zu beschreiben.

Analoge Definitionen gelten auch für das zweite gebogene Liniensegment 148, das dritte gebogene Liniensegment 150 und das optional zusätzlich verwendete vierte gebogene Liniensegment 152. Entsprechende Algorithmen wie für die Identifizierung des ersten gebogenen Liniensegments können verwendet werden, wobei die Algorithmen lediglich bezüglich der Krümmungsrichtung und der Tangentenrichtung angepasst werden müssen.

Ein wesentlicher Vorteil einer erfindungsgemäßen Vorrichtung zum Ermitteln einer Information über eine Form und/oder eine Lage einer Ellipse besteht darin, dass "Extrempunkte" der zu identifizierenden Ellipse, das heißt Punkte der Ellipse, die am weitesten in mehreren vorgegebenen Richtungen liegen, bestimmt werden. Der erste Ellipsenpunkt 136, der zweite Ellipsenpunkt 138, der dritte Ellipsenpunkt 140 und der vierte Ellipsenpunkt 143 können nämlich gemäß obiger Definition als Extrempunkte aufgefasst werden. Die Extrempunkte werden hierbei durch ein Identifizieren eines gebogenen Liniensegments, das die Ellipse an dem jeweiligen Extrempunkt annähert, bestimmt. Hierbei kann das a-priori-Wissen über die Krümmung der Ellipse an dem jeweiligen Extrempunkt verwendet werden, sowie ferner a-priori-Wissen über eine Richtung einer Tangente an die Ellipse an dem jeweiligen Extrempunkt. Es werden also bevorzugt nicht beliebige Bildpunkte des graphischen Bildes bzw. der Bilddaten 112 für die Bestimmung der Extrempunkte herangezogen, sondern nur solche Bildpunkte, die eine gebogene Linie (bzw. ein gebogenes Liniensegment) darstellen, welche eine Ellipse an dem jeweiligen Drehpunkt annähern kann.

Durch das a-priori-Wissen, also durch ein Wissen über die Krümmung eines derartigen gebogenen Liniensegments und die Richtung der Tangente eines derartigen gebogenen Liniensegments an dem Punkt, an dem es die Ellipse 134 berührt (bzw. zumindest eine gemeinsame Tangente mit der Ellipse aufweist), kann hierbei ein geeignetes gebogenes Liniensegment, das die Ellipse 134 an einem der Extrempunkte annähert, in einer sehr effizienten Weise gefunden werden. Sind einmal zwei gegenüberliegende Extrempunkte der Ellipse, also zum Beispiel der erste Ellipsenpunkt 136 und der zweite Ellipsenpunkt 138, bekannt, so kann in einem zweiten Schritt durch die Ellipsenberechnungseinrichtung 120 zumindest der Mittelpunkt 160 der Ellipse in einer rechnerisch sehr effizienten Weisen bestimmt werden.

Ferner ist lediglich die Bestimmung von zwei Koordinaten $(x_1', y_1')$ des ersten Ellipsenpunktes 136, von zwei Koordinaten $(x_3', y_3')$ des zweiten Ellipsenpunktes 138 und von nur einer Koordinate $(x_4', y_4')$ des dritten Ellipsenpunktes 140 ausreichend, um sämtliche Ellipsenparameter $((x_m', y_m'),$ a', b', $\alpha'$ zu berechnen.

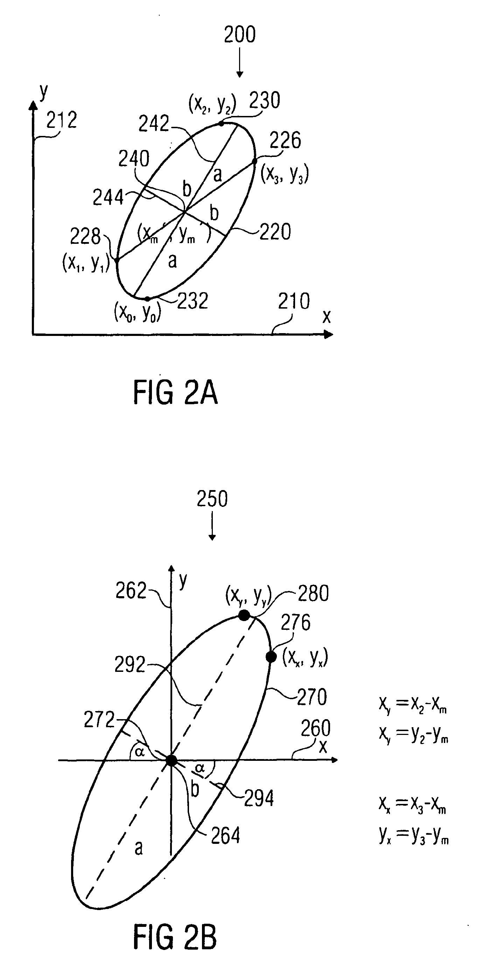

Um ein Verständnis der folgenden Ausführungen zu erleichtern, werden nachstehend die verwendeten Definitionen der Ellipsenparameter dargestellt. Fig. 2a zeigt daher eine graphische Darstellung einer Ellipse sowie der Koordinaten eines ersten Ellipsenpunktes, eines zweiten Ellipsenpunktes, eines dritten Ellipsenpunktes, eines vierten Ellipsenpunktes und eines Mittelpunkts der Ellipse. Die graphische Darstellung der Fig. 2a ist in ihrere Gesamtheit mit 200 bezeichnet. Die graphische Darstellung 200 zeigt ein kartesisches Koordinatensystem mit einer x-Achse 210 sowie einer y-Achse 212, wobei die x-Achse 210 und die y-Achse 212 zueinander senkrecht sind. In dem durch die x-Achse 210 und die y-Achse 212 gebildeten Koordinatensystem ist eine Ellipse 220 angeordnet. Die Ellipse 220 weist einen ersten Ellipsenpunkt 226 mit zugehörigen Koordinaten $(x_3, y_3)$ auf. Der erste Ellipsenpunkt 226 stellt hierbei den am weitesten in der durch die x-Achse 210 definierten x-Richtung gelegenen Punkte der Ellipse 220 dar. Ein zweiter Ellipsenpunkt 228 mit zugehörigen Koordinaten $(x_1, y_1)$ bildet den am weitesten in negativer x-Richtung gelegenen Punkt der Ellipse 220. Ein dritter Ellipsenpunkt 230 mit zugehörigen Koordinaten $(x_2, y_2)$ stellt ferner den am weitesten in der durch die y-Achse 212 definierten y-Richtung gelegenen Punkt der Ellipse 220 dar, und ein vierter Punkt 232 mit zugehörigen Koordinaten $(x_0, y_0)$ bildet einen am weitesten in negativer y-Richtung gelegen Punkt der Ellipse 220. Ein Mittelpunkt 240 der Ellipse weist ferner Mittelpunktkoordinaten $(x_m, y_m)$ auf. Die graphische Darstellung 200 zeigt ferner eine erste Halbachse 242 der Ellipse, die in dem gezeigten Fall die große Halbachse der Ellipse darstellt, und deren Länge durch den Parameter a beschrieben wird. Eine zweite Halbachse 244 der Ellipse 220 bildet in dem gezeigten Fall eine kleine Halbachse der Ellipse 220. Die Länge der zweiten Halbachse 244 der Ellipse ist durch den Parameter b beschrieben.

Ferner zeigt 2b eine graphische Darstellung einer in den Ursprung verschobenen Ellipse zusammen mit transformierten Koordinaten von charakteristischen Ellipsenpunkten. Die graphische Darstellung der Fig. 2b in ihrer Gesamtheit mit 250 bezeichnet. Die graphische Darstellung 250 zeigt wiederum eine x-Achse 260 sowie eine y-Achse 262, die sich in einem Ursprung 264 orthogonal schneiden. Die graphische Darstellung 250 zeigt ferner eine in den Ursprung verschobene Ellipse 270, deren Mittelpunkt 272 mit dem Ursprung 264 zusammenfällt. Gezeigt ist ferner ein transformierter erster Ellipsenpunkt 276 mit zugehörigen Koordinaten $(x_x, y_x)$. Der transformierte erste Ellipsenpunkt 276 bildet wiederum den am weitesten in der durch die x-Achse 260 festgelegten x-Richtung gelegenen Punkt der Ellipse 270. Im übrigen sei darauf hingewiesen, dass der transformierte erste Ellipsenpunkt 276 aus dem ersten Ellipsenpunkt 226 durch eine Verschiebung hervorgeht, wobei gilt:

$$x_x = x_3 - x_m; \qquad y_x = y_3 - y_m.$$

Die graphische Darstellung 250 weist ferner einen transformierten dritten Ellipsenpunkt 280 mit zugehörigen Koordinaten ($x_y$, $y_y$) auf. Der transformierte dritte Ellipsenpunkt 280 bildet einen am weitesten in der durch die y-Achse 262 bestimmten y-Richtung gelegenen Punkt der Ellipse 270. Der transformierte dritte Ellipsenpunkt 280 geht ferner durch eine Verschiebung aus dem dritten Ellipsenpunkt 230 hervor, wobei gilt:

$$x_y = x_2 - x_m; \qquad y_y = y_2 - y_m.$$

Die graphische Darstellung 250 zeigt ferner eine erste Halbachse 292 der Ellipse 270, die in dem gezeigten Beispiel eine große Halbachse darstellt, und deren Länge mit a bezeichnet ist, sowie eine zweite Halbachse 294 der Ellipse 270, die in dem gezeigten Beispiel eine kleine Halbachse darstellt, und deren Länge wiederum mit b bezeichnet ist. Gezeigt ist ferner ein Rotationswinkel $\alpha$. Der Rotationswinkel $\alpha$ ist hier also als ein spitzer Winkel zwischen der x-Achse 260 und der zweiten Halbachse 294 der Ellipse 270 gezeigt.

Die graphische Darstellung 250 zeigt also transformierte Extrempunkte 276, 280 der in den Ursprung verschobenen (d.h. transformierten) Ellipse 270 sowie zugehörige Ellipsenparameter a, b und $\alpha$.

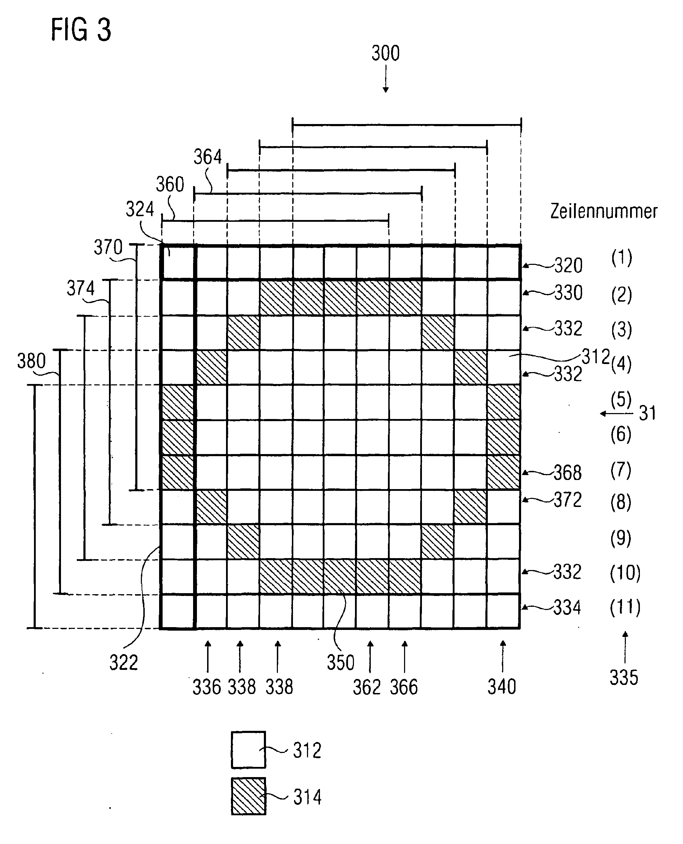

Fig. 3 zeigt eine graphische Darstellung eines beispielhaften Rasterbildes einer Ellipse. Die graphische Darstellung der Fig. 3 ist in ihrer Gesamtheit mit 300 bezeichnet. Gezeigt ist hierbei ein Rasterbild 310 mit einer Mehrzahl von Rasterpunkten 312. Ein Rasterpunkt kann hierbei inaktiv oder weiß sein, wie bei dem Rasterpunkt 312 gezeigt. Ein Rasterpunkt kann ferner aktiv oder schwarz sein, wie dies beispielsweise bei dem Rasterpunkt 314 durch Schraffur angedeutet ist. Es wird ferner darauf hingewiesen, dass das Rasterbild 310 eine Mehrzahl von Rasterzeilen sowie eine Mehrzahl von Rasterspalten umfasst. Eine Rasterzeile fasst hierbei eine Mehrzahl von Rasterpunkten zusammen, wie dies beispielsweise durch den dick umrandeten Bereich 320, der eine Rasterzeile beschreibt, dargestellt ist. Eine Rastespalte beschreibt ebenso eine Zusammenfassung von mehreren Rasterpunkten. Ein Beispiel für eine Rasterspalte ist durch den dick umrandeten Bereich 322, der eine Rasterspalte darstellt, gezeigt. Rasterzeilen und Rasterspalten sind hierbei bevorzugt orthogonal zueinander. Ferner wird darauf hingewiesen, dass sich Rasterzeilen und Rasterspalten freilich überschneiden können. So weisen beispielsweise die Rasterzeile 320 und die Rasterspalte 322 einen gemeinsamen Bildpunkt auf, der mit 324 bezeichnet ist. Es sei ferner darauf hingewiesen, dass ein Bild oder Bildausschnitt sowohl durch eine Mehrzahl von Rasterzeilen als auch durch eine Mehrzahl von Rasterspalten vollständig beschrieben werden kann, da ja jeder gerasterte Bereich sowohl durch Rasterzeilen als auch durch Rasterspalten beschreibbar ist. Ferner sei darauf hingewiesen, dass das Rasterbild 310 per Definition eine erste Rasterzeile, die Rasterzeile 320, eine zweite Rasterzeile 330, mehrere weitere Rasterzeilen 332, die bevorzugt fortlaufend nummeriert sind, sowie eine letzte Rasterzeile 334 aufweist. Entsprechende Zeilennummern sind mit 335 bezeichnet. In ähnlicher Weise umfasst das Rasterbild 310 eine erste Rasterspalte 322, eine zweite Rasterspalte 336, weitere Rasterspalten 338, die bevorzugt fortlaufend nummeriert sind, sowie eine letzte Rasterspalte 340.

Die graphische Darstellung 300 zeigt ferner eine Ellipse 350, die durch das Rasterbild 310 in Form von aktiven oder schwarzen Rasterpunkten (bzw. Bildpunkten) dargestellt ist, wobei die aktiven Rasterpunkte durch Schraffur gekennzeichnet sind.

Die graphische Darstellung 300 zeigt ferner eine erste Gruppe von Rasterspalten, die mit 360 bezeichnet ist. Die erste Gruppe von Rasterspalten umfasst dabei die erste Rasterspalte 322, die zweite Rasterspalte 336 sowie alle folgenden Rasterspalten bis einschließlich zur siebten Rasterspalte 362. Die erste Gruppe 360 von Rasterspalten beschreibt somit einen Ausschnitt aus dem Rasterbild 310. Der genannte Ausschnitt aus dem Rasterbild umfasst hierbei weiterhin eine Mehrzahl von Rasterzeilen, die gegenüber den ursprünglichen Rasterzeilen durch die Einschränkung der Anzahl an Spalten verkürzt sind. Auch die verkürzten Rasterzeilen, die durch die Auswahl eines Bildausschnitts entstehen können, werden im Folgenden kurz als Rasterzeilen bezeichnet.

Die zweite Gruppe von Rasterspalten, die mit 364 bezeichnet ist, umfasst ferner die zweite Rasterspalte 336 sowie die folgenden Rasterspalten bis hin zu einer achten Rasterspalte 366. In anderen Worten, jeweils sieben nebeneinander liegende Rasterspalten sind zu einer Gruppe von Rasterspalten, die für eine gemeinsame Verarbeitung vorgesehen sind, zusammengefasst .

Eine ähnliche Gruppierung kann für die Rasterzeilen erfolgen, wobei beispielsweise die erste Rasterzeile 320, die zweite Rasterzeile 330 sowie alle folgenden Rasterzeilen bis hin zur siebten Ratserzeile 368 zu einer ersten Gruppe 370 von Rasterzeilen zusammengefasst sind. In ähnlicher Weise umfasst eine zweite Gruppe von Rasterzeilen die zweite Rasterzeile 330 bis hin zur achten Rasterzeile 372, wobei die zweite Gruppe von Rasterzeilen mit 374 bezeichnet ist.

Hierbei sei freilich darauf hingewiesen, dass eine Gruppe von Rasterzeilen eine beliebige Anzahl von Rasterzeilen umfassen kann, beispielsweise fünf Rasterzeilen, 16 Rasterzeilen, 32 Rasterzeilen oder 64 Rasterzeilen. Es wird hierbei lediglich bevorzugt, dass die Anzahl der Rasterzeilen, die zu einer Gruppe von Rasterzeilen zusammengefasst werden, größer als 2 ist. Analoge Überlegungen gelten auch für eine Gruppe von Rasterspalten.

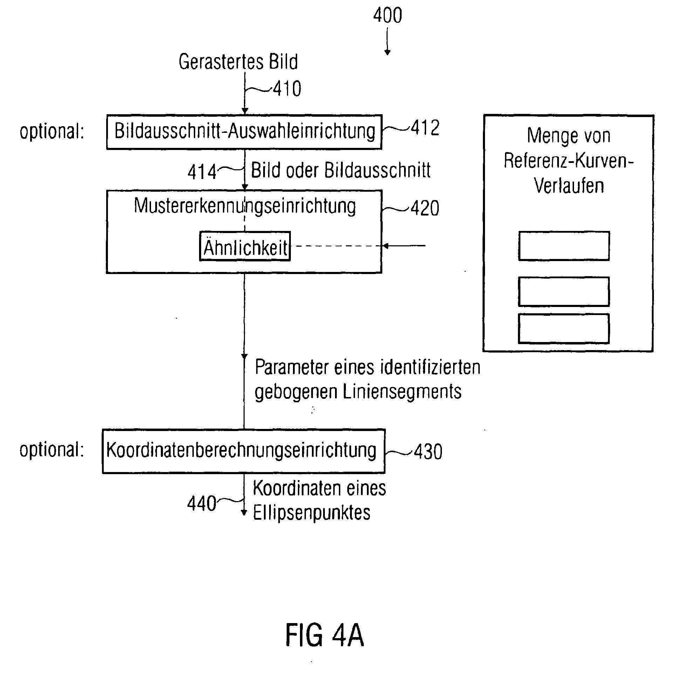

Fig. 4a zeigt ein Blockschaltbild einer erfindungsgemäßen Vorrichtung zum Ermitteln von Koordinaten eines Ellipsenpunktes in einem graphischen Bild gemäß einem zweiten Ausführungsbeispiel der vorliegenden Erfindung. Die Vorrichtung gemäß der Fig. 4a ist in ihrer Gesamtheit mit 400 bezeichnet. Die Vorrichtung 400 ist besonders gut geeignet, um ein Rasterbild 310, wie es in der Fig. 3 gezeigt ist, zu verarbeiten, wie im Folgenden ausgeführt wird.

Die Vorrichtung 400 ist ausgelegt, um ein gerastertes Bild 410 zu empfangen. Weiterhin ist die Vorrichtung 400 optional ausgelegt, um aus dem gerasterten Bild 410 mit Hilfe einer optionalen Bildausschnitt-Auswahleinrichtung 412 einen Bildausschnitt 414 auszuwählen. Ein ausgewählter Bildausschnitt 414 kann beispielsweise durch eine Mehrzahl von Rasterzeilen und/oder eine Mehrzahl von Rasterspalten definiert sein, beispielsweise durch eine Gruppe von Rasterzeilen oder eine Gruppe von Rasterspalten wie dies mit Bezug auf Fig. 3 beschrieben wurde. Die erfindungsgemäße Vorrichtung 400 umfasst ferner eine Mustererkennungseinrichtung 420, die ausgelegt ist, um das gerasterte Bild oder den gerasterten Bildausschnitt 414 zu empfangen. Ferner ist die Mustererkennungseinrichtung 420 ausgelegt, um festzustellen, ob in dem gerasterten Bild oder Bildausschnitt 414 ein Kurvenverlauf bzw. ein gebogenes Liniensegment aus einer Menge von Referenz-Kurvenverläufen enthalten ist.

Die Kurvenverläufe der Menge von Referenzkurvenverläufen können hierbei für eine Bestimmung der Ähnlichkeit zwischen in dem gerasterten Bild oder Bildausschnitt 414 enthaltenen Kurvenverläufen und den Referenzkurvenverläufen beispielsweise in einem Speicher abgelegt sein. Ebenso ist es allerdings möglich, dass die Struktur der Mustererkennungseinrichtung ausgelegt ist, um zu erkennen, ob in dem gerasterten Bild oder Bildausschnitt 414 ein Kurvenverlauf enthalten ist, der einem Referenz-Kurvenverlauf aus der Menge von Referenzkurvenverläufen hinreichend ähnlich ist. Als Referenz-Kurvenverläufe werden hierbei bevorzugt solche Kurvenverläufe verwendet, die eine Ellipse an dem ersten Ellipsenpunkt, dem zweiten Ellipsenpunkt, dem dritten Ellipsenpunkt oder dem vierten Ellipsenpunkt annähern. Somit ist folglich die Mustererkennungseinrichtung allgemein ausgelegt, um zu erkennen, ob in dem gerasterten Bild oder Bildausschnitt 414 ein Kurvenverlauf enthalten ist, der eine Ellipse an dem ersten Ellipsenpunkt, an dem zweiten Ellipsenpunkt, an dem dritten Ellipsenpunkt oder an dem vierten Ellipsenpunkt annähert.

Die Mustererkennungseinrichtung 420 ist weiterhin bevorzugt ausgelegt, um einen Kurvenverlauf aus der Menge von Referenzkurvenverläufen, der einem in dem gerasterten Bild oder Bildausschnitt 414 enthaltenen Kurvenverlauf hinreichend ähnlich ist, als das erste gebogene Liniensegment, das zweite gebogene Liniensegment, das dritte gebogene Liniensegment oder das vierte gebogene Liniensegment zu identifizieren, je nach dem an welchem des ersten Ellipsenpunktes, des zweiten Ellipsenpunktes, des dritten Ellipsenpunktes oder des vierten Ellipsenpunktes der Referenzkurvenverlauf aus der Menge der Referenzkurvenverläufe die Ellipse annähert.

Ferner ist die Mustererkennungseinrichtung 420 ausgelegt, um mindestens einen Lageparameter, bevorzugt aber zwei Lageparameter sowie optional einen weiteren Parameter, der eine Kurvenform beschreibt, des ersten Liniensegments, des zweiten Liniensegments, des dritten Liniensegments oder des vierten Liniensegments zu bestimmen. Aus der Lage des identifizierten ersten gebogenen Liniensegments, des zweiten gebogenen Liniensegments, des dritte gebogenen Liniensegments oder vierten gebogenen Liniensegments kann dann eine optionale Koordinatenberechnungseinrichtung 430 die Koordinaten des ersten Ellipsenpunktes, des zweiten Ellipsenpunktes, und des dritten Ellipsenpunktes oder des vierten Ellipsenpunktes berechnen. Die Koordinatenberechnungseinrichtung 430 kann allerdings entfallen, wenn beispielsweise die von der Mustererkennungseinrichtung 420 bestimmten Lageparameter der gebogenen Liniensegmente bereits derart definiert sind, dass die Lageparameter direkt Koordinaten des ersten Ellipsenpunktes, des zweiten Ellipsenpunktes und des dritten Ellipsenpunktes oder des vierten Ellipsenpunktes angeben, an denen ja bevorzugter Weise die gebogenen Liniensegmente durch die ausgezeichneten Ellipsenpunkte verlaufen.

Es sei hier weiterhin darauf hingewiesen, dass als Referenz-Kurvenverläufe bevorzugt solche Kurvenläufe verwendet werden, die eine Ellipse an dem ersten Ellipsenpunkt, an dem zweiten Ellipsenpunkt, dem dritten Ellipsenpunkt oder dem vierten Ellipsenpunkt (bzw. in einer Umgebung der jeweiligen Ellipsenpunkte) annähern. Als Referenzkurvenverläufe werden bevorzugt symmetrische gebogene Kurvenverläufe verwendet. Im übrigen wird es bevorzugt, als Referenzkurvenverläufe beispielsweise Ausschnitte aus kreisförmigen Kurven zu verwenden, da kreisförmige Kurven eine Ellipse an dem ersten Ellipsenpunkt, an dem zweiten Ellipsenpunkt, an dem dritten.Ellipsenpunkt oder an dem vierten Ellipsenpunkt besonders gut annähern.

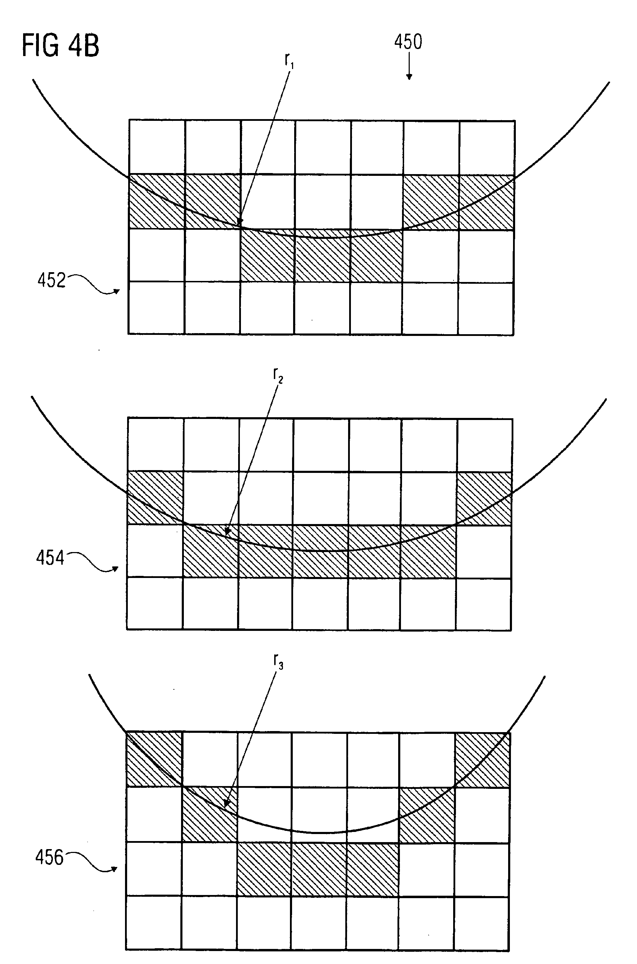

Fig. 4b ist eine graphische Darstellung von zwei Beispielen für Referenzkurvenverläufe zur Verwendung in einer erfindungsgemäßen Mustererkennungseinrichtung. Die graphische Darstellung der Fig. 4b ist in ihrer Gesamtheit mit 450 bezeichnet. Eine erste graphische Darstellung 452 beschreibt dabei in Form eines Rasterbildes einen ersten Referenzkurvenverlauf, der einen Ausschnitt aus einer kreisförmigen Kurve mit einem ersten Krümmungsradius $r_1$ annähert. Eine zweite graphische Darstellung 454 beschreibt in Form eines Rasterbildes einen zweiten Referenzkurvenverlauf, der einen Ausschnitt aus einer kreisförmigen Linie mit einem zweiten Krümmungsradius $r_2$ annähert, wobei der zweite Krümmungsradius $r_2$ größer ist als der erste Krümmungsradius $r_1$. Eine dritte graphische Darstellung 456 zeigt ferner in Form eines Rasterbildes einen dritten Referenzkurvenverlauf, der ebenso einen Ausschnitt aus einer kreisförmigen Linie mit einem dritten Krümmungsradius $r_3$ beschreibt. Der dritte Krümmungsradius $r_3$ ist hierbei kleiner als der erste Krümmungsradius $r_1$. Die drei graphischen Darstellungen 452, 454, 456 der Fig. 4b beschreiben also drei mögliche Referenzkurvenverläufe zur Verwendung in der Mustererkennungseinrichtung 420. In anderen Worten, die Mustererkennungseinrichtung 420 kann beispielsweise allgemein ausgelegt sein, um die drei in den graphischen Darstellungen 452, 454, 456 der Fig. 4b gezeigten Referenzkurvenverläufe in dem gerasterten Bild oder Bildausschnitt 414 zu erkennen und beispielsweise als ein erstes gebogenes Liniensegment, das die zu identifizierende Ellipse an dem ersten Ellipsenpunkt annähert, zu identifizieren. Ferner ist die Mustererkennungseinrichtung 420 bevorzugt ausgelegt, um die Lage eines in dem gerasterten Bild oder Bildausschnitts 414 erkannten Referenzkurvenverlauf durch Lageparameter zu beschreiben, und diese Lageparameter der Koordinatenberechnungseinrichtung 430 zur Verfügung zu stellen, sofern die genannten Lageparameter nicht direkt die Koordinaten eines ersten Ellipsenpunktes, an dem der bekannte Referenzkurvenverlauf die zu identifizierende Ellipse annähert, darstellen.

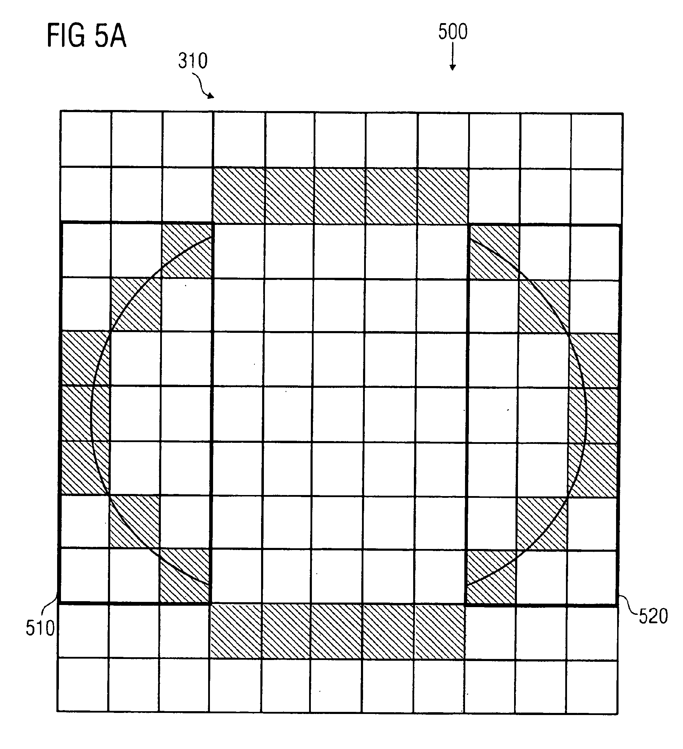

Die Fig. 5a zeigt eine erste graphische Darstellung eines beispielhaften Rasterbildes mit darin gekennzeichneten erkannten gebogenen Liniensegmenten. Es wird hierbei davon ausgegangen, dass die Mustererkennungseinrichtung 420 der Vorrichtung 400 gemäß Fig. 4a beispielsweise in der Lage ist, die in der ersten graphischen Darstellung 452, der zweiten graphischen Darstellung 454 sowie der dritten graphischen Darstellung 456 gezeigten Referenzkurvenverläufe in einem Bild oder Bildausschnitt zu erkennen. Ferner wird davon ausgegangen, dass das beispielhafte Rasterbild 310 der Fig. 3a der Mustererkennungseinrichtung 420 als gerastertes Bild 414 zugeführt wird. Es wird weiterhin beispielhaft davon ausgegangen, dass das Rasterbild 310 der Mustererkennungseinrichtung entweder Zeilenweise oder Spaltenweise zugeführt wird. Unter der Annahme, dass das Rasterbild 310 der Mustererkennungseinrichtung 420 Spaltenweise beginnend mit der ersten Rasterspalte 322 zugeführt wird, kann die Mustererkennungseinrichtung 420 beispielsweise den dritten Referenzkurvenverlauf der graphischen Darstellung 456 in dem gerasterten Bild erkennen. In der graphischen Darstellung 500 der Fig. 5a ist der dabei erkannte Kurvenverlauf mit 510 gekennzeichnet. Wird das Rasterbild 310 der Mustererkennungseinrichtung 420 hingegen spaltenweise beginnend mit der letzten Rasterspalte 340 zugeführt, so kann die Mustererkennungseinrichtung beispielsweise einen weiteren Kurvenverlauf erkennen, der in der graphischen Darstellung 500 mit 520 bezeichnet ist.

Es sei hierbei ferner darauf hingewiesen, dass der Mustererkennungseinrichtung 420 beispielsweise nur ein von der Bildausschnitt-Auswahleinrichtung 412 ausgewählter Bildausschnitt zugeführt werden kann. Beispielsweise kann der Mustererkennungseinrichtung 420 in einem ersten Verarbeitungsschritt nur ein begrenzter Bildausschnitt zugeführt werden, der die erste Gruppe 370 von Rasterzeilen umfasst. In anderen Worten, ein Bildausschnitt, der die erste Rasterzelle 320 sowie die benachbarten Rasterzeilen bis hin zur siebten Rasterzeile 368 umfasst, kann in dem ersten Verarbeitungsschritt der Mustererkennungseinrichtung 420 zugeführt werden. In diesem Bildausschnitt befindet sich beispielsweise kein Kurvenverlauf, der mit einer der in den graphischen Darstellungen 452, 454 und 456 gezeigten Referenzkurvenverläufe übereinstimmt. In dem zweiten Verarbeitungsschritt kann daraufhin der Mustererkennungseinrichtung 420 ein Bildausschnitt zugeführt werden, der die zweite Gruppe 374 von Rasterzeilen umfasst. Mit anderen Worten, der Mustererkennungseinrichtung 420 werden beispielsweise Spaltenweise, (das heißt Spalte für Spalte nacheinander) die Bildinhalte zwischen einschließlich der zweiten Rasterzeile 330 und der achten Rasterzeile 372 zugeführt. Auch in diesem Bildausschnitt befindet sich kein Kurvenverlauf, der den drei Referenzkurvenverläufen der graphischen Darstellung 452, 454, 456 entspricht. In einem dritten Verarbeitungsschritt kann dann ferner der Bildinhalt einer dritten Gruppe von Rasterzeilen der Mustererkennungseinrichtung 420 zugeführt werden. Die dritte Gruppe von Rasterzeilen ist hier mit 380 bezeichnet und umfasst die Rasterzeilen 3 bis 9. Die Mustererkennungseinrichtung 420 kann in diesem Bildausschnitt einen Kurvenverlauf identifizieren, der dem dritten Referenzkurvenverlauf der graphischen Darstellung 456 entspricht. Der identifizierte Kurvenverlauf ist daher in der graphischen Darstellung 500 mit 510 bezeichnet. Es wird weiterhin darauf hingewiesen, dass sich zur Verbesserung der Auflösung benachbarte Gruppen 370, 374, 380 von Rasterzeilen überlappen, das heißt gemeinsame Rasterzeilen aufweisen. Es wird hierbei bevorzugt, dass sich benachbarte Gruppen von Rasterzeilen nur um eine einzige Rasterzeile unterscheiden, dass also benachbarte Gruppen von Rasterzeilen um genau eine Rasterzeile gegeneinander verschoben sind, wie dies beispielsweise in der Fig. 3 gezeigt ist.

In anderen Worten, die Vorrichtung 400 kann ausgelegt sein, um verschiedene Bildausschnitte, die verschiedene Gruppen von Rasterzeilen umfassen, nacheinander zu verarbeiten und einer Mustererkennung zu unterziehen. Somit muss die Mustererkennung jeweils nur einen kleinen Bildausschnitt verarbeiten, wodurch sich die Komplexität der Mustererkennung stark reduziert. Ferner kann dadurch die Anzahl von verwendeten Referenzkurvenverläufen gering gehalten werden. Es wird ferner darauf hingewiesen, dass aus der Information, in welchem der Bildausschnitte, also unter Verwendung welcher Gruppe 370, 374, 380 von Rasterzeilen, der Referenzkurvenverlauf identifiziert werden kann, eine Information über eine Lage des gebogenen Liniensegments, das eine Ellipse an dem ersten Ellipsenpunkt, dem zweiten Ellipsenpunkt, dem dritten Ellipsenpunkt oder dem vierten Ellipsenpunkt annähert, abgeleitet werden kann. Mit anderen Worten, die Information, in welchem der Bildausschnitte der Referenzkurvenverlauf identifiziert wird, stellt einen Lageparameter des gebogenen Liniensegments dar, und kann somit dazu verwendet werden, um zumindest eine Koordinate des ersten Ellipsenpunktes, des zweiten Ellipsenpunktes, des dritten Ellipsenpunktes oder des vierten Ellipsenpunktes zu ermitteln.

In ähnlicher Weise kann ferner das erste Bild 310 der Mustererkennungseinrichtung 420 auch Zeilenweise, das heißt, Zeile für Zeile nacheinander, zugeführt werden. Hierbei können mehrere Bildausschnitte, die verschiedene Gruppen 360, 364 von Rasterspalten umfassen, nacheinander verarbeitet werden. Die Ausführungen, die im Bezug auf die spaltenweise Verarbeitung einer Gruppe von Rasterzeilen gemacht wurden, gelten hierbei analog.

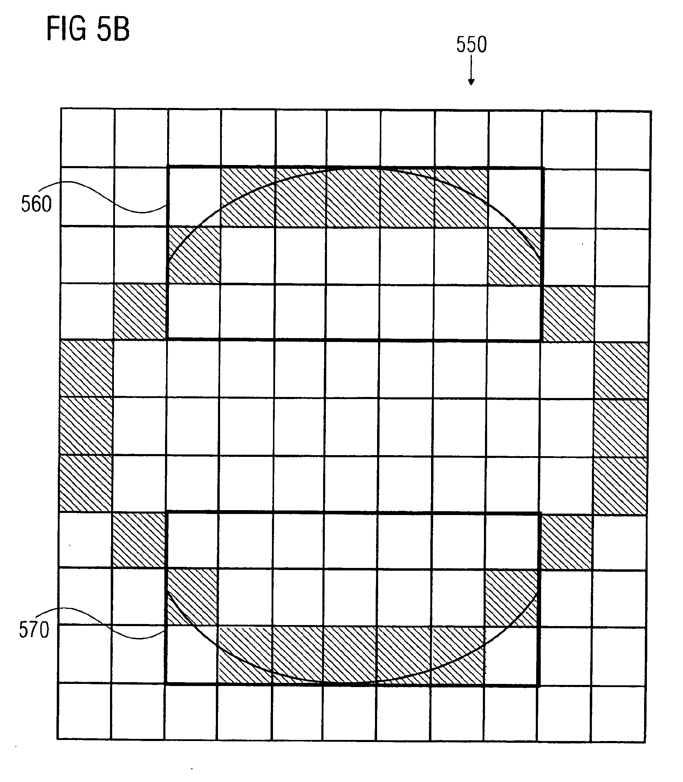

Es wird ferner darauf hingewiesen, dass Fig. 5b eine zweite graphische Darstellung eines beispielhaften Rasterbildes mit darin gekennzeichneten erkannten gebogenen Liniensegmenten zeigt. Die erkannten gebogenen Liniensegmente, die in der graphischen Darstellung 550 der Fig. 5b mit 560 und 570 gekennzeichnet sind, entsprechen hierbei dem in der graphischen Darstellung 454 gezeigten Referenzkurvenverlauf.

Es wird ferner darauf hingewiesen, dass es vorteilhaft ist, ein Rasterbild 310 der Mustererkennungseinrichtung 420 ein erstes Mal spaltenweise beginnend mit der ersten Rasterspalte 322 zuzuführen, und der Mustererkennungseinrichtung 420 das Rasterbild 310 ein zweites Mal Spaltenweise beginnend mit der letzten Rasterspalte 340 zuzuführen. Dabei können in dem ersten Durchlauf, der mit der ersten Rasterspalte 322 beginnt, Kurvenverläufe einer ersten Krümmungsrichtung erkannt werden, während in dem zweiten Durchlauf, der mit der letzten Rasterspalte 340 beginnt, Kurvenverläufe mit einer dazu entgegengesetzten Krümmungsrichtung erkannt werden. In gleicher Weise kann auch das zeilenweise Verarbeiten des Rasterbildes 310 einmal beginnend mit der ersten Rasterzeile 320 und einmal beginnend mit der letzten Rasterzeile 334 erfolgen, um wiederum Kurvenverläufe mit unterschiedlichem Krümmungsverhalten mit Hilfe einer Mustererkennungseinrichtung, die nur für die Erkennung von Kurvenverläufen mit einem einzigen Krümmungsverhalten bzw. mit einer einzigen Krümmungsrichtung ausgelegt ist, identifizieren zu können.

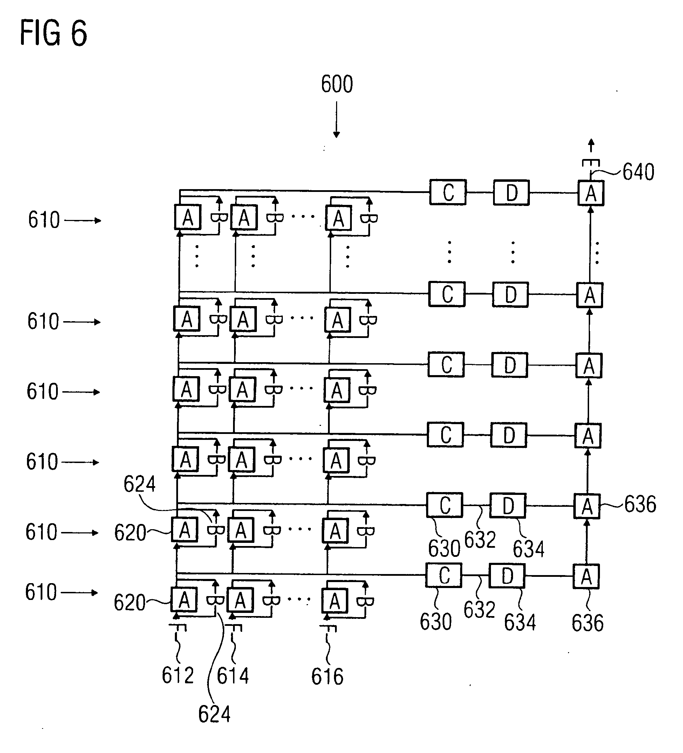

Fig. 6 zeigt ein Blockschaltbild einer Mustererkennungseinrichtung zur Verwendung in einer erfindungsgemäßen Vorrichtung 400. Die Schaltung der Fig. 6 ist in ihrer Gesamtheit mit 600 bezeichnet und beschreibt ein sog. "Hough-Array" zur Durchführung einer Hough-Transformation. Die Mustererkennungseinrichtung 400, die die Koordinatenbestimmungseinrichtung 110 realisiert, kann bevorzugt eine Suche nach Kreiskurven unterschiedlicher Radien durchführen, die eine zu identifizierende Ellipse um die Extrempunkte, also um den ersten Ellipsenpunkt, den zweiten Ellipsenpunkt, den dritten Ellipsenpunkt oder den vierten Ellipsenpunkt herum, in ausreichender Näherung beschreiben. Dies kann in besonders vorteilhafter Weise durch eine parallele systolische Hough-Transformation erfolgen. Die Hough-Transformation kann für Kreiskurven kofiguriert werden, und kann dabei für die Extremwertsuche, also für die Identifizierung von am weitesten in einer bestimmten Richtung gelegenen Punkten, angepasst sein.

Die Fig. 6 zeigt eine besonders vorteilhafte Einrichtung zur Durchführung einer Hough-Transformation. Die Einrichtung 600 zur Hough-Transformation umfasst hierbei eine Mehrzahl von hintereinander geschalteten Stufen 610, durch die mehrere Signale 612, 614, 616 parallel weitergeleitet werden. Eine Stufe enthält dabei für jedes Signal entweder ein Verzögerungselement 620, das auch mit A bezeichnet ist, oder einen Bypass 624, der auch mit B bezeichnet ist. Ferner werden die Signale an dem Ausgang einer Stufe einem Summierglied 630 zugeführt, das auch mit C bezeichnet ist. Das Summierglied ist hierbei bevorzugt ausgelegt, um festzustellen, wie viele Signale an dem Ausgang der betreffenden Stufe gleichzeitig aktiv sind. An einem Ausgang 632 eines Summiergliedes 630 liegt somit eine sog. Zeilensumme an, die angibt, wie viele Signale an dem Ausgang der betreffenden Stufe gleichzeitig aktiv sind. Die Zeilensumme 632 kann dann einem Komparator 634 zugeführt werden, der die Zeilensumme 632 mit einem vorgegeben Schwellwert vergleicht. Überschreitet die Zeilensumme 632 den vorgegeben Schwellwert, so bedeutet dies, dass in der jeweiligen Stufe mindestens eine vorgegebene Anzahl von Signalen aktiv sind. Mit anderen Worten, in der jeweiligen Stufe liegt, zumindest näherungsweise, eine "gerade Linie" vor, die dadurch gekennzeichnet ist, dass mindestes eine vorgegebene Anzahl von Signalen der jeweiligen Stufe gleichzeitig aktiv sind. Ein Ausgangssignal des Komparators 634 wird darauf einem Verzögerungselement 636 zugeführt. Mehrere Verzögerungselemente 636, die jeweils mit einem Ausgang eines Komparators 634 einer Stufe 610 verbunden sind, sind hierbei in einer Kette derart verschaltet, dass das Ausgangssignal eines Verzögerungselements 636 dem Eingang eines darauffolgenden Verzögerungselements 636 zugeführt wird.

Es sei ferner darauf hingewiesen, dass die Verzögerungselemente 620, 636, getaktet arbeiten, so dass sowohl die Signale 612, 614, 616 als auch die Ausgangssignale der Komparatoren 634 getaktet weitergeleitet werden. Die Signale 612, 614, 616 und die Ausgangssignale der Komparatoren 634 werden von der Struktur her parallel und in gleicher Richtung weitergeleitet, wobei jedoch die Signale 612, 614, 616 in den einzelnen Stufen unterschiedlich stark verzögert werden, je nach dem, ob bei der Weiterleitung des Signals 612, 614, 616 in einer Stufe 610 ein Verzögerungselement 620 oder ein Bypass 624 verwendet wird. Es wird allerdings bevorzugt, das ein zentrales Signal der Mehrzahl von Signalen 612, 614, 616 genauso schnell durch die Mehrzahl von Stufen weitergeleitet wird wie die Signale von den Ausgängen der Komparatoren 634. Das zentrale Signal wird dabei bevorzugt in jeder der Stufen gleich verzögert, und auch die Ausgangssignale der Komparatoren 634 werden bevorzugt mit konstanter Verzögerung durch die Stufen weitergeleitet. Das zentrale Signal befindet sich dabei bevorzugt näherungsweise in der Mitte zwischen dem ersten Signal 612 und dem letzten Signal 614, beschreibt als einen Rasterzeile in der Mitte des der Hough-Transformationseinrichtung 600 zugeführten Bildausschnitts, oder ist von der Mitte des Bildausschnitts höchstens höchstens 25% einer Breite des Bildausschnitts entfernt. Die Breite des Bildausschnitts ist hierbei durch die Anzahl an Rasterzeilen oder Rasterspalten definiert, die der Hough-Transformationseinrichtung 600 gleichzeitig zugeführt werden.

Basierend auf der strukturellen Beschreibung wird im Folgenden die Funktionsweise der Mustererkennungseinrichtung 600 näher beschrieben. Es wird dabei davon ausgegangen, dass ein Bildausschnitt in Form von parallelen Zeitsignalen 612, 614, 616 der Hough-Transformationseinrichtung 600 zugeführt wird. Die Verzögerungselemente 620 oder die Bypässe 624 sind dabei so konfiguriert, dass verschiedene Zeitsignale 612, 614, 616 bei einem Durchlaufen der einzelnen Stufen verschieden stark verzögert werden. Die Verzögerungen sind durch Einschalten von Verzögerungselementen 620 oder Bypässen 624 so eingestellt, dass ein gebogener Kurvenverlauf (bevorzugt ein kreisförmiger gebogener Kurvenverlauf) nach Durchlaufen von einer Stufe oder von mehreren Stufen 610 gerade gebogen wird. Mit anderen Worten, ein gebogener Kurvenverlauf in dem von der Hough-Transformationseinrichtung verarbeiteten Bildausschnitts resultiert darin, dass die einzelnen Signale 612, 614, 616 zu unterschiedlichen Zeitpunkten aktiv sind. Durch eine geeignete Einstellung der Verzögerungselemente 620 bzw. der Bypässe 624 kann allerdings erreicht werden, dass Signale 612, 614, 616 die einzelnen Stufen unterschiedlich schnell durchlaufen, so dass nach dem Durchlaufen einer bestimmten Anzahl von Stufen 610 idealer Weise alle auf den Signalen 612, 614, 616 beruhenden weitergeleiteten Signale an dem Ausgang einer Stufe gleichzeitig aktiv sind. In diesem Fall tritt in der bestimmten Stufe eine besonders große Zeilensumme auf, die von der entsprechenden Summiereinrichtung 630 berechnet wird. Ein Auftreten einer derartig großen Zeilensumme kann dann dazu führen, dass der Komparator 634 der betreffenden Stufe ein aktives Signal ausgibt, das wiederum über die Kette von Verzögerungselementen 636 zu dem Ausgang 640 der Hough-Transformationseinrichtung weitergeleitet wird. Aus einer zeitlichen Lage einer Aktivität auf dem Ausgangssignal an dem Ausgang 640 der Hough-Transformationseinrichtung 600 kann damit auf eine Lage eines Kurvenverlaufs in dem in Form von Zeitsignalen 612, 614, 616 an die Hough-Transformationseinrichtung 600 eingegebenen Bildausschnitt geschlossen werden.

Es wird ferner darauf hingewiesen, dass es bevorzugt wird, dass ein vorbestimmtes Signal (auch als zentrales Signal bezeichnet) aus den Signalen 612, 614, 616 die Stufen 610 der Hough-Transformationseinrichtung 600 genauso schnell durchläuft, wie ein Ausgangssignal von den Ausgängen der Komparatoren 634, das von der Kette von Verzögerungselementen 636 weitergeleitet wird. In anderen Worten, zumindest eines der Eingangssignale 612, 614, 616 breitet sich parallel und in gleicher Geschwindigkeit wie die Ausgangssignale der Komparatoren 634 aus. Dadurch kann erzielt werden, dass das an dem Ausgang 640 der Hough-Transformationseinrichtung 600 anliegende Ausgangssignal, das auf den in der Kette von Verzögerungselementen 636 weitergeleiteten Signalen der Komparatoren 634 basiert, eine direkte Aussage über den Zeitpunkt des Auftretens eines gebogenen Liniensegments in den Eingangssignalen 612, 614, 616 trägt. Hierbei gibt der Zeitpunkt des Auftretens einer Aktivität auf dem Ausgangssignal an dem Ausgang 640 der Hough-Transformationseinrichtung 600 eine Aussage darüber, zu welchem Zeitpunkt ein gebogener Linienverlauf in Form von Eingangssignalen 612, 614, 616 in die Hough-Transformationseinrichtung eingegeben wurde. Der Zeitpunkt des Vorliegens eines gebogenen Probenverlaufs in den Signalen 612, 614, 616 erlaubt dabei freilich einen direkten Rückschluss auf eine räumliche Lage des gebogenen Kurvenverlaufs in dem Rasterbild, das den Signalen 612, 614, 616 zugrunde liegt.

Weiterhin wird darauf hingewiesen, dass bei der angegebenen Auslegung, bei der sich mindestens eines der Signale 612, 614, 616 genauso schnell durch die Stufen 610 ausbreitet, wie die Ausgangssignale der Komparatoren 634, die genaue Form der Krümmung, beispielsweise also der Krümmungsradius, in einer gebogenen Kurve, lediglich einen Einfluss darauf hat, in welcher der Stufen 610, ein Komparator 634 aktiv wird. Die genaue Form des gebogenen Kurvenverlaufs hat bei der gezeigten Auslegung allerdings keinen Einfluss auf den Zeitpunkt, an dem eine Aktivität an dem Ausgang 640 der Hough-Transformationseinrichtung 600 auftritt.

Es kann somit festgehalten werden, dass die in Fig. 6 gezeigte Hough-Transformationseinrichtung 600 geeignet ist, um in einer sehr effizienten Weise die Lage eines gebogenen Kurvenverlaufs in einem Rasterbild festzustellen, indem das Rasterbild (oder ein Ausschnitt daraus) in eine Mehrzahl von parallelen Signalen umgewandelt wird, die dann mehrere Stufen der Hough-Transformationseinrichtung 600 mit unterschiedlicher Geschwindigkeit durchlaufen. Durch die Bildung einer Spaltensumme an dem Ausgängen der Stufen 610 kann erkannt werden, wenn mindestens eine vorgegebene Anzahl von Signalen an den Ausgängen der Stufen gleichzeitig aktiv sind, was wiederum darauf hinweist, dass der ursprünglich verlaufende Kurvenverlauf "gerade gebogen" worden ist.

Bevorzugter Weise ist die Hough-Transformationseinrichtung 600 durch geeignete Auswahl von Verzögerungselementen 620 oder Bypässen 624 ausgelegt, um durch Signale 612, 614, 616 beschriebene Kurvenverläufe gerade zu biegen, die die Ellipse an dem ersten Ellipsenpunkt, dem zweiten Ellipsenpunkt, dem dritten Ellipsenpunkt oder dem vierten Ellipsenpunkt annähern können. Ferner werden bevorzugter Weise eben nur solche Kurvenverläufe, die eine Ellipse an dem ersten Ellipsenpunkt, dem zweiten Ellipsenpunkt, dem dritten Ellipsenpunkt oder dem vierten Ellipsenpunkt annähern können, gerade gebogen. Damit ist die Hough-Transformationseinrichtung 600 gemäß Fig. 6 geeignet, um das erste gebogene Liniensegment, das zweite gebogene Liniensegment, das dritte gebogene Liniensegment oder das vierte gebogene Liniensegment zu identifizieren. Der Zeitpunkt, zu dem ein Ausgangssignal an dem Ausgang 640 der Hough-Transformationseinrichtung 600 anliegt, beschreibt dabei eine Lage des identifizierten Kurvenverlaufs in dem Rasterbild, auf dem die Signale 612, 614, 616 basieren, also einen Parameter des ersten gebogenen Liniensegments, des zweiten gebogenen Liniensegments, des dritten gebogenen Liniensegments oder des vierten gebogenen Liniensegments.

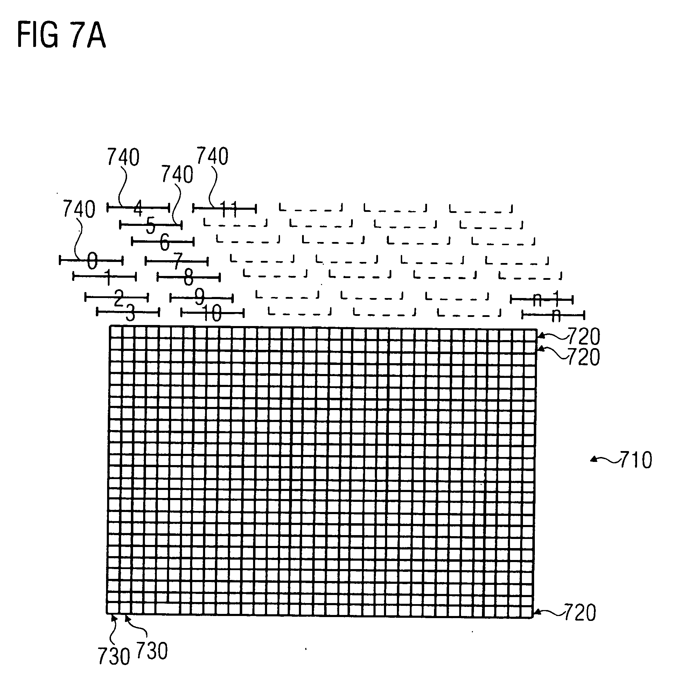

Fig. 7a zeigt eine graphische Darstellung einer Vorgehensweise zum Durchschieben eines graphischen Bildes durch eine Mustererkennungseinrichtung. Im Speziellen zeigt die Fig. 7a ein spaltenweises Durchschieben eines Bildes bzw. Rasterbildes durch die in Fig. 6 gezeigte Hough-Transformationseinrichtung 600 (auch als Hough-Feld oder Hough-Array bezeichnet).

Die Fig. 7a zeigt hierbei ein Rasterbild 710, bestehend aus einer Mehrzahl von Rasterzeilen 720 sowie eine Mehrzahl von Rasterspalten 730. Gezeigt sind ferner Gruppen 740 von jeweils bevorzugter Weise fünf Rasterspalten 730, wobei davon ausgegangen wird, dass jeweils fünf Rasterspalten gleichzeitig der Hough-Transformationseinrichtung 600 parallel in Form von Signalen 612, 614, 616 zugeführt werden. Für weitere Einzelheiten wird hierbei auch auf die graphische Darstellung 300 der Fig. 3 verwiesen.

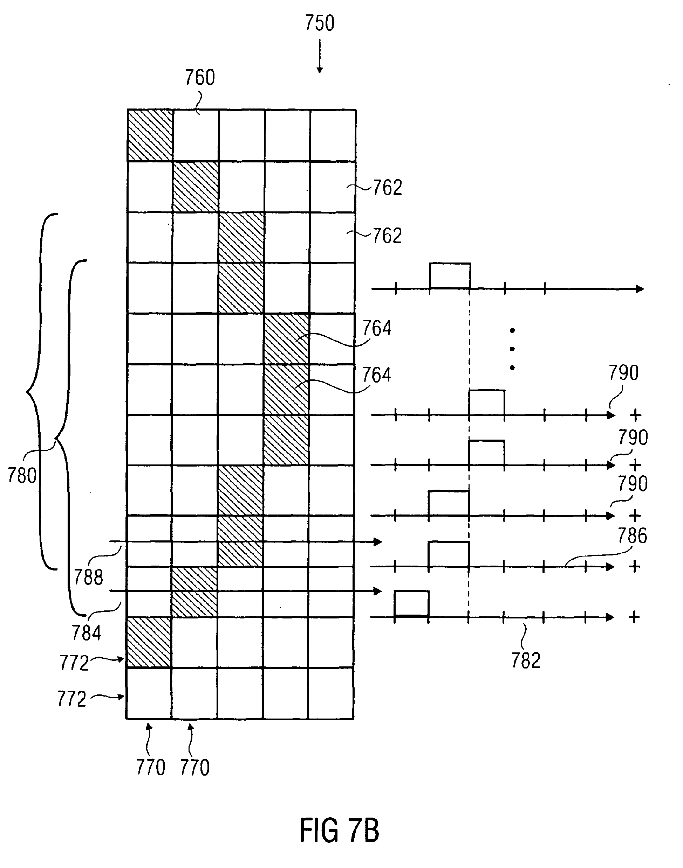

Fig. 7b zeigt eine graphische Darstellung von bei einer Umwandlung eines Rasterbildes in parallele Zeitsignale entstehenden Zeitsignalen. Die graphische Darstellung der Fig. 7b ist in ihrer Gesamtheit gemäß 750 bezeichnet. Die graphische Darstellung 750 zeigt ein Rasterbild 760, das eine Mehrzahl von inaktiven Rasterpunkten bzw. Bildpunkten 762 sowie eine Mehrzahl von durch Schraffierung gekennzeichneten aktiven Rasterpunkten bzw. Bildpunkten 764 aufweist. Die aktiven Rasterpunkte bzw. Bildpunkte 764 beschreiben bevorzugt einen Kurvenverlauf. Wie bereits oben beschrieben umfasst das Rasterbild 760 hierbei eine Mehrzahl von Rasterzeilen 770 sowie eine Mehrzahl von Rasterspalten 772. Es wird ferner davon ausgegangen, dass Zeitsignale basierend auf einem Bildausschnitt 780, der eine Gruppe von sieben Rasterspalten umfasst, gebildet werden. So ist beispielsweise ein erstes Zeitsignal 782 einer ersten in der Gruppe 780 von Rasterspalten enthaltenen Rasterspalte 784 zugeordnet. Das Zeitsignal 782 entsteht hierbei durch zeilenweißes Abtasten des Rasterbildes 760 entlang der zugeordneten Rasterspalte 784. In ähnlicher Weise entsteht ein zweites Zeitsignal 786 durch zeilenweißes Abtasten der zweiten Rasterspalte 788 aus der Gruppe 780 von Rasterspalten. Es zeigt sich bei Betrachtung der Zeitverläufe deutlich, dass bei der beschriebenen Abtastrichtung aktive Rasterpunkte, die in der gleichen Rasterzeile des Rasterbildes 760 liegen, in gleichzeitigen Aktivitätsimpulsen auf den Zeitsignalen 782, 786, 790 resultieren. Eine waagrechte Linie, das heißt, eine Linie, die innerhalb einer Rasterzeile verläuft, macht sich somit in den Zeitsignalen 782, 786, 790 durch gleichzeitige Impulse auf den Zeitsignalen 782, 786, 790 bemerkbar.

Wird nunmehr davon ausgegangen, dass die Zeitsignale 782, 786, 790 einer Hough-Transformationseinrichtung 600 als Eingangssignale 612, 614, 616 zugeführt werden, und dass die Signale 612, 614, 616 in einzelnen Stufen 610 der Hough-Transformationseinrichtung 600 verschieden stark verzögert werden, so wird klar, dass die verschieden starke Verzögerung der Zeitsignale 782, 786, 790 einer Verzerrung des Rasterbildes 760 entspricht, wodurch ein gebogener Kurvenverlauf zu einer geraden Linie verbogen werden kann. Eine gerade Linie aber, die mit einer gleichzeitigen Aktivität von mehreren der Zeitsignale 782, 786, 790 korrespondiert, kann in der Hough-Transformationseinrichtung 600, wie oben beschrieben, erkannt werden.

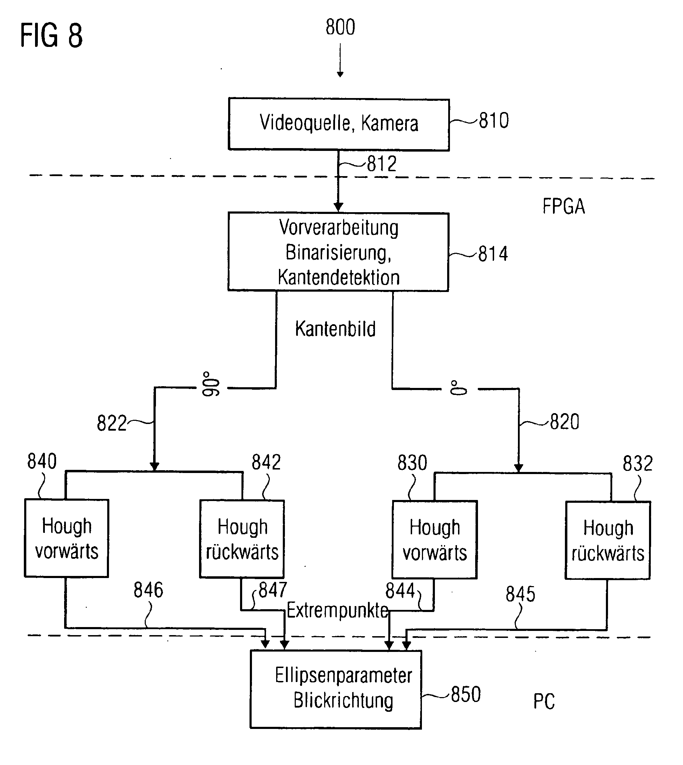

Fig. 8 zeigt ein Blockschaltbild einer erfindungsgemäßen Vorrichtung zum Ermitteln einer Information über eine Form und/oder eine Lage einer Ellipse der im graphischen Bild gemäß einem dritten Ausführungsbeispiel der vorliegenden Erfindung. Die erfindungsgemäße Vorrichtung der Fig. 8 in ihrer Gesamtheit mit 800 bezeichnet, und ist ausgelegt, um basierend auf einem von einer Videoquelle oder einer Kamera 810 gelieferten graphischen Bild 812 eine Blickrichtung eines Menschen oder eines Tieres zu bestimmen. Die Videoquelle 810, die beispielsweise eine Kamera umfasst, liefert dabei Videodaten 812 an eine Vorverarbeitungseinrichtung 814. Die Vorverarbeitungseinrichtung 814 kann in einem eigenen feldprogrammierbaren Gatterfeld (field programmable gate array, FPGA) oder in einer anwendungsspezifischen integrierten Schaltung (application specific integrated circuit, ASIC) integriert werden. Die Vorverarbeitungseinrichtung 814 kann allerdings auch mit den im Folgenden beschriebenen Hough-Transformationseinrichtungen bzw. Hough-Feldern (Hough-Arrays) in einem einzigen FPGA untergebracht sein. Die Vorverarbeitungseinrichtung 814 ist bevorzugt ausgelegt, um die Videodaten 812 über eine Schwellwert-Binarisierung zur Erzeugung von Binärbildern und eine nachfolgende Kantenextraktion aus den bei der Schwellwert-Binarisierung entstehenden Binärbildern in Kantenbilder umzuwandeln. Die Kantenextraktion aus den Binärbildern kann auf Basis von Dilatation (Streckung) und Subtraktion erfolgen, wodurch binäre Kantenbilder entstehen. In anderen Worten, die Vorverarbeitungseinrichtung 814 kann ausgelegt sein, um beispielsweise eine Helligkeit und/oder ein Grauwert der Videodaten mit einem Schwellwert zu vergleichen, und um basierend auf dem Vergleichsergebnis ein binäres Bild, das lediglich helle oder dunkle Bildbereiche unterscheidet, zu erzeugen. Aus dem Binärbild kann dann eine gedehnte oder gestauchte Version des Binärbildes erzeugt werden, woraufhin eine Differenz zwischen dem ursprünglichen Binärbild und dem gedehnten oder gestauchten Binärbild ermittelt wird. Die Differenz kann dann für die Erzeugung des Kantenbildes, das Kanten in den Videodaten 812 beschreibt, verwendet werden.

Nach der Vorverarbeitung in der Vorbearbeitungseinrichtung 814 steht dann das Kantenbild bevorzugt zur Weiterverarbeitung in einer ersten Richtung sowie in einer dazu senkrechten zweiten Richtung zur Verfügung. Das Kantenbild kann allerdings dennoch in einem einzigen Speicher abgelegt sein, der einen Zugriff auf das Kantenbild entlang einer ersten Richtung und entlang einer dazu orthogonalen zweiten Richtung ermöglicht. Die Verarbeitung des Kantenbildes in der ersten Richtung kann beispielsweise eine spaltenweiße Verarbeitung des Kantenbildes bedeuten, während die Verarbeitung in der dazu orthogonalen Richtung eine zeilenweiße Verarbeitung des Kantenbildes bedeuten kann. Das Kantenbild, das zur Verarbeitung in der ersten Richtung vorliegt, ist mit 820 bezeichnet, während das zur Verarbeitung in der dazu orthogonalen Richtung vorliegende Kantenbild mit 822 bezeichnet ist. Das zur Verarbeitung in der ersten Richtung vorliegende Kantenbild 820 wird daraufhin parallel einer ersten Hough-Transformationseinrichtung 830 (auch als Hough-Feld oder Hough-Array bezeichnet) zugeführt, die ausgelegt ist, um einen gebogenen Kurvenverlauf einer ersten Krümmungsrichtung zu erkennen. Das Kantenbild 820 wird ferner einer zweiten Hough-Transformationseinrichtung 832, die ausgelegt ist, um einen gebogenen Kurvenverlauf einer zweiten Krümmungsrichtung, die der ersten Krümmungsrichtung entgegengesetzt ist, zu erkennen.

Die beiden Hough-Transformationseinrichtungen 830, 832 können allerdings auch gleichartig ausgelegt sein, wobei der ersten Hough-Transformationseinrichtung 830 das Kantenbild beginnend an einem ersten Rand zugeführt wird, und wobei der zweiten Hough-Transformationseinrichtung das Kantenbild beginnend an einem zweiten Rand zugeführt wird, wobei der erste Rand dem zweiten Rand gegenüberliegt. Wird beispielsweise der ersten Hough-Transformationseinrichtung 830 das Kantenbild 820 zeilenweise beginnend mit der ersten Rasterzeile zugeführt, so kann der zweiten Hough-Transformationseinrichtung 832 das Kantenbild 820 zeilenweise beginnend mit der letzten Rasterzeile zugeführt werden.

Die beiden Hough-Transformationseinrichtungen 830, 832 sind dabei ausgelegt, um gebogene Liniensegmente in den Kantenbildern 820 zu identifizieren, die eine Ellipse in den Videodaten 812 an dem ersten Ellipsenpunkt, dem zweiten Ellipsenpunkt, dem dritten Ellipsenpunkt oder dem vierten Ellipsenpunkt annähern. Ferner sind die Hough-Transformationseinrichtungen 830, 832 ausgelegt, um basierend auf den identifizierten gebogenen Liniensegmenten die Koordinaten der zugehörigen Ellipsenpunkte zu identifizieren. In ähnlicher Weise wird das zur Verarbeitung in der zweiten Richtung vorliegende Kantenbild 822 einer dritten Hough-Transformationseinrichtung 840 sowie einer vierten Hough-Transformationseinrichtung 842 zugeführt, wobei die dritte Hough-Transformationseinrichtung 840 von ihrer prinzipiellen Funktionsweise her der ersten Hough-Transformationseinrichtung 830 entspricht, und wobei die vierte Hough-Transformationseinrichtung 842 von ihrer prinzipiellen Funktionsweise her der zweiten Hough-Transformationseinrichtung 832 entspricht. Somit liefern die erste Hough-Transformationseinrichtung 830, die zweite Hough-Transformationseinrichtung 832, die dritte Hough-Transformationseinrichtung 840 sowie die vierte Hough-Transformationseinrichtung 842 die Koordinaten 844, 845, 846, 847 des ersten Ellipsenpunktes, des zweiten Ellipsenpunktes, des dritten Ellipsenpunktes und des vierten Ellipsenpunktes.

Es wird hierbei darauf hingewiesen, dass die vier Hough-Transformationseinrichtungen 830, 832, 840, 842 bevorzugt in einem FPGA realisiert sind, wie später noch beschrieben wird. Eine bevorzugt in einem Personalcomputer (PC) realisierte Ellipsenberechnungseinrichtung 850 ist ferner ausgelegt, um basierend auf den Koordinaten 844, 845, 846, 847 des ersten Ellipsenpunktes, des zweiten Ellipsenpunktes, des dritten Ellipsenpunktes und des vierten Ellipsenpunktes die Ellipsenparameter zu berechnen. Aus den Ellipsenparametern kann damit ferner die Blickrichtung des von der Videoquelle 810 beobachteten Menschen oder Tieres berechnet werden.

In anderen Worten, die um 90° gegeneinander gedrehten Binärbilder 820, 822 gelangen in die Hough-Arrays 830, 832, 840, 842, in denen alle vier Extrempunkttypen, also vier ausgezeichnete Ellipsenpunkte, gesucht werden. Aus den Extrempunkten, also dem ersten Ellipsenpunkt, dem zweiten Ellipsenpunkt, dem dritten Ellipsenpunkt und dem vierten Ellipsenpunkt, werden daraufhin beispielsweise in einen Personalcomputer die Ellipsen bzw. deren Parameter berechnet, und es wird daraus dann die Blickrichtung des Menschen oder Tieres bestimmt.

Es wird im Übrigen darauf hingewiesen, dass, wie schon oben erläutert, ggf. die Koordinaten 844 des ersten Ellipsenpunktes und die Koordinaten des 845 des zweiten Ellipsenpunktes ausreichen, um zumindest die Koordinaten des Mittelpunktes der zu bestimmenden Ellipse zu berechnen. Daher kann ggf. auf die Berechnung des um 90° gedrehten Kantenbildes 822 verzichtet werden, wodurch auch die dritte Hough-Transformationseinrichtung 840 und die vierte Hough-Transformationseinrichtung 842 eingespart werden können.

Ferner kann zumindest die vierte Hough-Transformationseinrichtung 842 auch dann eingespart werden, wenn sämtliche Ellipsenparameter zu berechnen sind, da die Koordinaten von drei Extrempunkten der Ellipse für eine solche Berechnung ausreichend sind.

Ferner wird darauf hingewiesen, dass die Vorverarbeitungseinheit beliebig variiert werden kann, solange sichergestellt ist, dass den Hough-Transformationseinrichtungen 830, 832, 840, 842 ein Kantenbild zugeführt werden kann. Ferner kann eine hier als parallel gezeigte Verarbeitung auch sequentiell erfolgen, solange genügend Zeit zur Verfügung steht.

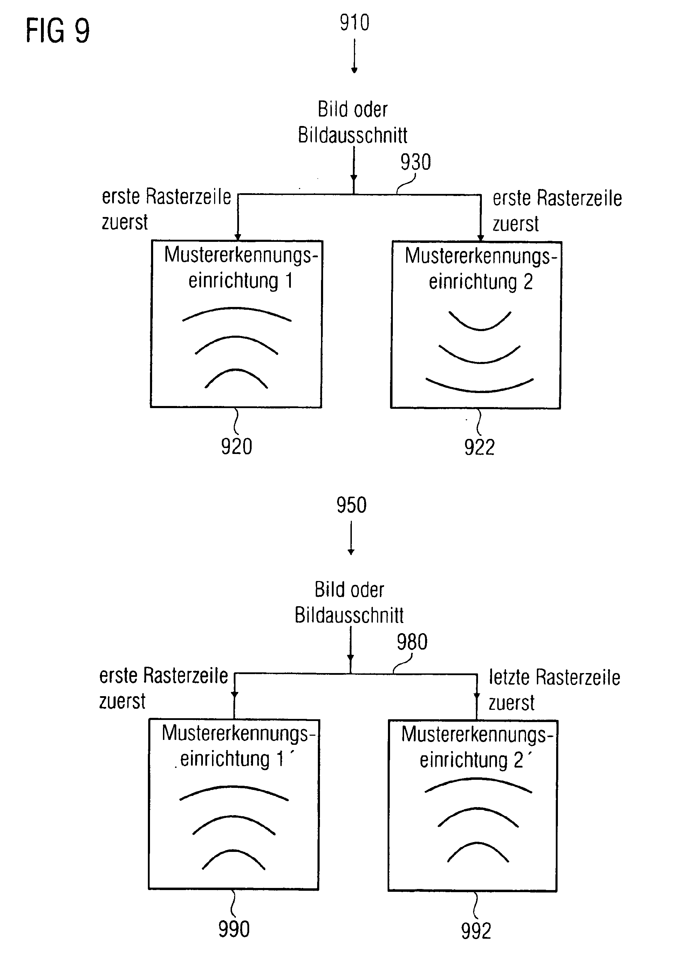

Fig. 9 zeigt einen Ausschnitt aus einem Blockschaltbild einer erfindungsgemäßen Vorrichtung zum Ermitteln einer Information durch eine Form und/oder eine Lage einer Ellipse in einem graphischen Bild gemäß einem vierten Ausführungsbeispiel der vorliegenden Erfindung. Fig. 9 zeigt hierbei in einem Auszug 910 aus einem Blockschaltbild eine Möglichkeit zum Identifizieren von gebogenen Liniensegmenten unterschiedlicher Krümmungsrichtung unter Verwendung zweier verschiedener Mustererkennungseinrichtungen 920, 922. Die erste Mustererkennungseinrichtung 920 ist hierbei ausgelegt, um gebogene Kurvenverläufe einer ersten Krümmungsrichtung zu erkennen, während hingegen die zweite Mustererkennungseinrichtung 922 ausgelegt ist, um gebogene Kurvenverläufe mit einer zweiten Krümmungsrichtung zu erkennen, wobei die zweite Krümmungsrichtung der ersten Krümmungsrichtung entgegengesetzt ist. Ein Bild oder Bildausschnitt 930 kann hierbei beiden Mustererkennungseinrichtungen 920, 922 in gleicher Weise zugeführt werden. In anderen Worten, der ersten Mustererkennungseinrichtung 920 wird als Bild oder Bildausschnitt 930 derart zugeführt, dass die erste Rasterzeile zuerst zugeführt wird. Der zweiten Mustererkennungseinrichtung 922 wird das Bild oder der Bildausschnitt 930 ebenfalls so zugeführt, dass die erste Rasterzeile zuerst zugeführt wird. Die Anwendung der ersten Mustererkennungseinrichtung 920 und der zweiten Mustererkennungseinrichtung 922 kann hierbei gleichzeitig oder nacheinander erfolgen. Ferner wird darauf hingewiesen, dass mit Hinblick auf das Blockschaltbild 910 der Begriff Rasterzeile auch durch den Begriff Rasterspalte ersetzt werden kann.

Ein zweites Blockschaltbild 950 zeigt eine zweite Möglichkeit zur Erkennung gebogener Kurvenverläufe mit unterschiedlicher Krümmungsrichtung in einem Bild oder Bildausschnitt 980. Hierzu kann beispielsweise das Bild oder der Bildausschnitt 980, beginnend mit einer ersten Rasterzeile der ersten Mustererkennungseinrichtung 990 zugeführt werden. Ferner kann das Bild oder der Bildausschnitt 980 einer zweiten Mustererkennungseinrichtung 992 beginnend mit der letzten Rasterzeile zugeführt werden. Die beiden Mustererkennungseinrichtungen 990, 992 sind hierbei beide ausgelegt, um nur gebogene Kurvenverläufe einer ersten Krümmungsrichtung zu erkennen. Durch das Zuführen des Bildes oder Bildausschnitts 980 in unterschiedlichen Richtungen kann also erreicht werden, dass die erste Mustererkennungseinrichtung 990 einen gebogenen Kurvenverlauf in dem Bildausschnitt erkennt, der in dem ursprünglichen Bild die erste Krümmungsrichtung aufweist, während hingegen die zweite Mustererkennungseinrichtung 992 einen gebogenen Kurvenverlauf in dem ursprünglichen Bild oder Bildausschnitt 980 erkennen kann, der in dem ursprünglichen Bild eine zweite, der ersten Krümmungsrichtung entgegengesetzte, Krümmungsrichtung aufweist. Ferner wird darauf hingewiesen, dass zwei separate Mustererkennungseinrichtungen 990, 992 nicht erforderlich sind, wenn das Bild oder der Bildausschnitt 980 beispielsweise der ersten Mustererkennungseinrichtung 990 hintereinander zuerst beginnend mit der ersten Rasterzeile und dann beginnend mit der letzten Rasterzeile zugeführt wird. Die zweite Mustererkennungseinrichtung 992 kann in diesem Fall also entfallen.

Es wird darauf hingewiesen, dass die beschriebenen Ausführungsformen gemäß den Blockschaltbildern 910 und 950 beispielsweise in der Vorrichtung 800 eingesetzt werden können, je nach dem welche Realisierung als vorteilhaft erscheint.

Im Folgenden wird die Bestimmung der Ellipsenparameter aus den Koordinaten des ersten Ellipsenpunktes, des zweiten Ellipsenpunktes und des dritten Ellipsenpunktes näher beschrieben. Es wird hierbei darauf hingewiesen, dass im Folgenden der erste Ellipsenpunkt, der zweite Ellipsenpunkt und der dritte Ellipsenpunkt auch als "Extrempunkte" bezeichnet werden.

In einem ersten Schritt können hierbei die Koordinaten $(x_m, y_m)$ des Ellipsenmittelpunkts 240 aus den Koordinaten des ersten Ellipsenpunktes und des zweiten Ellipsenpunktes berechnet werden. Es sei hierbei darauf hingewiesen, dass im Folgenden die Definitionen der graphischen Darstellungen 200, 250 der Fig. 2a und 2b verwendet werden, welche bereits früher ausführlich erläutert wurden. Es wird ferner darauf hingewiesen, dass aufgrund der Symmetrie der Ellipse der Mittelpunkt immer genau in der Mitte zwischen zwei gegenüberliegenden Extrempunkten liegt, wie dies auch der graphischen Darstellung 200 der Fig. 2a entnommen werden kann. Somit gilt:

$$x_m = \frac{x_1 + x_3}{2} = \frac{x_0 + x_2}{2}$$

und

$$y_m = \frac{y_1 + y_3}{2} = \frac{y_0 + y_2}{2} .$$

Im Folgenden wird weiterhin die Bestimmung der Formparameter der Ellipse, also der Länge a der ersten Halbachse der Ellipse, der Länge b der zweiten Halbachse der Ellipse und des Rotationswinkels $\alpha$ beschrieben.

Die Bestimmung der Formparameter aus den Koordinaten $(x_1, y_1)$, $(x_2, y_2)$, $(x_3, y_3)$, $(x_4, y_4)$ der Extrempunkte ist schwieriger. Mit dem bekannten Mittelpunkt $(x_m, y_m)$ wird die Ellipse zuerst in den Koordinatenursprung verschoben, wie dies Bezug nehmend auf Fig. 2b bereits beschreiben wurde.

Es wird daher im Folgenden eine rotierte Ellipse 270 im Koordinatenursprung 264 angenommen. Sie hat vier Berührungspunkte mit einem kleinstmöglichen, anliegenden Rechteck. Je zwei Berührungspunkte sind rotationssymmetrisch zum Koordinatensprung. Es werden daher nur die zwei Punkte 276, 280 im ersten Quadranten betrachtet.

Die nachfolgend gezeigten Gleichungen (1.1) beschreiben eine um $\alpha$ rotierte Ellipse im Koordinatenursprung in der Parameterform.

$$x = a \cdot \cos\theta \cdot \cos\alpha - b \cdot \sin\theta \cdot \sin(\alpha)$$

$$y = a \cdot \cos\theta \cdot \sin\alpha + b \cdot \sin\theta \cdot \cos(\alpha) \qquad (1.1)$$

Dabei sind x und y Koordinaten von Ellipsenpunkten in Abhängigkeit von dem Parameter $\theta$. Die übrigen Parameter $\alpha$, a und b haben die bereits oben

Das Auflösen des Gleichungssystems (1.1) nach $\tan(\theta)$ ergibt:

$$\tan(\theta) = \frac{a}{b} \cdot \frac{y - x \cdot \tan\alpha}{y \cdot \tan\alpha + x} \qquad (1.2)$$

Aus der Bedingung für den x-Extremwert

$$0 = \frac{\partial x}{\partial \theta_x} = -a \cdot \sin\theta_x \cdot \cos\alpha - b \cdot \cos\theta_x \cdot \sin\alpha \qquad (1.3)$$

kann Gleichung (1.4) abgeleitet werden als

$$\tan\theta_x = -\frac{b}{a} \cdot \tan\alpha, \qquad (1.4)$$

und aus der Bedingung für den y-Extremwert

$$0 = \frac{\partial y}{\partial \theta_y} = -a \cdot \sin\theta_y \cdot \sin\alpha - b \cdot \cos\theta_y \cdot \cos\alpha \qquad (1.5)$$

kann Gleichung (1.6) als

$$\tan\theta_y = \frac{b}{a} \cdot \frac{1}{\tan\alpha} \qquad (1.6)$$

abgeleitet werden. Die Gleichungen beschreiben die Orte der Extrempunkte in Abhängigkeit von $\theta$. In anderen Worten, $\theta_x$ und $\theta_y$ beschreiben Parameterwerte des Parameters $\theta$ für den transformierten ersten Ellipsenpunkt 276 bzw. für den transformierten dritten Ellipsenpunkt 280 im Hinblick auf die Gleichung (1.1).

Gleichsetzen der Gleichungen (1.2) und (1.4), beziehungsweise der Geichungen (1.2) und (1.6) führt nach den

Substitutionen $\tan(\alpha) = u$, $= u$, $\frac{x_x}{y_x} = k_x$ und $\frac{y_y}{x_y} = k_y$ zu:

$$\frac{b^2}{a^2} = \frac{k_x \cdot u - 1}{u^2 + k_x \cdot u} \qquad\qquad (1.7)$$

und

$$\frac{b^2}{a^2} = \frac{k_y \cdot u - u^2}{k_y \cdot u + 1} \cdot \qquad\qquad (1.8)$$

Im Folgenden wird die Berechnung des Rotationswinkels $\alpha$ erläutert. Zum Errechnen des Rotationswinkels kann das quadratische Achsenverhältnis $\frac{a^2}{b^2}$ der Ellipse durch Gleichsetzen der Gleichungen (1.7) und (1.8) eliminiert werden. Das führt zu einer Gleichung 4. Ordnung:

$$u^4 + u^3 \cdot (k_x - k_y) + u \cdot (k_x - k_y) - 1 = 0 \qquad (1.9)$$

Die Lösungen wurden mit dem Computer-Algebra-Programm Maple gefunden. Zwei der vier Lösungen der Gleichung (1.9) sind imaginär. Die beiden anderen Lösungen $u_1$ und $u_2$ sind:

$$u_{1,2} = -\frac{1}{2} \cdot (k_x - k_y) \pm \frac{1}{2} \cdot \sqrt{(k_x - k_y)^2 + 4} \qquad\qquad (1.10)$$

Nach der Rücksubstitution unterscheiden sich die zwei Lösungen für $\alpha$ genau um 90°, weil eine um 90° gedrehte Ellipse gleich einer ungedrehten Ellipse mit reziprokem Achsenverhältnis ist. Durch eine Fallunterscheidung kann die richtige Lösung ermittelt werden:

Haben $x_x$ und $y_y$ gleiche Vorzeichen, so gilt:

$$u = -\frac{1}{2} \cdot (k_x - k_y) + \frac{1}{2} \cdot \sqrt{(k_x - k_y)^2 + 4} \qquad\qquad (1.11)$$

Bei unterschiedlichen Vorzeichen hingegen gilt:

$$u = -\frac{1}{2} \cdot (k_x - k_y) - \frac{1}{2} \cdot \sqrt{(k_x - k_y)^2 + 4} \qquad\qquad (1.12)$$

Jetzt kann mit dem bekannten Rotationswinkel das Achsenverhältnis $\rho = \frac{a^2}{b^2}$ aus Gleichung (1.7) oder Gleichung (1.8) bestimmt werden.

Im Folgenden wird eine Berechnung der Länge der Halbachsen beschrieben.

Bis jetzt ist der Rotationswinkel $\alpha$ und das Achsenverhältnis $\rho$ bestimmt. Zur Berechnung der Längen der Halbachsen muss noch einmal auf die Ellipsengleichung zurückgegriffen werden. Dabei ergibt sich aus den Orten der Extrempunkte $\theta_x$ und $\theta_y$ folgendes Gleichungssystem:

$$\begin{aligned} x_x &= a \cdot \cos(\theta_x)\cos(\alpha) - b \cdot \sin(\theta_x)\sin(\alpha) \\ x_y &= a \cdot \cos(\theta_y)\cos(\alpha) - b \cdot \sin(\theta_y)\sin(\alpha) \end{aligned} \qquad (1.13)$$

Daraus kann durch Erweitern und Subtraktion a eliminiert werden:

$$\begin{aligned} x_x \cdot \cos\theta_y - x_y \cdot \cos\theta_x &= \\ &= b \cdot \sin\alpha \cdot (-\cos\theta_y \cdot \sin\theta_x + \cos\theta_x \cdot \sin\theta_y) \end{aligned} \qquad (1.14)$$

Durch Einsetzen von (1.4) und (1.6) in (1.14) können $\theta_x$ und $\theta_y$ eliminiert werden. Übrig bleibt ein von Rotätionswinkel $\alpha$, Achsenverhältnis $\rho$ und den x-Koordinaten zweier Extrempunkte abhängiger Ausdruck für die Halbachse b:

$$b = \frac{\rho \cdot \tan\alpha \cdot \left( x_x \cdot \sqrt{\dfrac{\rho^2 + \tan^2\alpha}{\rho^2}} - x_y \cdot \sqrt{\dfrac{\rho^2 \cdot \tan^2\alpha + 1}{\rho^2 \cdot \tan^2\alpha}} \right)}{\sin\alpha \cdot (\tan^2\alpha + 1)} \qquad (1.15)$$

Aus dem Achsenverhältnis $\rho$ und der Halbachse b kann problemlos die fehlende Halbachse $\alpha$ berechnet werden:

$$a = \rho \cdot b \qquad (1.16)$$

Im Folgenden wird auf das Problem der Überbestimmtheit der Gleichungssysteme bei der Berechnung der Ellipsenparameter eingegangen. Dabei wird zunächst das Problem an sich dargestellt. Weiterhin wird beschrieben, wie die Überbestimmtheit ausgenutzt werden kann, um die Zuverlässigkeit der erfindungsgemäßen Vorrichtung bzw. des erfindungsgemäßen Verfahrens zu erhöhen.

Mit vier gefundenen Extrempunkten ist die Ellipse überbestimmt. Zur Bestimmung der fünf Parameter der Ellipse sind nur 5 Koordinaten aus den 4 möglichen Extrempunkten (8 Koordinaten) notwendig. Es werden daher nur "2,5 Ellipsenpunkte" benötigt.

Zwei gegenüberliegende Extrempunkte werden für die Bestimmung des Mittelpunktes benötigt. Aus Versuchen wurde gefunden, dass für eine Ellipse nach Fig. 2b immer folgende Gleichung gilt:

$$1 = \frac{y_y}{y_x} \cdot \frac{x_y}{x_x} \qquad (1.17)$$

Das heißt, dass zur Bestimmung aller vier Werte $x_x$, $x_y$, $y_x$ und $y_y$ drei gemessene Werte ausreichen. Davon sind zwei zwangsläufig aus der Bestimmung des Mittelpunktes bekannt. Eine weitere Koordinate eines dritten Punktes muss dann zur Bestimmung der übrigen Ellipsenparameter herangezogen werden.

Beispielsweise werden Punkt 1 und Punkt 3, also der erste Ellipsenpunkt 226 und der zweite Ellipsenpunkt 228, zur Bestimmung des Mittelpunktes 240 herangezogen. Aus $x_3 - x_m$ wird nach Verschiebung in den Koordinatenursprung $x_x$, und aus $y_3 - y_m$ wird $y_x$. $x_x$ und $y_x$ beschreiben somit einen Extremwert in x-Richtung. Aus einer weiteren Koordinate aus dem Extrempunkt in y-Richtung kann durch Gleichung (1.17) der vierte Wert bestimmt werden.

Die Messwerte, also die von der Koordinatenbestimmungseinrichtung gelieferten Koordinaten der Extrempunkte, sind nicht exakt. Sie erfüllen also nicht ohne weiteres Gleichung (1.17). Wird anstelle des errechneten Wertes der gemessene (also der von der Koordinatenbestimmungseinrichtung gelieferte) Wert ohne Rücksicht auf Gleichung (1.17) für die Berechnung der Ellipsenparameter herangezogen, besteht die Gefahr aus leicht fehlerhaften Messpunkten falsche Ergebnisse zu erhalten. Da in der Herleitung der Ellipsenparameter davon ausgegangen wird, dass tatsächlich eine Ellipse vorliegt, müssen die Werte (also die bei den Berechnungen verwendeten Koordinaten) auch von "echten" Ellipsen stammen, das heißt Gleichung (1.17) muss (zumindest näherungsweise) immer durch die von der Koordinatenbestimmungseinrichtung gelieferten Koordinaten erfüllt sein (solange die von der Koordinatenbestimmungseinrichtung gelieferten Koordinaten alle auf zu einer einzigen Ellipse gehörigen Punkten basieren).

Im folgenden wird erläutert wie die oben beschriebene Überbestimmung ausgenutzt werden kann.

Der Abstand zwischen einem (unter Verwendung von Formel (1.17)) errechneten Wert (für eine Koordinate des dritten Ellipsenpunktes 280) und einem gemessenen (d.h. direkt von der Koordinatenbestimmungseinrichtung gelieferten) Wert kann zur Beurteilung einer gefundenen Ellipse benutzt werden. Es kann sichergestellt werden, dass die drei Extrempunkte von einer Ellipse im Eingangsbild stammen.

Stehen vier Punkte zur Verfügung, kann die Berechnung der Ellipsenparameter mit jeweils dreien (oder insgesamt 5 Koordinaten) durchgeführt werden. Aus vier Punkten sind beispielsweise drei unterschiedliche Mengen mit drei Punkten zu bilden. Die Parameter der vier daraus errechneten Ellipsen können gemittelt werden, um die Überbestimmtheit beim Vorhandensein von vier Punkten zu überwinden.

Zusammenfassend lässt sich also festhalten, dass basierend auf den vorher beschriebenen Konzepten eine echtzeitfähige Ellipsenerkennung auf Basis der Hough-Transformation realisiert werden kann. In einem ersten Schritt werden dabei Extremwerte bzw. Extrempunkte der Ellipse (die auch als erster Ellipsenpunkt, zweiter Ellipsenpunkt, dritter Ellipsenpunkt und vierter Ellipsenpunkt bezeichnet werden) bestimmt. Mit Hilfe einer parallelen Hough-Transformation oder anderen Verfahren der Mustererkennung werden also markante Punkte der Ellipse in einem Bild gesucht, aus deren Lage es möglich ist, die Ellipsenparameter (also den durch die Koordinaten $(x_m, y_m)$ beschriebenen Mittelpunkt, die Halbachsen a und b sowie die Drehung $\alpha$) oder Funktionen der Ellipsenparameter wie z.B. $\dfrac{a}{b}$ genau zu bestimmen.

Markante Punkte der Ellipse sind die x- und y-Koordinaten der Extremwerte bzw. Extrempunkte in positive und negative x-Richtung sowie in positive und negative y-Richtung des Kantenbildes. Die genannten Extrempunkte sind beispielsweise in der graphischen Darstellung 200 der Fig. 2a gezeigt.

Für eine eindeutige Bestimmung der Ellipsenparameter müssen genau zwei Extrempunkte einer Richtung sowie eine weitere Koordinate eines dritten Extrempunktes bekannt sein. Beispielsweise ist es ausreichend, wenn die Koordinaten $(x_0, y_0)$ und $(x_2, y_2)$ und eine der Koordinaten $x_1$ oder $y_1$ oder $x_3$ oder $y_3$ bekannt ist. Ebenso ist es ausreichend, wenn die Koordinaten $(x_1, y_1)$ und $(x_3, y_3)$ sowie eine der Koordinaten $x_0$ oder $y_0$ oder $x_2$ oder $y_2$ bekannt sind. In mathematischer Schreibweise kann man wie folgt formulieren:

$((x_0, y_0)$ und $(x_2, y_2)$ und $(x_1$ oder $y_1$ oder $x_3$ oder $y_3))$ oder $((x_1, y_1)$ und $(x3, y3)$ und $(x_0$ oder $y_0$ oder $x_2$ oder $y_2))$ müssen für eine Bestimmung der Ellipsenparameter bekannt sein.

Stehen mehr Informationen (also mehr Koordinaten) zur Verfügung, so kann die Mehrdeutigkeit der Berechnung durch geeignete Verfahren, wie z.B. Minimierung der Fehler beseitigt werden. Sind mehr Punkte als nötig bekannt, so können ferner mit jeweils 2,5 aus den (maximal) vier bekannten Punkten mehrere Ellipsen berechnet werden. Die Parameter dieser Ellipsen werden gemittelt und ergeben die Parameter der Ergebnisellipse. In anderen Worten, es können jeweils 5 Parameter (von "2,5 Punkten") verwendet werden, um mehrere Sätze von Ellipsenparametern zu berechnen. Daraufhin kann eine Mittelung über die mehreren berechneten Sätze von Ellipsenparametern erfolgen.

Die Bestimmung der Extrempunkte kann auch als eine Extremwertsuche aufgefasst werden. Die Extremwertsuche kann durch die Suche nach Kreiskurven mit unterschiedlichen Radien, die die Ellipsen (bzw. die gesuchte Ellipse) um die Extrempunkte in ausreichender Näherung beschreiben, erfolgen. Die Kreiskurven-Suche erfolgt dann beispielsweise in positiver und negativer x- und y-Richtung, also beispielsweise in allen 4 Standard-Richtungen eines gerasteten Bildes. Dabei wird in jeder Richtung das Bild in überlappenden Streifen bzw. Bildausschnitten analysiert.

Eine dazu besonders geeignete Methode ist die oben beschriebene parallele, systolische Hough-Transformation. Die parallele, systolische Hough-Transformation wird für Kreiskurven konfiguriert und für die Extremwertsuche angepasst. Durchschnittlich in jedem Takt werden die Voten von n Kantenpunkten durch ein Feld (array) aus spaltenweise hintereinander geschalteten Verzögerungselementen (Delay-Elementen) A aus den Zeilensummen C gebildet, während die Kantenpunkte (die Punkte des Kantenbildes) durchgeschoben werden. In anderen Worten, es kann in einer n-ten Stufen des Hough-Feldes "Hough-Array" somit eine Zeilensumm gebildet werden, während die Punkte des Kantenbildes durch die n-te Stufe durchgeschoben werden. Jeder Bildpunkt wird taktweise unter Berücksichtigung der geschalteten Bypässe B zum nächsten Verzögerungselement (Delay-Element) geschoben. Jede Spalte erzeugt ein durch die Schaltung der Bypässe B in einer Anzahl von Takten ihr vorher bestimmtes Votum. Die Voten geben dabei an, auf welchen Kreiskurven der durchgeschobene Punkt liegen kann. Die aus den Spalten stammenden Voten ergeben in jedem Takt addiert eine Akkumulatorspalte.

Auf eine Eintragung in den Akkumulator kann verzichtet werden, wenn in jeder Zeile durch einen Komparator unter Verwendung eines Schwellwerts entschieden wird, ob eine Kreiskurve gefunden wurde. Wurde der Schwellwert überschritten, so wird in einer weiteren Verzögerungselement-Spalte ohne Bypässe ein Bit an einer definierten Stelle erzeugt, das taktweise mit den Daten weitergeschoben wird.

Beim Verlassen des Hough-Feldes bzw. Hough-Arrays, also an dem Ausgang E der Hough-Transformationseinrichtung, werden die gebildeten Bits detektiert. Sie geben Aufschluss über eine Koordinate einer detektierten Kreiskurve und somit über eine Koordinate eines Extrempunktes.

Zum besseren Verständnis kann man sich vorstellen, dass durch die unterschiedliche Konfiguration der Bypässe der Verzögerungselemente in jeder Spalte eine Kreiskurve, die zeilenweise bei F in die Hough-Transformationseinrichtung 600 hineingeschoben wird, in einer bestimmten Zeile des Feldes (Arrays) zu einer einzigen geraden Linie wird, die eine (detektierbare) maximale Zeilensumme ergibt.

Um alle Kreiskurven bzw. Extremwerte oder Extrempunkte zu finden, muss jede Bildspalte und jede Bildzeile genau einmal vorwärts und einmal rückwärts durch jede Spalte des Feldes (Arrays) geschoben werden, wobei ihre Bildspalten immer nur zusammen mit ihren Nachbarn durch das Feld (Array) geschoben werden. Die Figur 7a zeigt das spaltenweise Durchschieben eines Bildes durch das Feld (Array) in einer Richtung. Es werden hier beispielsweise immer fünf nebeneinander liegende Bildspalten gleichzeitig durchgeschoben.

Statt ein Feld (Array) zu verwenden und es für alle vier Richtungen zu benutzen, können zwei oder vier Felder (Arrays) verwendet werden. Wenn davon je zwei Felder (Arrays) so konfiguriert werden, dass sie Kreiskurven mit umgekehrter Krümmung transformieren bzw. erkennen als die beiden anderen Felder (Array), so müssen die (Bild)-Daten nur noch vorwärts durch die Felder (Arrays) durchgeschoben werden, und zwar jeweils aus dem Originalbild sowie aus dem um 90 Grad gedrehten Bild. In der oben beschriebenen Weise können dann die Koordinaten der Extrempunkte ermittelt werden. Die typischerweise wenigen in einem Bild vorhandenen Extrempunkte, deren Koordinaten somit nur eine kleine Datenmenge bilden, müssen in einem weiteren Schritt zu einzelnen Ellipsen zugeordnet werden. Dies kann z.B. durch einen Personalcomputer oder Mikrocontroller geschehen. Aufgrund der geringen Datenmenge nach der Extremwerterkennung (also nach der Ermittlung der Koordinaten der Extrempunkte) ergeben sich hierbei keine hohen Anforderungen. Das erfindungsgemäße Konzept weist dabei den Vorteil auf, dass die Bearbeitungszeit unabhängig von einem Bildinhalt ist. Ferner können die Ellipsenparameter aus nur wenigen Extremwerten berechnet werden. Diese Berechnung der Ellipsenparametern aus den Extremwerten ist extrem schnell durchführbar und leicht in Hardware realisierbar, z.B. unter Verwendung eines FPGA oder eines ASIC.

Im Folgenden wird das Konzept der Verkehrszeichenerkennung noch einmal kurz zusammengefasst. Diesbezüglich sei darauf hingewiesen, dass die Verkehrszeichenerkennung in den ersten Schritten ähnlich erfolgt wie die Identifikation einer Ellipse, die anhand der Fig. 1 bis 9 beschrieben wurde. Dabei sind Parameter, wie beispielsweise ein Schwellenwert für die Binarisierung oder ein Schwellenwert für eine Mindestanzahl von Bildpunkten, die einem entsprechenden Kurvenverlauf angehören, einstellbar.

Die Verkehrszeichenerkennung erfolgt Schritt für Schritt wie folgt:

1. Nehme Bild mit Kamera auf;

2. Setze Schwellenwert; Binarisierung (bevorzugt adaptiv nach Histogrammverteilung der Grauwerte); bei Video bevorzugt öfter Nachjustieren nach x Bild-Rahmen (Frames), oder Einstellung einer optimalen Schwelle für jedes Bild; Standard-Bildverarbeitung;

3. Finde Kontur; Konturfinderalgorithmus ist bevorzugt aus morphologischen Operatoren zusammengesetzt, aber im Prinzip ein Kantendetektionsalgorithmus;

4. Hough-Transformation; mit einer Software zur Durchführung einer Hough-Transformation werden Extrema in einem Bild gefunden und markiert; jedes Extremum wird bevorzugt mit einer x,y-Position angegeben und hat zusätzlichen Krümmungswert; erzeugte Wolken von Extrema können mehr oder weniger dicht sein, je nach Variation von Parametern der Software zur Durchführung der Hough-Transformation;

5. Klassifikation unter Verwendung von Hammilton'scher Variationsrechnung; Minimierung eines Integrals gemäß min (Integral x_i - t_j)$^2$;

Für das Beispiel der Ellipse erfolgt die Klassifikation wie folgt: Stelle eine Liste aller möglichen Viererpunktpaare auf; fitte für jede Viererkombination eine Ellipse, bestimme die Ellipsenparameter und bilde die Abweichung der Messpunkte von der gefitteten Ellipse; stelle eine nach der minimalen Abweichung absteigende Liste der Viererkombination auf;

6. Verkehrsschilder sind rund, dreieckig oder rechteckig bzw. Rest, was nicht in diese Kategorie fällt (z. B. Stoppschild).

Hier ist der Hauptsatz der Kurvendiskussion zu beherzigen. Diese Funktion ist durch Stützstelle und zweite Ableitung approximierbar. Das stimmt in einem digitalen Fall nur mit Einschränkungen. Vertikale und horizontale Linie werden gefunden. Auch Kreise sind kein Problem. Bei geraden Linien unterschiedlicher Steigung funktioniert ein herkömmliches Verfahren nicht gut. Hier wird bevorzugt ein Geraden-Hough-Finder eingesetzt, wie er beispielsweise in der Veröffentlichung "A neural net for 2D-Slope and sinusoidal shape detections" von A. Brückmann, F. Klefenz und A. Wünsche (veröffentlicht: International Scientific Journal of Computing, Bd. 3, Ausgabe 1, Ukraine, 2004, S. 21 bis 26) beschrieben ist.

Damit wird bevorzugt eine vollständige Rechnerische Neuro-Wissenschaftliche Hubel-Wiesel Lösung einer Orientierungsselektivität (computational neural science Hubel-Wiesel-Lösung einer Orientierungsselektivität) erreicht.

7. Bilde eine Menge von Schablonen bzw. Vorlagen in einer Konturenbeschreibungssprache (vergleiche die Veröffentlichung "Object detection by contour segment networks" von V. Ferrari und anderen, veröffentlicht: European Conference of Computer vision (ECCV), Graz, Mai 2006).

Beispiel: rundes Schild, x,y-Koordinaten, mit Krümmungsradius z, wird gefunden.

Beispiel: Dreieck, Quadrat:

Bilde alle Dreierkombinations-Paare aus den geraden Elementen. Bilde nach Variationsrechnung ein Minimum. Sind 45°-Dreiecke vorhanden, dann müssen in einem Toleranzbereich zwei Hough-Geraden mit +45° bzw. -45° Steigung vorhanden sein und eine horizontale Linie.

Da auch ein Kreis durch ein Quadrat geht bei vier Punkten, bestimme ein Minimum aller Abstände (Fit-Kreis - Konturpunkt); Entscheidung, ob Kreis oder Ellipse.

Allgemeines Verfahren: falls ein Objekt zusammengesetzt ist aus Linien und Kreisbögen, beschreibe, wie das Objekt zusammengesetzt ist. Beispiel: Ecke; Linie hoch, y Zentimeter; Linie runter, x Zentimeter; Krümmungsbogen mit Krümmungsradius.

Verschiebe dieses Template bzw. diese Schablone in verschiedenen Richtungen über markierte Punkte; Bilde ein Minimum einer Differenz zwischen einem Temlate-Vektor bzw. Schablonen-Vektor und einem Rote-Punkt-Vektor (min (Templatevektor - Rote-Punkt-Vektor)); wo eine bestmögliche Übereinstimmung identifiziert wird, wird angenommen, dass ein Objekt vorliegt.

Damit ist ein Verkehrsschild segmentiert in geometrische Grundformen. Anschließend wird das Schild auf eine Einheitsgröße und eine fixierte Lage positioniert und mit Norm-Schildern verglichen.

8. Dazu wird ein einfacher Korrelationsalgorithmus Pixel für Pixel verwendet. Der Algorithmus wendet sowohl Farbe als auch Form an.

Zusammenfassend ist festzuhalten, dass die vorliegende Erfindung ein besonders zuverlässiges Konzept zur Erkennung von Verkehrszeichen in einem durch eine an einem Fahrzeug angebrachte Kamera aufgenommenen Bild schafft.

Das beschriebene Konzept ermöglicht dabei bei vergleichsweise geringem Rechenaufwand eine besonders zuverlässige Verkehrszeichen-Detektion.

Im Folgenden wird beschrieben, wie Schriftzeichen in einem Verkehrszeichen effizient erkannt und für eine Identifizierung des Verkehrszeichens herangezogen werden können.

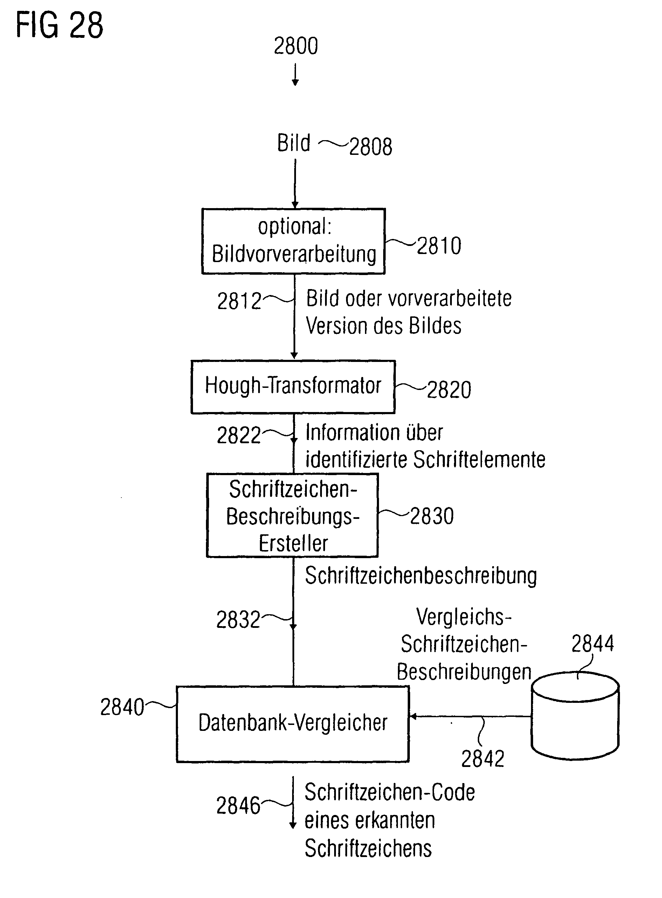

Fig. 28 zeigt ein Blockschaltbild einer erfindungsgemäßen Vorrichtung zur Erkennung von Schriftzeichen in einem Bild. Die Vorrichtung gemäß der Fig. 28 in ihrer Gesamtheit mit 2800 bezeichnet. Die Vorrichtung 2800 ist bevorzugt ausgelegt, um ein Bild 2808 zu empfangen. Die Vorrichtung 2800 umfasst optional eine Bildvorverarbeitung 2810, die ausgelegt ist, um aus dem Bild 2808 eine vorverarbeitete Version 2812 des Bildes zu erzeugen. Die Vorrichtung 2800 umfasst ferner einen Hough-Transformator 2820, der ausgelegt ist, um das Bild 2808 oder die vorverarbeitete Version 2812 des Bildes zu empfangen, und um in dem Bild 2808 oder in der vorverarbeiteten Version 2812 des Bildes Schriftelemente zu identifizieren. Gemäß einem Ausführungsbeispiel der vorliegenden Erfindung ist der Hough-Transformator 2820 ausgelegt, um Kreisbögen oder Ellipsenbögen in dem Bild 2808 oder in der vorverarbeiteten Version 2812 des Bildes als identifizierte Schriftelemente zu identifizieren.

Bei einem anderen bevorzugten Ausführungsbeispiel ist der Hough-Transformator 2820 ausgelegt, um eine Mehrzahl von in verschiedenen Richtungen durch das Bild 2808 oder durch die vorverarbeitete Version 2812 des Bildes verlaufenden geraden Strecken als die identifizierten Schriftelemente zu identifizieren.

Bei einem weiteren Ausführungsbeispiel ist der Hough-Transformator 2820 ausgelegt, um sowohl Kreisbögen oder Ellipsenbögen einerseits als auch gerade Strecken andererseits in dem Bild 2808 bzw. in der vorverarbeiteten Version 2812 des Bildes als identifizierte Schriftelemente zu identifizieren. Der Hough-Transformator 2812 ist ferner ausgelegt, um eine Information 2822 über die identifizierten Schriftelemente an einem Schriftzeichen-Beschreibungs-Ersteller 2830 zu liefern.

Der Schriftzeichen-Beschreibungs-Ersteller 2830 ist ausgelegt, um basierend auf den identifizierten Schriftelementen, also basierend auf den identifizierten Kreisbögen oder Ellipsenbögen, und/oder basierend auf den identifizierten geraden Strecken, eine Schriftzeichen-Beschreibung 2832 zu erhalten, die eine Lage der identifizierten Schriftelemente beschreibt.

Ein Datenbank-Vergleicher 2840 ist ausgelegt, um die Schriftzeichenbeschreibung 2832 von dem Schriftzeichen-Beschreibungs-Ersteller 2830 zu empfangen und um die Schriftzeichen-Beschreibung 2832 mit einer Mehrzahl von Vergleichs-Schriftzeichen-Beschreibungen 2842 zu vergleichen. Den Vergleichs-Schriftzeichen-Beschreibungen 2842, die beispielsweise in einer Datenbank 2844 gespeichert sein können, sind bevorzugt Schriftzeichen-Codes zugeordnet. Der Datenbank-Vergleicher 2840 ist ausgelegt, um als Ergebnis des Vergleichs zwischen der Schriftzeichen-Beschreibung und der Mehrzahl von Vergleichs-Schriftzeichen-Beschreibungen einen Schriftzeichen-Code 2846 eines erkannten Schriftzeichens zu liefern.

Basierend auf der obigen strukturellen Beschreibung der Vorrichtung 2800 wird im folgenden die Funktionsweise der Vorrichtung 2800 näher erläutert.

Diesbezüglich sei darauf hingewiesen, dass der Hough-Transformator 2820 bevorzugt ausgelegt ist, um verschiedene Schriftelemente, z.B. Kreisbögen und/oder Ellipsenbögen und/oder gerade Strecken, in dem Bild 2808 oder in der vorverarbeiteten Version 2812 des Bildes zu erkennen. Diesbezüglich sei darauf hingewiesen, dass ein Hough-Transfor-mator aufgrund seiner Funktionsweise in der Lage ist, gerade oder gebogene Linien als ganzes zu erkennen, auch wenn die Linien Unterbrechungen aufweisen. Dabei ist es lediglich erforderlich, das die Unterbrechungen der Linien nicht zu groß sind. Dies wird durch einen Hough-Transformator beispielsweise erreicht, indem schräge oder gebogene Linien schrittweise zu einer geraden Linie gebogen werden, wobei die gerade Linie dann erkannt wird. Eine Erkennung einer geraden Linie ist nämlich typischerweise besonders einfach möglich, da zur Erkennung einer geraden Linie lediglich geprüft werden muss, wie viele Bildpunkte entlang einer geraden Linie vorhanden sind. Ist die Anzahl der entlang einer geraden Linie gelegenen Bildpunkte größer als eine vorgesehene Mindest-Anzahl, so kann davon ausgegangen werden, dass eine gerade Linie vorliegt, selbst wenn nicht alle Punkte entlang der geraden Linie vorhanden sind. Sind hingegen weniger als eine vorgegebene Anzahl von Punkten entlang einer geraden Linie vorhanden, so kann davon ausgegangen werden dass keine Linie in einem Bild vorliegt.

Ein Hough-Transformator ist allgemein gesprochen ein besonders zuverlässiges Hilfsmittel, um auch nicht zusammenhängende Linien, die entlang einer vorgegebenen Kurve verlaufen (also beispielsweise entlang eines Kreisbogens, eines Ellipsenbogens oder einer geneigten Linie) als ein Ganzes zu erkennen, selbst wenn kurze Unterbrechungen vorhanden sind.

Ferner liefert ein Hough-Transformator aufgrund seines Wirkungsprinzips eine Information zumindest über einer Lage der identifizierten linienförmigen Elemente (Kreisbögen und/oder Ellipsenbögen und/oder geraden Strecken).

Die durch den Hough-Transformator gelieferte Information umfasst aber typischerweise zusätzliche zu einer LageInformation auch eine Information über einen Verlauf des identifizierten Schriftelements, beispielsweise eine Information über eine Richtung einer identifizierten geraden Strecke, oder eine Information über einen Krümmungsradius eines identifizierten Kreisbogens oder Ellipsenbogens.

Ferner wird darauf hingewiesen, dass der Hough-Transformator typischerweise bei der Erkennung eines Kreisbogens oder eines Ellipsenbogens auch eine Information über einen Extrempunkt des Kreisbogens oder Ellipsenbogens, also über einen Punkt, der am weitesten in einer bestimmten Richtung liegt, liefert.

Zusammenfassend lässt sich ganz allgemein festhalten, dass ein Hough-Transformator eine Mehrzahl von Parametern liefert, die eine Lage von einzelnen Schriftelementen beschreiben, wobei Schriftelemente mit kleineren Unterbrechungen als ein einziges zusammenhängendes Schriftelement beschrieben werden. Somit entfällt durch die Verwendung eines Hough-Transformators das Probleme herkömmlicher Einrichtungen zur Schriftzeichenerkennung, dass bei vorliegen kleinster Störungen in dem Schriftbild unmittelbar eine Zerstückelung der Schriftzeichen in eine Vielzahl von Einzel-Bestandteilen auftritt. Die Verwendung eines Hough-Transformators bringt dagegen ein wesentliches Maß an Unempfindlichkeit gegenüber solchen Störungen.

Der Schriftzeichen-Beschreibungs-Ersteller 2830 empfängt somit von dem Hough-Transformator eine Beschreibung einer sehr beschränkten Anzahl von einzelnen Schriftelementen (Kreisbögen oder Ellipsenbögen einerseits und/oder geraden Strecken anderseits).

Auf der begrenzten Zahl der durch den Hough-Transformator identifizierten Schriftelemente, die entweder Kreisbögen beschreiben, zu denen eine bestimmte ausreichende Anzahl an Bildpunkten gehören, oder die gerade Strecken beschreiben, zu denen eine ausreichende Anzahl an Bildpunkten gehören, erzeugt der Schriftzeichen-Beschreibungs-Ersteller eine kompakte Schriftzeichen-Beschreibung, die die identifizierten Kreisbögen oder Ellipsenbögen beschreibt. Mit anderen Worten, durch den Schriftzeichen-Beschreibungs-Ersteller 2830 wird eine besonders vorteilhafte Beschreibung von Schriftzeichen gebildet, die Lageparameter und/oder weitere Parameter, z.B. Krümmungs-Parameter bei Kreisbögen oder Ellipsenbögen sowie Richtungs-Parameter bei geraden Strecken, umfasst. Somit wird ein Schriftzeichen insgesamt durch seine natürlichen Bestandteile, nämlich durch eine Folge von Bögen (Kreisbögen/Ellipsenbögen) und/oder geraden Strecken beschrieben.

Die identifizierten Grundelemente einer Schrift entsprechen damit einer Beschreibungsform, anhand derer ein menschlicher Benutzer ein ihm unbekanntes Schriftzeichen in effizienter Weise beschreiben könnte. Daher stellt die durch den Schriftzeichen-Beschreibungs-Ersteller 2830 gelieferte Schriftzeichen-Beschreibung 2832 eine effiziente Beschreibung eines in dem Bild 2808 bzw. in der vorverarbeiteten Version 2812 des Bildes vorhandenen Schriftzeichen dar, wobei die Beschreibung bevorzugt nur solche Elemente umfasst, die durch den Hough-Transformator 2820 identifiziert werden.

Durch eine Anpassung des Hough-Transformators an Eigenheiten verschiedener Schriften kann die erfindungsgemäße Vorrichtung 2800 somit in einfacher und effizienter Weise an verschiedene Schriften angepasst werden. Besteht eine Schrift beispielsweise hauptsächlich aus runden Elementen, wie dies bei der deutschen Schreibschrift oder bei manchen Computer-Schriftarten der Fall ist, so kann der Hough-Transformator 2820 besonders auf die Erkennung von Kreisbögen verschiedenen Krümmungsradius angepasst sein, wodurch in der durch den Hough-Transformator 2820 gelieferten Information 2822 im Wesentlichen (oder, alternativ, ausschließlich) eine Beschreibung von bogenförmigen Schriftelementen enthalten ist.

Handelt es sich bei einer Schrift hingegen um eine Schrift, die im Wesentlichen gerade Striche umfasst, wie dies beispielsweise bei manchen Computer-Schriftarten der Fall ist, so kann der Hough-Transformator 2820 ausgelegt sein, um bevorzugt (oder, alternativ, ausschließlich) gerade Linien verschiedener Richtungen zu erkennen.

Somit erhält der Schriftzeichen-Beschreibungs-Ersteller 2830 bevorzugt eine Information über die wesentlichen Merkmale der gerade verarbeiteten Schrift. Somit muss der Schriftzeichen-Bereitsteller 2830 lediglich eine durch den Datenbank-Vergleicher 2840 verarbeitbare Darstellung der durch den Hough-Transformator 2820 gelieferten Information 2822 erzeugen. Dadurch kann der Schriftzeichen-Beschreibungs-Ersteller 2833 mit vergleichsweise geringem Aufwand realisiert werden.

Da der anschließende Datenbankvergleich über den Datenbank-Vergleicher 2840 auf einer Beschreibung der wesentlichen Schriftelemente (Kreisbögen/Ellipsenbögen und/oder geraden Stecken) basiert, kann der Vergleich ebenso in effizienter Weise erfolgen. Dies ist unter anderem darin begründet, dass typische Schriftzeichen nur eine sehr begrenzte Anzahl von charakteristischen Schriftelementen enthalten. Damit kann eine Schrift durch besonders wenige Merkmale, beispielsweise durch die Merkmale bzw. Parameter der charakteristischen Schrift-Elemente, beschrieben werden. Eine geringe Anzahl von für den Datenbank-Vergleich heranzuziehenden Elementen resultiert in einer sehr effizienten Realisierung des Datenbank-Vergleichers, wodurch die benötigte Rechenleistung gering gehalten wird und die Schrifterkennung sehr schnell erfolgen kann.

Im Übrigen sei darauf hingewiesen, dass die Schriftzeichen bereits durch das Vorhandensein einer bestimmten Anzahl von verschiedenen Schriftelementen sehr eng eingrenzbar sind. In anderen Worten, ist eine Anzahl an verschiedenen Schriftelementen (Kreisbögen/Ellipsenbögen und/oder geraden Strecken bekannt), so kommt nur noch eine begrenzte Anzahl von Schriftzeichen in Frage. Durch eine derartige VorAuswahl kann der durch den Datenbank-Vergleicher 2840 durchgeführte Datenbank-Vergleich noch einmal wesentlich effizienter gestaltet werden als dies herkömmlicherweise üblich ist.

Zusammenfassend lässt sich somit festhalten, dass die Vorrichtung 2800 eine besonders effiziente Schriftzeichenerkennung dadurch ermöglicht, dass nur charakteristische Schriftelemente durch den Hough-Transformator erkannt werden, wodurch eine stark informations-komprimierte Information 2822 entsteht, basierend auf der mit geringem Aufwand eine aussagekräftige Schriftzeichenbeschreibung 2832 erzeugt werden kann. Damit ergibt sich eine hohe Effizienz und ferner eine hohe Zuverlässigkeit eines durch den Datenbank-Vergleicher 2840 durchgeführten Datenbank-Vergleichs.

Details im Hinblick auf die einzelnen Einrichtungen der Vorrichtung 2800 werden im Folgenden noch näher erläutert.

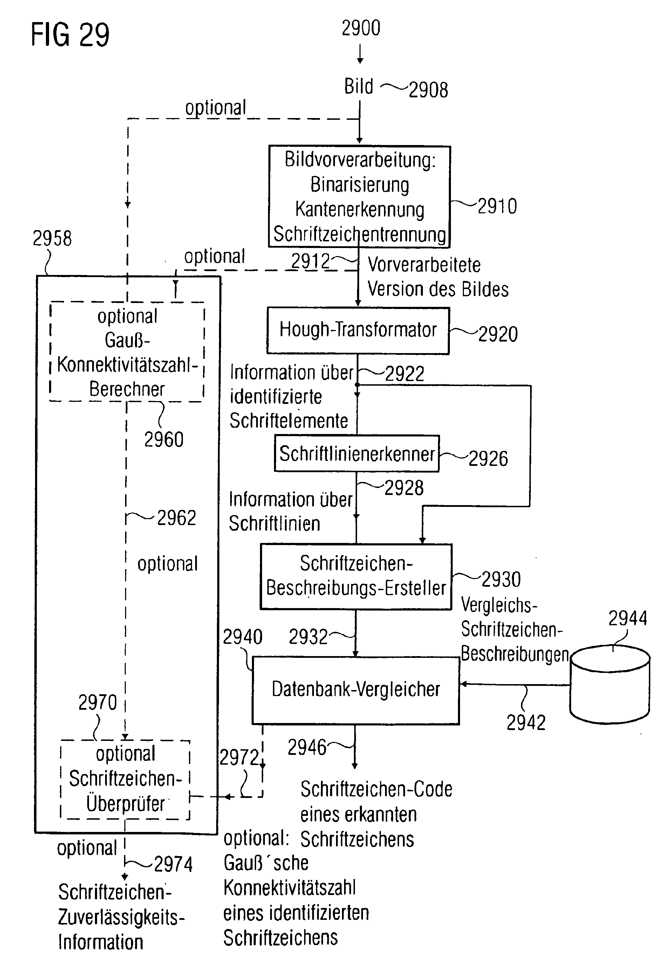

Die Figur 29 zeigt ein Blockschaltbild einer erweiterten Vorrichtung zur Erkennung von Schriftzeichen in einem Bild. Die Vorrichtung der Fig. 29 ist in ihrer Gesamtheit mit 2900 bezeichnet.

Die Vorrichtung 2900 ist ausgelegt, um ein Bild 2908 zu empfangen, das im Wesentlichen dem Bild 2808 entspricht. Die Vorrichtung 2900 umfasst ferner eine Bildvorverarbeitung 2910, die im Wesentlichen der Bildvorverarbeitung 2810 entspricht. Die Bildvorverarbeitung 2910 umfasst bei einem bevorzugten Ausführungsbeispiel eine oder mehrere der folgenden Funktionalitäten: Binarisierung, Kantenerkennung, Schriftzeichentrennung.

Die Bildvorverarbeitung 2910 liefert somit eine vorverarbeitete Version 2912 des Bildes, die im Wesentlichen der vorverarbeiteten Version 2812 des Bildes entspricht.

Es sei darauf hingewiesen, dass die Bildvorverarbeitung beispielsweise ausgelegt sein kann, um das Bild 2908 zu empfangen, in ein Graustufenbild umzuwandeln (sofern das Bild 2908 nicht bereits als ein Graustufenbild vorliegt) und dann einen Schwellwert auf die Graustufenwerte anzuwenden. Je nachdem ob ein Graustufenwert eines Bildpunktes größer oder kleiner als ein vorgegebener oder adaptiv eingestellter Schwellwert ist, wird ein zugeordneter Bildpunkt in der vorverarbeiteten Version 2912 des Bildes auf einen ersten Wert beziehungsweise Farbwert oder auf einen zweiten Wert bzw. Farbwert gesetzt. Somit entsteht beispielsweise aus dem Bild 2908 ein zugehöriges Monochrom-Bild.

Bei einem bevorzugten Ausführungsbeispiel wird der für die Binarisierung verwendete Schwellwert in Abhängigkeit von einer Histogramm-Verteilung von Grauwerten in dem Bild 2908 bzw. in einer Graustufen-Version des Bildes 2908 eingestellt. Bei einem anderen Ausführungsbeispiel kann allerdings auch ein fest vorgegebener Schwellwert verwendet werden. Wird ein neues Bild aufgenommen, so wird bei einem bevorzugten Ausführungsbeispiel der für die Binarisierung herangezogene Schwellenwert nachjustiert.

Es sei darauf hingewiesen, dass eine Binarisierung bei einem weiteren bevorzugten Ausführungsbeispiel ohne einen Zwischenschritt der Umwandlung des Bildes 2908 in ein Graustufenbild erfolgen kann, falls beispielsweise Schwellenwerte auf die verschiedenen Farbintensitäten direkt angewendet werden.

Bei einem weiteren bevorzugten Ausführungsbeispiel umfasst die Bildvorverarbeitung 2910, beispielsweise zusätzlich zu der Binarisierung, eine Kantenerkennung. Durch die Kantenerkennung werden beispielsweise Kanten in dem durch die Binarisierung erzeugten Monochrom-Bild erkannt. In anderen Worten, Übergänge zwischen den zwei Farben in dem Monochrombild werden beispielsweise als Kanten markiert. Dies ist besonders vorteilhaft, da ein Hough-Transformator besonders gut mit einem Kantenbild umgehen kann.

Im übrigen sei darauf hingewiesen, dass die Kantenerkennung auch unmittelbar unter Verwendung des Bildes 2908, also beispielsweise ohne Verwendung einer Binarisierung, erfolgen kann.

Die Bildvorverarbeitung 2910 umfasst ferner bei einem weiteren bevorzugten Ausführungsbeispiel eine Schriftzeichentrennung. Dabei werden einzelne Schriftzeichen getrennt bzw. separiert. Weisen beispielsweise verschiedene identifizierte Kanten einen Abstand auf, der größer als ein vorgegebener Abstand ist, so wird beispielsweise davon ausgegangen, dass zwei getrennte Schriftzeichen vorliegen. Hier ist es beispielsweise vorteilhaft, wenn Schriftzeichen grundsätzlich durch einen Mindestabstand voneinander getrennt sind. Somit entsteht durch eine Schriftzeichentrennung beispielsweise aus einem Bild eine Mehrzahl von Bildausschnitten, wobei bevorzugt jeder Bildausschnitt nur ein einzelnes Schriftzeichen umfasst.

Es sei darauf hingewiesen, dass verschiedene Ansätze für eine Schriftzeichentrennung existieren, die hier nicht im Detail erläutert werden sollen.

Insgesamt entsteht durch die Bildvorverarbeitung 2910 somit eine vorverarbeitete Version 2912 des Bildes 2908. Die Vorrichtung 2900 umfasst ferner einen Hough-Transformator 2920. Der Hough-Transformator 2920 erfüllt dieselbe Funktion wie der Hough-Transformator 2820, der anhand der Figur 28 beschrieben wurde. Somit stehen am Ausgang des Hough-Transformators 2920 Informationen über identifizierte Schriftelemente zur Verfügung, wobei es sich bei den identifizierten Schriftelementen um Kreisbögen, Ellipsenbögen und/oder gerade Strecken handeln kann.

Die Vorrichtung 2900 umfasst ferner einen Schriftlinienerkenner 2926. Der Schriftlinienerkenner 2926 empfängt die durch den Hough-Transformator 2920 gelieferten Informationen 2922 über identifizierte Schriftelemente, und ist ausgelegt, um eine Information 2928 über Schriftlinien in dem Bild 2908 bzw. in der vorverarbeiteten Version 2912 des Bildes bereitzustellen.

Der Schriftlinienerkenner 2926 ist dabei ausgelegt, um basierend auf der Information 2922 über identifizierte Schriftelemente, die durch den Hough-Transformator 2920 geliefert wird, Linien in dem Bild zu erkennen, auf denen sich überdurchschnittlich viele Extrema von Kreisbögen oder Ellipsenbögen befinden und/oder auf denen besonders viele gerade Strecken enden.

Details im Hinblick auf die Funktionalität des Schriftlinienerkenners 2926 werde später noch mit Bezug auf die Figuren 31 und 32 beschrieben.

Im Übrigen sei darauf hingewiesen, dass der Schriftlinienerkenner 2926 optional auch entfallen kann.

Die Vorrichtung 2900 umfasst ferner einen Schriftzeichen-Beschreibungs-Ersteller 2930, der von seiner Funktion her im Wesentlichen dem Schriftzeichen-Beschreibungs-Ersteller 2830 entspricht. Der Schriftzeichen-Beschreibungs-Ersteller 2930 ist allerdings bei einem bevorzugtem Ausführungsbeispiel, bei dem Schriftlinienerkenner 2926 vorhanden ist, ausgelegt, um sowohl die durch den Schriftlinienerkenner 2926 gelieferte Information 2928 über Schriftlinien in dem Bild als auch die durch den Hough-Transformator 2920 gelieferte Information 2922 über identifizierte Schriftelemente zu verwenden, um eine Schriftzeichen-Beschreibung 2932 zu erstellen.

Der Schriftzeichen-Beschreibungs-Ersteller 2930 ist dabei bevorzugt ausgelegt um die Schriftzeichen-Beschreibung 2932 so zu erstellen, dass die Schriftzeichen-Beschreibung 2932 eine relative Lage von durch die Information 2922 beschriebenen Schriftelementen in Bezug auf die durch die Information 2928 beschriebenen Schriftlinien beschreibt.

Somit entsteht eine besonders vorteilhafte Schriftzeichen-Beschreibung 2932, in der die Schriftlinien, die im Folgenden noch näher beschrieben werden, berücksichtigt sind. Die entsprechende Schriftzeichen-Beschreibung 2932, die die Information über die Schriftlinien 2928 berücksichtigt, und die Parameter der identifizierten Schriftelemente 2922 bevorzugt relativ zu den identifizierten Schriftlinien angibt, ist somit besonders unempfindlich bezüglich einer Drehung oder einer Größen-Skalierung der Schriftzeichen.

Die Vorrichtung 2900 umfasst ferner einen Datenbank-Vergleicher 2940, der die Schriftzeichen-Beschreibung 2932 empfängt und von seiner Funktion her im Wesentlichen dem Datenbank-Vergleicher 2840 der Vorrichtung 2800 entspricht. Der Datenbank-Vergleicher 2940 ist somit bevorzugt mit einer Datenbank 2944 gekoppelt, um Vergleichs-Schriftzeichen 2942 zu empfangen. Der Datenbank-Vergleicher 2940 liefert im Übrigen einen Schriftzeichen-Code 2946 eines erkannten Schriftzeichens.

In einem bevorzugten Ausführungsbeispiel umfasst die Vorrichtung 2900 ferner eine optionale Einrichtung 2958 zur Überprüfung einer Zuverlässigkeit eines identifizierten Schriftzeichens. Die Einrichtung 2958 zur Überprüfung einer Zuverlässigkeit eines identifizierten Schriftzeichens umfasst einen Euler-Konnektivitätszahl-Berechner 2960. Der Euler-Konnektivitätszahl-Berechner 2960 empfängt entweder das Bild 2908 oder die vorverarbeitete Version 2912 des Bildes und liefert somit eine Euler-Konnektivitätszahl-Information 2962, die eine Euler-Konnektivitätszahl eines Bildinhaltes des Bildes 2908 oder der vorverarbeiteten Version 2912 des Bildes umfasst. Die Euler-Konnektivitätszahl wird im Übrigen in der Literatur manchmal auch als Euler-Charakteristik bezeichnet und beschreibt eine Differenz zwischen einer Anzahl von Objekten in dem Bild (bzw. in der vorverarbeiteten Version des Bildes) und einer Anzahl von Löchern bzw. eingeschlossenen Bereichen in dem Bild. Weitere Details im Hinblick auf die Berechnung der Euler-Konnektivitätszahl, die durch den Euler-Konnektivitätszahl-Berechner 2960 durchgeführt wird, werden im Folgenden noch beschrieben.

Dir Vorrichtung 2958 zur Bestimmung einer Zuverlässigkeit der Schriftzeichenerkennung umfasst ferner einen Schriftzeichenüberprüfer 2970, der mit dem Euler-Konnektivitätszahl-Berechner 2960 gekoppelt ist, um die Euler-Konnektivitätszahl 2962 zu empfangen. Der Schriftzeichenüberprüfer 2970 ist ferner mit dem Datenbank-Vergleicher 2940 gekoppelt, um eine zu einem erkannten Schriftzeichen gehörige Vergleichs-Euler-Konnektivitätszahl 2972 zu erhalten. Die Vergleichs-Euler-Konnektivitätszahl 2972 wird dabei durch den Datenbank-Vergleicher 2940 basierend auf einem Eintrag der Datenbank bereitgestellt. Der Schriftzeichen-Überprüfer 2970 ist ferner ausgelegt, um eine Schriftzeichen-Zuverlässigkeits-Information 2974 zu liefern. Dabei ist der Schriftzeichen-Überprüfer 2970 bevorzugt ausgelegt, um eine hohe Zuverlässigkeit eines erkannten Schriftzeichens anzugeben, wenn die durch den Euler-Konnektivitätszahl-Berechner 2960 auf dem Bild 2908 bzw. aus der vorverarbeiteten Version 2912 des Bildes bestimmte tatsächlich Euler-Konnektivitätszahl 2962 mit der aus der Datenbank 2944 entnommenen Vergleichs-Euler-Konnektivitätszahl 2972, die zu einem identifizierten Schriftzeichen gehört, übereinstimmt. Im Gegensatz dazu zeigt der Schriftzeichen-Überprüfer 2970 durch die Schriftzeichen-Zuverlässigkeits-Information 2974 bevorzugt eine geringe Zuverlässigkeit eines identifizierten Schriftzeichens an, wenn eine Abweichung zwischen der tatsächlichen Euler-Konnektivitätszahl 2962 und der Vergleichs-Euler-Konnektivitätszahl 2972 besteht.

Im Folgenden wird einen Vorgehensweise bei einer Erkennung von Schriftzeichen anhand der Figuren 30a, 30b, 31, 32a, 32b, 32c, 33, 34 und 35 erläutert.

Die Fig. 30a zeigt zu diesem Zweck eine graphische Darstellung von drei Schriftzeichen "a" "c" "d". In die Schriftzeichen "a" "c" "d" sind dabei beispielhaft Extrempunkte von Kreisbögen bzw. Ellipsenbögen, sowie Mittelpunkte von geraden Strecken eingezeichnet. Die genannten Punkte sind mit einem "x" gekennzeichnet. Es sei darauf hingewiesen, dass unter einem Extrempunkt eines Bogens ein am weitesten in einer vorgegebenen Richtung liegender Punkt des Bogens verstanden wird. Wird davon ausgegangen, dass die Schriftzeichen "a" "c" "d" in einem (z.B. rechtwinkligen) x-y-Koordinatensystem aufgetragen sind, so sind Extrempunkte von Bögen beispielsweise die am weitesten in positiver x-Richtung, negativer x-Richtung, positiver y-Richtung und negativer y-Richtung gelegenen Punkte der Bögen. Ein x-y-Koordinatensystem ist im Übrigen in der Fig. 30 mit 3010 bezeichnet.

Ferner ist ein Extrempunkt eines ersten (oberen) Bogen des Buchstaben "a" mit 3020 bezeichnet. Ein Extrempunkt eines zweiten linken Bogens ist mit 3622 bezeichnet. Ein Extrempunkt eines dritten, unteren Bogens ist mit 3624 bezeichnet. Ein Mittelpunkt einer ersten geraden Strecke ist mit 3626 bezeichnet, und ein Mittelpunkt einer zweiten geraden Streck ist mit 3628 bezeichnet. Jeweils sei im Übrigen darauf hingewiesen, dass unter einem Bogen ein Ausschnitt von einer zumindest näherungsweise kreisförmigen oder ellipsenförmigen Linie verstanden wird. In anderen Worten, der Hough-Transformator erkennt, dass ein Linienverlauf des Schriftzeichens "a" in einer Umgebung des ersten Extrempunkts 3620 durch einen Kreisbogen oder Ellipsenbogen angenähert wird, und dass ferner einen Linienverlauf des Buchstabens "a" beispielsweise in einer Umgebung des Linien-Mittelpunkts 3626 durch eine gerade Strecke angenähert wird.

Ähnlich wie für den Buchstaben "a" sind auch für die Buchstaben "c" und "d" entsprechende Extrempunkte von Näherungs-Kreisbögen bzw. Näherungs-Ellipsenbögen sowie Mittelpunkte von Näherungs-Strecken mit "x" markiert.

Die Fig. 30b zeigt eine tabellarische Darstellung einer einfachen Beschreibung des Buchstaben "a". Dabei wird das davon ausgegangen, dass der Hough-Transformator 2830 der Vorrichtung 2800 bzw. der Hough-Transformator 2930 der Vorrichtung 2900 beispielsweise eine Lage eines Extrempunktes von verschiedenen gekrümmten Linien identifizieren kann, und ferner eine Lage eines Mittelpunktes von in verschiedenen gekrümmten Linien identifizieren kann.

Daher werden bei dem Buchstaben "a" gemäß der Fig. 30a drei Bögen und zwei gerade Strecken identifiziert. Die Beschreibung des Buchstabens "a" gemäß der Figur 30b umfasst daher eine Beschreibung für die drei Bögen und für die zwei geraden Stecken. Der erste Bogen um den Extrempunkt 3620 ist ein nach unten gekrümmter Bogen, so dass die zugehörige Beschreibung beispielsweise ein Attribut, bzw. einen Parameter umfasst, der eine Krümmung nach unten anzeigt. Ferner umfasst die Beschreibung bevorzugt eine Information über eine Position des Extrempunkts 3620. Die Position kann bevorzugt durch zugehörige Koordinaten x, y angegeben sein. Die Beschreibung des ersten Bogens um den Extrempunkt 3620 umfasst ferner optional eine Angabe eines Krümmungsradius r des ersten Bogens.

In ähnlicher Weise umfasst eine Beschreibung eines zweiten Bogens, der das Schriftzeichen "a" in einer Umgebung des zweiten Extrempunktes 3622 annähert, eine Information darüber, dass der Bogen eine Krümmung nach rechts aufweist. Die Beschreibung des zweiten Bogens kann wiederum eine Position des zweiten Extrempunkts 3622 in Form von Koordinaten x, y, sowie, optional, eine Information über einen Krümmungsradius r des zweiten Bogens angegeben. Eine entsprechende Beschreibung kann auch für den dritten Bogen, der den Buchstaben "a" in einer Umgebung des dritten Extrempunkts 3624 annähert, gegeben werden, wie dies in der Figur 30b gezeigt ist. Es sei allerdings darauf hingewiesen, dass die Bögen, die den Buchstaben "a" an den Extrempunkten 3620, 3622, 3624 annähern, auch durch andere Parameter beschrieben werden können.

Im Übrigen sei darauf hingewiesen, dass unter einem Extremum bevorzugt ein lokales Extremum verstanden wird, das nicht notwendigerweise ein globales Extremum sein muss.

Für die beiden geraden Strecken des Buchstaben "a" kann beispielsweise durch den Hough-Transformator 2820, 2920 eine Information über eine Richtung geliefert werden. Somit kann die Beschreibung der ersten geraden Strecke mit dem Mittelpunkt 3626 beispielsweise angeben, dass die erste gerade Strecke nach rechts oben verläuft. Die Beschreibung kann ferner optional den Winkel angeben, unter dem die Strecke gegenüber einer Horizontalen geneigt ist. Ferner kann die Beschreibung beispielsweise die Position des Mittelpunkts 3626 der entsprechenden Strecke durch Koordinaten x, y angeben. Ferner kann die Beschreibung der ersten geraden Strecke eine Information über die Länge der ersten geraden Strecke in Form eines Parameters 1 umfassen. Alternativ können allerdings auch andere Parameter zur Beschreibung verwendet werden, beispielsweise die Koordinaten eines Anfangspunktes oder eines Endpunktes.

Die Fig. 30b zeigt zwei Beschreibungen der geraden Strecken, der ersten geraden Strecke mit dem Mittelpunkt 3626 und der zweiten geraden Strecke mit dem Mittelpunkt 3628. Somit ist aus der Fig. 30b ersichtlich, dass aufgrund der durch den Hough-Transformator 3820, 2920 gelieferten Information eine effiziente Beschreibung eines Schriftzeichens erzeugt werden kann.

Im Folgenden wird noch beschrieben, wie die durch den Hough-Transformator gelieferte Information für einen Vergleich in dem Datenbank-Vergleicher 2840, 2940 weiterverarbeitet werden kann, um eine noch günstigere Darstellung der Information 2822, 2922 über identifizierte Schriftelemente zu erhalten. Allerdings sei darauf hingewiesen, dass bei einem vereinfachten Ausführungsbeispiel die durch den Hough-Transformator 2820, 2920 gelieferte Information auch direkt einem Datenbank-Vergleicher 2840 zugeführt werden kann.

Fig. 31 zeigt eine graphische Darstellung von Schriftzeichen in einer deutschen Schreibschrift sowie von zugehörigen Schriftlinien. Die graphische Darstellung der Fig. 31 ist in ihrer Gesamtheit mit 3100 bezeichnet. Die graphische Darstellung 3100 zeigt vier charakteristische Schriftlinien, nämlich eine Unterlinie 3110, eine Grundlinie 3120, eine Mittellinie 3130 und eine Oberlinie 3140. Ferner zeigt die schematische Darstellung 3100 einen Schriftzug "abcdefg" 3150 sowie vier Großbuchstaben "ABCJ" 3160. Aus der graphischen Darstellung 3100 ist ersichtlich, dass die Kleinbuchstaben "a", "c" und "e" zumindest idealerweise vollständig zwischen der Grundlinie und der Mittellinie liegen und diese Linien berühren. Die Kleinbuchstaben "b" und "d" sowie die Großbuchstaben "A", "B" und "C" liegen zwischen der Grundlinie 3120 und der Oberlinie 3140 und berühren die Grundlinie 3120 und die Oberlinie 3140 typischerweise. Der Buchstabe "f" liegt hingegen zwischen der Unterlinie und der Oberlinie und berührt die Unterlinie 3110 und die Oberlinie 3140. Das Gleiche gilt für den Großbuchstaben "J".

In der graphischen Darstellung 3100 sind im Übrigen Extrempunkte von in den Buchstaben enthaltenden Bögen (z. B. von Kreisbögen oder Ellipsenbögen) mit "x" gekennzeichnet. Ferner sind Endpunkte von geraden Strecken mit "⊕" gekennzeichnet. Aus der schematischen Darstellung 3100 wird ersichtlich, dass entlang den Schriftlinien 3110, 3120, 3130, 3140 besonders viele Extrempunkte von Bögen auftreten. Ferner liegen auf den Schriftlinien besonders viele Endpunkte von geraden Strecken. Daher ist verständlich, dass ein Schriftlinienerkenner 2926 eine Schriftlinie erkennen kann, indem er nach einer geraden Linie sucht, auf der besonders viele Extrempunkte von Bögen und/oder besonders viele Endpunkte von geraden Strecken vorhanden sind. Zur Bestimmung der Schriftlinien kann der Schriftlinienerkenner 2926 daher bevorzugt die durch den Hough-Transformator 2960 gelieferte Information 2922 über Extrempunkte von Bögen und/oder die von dem Hough-Transformator 2920 gelieferte Information über Endpunkte von geraden Strecken verwenden. Basierend auf der genannten Information bestimmt der Schriftlinienerkenner 2926 Linien, entlang derer eine Häufung von Extrempunkten von Bögen und/oder von Endpunkten von geraden Strecken auftritt.

Somit liefert der Schriftlinienerkenner 2926 als die Information 2928 beispielsweise eine Information über eine Lage der Schriftlinien 3110, 3120, 3130, 3140 also beispielsweise über eine Position und/oder eine Richtung der genannten Schriftlinien.

Der Schriftlinienerkenner kann im übrigen ausgelegt sein, um zusätzlich ein Vorab-Wissen über die Lage der Schriftlinien zueinander (beispielsweise im Hinblick auf die Tatsache, dass die Schriftlinien zueinander parallel sind und bestimmte relative Abstände haben) ausnutzen, um die Schriftlinien zu ermitteln.

Im Folgenden wird anhand der Fig. 32a, 32b und 32c beschrieben, wie eine besonders vorteilhafte Schriftzeichen-Beschreibung ermittelt werden kann, indem die Position der Extrema relativ zu den ermittelten Schriftlinien beschrieben wird. Zu diesem Zweck zeigt die Fig. 32a eine graphische Darstellung eines Schriftzeichens "a" in einem Liniensystem bestehend aus einer Unterlinie, einer Grundlinie, einer Mittellinie und einer Oberlinie. Die graphische Darstellung gemäß der Fig. 32a ist in ihrer Gesamtheit mit 3200 bezeichnet. Die graphische Darstellung 3200 zeigt eine Unterlinie 3210, eine Grundlinie 3212, eine Mittellinie 3214 sowie eine Oberlinie 3216. Ein Schriftzeichen "a" ist dabei zwischen einer Grundlinie und einer Mittellinie angeordnet. Das Schriftzeichen "a" ist in seiner Gesamtheit mit 3220 bezeichnet. Ein erster, oberer Bogen des Schriftzeichens "a" weist ein Extremum 3230 auf. Das Extremum 3230 ist bei dem Beispiel gemäß Fig. 32a auf der Mittellinie 3214 gelegen. Dabei kann davon ausgegangen werden, dass das Extremum 3230 zumindest näherungsweise auf der Mittellinie gelegen ist bzw. als auf der Mittellinie gelegen angesehen wird, wenn ein Abstand des Extremums 3230 von der Mittellinie kleiner als eine vorgegebene Schwelle ist, die entweder absolut (im Sinne einer absoluten Entfernung) oder relativ (in Abhängigkeit von einem Abstand zwischen zwei Schriftlinien) angegeben werden kann. Dem Extremum 3230 des ersten Bogens wird hier beispielsweise im Wesentlichen willkürlich eine x-Koordinate (x = 0) zugeordnet.

Das Schriftzeichen "a" umfasst einen zweiten, linken Bogen, dessen Extremum 3232 zwischen der Grundlinie 3212 und der Mittellinie 3214 liegt. Dem zweiten Extremum 3232 ist ferner eine x-Koordinate (x = -0,5) zugeordnet, die eine Position (bzw. eine horizontale Position bzw. x-Position) relativ zu dem als Bezugspunkt gewählten ersten Extremum 3230 beschreibt. Der Buchstabe "a" umfasst ferner einen dritten, unteren Bogen, dessen Extremum 3234 auf der Grundlinie 3212 gelegen ist. In anderen Worten, ein Abstand des dritten Extremums 3234 von der Grundlinie 3212 ist kleiner als eine vorgegebene Schwelle, wobei die vorgegebene Schwelle wiederum als ein absoluter Wert oder als ein relativer Wert (in Abhängigkeit von einem Abstand zwischen zwei Schriftlinien) bestimmt bzw. vorgegeben sein kann.

Ferner weist auch das dritte Extremum 3232 eine x-Koordinate auf, die eine Lage relativ zu dem Bezugspunkt beschreibt. Bei dem gezeigten Beispiels gilt: x = -0,1.

Ähnliche Informationen können im Übrigen auch für die weiteren Bestandteile des Buchstabens "a" (sowie für alle anderen Buchstaben) gemacht werden, beispielsweise für die rechte näherungsweise gerade Strecke des Buchstabens "a".

Ferner sei darauf hingewiesen, dass beispielsweise ein Bereich zwischen der Unterlinie 3210 und der Grundlinie 3212 als ein erstes Intervall (Intervall I) definiert sein kann. Ein Bereich zwischen der Grundlinie 3212 und der Mittellinie 3214 kann ferner als ein zweites Intervall (Intervall II) definiert sein. Ein Bereich zwischen der Mittellinie 3214 und der Oberlinie 3216 kann ferner als ein drittes Intervall (Intervall III) definiert sein.

Ferner sei darauf hingewiesen, dass beispielsweise einer Position innerhalb eines Intervalls in Abhängigkeit von einem Abstand von den das Intervall begrenzenden Schriftlinien ein Wert zwischen 0 und 1 zugeordnet sein kann, der eine vertikale Position bzw. eine relative y-Position beschreibt. In anderen Worten, liegt ein bestimmter Punkt (z. B. ein Extrempunkt eines Bogens, ein Anfangspunkt einer geraden Strecke, ein Mittelpunkte einer geraden Strecke oder ein Endpunkt einer geraden Strecke) innerhalb eines Intervalls, so kann diesem Punkt beispielsweise eine relative Lagekoordinate von etwa 0 zugeordnet sein, wenn der Punkt bei einem Anfang des Intervalls gelegen ist, und es kann dem Punkt ferner eine relative Lagekoordinate von etwa 1 zugeordnet sein, wenn der Punkt beispielsweise nahe bei einem Ende des Intervalls gelegen ist. Liegt beispielsweise ein entsprechender Punkt zwischen der Grundlinie und der Mittellinie, aber sehr nahe bei der Grundlinie, so ist dem Punkt beispielsweise ein Lageparameter von Null zugeordnet. Liegt der Punkt hingegen zwischen der Grundlinie und der Mittellinie, aber nahe bei der Mittellinie, so kann dem Punkt beispielsweise ein Lageparameter von näherungsweise 1 zugeordnet sein. Im Übrigen kann einem Punkt, der in der Mitte zwischen der Grundlinie und der Mittellinie gelegen ist, beispielsweise ein Lageparameter von 0,5 zugeordnet sein. Allerdings ist es nicht zwingend erforderlich, eine lineare Zuordnung der Lageparameter zu wählen. Auch eine Begrenzung der Lageparameter auf ein Intervall zwischen 0 und 1 ist nicht erforderlich, sondern ist nur als Beispiel anzusehen. Vielmehr ist es bei einem Ausführungsbeispiel der vorliegenden Erfindung allgemein von Vorteil, dass Punkten (Extrempunkten von Bögen, Anfangspunkten von geraden Strecken, Endpunkten von geraden Strecken oder Mittelpunkten von geraden Strecken) relative Lageparameter zugeordnet werden, die auf die Schriftlinien bezogen sind.

Anhand der Fig. 32b wird im Folgenden eine beispielhafte Beschreibungsform für ein Schriftzeichen angegeben. Für einen Bogen (also beispielsweise einen Kreisbogen oder einen Ellipsenbogen) kann die Beschreibung eine Information über die Richtung umfassen, die angibt, ob der Bogen nach oben, nach unten, nach links oder nach rechts gekrümmt ist. Ferner kann die Beschreibung für einen Bogen eine Information über eine Lage eines Extremums umfassen. Die Lage des Extremums kann beispielsweise als eine absolute oder relative Position in einer ersten Richtung (beispielsweise in einer Richtung entlang der Schriftlinien, die auch als x-Richtung bezeichnet ist) angeben sein. Alternativ kann aber auch eine relative Information über eine Lage in der x-Richtung gegeben werden, die beispielsweise eine Lage im Bezug auf einen Vergleichpunkt in dem Schriftzeichen angibt. Bei dem Vergleichpunkt handelt es sich beispielsweise um einen Bogen, einen Anfangspunkt einer geraden Strecken, einen Endpunkt einer geraden Strecke oder einen Mittelpunkt einer geraden Strecke. Ebenso kann es sich bei dem Referenzpunkt aber auch um einen anderweitig gewählten charakteristischen Punkt eines Schriftzeichens handeln, beispielsweise um einen Mittelpunkt, einen am weitesten in einer bestimmten Richtung gelegenen Punkt oder um einen anderen charakteristischen Punkt. Ferner umfasst die Beschreibung eines Bogens bevorzugt eine Information über eine Position y relativ zu den Schriftlinien 3210, 3212, 3214, 3216. Die Information über die Position relativ zu den Schriftlinien kann beispielsweise angeben, ob der Punkt in einem Intervall zwischen zwei Schriftlinien gelegen ist oder (innerhalb einer vorgegebenen Toleranz) auf einer Schriftlinie liegt. Ferner kann die Information optional angeben, in welchem Intervall zwischen den Schriftlinien der Punkt gegeben ist.

Zusätzlich oder alternativ kann die Information über die Position relativ zu den Schriftlinien eine Information darüber enthalten, ob ein Punkt (beispielsweise innerhalb eines vorgegebenen Toleranzbereichs) auf einer der Schriftlinien liegt, und, falls ja, auf welcher der Schriftlinien der Punkt gelegen ist. Zusätzlich kann optional eine genauere Beschreibung der Position in der y-Richtung relativ zu den Schriftlinien gegeben werden, beispielsweise in Form eines Werts zwischen 0 und 1, wie dies vorher beschrieben wurde. Auch die Position in x-Richtung kann im Übrigen entweder absolut oder relativ, bezogen auf einen oder zwei Bezugspunkte, angegeben werden.

Die Information über einen Bogen kann ferner eine Information über einen Krümmungsradius des Bogens enthalten. Die Informationen über den Krümmungsradius ist allerdings als optional anzusehen.

Ferner kann die Beschreibung eines Schriftzeichens eine Information über eine gerade Strecke umfassen. Beispielsweise kann eine Richtung einer geraden Strecke in der Information über ein Schriftzeichen enthalten sein. So kann die Richtung einer geraden Strecke beispielsweise durch Angabe eines Winkels gegenüber einer Horizontalen bzw. gegenüber einer Schriftlinie 3210, 3212, 3214, 3216 angegeben werden. Alternativ oder zusätzlich kann die Lage der identifizierten geraden Strecken beispielsweise dadurch angegeben werden, dass eine Position eines Anfangspunkts der geraden Strecke und eines Endpunkts der geraden Strecke beschrieben wird. Alternativ dazu kann eine Information über eine gerade Strecke auch Information über eine Länge der geraden Strecke und über einen Mittelpunkt der geraden Strecke umfassen. Die genannten Informationen über die gerade Strecke sind bevorzugt relativ zu den Schriftlinien gewählt.

Somit ist festzuhalten, dass der Schriftzeichen-Beschreibungs-Ersteller 2930 unter Verwendung der durch den Schriftlinienerkenner 2926 gelieferten Information sowie ferner unter Verwendung der durch den Hough-Transformator 2920 gelieferten Information die relative Beschreibung eines Schriftzeichens als die Information 2932 bereitstellen kann, so dass die Information 2932 die Lage von Bögen und/oder geraden Strecken in dem Schriftzeichen relativ zu den Schriftlinien beschreibt.

Die Fig. 32c zeigt eine beispielhafte Beschreibung des in der Fig. 32a gezeigten Schriftzeichens "a". Das Schriftzeichen "a" umfasst gemäß der in der Fig. 32c gezeigten Beschreibung 3280 einen ersten Bogen, der nach unten gekrümmt ist, dessen Extremum 3230 die x-Koordinate x = 0 aufweist, und der ferner auf der Mittellinie 3216 gelegen ist. Der Buchstabe "a" umfasst ferner einen zweiten Bogen, der nach rechts gekrümmt ist, und dessen Extremum die x-Koordinate x = -0,5 aufweist. Das Extremum 3232 des zweiten Bogens ist im Übrigen in dem zweiten Intervall (Intervall II) gelegen. Eine y-Position des Extremums 3232 kann beispielsweise als y=0.5 genau angegeben sein, wodurch zum Ausdruck kommt, dass das Extremum 3232 in der Mitte zwischen der der Grundlinie und der Mittellinie gelegen ist. Der Buchstabe "a" umfasst zusätzlich einen dritten Bogen, der nach oben gekrümmt ist, und dessen Extremum die x-Koordinate x = -0,1 aufweist. Das Extremum 3234 des dritten Bogens ist im Übrigen auf der Grundlinie 3212 gelegen. Die rechte gerade Strecke des Buchstabens "a" verläuft gemäß der Beschreibung 3280 nach rechts oben und weist einen Winkel von 80° gegenüber einer horizontalen bzw. gegenüber einer Schriftlinie auf. Ein Anfangspunkt der geraden Strecke weist eine x-Koordinate von x = 0,4 auf und ist in dem zweiten Intervall, also zwischen der Grundlinie und der Mittellinie gelegen. Ein Endpunkt der geraden Strecke weist eine x-Koordinate von 0,5 auf und ist beispielsweise auf der Mittellinie 3214 gelegen. Die entsprechende Lageinformation kann beispielsweise durch den Schriftzeichen-Beschreibungs-Ersteller 2930 in codierter und geordneter Weise an den Datenbank-Vergleicher 2940 geliefert werden.

Im Folgenden wird anhand Fig. 33 und 34 beschrieben, wie durch den Schriftzeichen-Beschreibungs-Ersteller (also beispielsweise durch den Schriftzeichen-Beschreibungs-Ersteller 2830, oder durch den Schriftzeichen-Beschreibungs-Ersteller 2930) eine Information 2832, 2932 gewonnen werden kann, die sich besonders gut zur Verarbeitung durch den Datenbank-Vergleicher 2840, 2940 eignet.

Zu diesem Zweck zeigt die Fig. 33 ein Blockschaltbild eines erfindungsgemäßen Schriftzeichen-Beschreibungs-Erstellers, gemäß einem Ausführungsbeispiel der vorliegenden Erfindung. Der Schriftzeichen-Beschreibungs-Ersteller gemäß der Fig. 33 ist in seiner Gesamtheit mit 3300 bezeichnet. Der Schriftzeichen-Beschreibungs-Ersteller 3300, der beispielsweise dem Schriftzeichen-Beschreibungs-Ersteller 2830 gemäß Fig. 28 oder dem Schriftzeichen-Beschreibungs-Ersteller 2930 gemäß Fig. 29 entspricht, ist ausgelegt, um eine Information 3322 über identifizierte Schriftelemente, also beispielsweise über identifizierte Kreisbögen oder über identifizierte Ellipsenbögen oder über identifizierte gerade Strecken, zu empfangen. Die Information 3322 kann dabei beispielsweise der Information 2822 oder der Information 2922 entsprechen. Allerdings kann bei einem alternativen Ausführungsbeispiel die Information 3322 auch basierend auf der Information 2928 über Schriftlinien und basierend auf der Information 2922 über die identifizierten Schriftelemente gebildet werden, und somit die Position der identifizierten Schriftelemente relativ zu den Schriftlinien beschreiben. Gemäß einem Ausführungsbeispiel der vorliegenden Erfindung ist es dabei lediglich von Bedeutung, dass die Informationen 3322 verschiedene Schriftelemente in einer (bestimmten, durch die vorangehende Verarbeitung festgelegten) Reihenfolge durch Parameter beschreibt. Der Schriftzeichen-Beschreibungs-Ersteller 3330 umfasst einen optionalen Schriftelement-Auswähler 3340, der ausgelegt ist, um aus der durch die Information 3322 beschriebenen Gesamtheit von Schriftelementen ein echte Teilmenge von ausgewählten Schriftelementen auszuwählen. Die Anzahl der auszuwählenden Schriftelemente kann dabei beispielsweise von Außen vorgegeben sein. Ferner kann die Auswahl beispielsweise zufällig erfolgen. Alternativ dazu kann aber auch vorgegeben sein, dass der Schriftelement-Auswähler 3340 die Teilmenge der ausgewählten Schriftelemente so wählt, dass die Teilmenge der ausgewählten Schriftelemente beispielsweise eine erste vorgegebene Anzahl an Bögen und ferner eine zweite vorgegebene Anzahl an geraden Strecken beschreibt. Die Auswahl kann also zufällig oder entsprechend einer vorgegebenen Regel erfolgen.

Ein Schriftelement-Kombinations-Ersteller 3350 ist ausgelegt, um eine Beschreibung der durch den Schriftelement-Auswähler 3340 ausgewählten Teilmenge 3342 von Schriftzeichen zu empfangen. Alternativ dazu kann der Schriftelement-Kombinations-Ersteller 3350 auch ausgelegt sein, um beispielsweise die Informationen 3322 zu empfangen, wenn beispielsweise der Schriftelement-Auswähler 3340 entfällt.

Der Schriftelement-Kombinations-Ersteller 3350 ist ausgelegt, um verschiedene Kombinationen von durch die Information 3342 bzw. die Information 3322 beschriebenen Schriftelementen zu erstellen und als Information 3352 auszugeben. Die Information 3352 entspricht dabei beispielsweise der Schriftzeichenbeschreibung 2832 oder der Schriftzeichenbeschreibung 2932, und wird beispielsweise dem Datenbank-Vergleicher 2840, 2950 zugeführt.

Unter verschiedenen Kombinationen von Schriftelementen wird hierbei eine verschiedene Anordnung der Schriftelemente verstanden. Beschreibt beispielsweise die Information 3322 drei Bögen und eine gerade Strecke mit zugehörigen Lageparametern, so kann beispielsweise der Schriftelement-Kombinations-Ersteller 3350 verschiedene Kombinationen erstellen. Eine erste Kombination beschreibt beispielsweise die Schriftelemente in der Reihenfolge Bogen 1, Bogen 2, Bogen 3, gerade Strecke 1. Eine zweite Kombination beschreibt beispielsweise die durch die Informationen 3322 beschriebenen Schriftelemente in der davon verschiedenen Reihenfolge: Bogen 1, Bogen 3, Bogen 2, gerade Strecke 1. Eine dritte durch den Schriftelement-Kombinations-Ersteller 3350 erzeugte Kombination beschreibt beispielsweise die Schriftelemente, die durch die Informationen 3122 beschrieben werden, in einer weiteren Reihenfolge bzw. Anordnung: Bogen 1, gerade Strecken 1, Bogen 2, Bogen 3.

In anderen Worten, der Schriftelement-Kombinations-Ersteller 3350 ist ausgelegt, um basierend auf der Information 3322 verschiedene geordnete Sätze von Schriftelementen zu bilden, in denen die Schriftelemente in unterschiedlicher Reihenfolge angeordnet sind. In welcher Reihenfolge die Schriftelemente geordnet sind kann beispielsweise durch in dem Schriftelement-Kombinations-Ersteller 3350 enthaltene Regeln festgelegt werden. Alternativ dazu kann der Schriftelement-Kombinations-Ersteller 3350 auch ausgelegt sein, um alle möglichen Reihenfolgen zu verwenden.

Somit ist der Schriftelement-Kombinations-Ersteller 3350 insgesamt ausgelegt, um basierend auf einem einzigen Satz von Schriftelementen mehrere, verschiedenartig geordnete Sätze von Schriftelementen, die durch zugehörige Parameter beschrieben werden, zu bilden. Somit erfolgt der anschließende, durch den Datenbank-Vergleicher 2840, 2940 vorgenommene Datenbankvergleich unabhängig von der Reihenfolge in der die einzelnen Schriftelemente in der Information 3322 beschrieben werden. Dementsprechend ist die Identifizierung eines Schriftzeichens unabhängig von der Reihenfolge der Beschreibung der Schriftelemente in der Information 3322, wodurch eine besonders zuverlässige Schrifterkennung erzielt wird.

Fig. 34 zeigt ein Blockschaltbild eines erfindungsgemäßen Schriftzeichen-Beschreibungs-Erstellers, gemäß einem Ausführungsbeispiel der vorliegenden Erfindung. Der Schriftzeichen-Beschreibungs-Ersteller gemäß der Fig. 34 ist in seiner Gesamtheit mit 3400 bezeichnet. Diesbezüglich sei darauf hingewiesen, dass der Schriftzeichen-Beschreibungs-Ersteller 3400 eine Information 3422 über identifizierte Schriftelemente empfängt, die im Wesentlichen der Information 3322 entspricht. Bei dem in der Fig. 34 gezeigten Ausführungsbeispiel umfasst die Information 3422 eine Information über beispielsweise fünf Bögen und zwei geraden Strecken, denen jeweilige Lageparameter zugeordnet sind. Ein Beispiel für die Information 3422 wird im Folgenden noch anhand der Fig. 35 ausführlicher beschrieben.

Der Schriftzeichen-Beschreibungs-Ersteller 3430, der beispielsweise an die Stelle des Schriftzeichen-Beschreibungs-Ersteller 2830 oder an die Stelle des Schriftzeichen-Beschreibungs-Erstellers 2930 treten kann, oder der alternativ dazu auch ein Teil der Schriftzeichen-Beschreibungs-Ersteller 2830, 2930 sein kann, umfasst einen Schriftelement-Ordner 3440. Der Schriftelement-Ordner 3440 ist beispielsweise ausgelegt, um basierend auf der Information 3422 eine Information 3452 zu erzeugen, in der die Schriftelemente so geordnet sind, dass sie in der durch die Information 3452 wiedergegebenen Reihenfolge eine durchgehende Schriftlinie beschreiben. In anderen Worten, der Schriftelement-Ordner 3440 ist ausgelegt, um zu einem bestimmten Schriftelement ein darauf folgendes Schriftelement zu identifizieren, so dass das bestimmte Schriftelement und das darauf folgende Schriftelement eine durchgehende Schriftlinie bilden. So kann beispielsweise der Schriftelementordner 3440 ausgelegt sein, um einen Abstand zwischen Endpunkten mehrerer Schriftelemente zu identifizieren, und um zwei Schriftelemente als aufeinander folgende Schriftelemente zu erkennen, während ein Abstand zwischen einem Endpunkt eines ersten Schriftelements und einem Anfangspunkt eines zweiten Schriftelements kleiner als eine vorgegebene Schranke ist. Somit liefert der Schriftelement-Ordner 3440 insgesamt eine geordnete Information 3452, die beispielsweise als Eingangs-Information für die Datenbank-Vergleicher 2840, 2940 dienen kann.

Im Folgenden wird anhand der Fig. 35 ein konkretes Beispiel gezeigt, anhand dessen die Funktionsweise des Schriftelement-Ordners 2440 besser verständlich wird. Die Fig. 35 zeigt eine graphische Darstellung eines Schriftzeichens "g" sowie der Schriftelemente, aus denen das Schriftzeichen "g" besteht. Die graphische Darstellung gemäß der Fig. 35 ist in ihrer Gesamtheit mit 3500 bezeichnet. Die graphische Darstellung 3500 zeigt das Schriftzeichen "g". Das Schriftzeichen "g" umfasst einen ersten Bogen 3510, einen zweiten Bogen 3512, einen dritten Bogen 3514, einen vierten Bogen 3516 sowie einen fünften Bogen 3518. Das Schriftzeichen "g" umfasst ferner eine erste gerade Strecke 3520 sowie eine zweite gerade Strecke 3522. Ferner ist ersichtlich, dass bei einem Schreiben des Buchstabens "g" die einzelnen Schriftelemente in der folgenden Reihenfolge durchlaufen werden: Bogen 1, Bogen 2, Bogen 3, gerade Strecke 1, Bogen 4, Bogen 5, gerade Strecke 2. Daher ist beispielsweise ein Endpunkt des Schriftelements "Bogen 1" benachbart bei einem Anfangspunkt des Schriftelements "Bogen 2". Ferner ist ein Endpunkt des Schriftelements "Bogen 2" benachbart bei einem Anfangspunkt des Schriftelements "Bogen 3". Entsprechende Beziehungen gelten auch für die Anfangspunkte und Endpunkte der übrigen Schriftelemente. Hingegen ist ein Endpunkt des Schriftelements "Bogen 3" weit entfernt von einem Anfangspunkt des Schriftelements "Bogen 4". Aufgrund der geschilderten Verhältnisse erstellt beispielsweise der Schriftelement-Ordner 3410 basierend auf einer Beschreibung, die beispielsweise zunächst die Bögen und erst dann die geraden Strecken beschreibt, durch Umordnen eine Beschreibung, die Schriftelemente in einer geordneten Reihenfolge beschreibt, so dass durch die entsprechende Reihenfolge der Schriftelemente eine durchgehende Schriftlinie beschrieben wird.

Eine beispielhafte ungeordnete Beschreibung ist in der Fig. 34 mit 3460 bezeichnet, während eine entsprechend einem Verlauf einer Schriftlinie geordnete Darstellung mit 3462 bezeichnet ist.

Im Folgenden wird noch ein erfindungsgemäßes Verfahren zur Erkennung eines Schriftzeichens in einem Bild beschrieben. Zu diesem Zweck zeigt die Fig. 36 ein Flussdiagramm eines erfindungsgemäßen Verfahrens zur Erkennung eines Schriftzeichens in einem Bild. Das Verfahren gemäß der Fig. 36 ist in seiner Gesamtheit mit 3600 bezeichnet.

Das Verfahren 3600 umfasst in einem Schritt 3610 ein Hough-Transformieren eines Bildes oder einer vorverarbeiteten Version des Bildes, um identifizierte Schriftelemente zu identifizieren. Das Verfahren 3600 umfasst ferner in einem zweiten Schritt 3620 ein Erstellen einer Schriftzeichen-Beschreibung basierend auf den identifizierten Schriftelementen. Ferner umfasst das Verfahren 3600 in einem dritten Schritt 3630 ein Vergleichen der Schriftzeichen-Beschreibung mit einer Mehrzahl von Vergleichs-Schriftzeichen-Beschreibungen, denen Schriftzeichen-Codes zugeordnet sind, um als Ergebnis der Vergleichens einen Schriftzeichencode eines erkannten Schriftzeichens zu liefern.

Ferner sei darauf hingewiesen, dass das Verfahren 3600 um all diejenigen Schritt ergänzt werden kann, die im Hinblick auf das erfindungsgemäße Konzept (also beispielsweise im Hinblick auf die erfindungsgemäßen Vorrichtungen) beschrieben wurden.

Die erfindungsgemäße Vorrichtung oder das erfindungsgemäße Verfahren kann in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird. Allgemein besteht die vorliegende Erfindung somit auch in einem Computer-Programm-Produkt mit auf einem maschinenlesbaren Träger gespeicherten Programmcode zur Durchführung des erfindungsgemäßen Verfahrens, wenn das Computerprogramm-Produkt auf einem Rechner abläuft. In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Zusammenfassend ist somit festzuhalten, dass die vorliegende Erfindung ein besonders effizientes Verfahren zur Schriftzeichenerkennung beschreibt.

Diesbezüglich ist festzustellen, dass ein Schilderlesen von Ortsschildern, Ortsnamen oder Geschwindigkeitsbegrenzungen ein wichtiger Aspekt der Schrifterkennung ist. So sind beispielsweise viele Buchstaben und Zahlen (bei manchen Schriftarten sogar alle Buchstaben und Zahlen) aus vertikalen Linien, horizontalen Linien, konkaven Linien und konvexen Linien zusammengesetzt. Zumindest aber umfassen die Buchstaben und Zahlen bei einer Vielzahl von Schriftarten bzw. Schrifttypen vertikale Linien, horizontale Linien, konkave Linien und konvexe Linien.

Beispielsweise hat ein Buchstabe "S" vier Extrema, ebenso wie ein Buchstabe "O" bzw. "o". Der Buchstabe "S" unterscheidet sich aber von dem Buchstaben "O" im Hinblick auf eine Krümmung und auf einen relativen Abstand der Extrema zueinander.

Basierend auf der genannten Erkenntnis kann somit ein Schriftzeichenerkennungssystem entwickelt werden. Für eine Erkennung von diagonalen Strichen in den Buchstaben "W", "Z", "A", "K", "Y", "X", "V", "N" bzw. "M" kann bevorzugt ein Hubel-Wiesel-Balkendetektor eingesetzt werden, wie er beispielsweise in der Veröffentlichung "A neural net for 2D-slope and sinusoidal shape detection" von A. Brückmann, F. Klevenz und A. Wünsche beschrieben ist (veröffentlicht in: International Scientific Journal of Computing, Bd. 3, Ausgabe 1, Ukraine, 2004, Seiten 21 - 25). Sowohl die Erkennung von Bögen (beispielsweise von Kreisbögen oder von Ellipsenbögen) als auch die Erkennung von geraden Strecken (z. B. von diagonalen Strichen) kann bei einem Ausführungsbeispiel der vorliegenden Erfindung auf einer gleichen Architektur "Dual Hough IP Core" ablaufen, nur mit unterschiedlicher Programmierung. In anderen Worten, es kann ein umkonfigurierbarer Hough-Transformator eingesetzt werden, der beispielsweise in einem ersten Konfigurationszustand in der Lage ist, Bögen zu erkennen, und der beispielsweise in einem zweiten Konfigurationszustand in der Lage ist, Geraden zu erkennen.

Eine Position von gefundenen Extrema wird bei einem Ausführungsbeispiel der vorliegenden Erfindung einem Liniensystem, beispielsweise wie in einem Erstklässlerschülerheft, zugeordnet.

So werden bei einem Ausführungsbeispiel der vorliegenden Erfindung eine Grundlinie, eine Mittellinie, beispielsweise bei Kleinbuchstaben "d", "c", und eine Oberlinie, beispielsweise bei Großbuchstaben "C", "K" bestimmt.

Zu einer Zeichenerkennung gehören bei einem Ausführungsbeispiel der vorliegenden Erfindung nicht nur die Extrema, sondern jedes Extrema hat eine Information "konvex/konkav oben/unten", "konvex/konkav links/rechts". In anderen Worten, bei einem bevorzugten Ausführungsbeispiel wird beispielsweise auch eine Information über eine Krümmung von Bögen ermittelt und später ausgewertet.

Bei einer Softwaresimulation (bzw. allgemein bei der Durchführung einer Hough-Transformation) kann beispielsweise ein Bereich zwischen einem maximalen Krümmungsradius und einem minimalen Krümmungsradius eingestellt werden, wobei beispielsweise nur Bögen mit einem Krümmungsradius zwischen dem maximalen Krümmungsradius und dem minimalen Krümmungsradius durch den Hough-Transformator erkannt werden.

Ferner kann in der Softwaresimulation bzw. bei der Durchführung der Hough-Transformation mit Hilfe eines Parameters "DelayLines not sum" festgelegt werden, welche Verzögerungsleitungen in dem Hough-Transformator bzw. in dem Hough-Feld nicht zu einer Summenbildung beitragen. Damit kann beispielsweise fein eingestellt werden, dass Linien um den Extremwert nicht zu einer Summenbildung beitragen, da andernfalls zu oft gerade Linien gezählt bzw. ermittelt würden.

In anderen Worten, es kann in dem Hough-Transformator erreicht werden, dass ein Anteil einer Linie, der in der Nähe eines Extrempunkts der gekrümmten Linie gelegen ist, nicht zu einem Ergebnis der Hough-Transformation beiträgt.

Somit entsteht bei einem Ausführungsbeispiel der vorliegenden Erfindung zu einer gebogenen Linie in dem Bild (beispielsweise zu einer kreisförmig gebogenen Linie oder zu einer ellipsenförmig gebogenen Linie) ein Merkmalsvektor der Form (x, y Position des Extremas; Krümmungsradius in einem Wertbereich negativer Max_Krümmungsradius, positiver Max_Krümmungsradius). In anderen Worten, ein Merkmalsvektor zu einem Bogen in dem Bild beschreibt die Position eines Extrempunkts des Bogen sowie einen Krümmungsradius, wobei der Krümmungsradius betragsmäßig kleiner als ein maximaler Krümmungsradius ist.

Ferner existieren Buchstaben-Einzelsegmentierungsalgorithmen. Diesbezüglich sei beispielsweise auf Arbeiten von K. H. Noffz und R. Lay an der Ruprecht-Karl-Universität Heidelberg, oder von T. Roska an der Pázmány P. Catholic University Budapest verwiesen.

Als Beispiel sei hier darauf hingewiesen, dass ein Buchstabe "c" drei Extrema umfasst, eines auf der Mittellinien, eines auf der Grundlinie und eines dazwischen. In diesem Fall zählt weiter eine relative x-Lage der Extrema zueinander.

Bei einem bevorzugten Ausführungsbeispiel wird nach einem klassischen Variationsverfahren gemäß min $(X - X_i)^2$ klassifiziert. Alternativ oder zusätzlich wird ferner nach einem Etikettierungs-Verfahren von V. Ferrari klassifiziert. Für Details diesbezüglich sei auf die Veröffentlichung "Object detection by contour segment networks" von V. Ferrari und anderen verwiesen (veröffentlicht: European Conference von Computer vision (ECCV), Graz, Mai 2006).

Für eine doppelte Kreuz-Überprüfung (double cross check) bzw. zumindest für eine Überprüfung der Schriftzeichenerkennung bietet sich bei einem Ausführungsbeispiel der vorliegenden Erfindung die Verwendung einer Eulerschen Konnektivitätszahl an. Die Eulersche Konnektivitätszahl ist wie folgt definiert:

Konnektivitätszahl = Zahl der Objekte - Zahl der eingeschlossene Löcher.

Ein Objekt ist dabei als eine zusammenhängende Fläche von Bildpunkten bzw. von Pixeln definiert.

Die Konnektivitätszahl berechnet sich in einem Gitter von Bildpunkten (Pixelgrid) aus einer Bestimmung von 2x2-Suchmasken gemäß

$$K = n * \begin{bmatrix} 1 & 0 \\ 0 & 0 \end{bmatrix} - m * \begin{bmatrix} ?1 \\ 10 \end{bmatrix}$$

Für die verschiedenen Buchstaben des lateinischen Alphabets gilt:

für "B": K = -1;

für "Q", "R", "O", "P", "A": K = 0;

für die restlichen Buchstaben bzw. für den Rest: K = 1.

Ferner zeigt Fig. 37 eine Bildschirm-Darstellung einer Hyperfeinstruktur einer Schrifterkennung unter Verwendung eine WinDelay-Programms.
Die graphische Darstellung der Fig. 37 ist in ihrer Gesamtheit mit 3700 bezeichnet. Aus der graphischen Darstellung 3700 ist ersichtlich, dass ein Komma unten links (beispielsweise durch das WinDelay-Programm) markiert wird. Ferner wird alternativ oder zusätzlich ein Buchstabe "G", ein Buchstabe "S" und/oder ein Buchstabe "O" markiert. Sogar eine Buchstabendicke und Serifen sind bestimmbar. Ein Eingangsbild, aus dem die graphische Darstellung 3700 gewonnen wird, ist ein Text, der von einem Bildschirm mit einer Kamera aufgenommen wird (z. B. mit einer Web-Cam-Kamera).
Im Folgenden wird das Verfahren bei der Schriftzeichenerkennung noch einmal anhand eines Ausführungsbeispiels Schritt für Schritt beschrieben. Das Verfahren läuft in ersten Schritten ähnlich ab wie eine Identifizierung von Ellipsen (auch als "ellipse finder" bzw. Ellipsenfinder bezeichnet). Parameter, wie beispielsweise eine Schwelle, sind in einem Programm "WinDelayLine" einstellbar, das die Funktion einer Hough-Transformation bereitstellt.
Die Schriftzeichenerkennung erfolgt Schritt für Schritt wie folgt:

1) Nehme Bild mit Kamera auf. Alternativ kann das Bild aber auch beispielsweise durch einen Scanner erzeugt oder anderweitig gewonnen werden.

2) Setze Schwellwert; Binarisierung (sollte adaptiv sein nach Histogramm-Verteilung der Grauwerte); bei Video öfter nachjustieren nach x Bildrahmen (Frames), oder am besten optimale Schwelle für jedes Bild; Standard-bildverarbeitung.

3) Finde Kontur; Konturfinderalgorithmus ist ein aus morphologischen Operatoren zusammengesetzter Algorithmus, im Prinzip ein Kanten-Detektions-Algorithmus.

4) Hough-Transformation; mit Hilfe einer Hough-Transformation (ausgeführt beispielsweise durch die Software "WinDelayLine") werden Extrema in einem Bild gefunden und (beispielsweise rot) markiert. Jedes Extremum wird mit einer x,y-Position angegeben und hat zusätzlich einen Krümmungswert. Die durch die Hough-Transformation erzeugten Wolken von markierten Extrema (auch als "rote Wolken" bezeichnet) können mehr oder weniger dicht sein, je nach Variation der Parameter Kerngröße (Core-Size), minimaler Krümmungsradius, maximaler Krümmungsradius, bei der Summation ausgelassene Werte (delay not sum). Für Details diesbezüglich wird auf die Diplomarbeit "Echtzeitfähige, auf der Hough-Transformation basierende Methoden der Bildverarbeitung zur Detektion von Ellipsen" von J. Katzmann verwiesen (Diplomarbeit an der Universität Ilmenau, Deutschland, 2005).

5) Klassifikation nach Hamilton'scher Variationsrechnung gemäß min (Integral) $(X\_i - t\_j)^2$. In anderen Worten, es wird beispielsweise eine Abweichung zwischen einem Merkmalsvektor und einem Vergleichs-Merkmals-Vektor minimiert.
Der Algorithmus funktioniert beispielsweise für die Erkennung einer Ellipse wie folgt:
Stelle eine Liste aller möglichen Viererpunktpaare auf; Fitte für jede Viererkombination eine Ellipse, bestimme die Ellipsenparameter und bilde die Abweichung der Messpunkte von der gefitteten Ellipse. Stelle eine nach der Min-Abweichung (bzw. der minimalen Abweichung) absteigende Liste der Viererkombination auf.
Der Schritt 5) ist allerdings als optional anzusehen.

6) Buchstaben und Zahlen bestehen aus Strichen und Bögen. Hier ist ein Hauptsatz der Kurvendiskussion zu beherzigen: Jede Funktion ist durch eine Stützstelle und eine zweite Ableitung approximierbar. Das stimmt in einem digitalen Fall nur mit Einschränkungen: vertikale und horizontale Linien werden gefunden, auch Kreise sind kein Problem, aber bei geraden Linien unterschiedlicher Steigung funktioniert das Verfahren nicht gut. Dabei wird beispielsweise in der Software WinDelayLine bzw. in dem Hough-Transformator ein Geraden-Hough-Finder eingesetzt, wie er beispielsweise in der Veröffentlichung "A neural net for 2D slope and sinusoidal shape detection" von A. Brückmann, F. Klefenz, und A. Wünsche beschrieben ist (veröffentlicht in: International scientific journal of computing 3 (1), Seiten 21 - 26, 2004).

Damit wird eine vollständige rechnerische Neurowissenschafts-Hubel-Wiesel-Lösung einer Orientierungsselektivität erreicht.

7) Bilde einen Sack voll Schablonen (Templates) in einer Konturenbeschreibungssprache. Beispielsweise kann eine Konturenbeschreibungssprache verwendet werden, wie sie in der Veröffentlichung "Object detection by contour segment networks" von V. Ferrari und anderen beschrieben ist (veröffentlicht: European conference on computer vision (ECDB), Graz, Mai 2006).

Eine beispielhafte Beschreibung sei hier anhand des Buchstabens "p" gegeben: gerader Strich nach unten; drei Extrema mit Krümmung nach unten, Krümmung nach links sich hinbiegend, Wachstumshörnchen nach oben sich hinbiegend.

Bilde alle Vier-Punkt-Kombinationspaare aus einem geraden Element und drei Bogenelementen, unter der Zwangsbedingung, dass eine Vorgabe für eine Lage (z. B. Lage unterhalb eines Mittelstrichs oder oberhalb eines Mittelstrichs) einzuhalten ist in Toleranzbereichen, und dass der "p"-Strich links von den drei Kreisbögen liegen muss.

Erstelle für alle Buchstaben und Zahlen (zumindest aber für eine Mehrzahl von Buchstaben oder Zahlen) ihre charakteristische Schablone (bzw. ihr charakteristisches Template) und vergleiche bzw. matche alle Kombinationspaare mit dem Template. Ein Minimum ist das Ergebnis.

In anderen Worten, es werden vier Punkte bestimmt, die Extrema von Bögen oder charakteristische Punkte von geraden Strecken (z. B. Anfangspunkte, Mittelpunkte oder Endpunkte) darstellen, wobei bestimmte vorgegebene Lage-Relationen einzuhalten sind (z. B. Punkte oberhalb oder unterhalb einer Mittellinie, oder Relation der vorliegenden Krümmungen).

Ferner kann alternativ oder zusätzlich ein Verfahren angewendet werden, wie es in der Veröffentlichung "Object detection by contour segment networks" von V. Ferrari u. a. beschrieben ist. Das entsprechende Verfahren kann wie folgt zusammengefasst werden: falls ein Objekt zusammengesetzt ist aus Linien und Kreisbögen, beschreibe, wie das Objekt zusammengesetzt ist. Die Beschreibung kann beispielsweise wie folgt aussehen: Ecke; Linie hoch, y Zentimeter; Linie runter, x Zentimeter; Krümmungsbogen mit Krümmungsradius r. Diese Schablone bzw. dieses Template wird daraufhin in verschiedenen Richtungen ("kreuz und quer") über markierte Punkte (in dem Bild identifizierte Extrema; auch als "rote Punkte" bezeichnet) geschoben. Bilde "Min (SchablonenVektor - rote-Punkte-Vektor)". In anderen Worten, bestimme eine Abweichung zwischen einem Schablonenvektor (Templatevektor) und einem Vektor, der Merkmale bzw. der eine Lage der identifizierten Extrema beschreibt ("rote-Punkte-Vektor"). Dort, wo eine bestmögliche Übereinstimmung auftritt, wird angenommen, dass ein Objekt vorliegt.

Im Folgenden wird noch erläutert, wie eine Eulersche Konnektivitätszahl bestimmt werden kann. Diesbezüglich wird darauf hingewiesen, dass Leonard Euler, der früher noch auf einem 10-Franken-Schein abgebildet war, der Erste war, der die Konnektivitätszahl bestimmt hat. Seine Schriften sind in Latein abgefasst, und seine Formel lautet:

Die Konnektivitätszahl K ist gleich einer Zahl an Objekten minus einer Zahl von Löchern.

In einer für eine Anwendung in einem Computersystem verwendbaren Übersetzung dieses Sachverhalts in einem Gitter von Bildpunkten (Pixelgrid) bedeutet dies: ein Objekt ist als eine zusammenhängende Fläche von Bildpunkten (auch als Pixelfläche bezeichnet) definiert. Beispielsweise kann ein Objekt als eine zusammenhängende Pixelfläche von schwarzen Pixeln definiert sein. Die zusammenhängende Fläche von Bildpunkten (Pixelfläche) kann auch Löcher bzw. Einschlüsse, beispielsweise in Form von weißen Bildpunkten bzw. Pixeln, enthalten. Ein Loch ist dabei als ein Einschluss in einer Umrandung von schwarzen Pixeln definiert. In anderen Worten, ein Loch ist beispielsweise ein Bildpunkt einer erste Farbe (ein weißes Pixel), der von Bildpunkten einer anderen Farbe (z. B. von schwarzen Pixeln) umgeben ist.

Im Folgenden wird beschrieben, wie aufgrund von lokalen 2x2-Operatoren die Konnektivitätszahl bestimmt werden kann. Dazu wird gezählt, wie oft ein 2x2-Muster

$$\begin{pmatrix} 1 & 0 \\ 0 & 0 \end{pmatrix}$$

in einem Pixelbild vorhanden ist.

Ferner wird gezählt, wie oft ein 2x2-Muster

$$\begin{pmatrix} ? & 1 \\ 1 & 0 \end{pmatrix}$$

in dem Bild vorliegt.

Dann werden die ermittelten Zahlen voneinander subtrahiert, und diese Zahl (beispielsweise das Ergebnis) gibt die Konnektivitätszahl an.

Auf Buchstaben angewendet heißt dies, dass ein großes "B" die Konnektivitätszahl K=-1 hat, dass die Buchstaben "a", "b", "d", "e", "q", "o", "p" und "R" die Konnektivitätszahl K = 0 aufweisen, und dass die restlichen Buchstaben (beispielsweise des lateinischen Alphabets) die Konnektivitätszahl 1 aufweisen.

Alternativ dazu kann festgestellt werden, dass bei einer anderen Schriftdarstellung die Buchstaben "A", "D", "O", "P", "Q", "a", "b", "d", "e", "g", "o", "p" und "q" die Konnektivitätszahl 0 haben.

Die Eulersche Konnektivitätszahl kann also als eine doppelte Kreuz-Überprüfung (double cross check) dienen, ob ein richtiger Buchstabe gefunden wurde.

Zusammenfassend lässt sich somit festhalten, dass die vorliegende Erfindung ein besonders vorteilhaftes Konzept zur Schriftzeichenerkennung schafft.

Fig. 38 zeigt eine erfindungsgemäße Vorrichtung zum Identifizieren eines Verkehrszeichens in einem Bild, gemäß einem Ausführungsbeispiel der vorliegenden Erfindung. Die Vorrichtung gemäß der Fig. 38 ist in ihrer Gesamtheit mit 3800 bezeichnet. Es sei darauf hingewiesen, dass die Vorrichtung 3800 ausgelegt ist, um ein Bild 1010 zu empfangen. Ferner umfasst die Vorrichtung 3800, ähnlich wie die Vorrichtung 1000 gemäß Fig. 10, einen optionalen Kantenerkenner 1020. Ebenso umfasst die Vorrichtung 3800 einen Hough-Transformator 1030. Der Kantenerkenner 1020 und der Hough-Transformator 1030 entsprechen von ihrer Funktion her den anhand der Fig. 10 beschriebenen Einrichtungen.

Die Vorrichtung 3800 umfasst ferner zumindest einen Formenerkenner 1040 oder einen Ellipsenerkenner 1660, bevorzugt aber sowohl einen Formenerkenner 1040 als auch einen Ellipsenerkenner 1060. Der Formenerkenner 1040 entspricht von seiner Funktion her dem anhand der Vorrichtung 1000 beschriebenen Formenerkenner, und der Ellipsenerkenner 1660 entspricht von seiner Funktion her dem anhand der Vorrichtung 1600 beschriebenen Ellipsenerkenner 1660.

Ferner umfasst die Vorrichtung 3800 einen Musteridentifizierer 3850. Der Musteridentifizierer bzw. Muster-Erkenner ist ausgelegt, um von dem Hough-Transformator 1030 eine Information über Kreisbögen oder Ellipsenbögen in dem Bild 1010 zu empfangen, oder um von dem Hough-Transformator 1030 eine Information über durch das Bild verlaufende gerade Strecken zu empfangen. Daher kann der Hough-Transformator 1030 bei der Vorrichtung 3800 beispielsweise ausgelegt sein, um nur eine Information über Kreisbögen oder Ellipsenbögen in dem Bild bereitzustellen, oder um nur eine Information über gerade Strecken in dem Bild bereitzustellen. Alternativ dazu kann der Hough-Transformator 1030 aber auch in der Lage sein, eine Information sowohl über Kreisbögen oder Ellipsenbögen in dem Bild als auch über gerade Strecken in dem Bild bereitzustellen. Eine Entscheidung, welche Informationen der Hough-Transformator 1030 bereitstellt, hängt unter anderem davon ab, welche Informationen durch den Formenerkenner 1040 und/oder den Ellipsenerkenner 1660 sowie durch den Musteridentifizierer 3850 benötigt wird.

Der Musteridentifizierer 3850 umfasst einen Bildausschnitt-Auswähler 3860, der ausgelegt ist, um anhand der durch den Formerkenner 1040 gelieferten Information über eine in dem Bild erkannte (allgemeine) Form 1042 und/oder basierend auf der durch den Ellipsenerkenner 1660 gelieferten Information 1662 über eine in dem Bild erkannte elliptische Form einen Bildausschnitt 3862 des Bildes 1010 auszuwählen. Die Auswahl eines Bildausschnitts kann beispielsweise so erfolgen, wie dies anhand der Fig. 15 beschrieben wurde.

Ferner kann der Bildausschnitt-Auswähler 3860 optional ferner ausgelegt sein, um eine Abbildung des Bildausschnitts auszuführen, wie dies anhand der Fig. 15 beschrieben wurde. Ferner kann der Bildausschnitt-Auswähler 3860 alternativ ausgelegt sein, um den Bildausschnitt 3862 unter Verwendung einer Maskierung zu ermitteln, wie dies anhand der Fig. 19 beschrieben wurde. Der Musteridentifizierer 3850 umfasst ferner einen Schrift-Erkenner 3870, der ausgelegt ist, um den Bildausschnitt 3862 bzw. eine Information über den durch den Bildausschnitt-Auswähler 3860 ausgewählten Bildausschnitt zu empfangen. Ferner ist der Schrift-Erkenner 3870 ausgelegt, um die durch den Hough-Transformator 1030 gelieferte Information über Kreisbögen und/oder Ellipsenbögen und/oder gerade Strecken in dem Bild zu empfangen. Ferner ist der Schrift-Erkenner 3870 ausgelegt, um diejenigen Kreisbögen und/oder Ellipsenbögen und/oder geraden Strecken zu bestimmen, die innerhalb des durch den Bildausschnitt-Auswähler ausgewählten Bildausschnitts 3862 liegen. Somit erhält der Schrift-Erkenner 3870 eine Information über ausgewählte Kreisbögen und/oder Ellipsenbögen und/oder gerade Strecken in dem Bild, die innerhalb des Bildausschnitts 3862 liegen. Die durch den Schrift-Erkenner 3870 erhaltene Information über ausgewählte Kreisbögen und/oder gerade Strecken in dem Bild beschreibt damit Schriftelemente. Somit kann eine Schrifterkennung erfolgen, wie dies anhand der Fig. 28 - 36 erläutert wurde.

Ferner sei darauf hingewiesen, dass der Musteridentifizierer 3850 auch anders aufgebaut sein kann. Dabei ist lediglich entscheidend, dass der Schrift-Erkenner 3870 insgesamt eine Information über ausgewählte Kreisbögen und/oder Ellipsenbögen und/oder gerade Strecken in dem Bild erhält, die innerhalb einer durch den Formenerkenner 1040 oder durch den Ellipsenerkenner 1660 erkannten allgemeinen (z.B. dreieckigen oder rechteckigen oder quadratischen) oder elliptischen Form liegen. Die Information über die ausgewählten Kreisbögen und/oder Ellipsenbögen und/oder geraden Strecken in dem Bild tritt somit an die Stelle der Informationen 2822 über identifizierte Schriftelemente (vergleiche Fig. 28). Erkennt der Schrift-Erkenner 3870 ein Schriftzeichen, so liefert der Schrift-Erkenner 3870 beispielsweise einen Schriftzeichencode eines erkannten Schriftzeichens, wie dies beispielsweise anhand der Fig. 28 und 29 beschrieben wurde. Der durch den Schrift-Erkenner 3870 gelieferte Schriftzeichencode kann beispielsweise eine Information darüber tragen, welches Verkehrszeichen erkannt wurde. In anderen Worten, der erkannte Schriftzeichencode kann Teil einer Information sein, die ein identifiziertes Verkehrszeichen beschreibt. Umfasst ein Verkehrszeichen mehr als einen Buchstaben bzw. mehr als ein Schriftzeichen, so kann der Schrift-Erkenner 3870 optional auch eine Information über eine Schrift in einem Verkehrszeichen liefern, die mehr als einen Buchstaben umfasst. Die entsprechende Schrift kann dann, beispielsweise durch Vergleichen mit einer Datenbank, herangezogen werden, um die durch das Verkehrszeichen wiedergegebene Information bzw. das Verkehrszeichen selbst zu identifizieren.

Zusammenfassend kann somit festgehalten werden, dass der Schrift-Erkenner 3870 ausgelegt ist, um basierend auf Informationen über innerhalb einer durch den Formenerkenner 1040 oder den Ellipsenerkenner 1660 erkannten Form liegende Schriftelemente einen Schriftzeichencode zumindest eines erkannten Schriftzeichens zu liefern, wobei der Schriftzeichencode bevorzugt verwendet wird, um eine Information über ein identifiziertes Verkehrszeichen zu bestimmen.

Somit kann festgehalten werden, dass die durch den Hough-Transformator 1030 gelieferte Information bei der Erkennung eines Verkehrszeichens mehrfach wiederverwendet werden kann. Die Information über in dem Bild identifizierte Kreisbögen und/oder Ellipsenbögen und/oder gerade Strecken kann einerseits dazu herangezogen werden, um mit Hilfe eines Formen-Erkenners oder mit Hilfe eines Ellipsen-Erkenners allgemeine oder elliptische Formen in dem Bild 1010 zu erkennen. Ferner kann die durch den Hough-Transformator 1030 gelieferte Information anschließend verwendet werden, um innerhalb eines durch die erkannten Formen beschriebenen Bildausschnitts ein oder mehrere Schriftzeichen zu identifizieren, um so eine besonders zuverlässige Information über ein identifiziertes Verkehrszeichen zu erhalten.

Somit schafft die vorliegende Erfindung bei einem Ausführungsbeispiel ein besonders vorteilhaftes Konzept zur Verkehrszeichenerkennung basierend auf der Durchführung der Hough-Transformation, wobei die durch den Hough-Transformator gelieferte Information je nach Ausführungsbeispiel sogar mehrmals wieder verwendet werden kann.

Insgesamt ermöglicht das Erfindungsgemäße Konzept damit eine Verkehrszeichenerkennung durch ein visuelles System in einem Auto. Die Erfindung liefert somit Informationen über Geschwindigkeitsbegrenzungen und andere Zeichen.

Die vorliegende Erfindung wurde im übrigen unter Verwendung der Software "Windelayline" in ausführlichen Praxistests sowohl bei Stadt- als auch bei Autobahnfahrten erprobt. Die Verkehrzeichen wurden mit einer Standard-Videokamera Panasonic GS27-EG aufgenommen. Alle runden Verkehrszeichen wurden zu 100% segmentiert, egal wie die Lichtverhältnisse (Tunnel, Abschattung) sind. Das Verfahren von "Windelayline" ist eine parallele Hough-Transformation, die als Netzliste auf den Silikon-Software "microenable IV" Videoverarbeiter (Framegrabber) portierbar ist.

Gemäß einem bevorzugten Ausführungsbeispiels schafft die Erfindung eine Vorrichtung 1000; 1600 zum Identifizieren eines Verkehrszeichens 1060; 1310; 1510 in einem Bild 1010, 1150; 1300;1500;1610, mit folgenden Merkmalen:

einem Hough-Transformator 1030; 1630, der ausgelegt ist, um eine Mehrzahl von in verschiedenen Richtungen durch das Bild 1010; 1610 verlaufenden Strecken in dem Bild oder in einem davon abgeleiteten Kantenbild 1022; 1622 zu identifizieren;

einem Formenerkenner 1040; 1200; 1640, der ausgelegt ist, um basierend auf den identifizierten Strecken eine einem Verkehrszeichen entsprechende Form in dem Bild oder in dem davon abgeleiteten Kantenbild zu erkennen; und

einem Musteridentifizierer 1050, 1650, der ausgelegt ist, um basierend auf der erkannten Form einen der erkannten Form entsprechenden Bildausschnitt, dessen Form der durch den Formenerkenner erkannten Form entspricht, auszuwählen, und um basierend auf dem ausgewählten Bildausschnitt ein Verkehrszeichen unter Verwendung eines Vergleichs-Bildmusters zu identifizieren,

wobei der Musteridentifizierer 1050; 1650 ausgelegt ist, um den Ausschnitt des Bildes 1010; 1610 und das Vergleichs-Bildmuster durch eine Abbildung aneinander im Hinblick auf eine Form anzupassen;

wobei der Hough-Transformator 1630 ferner ausgelegt ist, um Kreisbogensegmente oder Ellipsenbogensegmente in dem Bild 1610 oder in dem davon abgeleiteten Kantenbild 1622 zu identifizieren, und

wobei die Vorrichtung ferner einen Ellipsenerkenner 1660; 1700 umfasst, der ausgelegt ist, um basierend auf den identifizierten Kreisbogensegmente oder Ellipsenbogensegmente eine Lage einer Ellipse in dem Bild oder in dem davon abgeleiteten Kantenbild zu erkennen;

wobei der Hough-Transformator 1630 ausgelegt ist, um Extrempunkte 1812a - 1812h von Kreisbogensegmenten oder von Ellipsenbogensegmenten zu bestimmen, und

wobei der Ellipsenerkenner 1660; 1700 ausgelegt ist, um zumindest einen ersten Satz von vier Extrempunkten 1812a, 1812b, 1812c, 1812d aus den durch den Hough-Transformator bestimmten Extrempunkten und einen zweiten Satz 1812a, 1812b, 1812c, 1812d von vier Extrempunkten aus den durch den Hough-Transformator bestimmten Extrempunkten auszuwählen, wobei sich der erste Satz von vier Extrempunkten von dem zweiten Satz von vier Extrempunkten unterscheidet,

um Parameter einer ersten Fit-Ellipse 1840 durch die vier Extrempunkte des ersten Satzes von Extrempunkten zu bestimmen,

um eine Abweichung (d) der vier Extrempunkte des ersten Satzes von Extrempunkten von der ersten Fit-Ellipse zu bestimmen,

um Parameter einer zweiten Fit-Ellipse 1840 durch die vier Extrempunkte des zweiten Satzes von Extrempunkten zu bestimmen,

um eine Abweichung (D) der vier Extrempunkte des zweiten Satzes von Extrempunkten von der Fit-Ellipse zu bestimmen, und

um unter Verwendung der Abweichung (d) der vier Extrempunkte des ersten Satzes von Extrempunkten von der ersten Fit-Ellipse und unter Verwendung der Abweichung (D) der vier Extrempunkte des zweiten Satzes von Extrempunkten von der zweiten Fit-Ellipse zu bestimmen, ob die vier Extrempunkte des ersten Satzes von Extrempunkten zu einer Ellipse in dem Bild gehören, und ob die vier Extrempunkte des zweiten Satzes von Extrempunkten zu einer Ellipse in dem Bild gehören.

Optional kann bei der Vorrichtung 1000; 1600 der Musteridentifizierer 1050; 1650 ausgelegt sein, um basierend auf der erkannten Form ein Bildmuster, das die erkannte Form ausfüllt, oder dessen Berandung durch die erkannte Form bestimmt wird, durch Vergleichen mit zumindest einem Vergleichs-Bildmuster zu identifizieren, um ein Verkehrszeichen zu identifizieren.

Optional kann bei der Vorrichtung 1000; 1600 der Musteridentifizierer 1050; 1650 ausgelegt sein, um den Ausschnitt des Bildes und das Vergleichsbildmuster 2200 durch eine Verschiebung und/oder durch eine Drehung und/oder durch eine Verzerrung aneinander anzupassen.

Optional kann bei der Vorrichtung 1000; 1600 der Musteridentifizierer 1050; 1650 ausgelegt sein, um das Bildmuster unter Verwendung eines Bild-Korrelationsalgorithmus mit zumindest einem Vergleichs-Bildmuster 2200 zu vergleichen.

Optional kann bei der Vorrichtung 1000; 1600 der Musteridentifizierer 1050; 1650 ausgelegt sein, um das Bildmuster in dem Bildausschnitt mit einer Mehrzahl von Vergleichs-Bildmustern 2200 zu vergleichen, um ein Maß für Abweichungen zwischen dem Bildmuster und den Vergleichs-Bildmustern zu erhalten, und um eine Erkennung eines Vergleichs-Bildmusters in dem Bild für ein Vergleichs-Bildmuster (2200) anzuzeigen, das eine geringste Abweichung mit dem Bildmuster aufweist, vorausgesetzt das Maß für die Abweichung ist nicht größer als eine vorgegebene, maximal zulässige Abweichung.

Optional kann bei der Vorrichtung 1000; 1600 der Musteridentifizierer 1050; 1650 ausgelegt sein, um abhängig davon, ob in dem Bild oder einem davon abgeleiteten Kantenbild eine Ellipse oder eine Vergleichsform identifiziert wurde, einen der identifizierten Ellipse oder der identifizierten Vergleichsform entsprechenden Bildausschnitt des Bildes auszuwählen.

Optional kann die Vorrichtung 1000; 1600 einen Kantenerkenner 1020; 1620 umfassen, der ausgelegt ist, um Kanten in dem Bild 1010; 1610 zu erkennen, und um basierend auf dem Bild ein Kantenbild 1022; 1622 zu erzeugen.

Optional kann der Kantenerkenner 1020; 1620 ausgelegt sein, um das Bild unter Verwendung eines Schwellwertes in ein Monochrom-Bild umzuwandeln, und um Kanten in dem Monochrom-Bild zu erkennen.

Optional kann bei der Vorrichtung 1000; 1600 das Bild 1010; 1610 ein Kamerabild von einer Videokamera sein.

Gemäß einem bevorzugten Ausführungsbeispiel schafft die Erfindung eine Vorrichtung 3800, wobei der Musteridentifizierer einen Schrift-Erkenner aufweist, wobei der Schrift-Erkenner einen Schriftzeichen-Beschreibungs-Ersteller umfasst, der ausgelegt ist, um basierend auf einer durch den Hough-Transformator 1030; 1630 gelieferten Information über durch das Bild verlaufende identifizierte gerade Strecken, identifizierte Kreisbogensegmente oder identifizierte Ellipsenbogensegmente eine Schriftzeichen-Beschreibung zu erhalten, die die Lage der identifizierten geraden Strecken, identifizierten Kreisbogensegmente oder identifizierten Ellipsenbogensegmente beschreibt;

wobei der Schrift-Erkenner einen Datenbank-Vergleicher umfasst, der ausgelegt ist, um die Schriftzeichen-Beschreibung mit einer Mehrzahl von Vergleichs-Schriftzeichen-Beschreibungen zu vergleichen, denen Schriftzeichen-Codes zugeordnet sind, um als Ergebnis des Vergleichs einen Schriftzeichen-Code eines erkannten Schriftzeichens zu liefern; und

wobei die Vorrichtung ausgelegt ist, um den Schriftzeichen-Code für eine Identifizierung eines Verkehrszeichens zu verwenden.

Optional kann bei der Vorrichtung 3800 der Hough-Transformator ausgelegt sein, um eine Information über eine Lage, eine Länge oder eine Richtung einer identifizierten geraden Strecke bereitzustellen, und wobei der Schriftzeichen-Beschreibungs-Ersteller ausgelegt ist, um die von dem Hough-Transformator bereitgestellte Information über die identifizierte gerade Strecke für die Erstellung der Schriftzeichen-Beschreibung zu verwenden.

Optional können bei der Vorrichtung 3800 die identifizierten geraden Strecken, identifizierten Kreisbogensegmente oder identifizierten Ellipsenbogensegmente identifizierte Schriftelemente bilden.

Optional kann bei der Vorrichtung 3800 der Schriftzeichen-Beschreibungs-Ersteller ausgelegt sein, um als die Schriftzeichen-Beschreibung eine Beschreibung eines Schriftzeichens zu erhalten, die das Schriftzeichen als eine geordnete Beschreibung von identifizierten Schriftelementen beschreibt.

Optional kann bei der Vorrichtung 3800 der Schriftzeichen-Beschreibungs-Ersteller ausgelegt sein, um die Schriftzeichen-Beschreibung so zu ordnen, dass die geordneten identifizierten Schriftelemente eine durchgehende Schriftlinie beschreiben.

Optional kann bei der Vorrichtung 3800 der Hough-Transformator ausgelegt sein, um eine Information über eine Lage, eine Bogenlänge, einen Krümmungsradius oder einen Krümmungswinkel der identifizierten Kreisbogensegmente oder Ellipsenbogensegmente bereitzustellen, und wobei der Schriftzeichen-Beschreibungs-Ersteller ausgelegt ist, um die von dem Hough-Transformator bereitgestellte Information über die Lage, die Bogenlänge, den Krümmungsradius oder den Krümmungswinkel der identifizierten Kreisbögen oder Ellipsenbögen für die Erstellung der Schriftzeichenbeschreibung zu verwenden.

Optional kann bei der Vorrichtung 3800 der Schriftzeichen-Beschreibungs-Ersteller ausgelegt sein, um die Schriftzeichen-Beschreibung so zu erstellen, dass die Schriftzeichen-Beschreibung eine Beschreibung einer relativen Lage von zu einem Schriftzeichen gehörigen Kreisbögen oder Ellipsenbögen umfasst.

Optional kann die Vorrichtung 3800 einen Schriftlinienerkenner umfassen, der ausgelegt ist, um basierend auf einer Lage der durch den Hough-Transformator identifizierten Schriftelemente eine Linie zu identifizieren, entlang der die Schriftzeichen angeordnet sind.

Optional kann bei der Vorrichtung 3800 der Schriftlinienerkenner ausgelegt sein, um eine Unterlinie, eine Grundlinie, eine Mittellinie oder eine Oberlinie von Schriftzeichen basierend auf einer Lage der durch die Hough-Transformation identifizierten Schriftelemente als eine Schriftlinie zu ermitteln.

Optional kann bei der Vorrichtung 3800 der Schriftlinienerkenner ausgelegt sein, um eine Linie, auf der mehr als eine vorgegebene Anzahl von Extrema von identifizierten Kreisbögen oder Ellipsenbögen liegen, als eine Schriftlinie zu ermitteln.

Optional kann bei der Vorrichtung 3800 der Schriftzeichen-Beschreibungs-Ersteller ausgelegt sein, um die Schriftzeichen-Beschreibung so zu erstellen, dass die Schriftzeichen-Beschreibung eine Information über eine Lage der identifizierten Schriftelemente relativ zu zumindest einer erkannten Schriftlinie beschreibt.

Optional kann bei der Vorrichtung 3800 der Schriftzeichen-Beschreibungs-Ersteller ausgelegt sein, um in die Schriftzeichen-Beschreibung für identifizierte Kreisbögen oder Ellipsenbögen eine durch den Hough-Transformator gelieferte Information über eine Orientierung des Kreisbogens oder des Ellipsenbogens aufzunehmen.

Optional kann bei der Vorrichtung 3800 der Schriftzeichen-Beschreibungs-Ersteller ausgelegt sein, um in die Schriftzeichenbeschreibung für identifizierte Kreisbögen oder Ellipsenbögen eine durch den Hough-Transformator gelieferte Information über eine Position eines Extrempunktes des identifizierten Kreisbogens oder des identifizierten Ellipsenbogens aufzunehmen.

Optional kann bei der Vorrichtung 3800 der Hough-Transformator ausgelegt sein, um nur Kreisbögen oder Ellipsenbögen zu identifizieren, deren Krümmungsradius betragsmäßig kleiner als ein vorgegebener maximal zulässiger Krümmungsradius ist.

Optional kann bei der Vorrichtung 3800 der Schriftzeichen-Beschreibungs-Ersteller ausgelegt sein, um eine Beschreibung des Schriftzeichens durch Aneinanderfügen von ausgewählten benachbarten identifizierten Zeichenelementen zu erstellen, wobei der Schriftzeichen-Beschreibungs-Ersteller ausgelegt ist, um die für die Beschreibung des Schriftzeichens verwendeten ausgewählten Zeichenelemente so aus einer Gesamtheit von identifizierten Zeichenelementen auszuwählen, dass die ausgewählten Zeichenelemente einen durchgehenden Linienverlauf von einem vorgegebenen Anfangspunkt zu einem vorgegebenen Endpunkt beschreiben.

Optional kann bei der Vorrichtung 3800 der Schriftzeichen-Beschreibungs-Ersteller ausgelegt sein, um basierend auf den identifizierten Zeichenelementen einen Merkmalsvektor zu erzeugen, der aufeinanderfolgende Abschnitte eines Schriftzeichens beschreibt.

Optional kann bei der Vorrichtung 3800 der Datenbank-Vergleicher ausgelegt sein, um einen Merkmalsvektor, der die Information der Schriftzeichen-Beschreibung umfasst, mit einer Mehrzahl von Vergleichs-Merkmalsvektoren zu vergleichen, die Vergleichsschriftzeichen zugeordnet sind, um ein Maß für Unterschiede zwischen dem Merkmalsvektor und den Vergleichs-Vektoren zu erhalten, und um basierend auf dem Maß für die Unterschiede einen zu dem Merkmalsvektor gehörigen Schriftzeichencode zu bestimmen.

Optional kann die Vorrichtung 3800 einen Konnektivitätszahl-Berechner umfassen, der ausgelegt ist, um basierend auf einem Bildinhalt eines Bildausschnitts des Bildes, der ein Schriftzeichen umfasst, eine Eulersche Konnektivitätszahl zu berechnen; und wobei die Vorrichtung ferner einen Konnektivitätszahl-Überprüfer umfasst, der ausgelegt ist, um die für den Bildausschnitt berechnete Eulersche Konnektivitätszahl mit einer vorbestimmten, in einer Datenbank enthaltenen Vergleichs-Konnektivitätszahl, die einem in dem Bildausschnitt erkannten Schriftzeichen zugeordnet ist, zu vergleichen, um eine Zuverlässigkeitsinformation zu erhalten, die eine Information über eine Zuverlässigkeit einer Erkennung eines Schriftzeichens trägt.

<u>Referenzen</u>

[1] B. V. Funt and G. D. Finlayson. Color constant color indexing. IEEE Transactions on Pattern Analysis and Machine Intelligence, 17(5) : 522 - 529, 1995.

[2] J. Kludas. Color indexing, constant color indexing. Hauptseminar, TU-Ilmenau, 2005.

[3] P. Lambert, N. Hervey, and H. Grecu. Image retrieval using spatial chromatic histograms. Imaging and Vision, pages 343-347, 2004. CGIV 2004 - Second European Conference on Color in Graphics

[4] G. Ciocca, R. Schettini, and L. Cinque. Image indexing and retrieval using spatial chromatic histograms and signatures. Imaging and Vision, (April 2 - 5), 2002. CGIV 2002 - First European Conference on Color in Graphics, University of Poitiers (France).

**Patentansprüche**

1. Vorrichtung (1000; 1600) zum Identifizieren eines Verkehrszeichens (1060; 1310; 1510) in einem Bild (1010, 1150; 1300;1500;1610), mit folgenden Merkmalen:

   einem Hough-Transformator (1030; 1630), der ausgelegt ist, um eine Mehrzahl von in verschiedenen Richtungen durch das Bild (1010; 1610) verlaufenden Strecken in dem Bild oder in einem davon abgeleiteten Kantenbild (1022; 1622) zu identifizieren;
   einem Formenerkenner (1040; 1200; 1640), der ausgelegt ist, um basierend auf den identifizierten Strecken eine einem Verkehrszeichen entsprechende Form in dem Bild oder in dem davon abgeleiteten Kantenbild zu erkennen; und
   einem Musteridentifizierer (1050, 1650), der ausgelegt ist, um basierend auf der erkannten Form einen der erkannten Form entsprechenden Bildausschnitt, dessen Form der durch den Formenerkenner erkannten Form entspricht, auszuwählen, und um basierend auf dem ausgewählten Bildausschnitt ein Verkehrszeichen unter Verwendung eines Vergleichs-Bildmusters zu identifizieren,

wobei der Musteridentifizierer (1050; 1650) ausgelegt ist, um den Ausschnitt des Bildes (1010; 1610) und das Vergleichs-Bildmuster durch eine Abbildung aneinander im Hinblick auf eine Form anzupassen;

wobei der Hough-Transformator (1630) ferner ausgelegt ist, um Kreisbogensegmente oder Ellipsenbogensegmente in dem Bild (1610) oder in dem davon abgeleiteten Kantenbild (1622) zu identifizieren, und

wobei die Vorrichtung ferner einen Ellipsenerkenner (1660; 1700) umfasst, der ausgelegt ist, um basierend auf den identifizierten Kreisbogensegmente oder Ellipsenbogensegmente eine Lage einer Ellipse in dem Bild oder in dem davon abgeleiteten Kantenbild zu erkennen;

wobei der Hough-Transformator (1630) ausgelegt ist, um Extrempunkte (1812a - 1812h) von Kreisbogensegmenten oder von Ellipsenbogensegmenten zu bestimmen, und

wobei der Ellipsenerkenner (1660; 1700) ausgelegt ist,

um zumindest einen ersten Satz von vier Extrempunkten (1812a, 1812b, 1812c, 1812d) aus den durch den Hough-Transformator bestimmten Extrempunkten und einen zweiten Satz (1812a, 1812c, 1812d, 1812f) von vier Extrempunkten aus den durch den Hough-Transformator bestimmten Extrempunkten auszuwählen, wobei sich der erste Satz von vier Extrempunkten von dem zweiten Satz von vier Extrempunkten unterscheidet,

um Parameter einer ersten Fit-Ellipse (1840) durch die vier Extrempunkte des ersten Satzes von Extrempunkten zu bestimmen,

um eine Abweichung (d) der vier Extrempunkte des ersten Satzes von Extrempunkten von der ersten Fit-Ellipse zu bestimmen,

um Parameter einer zweiten Fit-Ellipse (1840) durch die vier Extrempunkte des zweiten Satzes von Extrempunkten zu bestimmen,

um eine Abweichung (D) der vier Extrempunkte des zweiten Satzes von Extrempunkten von der Fit-Ellipse zu bestimmen, und

um unter Verwendung der Abweichung (d) der vier Extrempunkte des ersten Satzes von Extrempunkten von der ersten Fit-Ellipse und unter Verwendung der Abweichung (D) der vier Extrempunkte des zweiten Satzes von Extrempunkten von der zweiten Fit-Ellipse zu bestimmen, ob die vier Extrempunkte des ersten Satzes von Extrempunkten zu einer Ellipse in dem Bild gehören, und ob die vier Extrempunkte des zweiten Satzes von Extrempunkten zu einer Ellipse in dem Bild gehören.

2. Vorrichtung gemäß Anspruch 1, wobei der Musteridentifizierer ausgelegt ist, um basierend auf der erkannten Form den Bildausschnitt so auszuwählen, dass dessen Form der durch den Formenerkenner erkannten Form entspricht.

3. Vorrichtung (1000; 1600) gemäß Anspruch 1 oder 2, bei der der Formenerkenner (1040; 1200; 1640) ausgelegt ist, um basierend auf einer relativen Lage der identifizierten Strecken die vorgegebene Form in dem Bild (1010; 1610) oder in dem davon abgeleiteten Kantenbild (1022; 1622) zu erkennen.

4. Vorrichtung (1000; 1600) gemäß einem der Ansprüche 1 bis 3, bei der der Formenerkenner (1040; 1200; 1640) ausgelegt ist, um aus einer Gesamtheit (1312, 1314a, 1314b, 1314c, 1316) von identifizierten Strecken eine Teilmenge (1312, 1314a, 1314b, 1314c, 1316) von ausgewählten identifizierten Strecken auszuwählen,

um für die ausgewählten identifizierten Strecken relative Lageparameter (1410; 1420) zu bestimmen, die eine relative Lage der ausgewählten identifizierten Strecken zueinander oder eine relative Lage von Schnittpunkten der ausgewählten identifizierten Strecken beschreiben, und

um basierend auf den relativen Lageparametern zu entscheiden, ob die ausgewählten identifizierten Strecken eine vorgegebene Vergleichsform beschreiben.

5. Vorrichtung (1000; 1600) gemäß Anspruch 4, bei der der Formenerkenner (1040; 1200; 1640) ausgelegt ist, um die relativen Lageparameter (1410; 1420) für die ausgewählten identifizierten Strecken (1314a, 1314b, 1314c)mit relativen Lageparametern von zu identifizierenden Vergleichsformen zu vergleichen, um eine quantitative Beschreibung einer Abweichung zwischen den relativen Lageparametern für die ausgewählten identifizierten Strecken und den relativen Lageparametern der zu identifizierten Vergleichsformen zu erhalten, und

um eine der Vergleichsform entsprechende Form in dem Bild oder in dem davon abgeleiteten Kantenbild zu erkennen, wenn die relativen Lageparameter für die ausgewählten identifizierten Strecken von den relativen Lageparametern der Vergleichsformen um höchstens eine vorgegebene, maximal zulässige Abweichung abweichen.

6. Vorrichtung (1000; 1600) gemäß einem der Ansprüche 1 bis 5, wobei der Hough-Transformator (1030; 1630) ausgelegt ist, um die Kreisbogensegmente oder Ellipsenbogensegmente in dem Bild (1010; 1610) oder in einem davon abgeleiteten Kantenbild (1022; 1622) zu identifizieren, und

wobei der Formenerkenner (1040; 1640)ausgelegt ist, um eine Beschreibung eines Objekts in Form einer Liste von benachbarten identifizierten geraden Strecken und von identifizierten Kreisbogensegmente oder Ellipsenbogensegmente zu beschreiben.

**7.** Vorrichtung (1000; 1600) gemäß Anspruch 6, wobei die Liste Informationen über eine Länge, eine Richtung, eine Position oder einen Krümmungsradius der identifizierten geraden Strecke und der identifizierten Kreisbogensegmente oder Ellipsenbogensegmente umfasst.

**8.** Vorrichtung (1000; 1600) gemäß Anspruch 6 oder 7, wobei der Formenerkenner (1040; 1640)ausgelegt ist, um die Informationen der Liste mit einer Beschreibung einer zu identifizierenden Vergleichsform zu vergleichen,
um ein Maß für einen Unterschied zwischen dem durch die Liste beschriebenen Objekt und der Vergleichsform zu bestimmen, und
um basierend auf dem Maß für den Unterschied zu entscheiden, ob das durch die Liste beschriebene Objekt der Vergleichsform entspricht.

**9.** Vorrichtung (1000; 1600) gemäß einem der Ansprüche 6 bis 8, wobei der Formenerkenner (1040; 1640)ausgelegt ist, um eine Mehrzahl von Beschreibungen von Objekten zu erstellen, die verschiedene Kombinationen von benachbarten identifizierten geraden Strecken, identifizierten Kreisbogensegmente oder identifizierten Ellipsenbogensegmente umfassen, und
um aus der Mehrzahl von Beschreibungen von Objekten ausgewählte Beschreibungen von Objekten auszuwählen, die zumindest einer Vergleichsform entsprechen.

**10.** Vorrichtung (1000; 1600) gemäß einem der Ansprüche 6 bis 9, wobei der Formenerkenner (1040; 1640)ausgelegt ist, um zwei identifizierte gerade Strecken, Kreisbogensegmente oder Ellipsenbogensegmente als benachbarte identifizierte gerade Strecken, Kreisbogensegmente oder Ellipsenbogensegmente zu erkennen, wenn ein Abstand zwischen den identifizierten geraden Strecken,
Kreisbogensegmente oder Ellipsenbogensegmente kleiner als ein vorgegebener Mindestabstand ist.

**11.** Vorrichtung (1000; 1600) gemäß einem der Ansprüche 1 bis 10, wobei die Vorrichtung einen Kantenerkenner (1020; 1620) umfasst, der ausgelegt ist, um Kanten in dem Bild (1010; 1610) zu erkennen, und um basierend auf dem Bild ein Kantenbild (1022; 1622) zu erzeugen;
wobei der Hough-Transformator (1030; 1630) ausgelegt ist, um Kreisbogensegmente oder Ellipsenbogensegmente in dem Kantenbild zu identifizieren, um eine Lageinformation über die identifizierten Kreisbogensegmente oder Ellipsenbogensegmente zu erhalten, und
um eine Mehrzahl von in verschiedenen Richtungen durch das Kantenbild verlaufenden geraden Strecken in dem Kantenbild zu identifizieren, um eine Lageinformation über die identifizierten geraden Strecken zu erhalten;
wobei die Vorrichtung ferner einen Ellipsenerkenner (1660; 1700) umfasst, der ausgebildet ist, um basierend auf der Lageinformation über die identifizierten Kreisbogensegmente oder Ellipsenbogensegmente eine Lage einer Ellipse in dem Bild zu erkennen, und um eine Lageinformation über die erkannte Ellipse bereitzustellen;
wobei der Formenerkenner (1040; 1640)ausgelegt ist, um basierend auf einer Mehrzahl von ausgewählten identifizierten Strecken aus einer Gesamtheit von identifizierten Strecken relative Lageparameter zu bestimmen, die eine relative Lage der ausgewählten identifizierten Strecken zueinander beschreiben,
um die relativen Lageparameter der ausgewählten identifizierten Strecken mit relativen Lageparametern von zu identifizierenden Vergleichsformen zu vergleichen, wobei die Vergleichsformen Umrisse von Verkehrszeichen beschreiben,
um eine Vergleichsform in dem Kantenbild zu erkennen, wenn die relativen Lageparameter der ausgewählten identifizierten Strecken von den relativen Lageparametern der zu identifizierenden Vergleichsformen um höchstens eine vorgegebene maximal zulässige Abweichung abweichen, und
um die Lageinformation (1042; 1642) über die in dem Kantenbild erkannte Vergleichsform basierend auf der Lageinformation über die identifizierten geraden Strecken zu erhalten;
wobei der Musteridentifizierer (1050; 1650) ausgelegt ist, um abhängig davon, ob in dem Kantenbild eine Ellipse oder eine Vergleichsform identifiziert wurde, einen der identifizierten Ellipse oder der identifizierten Vergleichsform entsprechenden Bildausschnitt des Bildes auszuwählen, und
um den Bildausschnitt oder einen durch Abbildung des Bildausschnitts entstehenden abgebildeten Bildausschnitt mit einem oder mehreren Vergleichsbildern zu vergleichen, um in Abhängigkeit davon, wie gut der Bild-Ausschnitt mit dem zumindest einen Vergleichsbild übereinstimmt, eine Information (1052; 1652) darüber bereitzustellen, ob der Bildausschnitt oder der abgebildete Bildausschnitt ein Verkehrszeichen zeigt.

**12.** Vorrichtung (3800) gemäß einem der Ansprüche 1 bis 11, wobei der Musteridentifizierer einen Schrift-Erkenner aufweist,

wobei der Schrift-Erkenner einen Schriftzeichen-Beschreibungs-Ersteller umfasst, der ausgelegt ist, um basierend auf einer durch den Hough-Transformator (1030; 1630) gelieferten Information über durch das Bild verlaufende identifizierte gerade Strecken, identifizierte Kreisbogensegmente oder identifizierte Ellipsenbogensegmente eine Schriftzeichen-Beschreibung zu erhalten, die die Lage der identifizierten geraden Strecken, identifizierten Kreisbogensegmente oder identifizierten Ellipsenbogensegmente beschreibt;

wobei der Schrift-Erkenner einen Datenbank-Vergleicher umfasst, der ausgelegt ist, um die Schriftzeichen-Beschreibung mit einer Mehrzahl von Vergleichs-Schriftzeichen-Beschreibungen zu vergleichen, denen Schriftzeichen-Codes zugeordnet sind, um als Ergebnis des Vergleichs einen Schriftzeichen-Code eines erkannten Schriftzeichens zu liefern; und

wobei die Vorrichtung ausgelegt ist, um den Schriftzeichen-Code für eine Identifizierung eines Verkehrszeichens zu verwenden.

**13.** Verfahren (2600) zum Identifizieren von Verkehrszeichen in einem Bild (2612), mit folgenden Schritten:

Hough-Transformieren (2610) des Bildes oder eines davon abgeleiteten Kantenbildes, um Kreisbogensegmente oder Ellipsenbogensegmente zu identifizieren;

Erkennen (2620) einer Form, die einem Verkehrszeichen entspricht, in dem Bild oder in dem davon abgeleiteten Kantenbild basierend auf den identifizierten Kreisbogensegmenten oder Ellipsenbogensegmenten; und

Identifizieren (2630) eines Verkehrszeichens in einem der erkannten Form entsprechenden Bildausschnitt unter Verwendung eines Vergleichs-Bildmusters,

wobei der Ausschnitt des Bildes und das Vergleichs-Bildmuster durch eine Abbildung aneinander im Hinblick auf eine Form angepasst werden.

wobei das Erkennen (2620) einer Form, die einem Verkehrszeichen entspricht, ein Erkennen einer Lage einer Ellipse in dem Bild oder in dem davon abgeleiteten Kantenbild basierend auf den identifizierten Kreisbogensegmenten oder Ellipsenbogensegmenten umfasst;

wobei das Hough-Transformieren ein Bestimmen von Extrempunkten (1812a - 1812h) von Kreisbogensegmenten oder von Ellipsenbogensegmenten umfasst; und

wobei das Erkennen der Ellipse ein Auswählen eines ersten Satzes von vier Extrempunkten (1812a, 1812b, 1812c, 1812d) aus den durch den Hough-Transformator bestimmten Extrempunkten d eines zweiten Satzes (1812a, 1812c, 1812d, 1812f von vier Extrempunkten aus den durch das Hough-Transformieren bestimmten Extrempunkten umfasst, wobei sich der erste Satz von vier Extrempunkten von dem zweiten Satz von vier Extrempunkten unterscheidet,

wobei das Erkennen der Ellipse ein Bestimmen von Parametern einer ersten Fit-Ellipse (1840) durch die vier Extrempunkte des ersten Satzes von Extrempunkten,

ein Bestimmen einer Abweichung (d) der vier Extrempunkte des ersten Satzes von Extrempunkten von der ersten Fit-Ellipse,

ein Bestimmen von Parametern einer zweiten Fit-Ellipse (1840) durch die vier Extrempunkte des zweiten Satzes von Extrempunkten,

ein Bestimmen einer Abweichung (D) der vier Extrempunkte des zweiten Satzes von Extrempunkten von der Fit-Ellipse, und

ein Bestimmen, ob die vier Extrempunkte des ersten Satzes von Extrempunkten zu einer Ellipse in dem Bild gehören, und ob die vier Extrempunkte des zweiten Satzes von Extrempunkten zu einer Ellipse in dem Bild gehören, unter Verwendung der Abweichung (d) der vier Extrempunkte des ersten Satzes von Extrempunkten von der ersten Fit-Ellipse und unter Verwendung der Abweichung (D) der vier Extrempunkte des zweiten Satzes von Extrempunkten von der zweiten Fit-Ellipse, umfasst.

**14.** Verfahren gemäß Anspruch 13, wobei das Verfahren ein Auswählen eines Bildausschnitts, dessen Form der erkannten Form entspricht, und ein Identifizieren eines Verkehrszeichens in dem der erkannten Form entsprechenden Bildausschnitt umfasst.

**15.** Computerprogramm zum Durchführen des Verfahrens gemäß Anspruch 13 oder 14, wenn das Computerprogramm auf einem Computer abläuft.

**Claims**

1. A device (1000; 1600) for identifying a traffic sign (1060; 1310; 1510) in an image (1010, 1150; 1300; 1500; 1610), comprising:

   a Hough transformer (1030; 1630) which is implemented to identify a plurality of line sections running through the image (1010; 1610) in different directions in the image or in an edge image (1022; 1622) derived from same;
   a shape detector (1040; 1200; 1640) which is implemented to detect a shape corresponding to a traffic sign in the image or in an edge image derived from same based on the identified line sections; and
   a pattern identifier (1050, 1650) which is implemented to select an image section corresponding to the detected shape whose shape corresponds to the shape detected by the shape detector based on the detected shape and to identify a traffic sign based on the selected image section using a comparative image pattern,
   wherein the pattern identifier (1050, 1650) is implemented to adapt the section of the image (1010; 1610) and the comparative image pattern to each other with respect to a shape by mapping;
   wherein the Hough transformer (1630) is further implemented to identify circular arc segments or elliptical arc segments in the image (1610) or in the edge image (1622) derived from same;
   wherein the device further comprises an ellipse detector (1660; 1700) which is implemented to detect a location of an ellipse in the image or in the edge image derived from same based on the identified circular arc segments or elliptical arc segments;
   wherein the Hough transformer (1630) is implemented to determine extreme points (1812a-1812h) of circular arc segments or of elliptical arc segments, and
   wherein the ellipse detector (1660; 1700) is implemented to select at least a first set of four extreme points (1812a, 1812b, 1812c, 1812c) from the extreme points determined by the Hough transformer, and a second set (1812a, 1812c, 1812d, 1812f) of four extreme points from the extreme points determined by the Hough transformer, wherein the first set of four extreme points is different from the second set of four extreme points, to determine parameters of a first fit ellipse (1840) by the four extreme points of the first set of extreme points, to determine a deviation (d) of the four extreme points of the first set of extreme points from the first fit ellipse, to determine parameters of a second fit ellipse (1840) by the four extreme points of the second set of extreme points,
   to determine a deviation (D) of the four extreme points of the second set of extreme points from the fit ellipse, and to determine, using the deviation (d) of the four extreme points of the first set of extreme points from the first fit ellipse and using the deviation (D) of the four extreme points of the second set of extreme points from the second fit ellipse, whether the four extreme points of the first set of extreme points belong to an ellipse in the image, and whether the four extreme points of the second set of extreme points belong to an ellipse in the image.

2. The device according to claim 1, wherein the pattern identifier is implemented to select the image section based on the detected shape so that its shape corresponds to the shape detected by the shape detector.

3. The device (1000; 1600) according to claim 1 or 2, wherein the shape detector (1040; 1200; 1640) is implemented to detect the predetermined shape in the image (1010; 1610) or in the edge image (1022; 1622) derived from same based on a relative location of the identified line sections.

4. The device (1000; 1600) according to one of claims 1 to 3, wherein the shape detector (1040; 1200; 1640) is implemented to select a subset (1312, 1314a, 1314b, 1314c, 1316) of selected identified line sections from an entirety (1312, 1314a, 1314b, 1314c, 1316) of identified line sections,
   to determine relative location parameters (1410; 1420) for the selected identified line sections, which describe a relative location of the selected identified line sections to each other or a relative location of intersections of the selected identified line sections, and
   to decide, based on the relative location parameters, whether the selected identified line sections describe a predetermined comparative shape.

5. The device (1000; 1600) according to claim 4, wherein the shape detector (1040; 1200; 1640) is implemented to compare the relative location parameters (1410; 1420) for the selected identified line sections (1314a, 1314b, 1314c) to relative location parameters of comparative shapes to be identified, to acquire a quantitative description of a deviation between the relative location parameters for the selected identified line sections and the relative location parameters of the comparative shapes to be identified, and
   to detect a shape corresponding to the comparative shape in the image or in an edge image derived from same, when the relative location parameters for the selected identified line sections deviate from the relative location parameters of the comparative shapes by at most a predetermined, maximum admissible deviation.

6.  The device (1000; 1600) according to one of claims 1 to 5, wherein the Hough transformer (1030; 1630) is implemented to identify the circular arc segments or elliptical arc segments in the image (1010; 1610) or in an edge image (1022; 1622) derived from same, and
    wherein the shape detector (1040; 1640) is implemented to describe a description of an object in the form of a list of adjacent identified straight line sections and of identified circular arc segments or elliptical arc segments.

7.  The device (1000; 1600) according to claim 6, wherein the list includes information about a length, a direction, a position or a curvature radius of the identified straight line section and the identified circular arc segments or elliptical arc segments.

8.  The device (1000; 1600) according to claim 6 or 7, wherein the shape detector (1040; 1640) is implemented to compare the information of the list to a description of a comparative shape to be identified,
    to determine a measure for a difference between the object described by the list and the comparative shape, and
    to decide based on the measure for the difference whether the object described by the list corresponds to the comparative shape.

9.  The device (1000; 1600) according to one of claims 6 to 8, wherein the shape detector (1040; 1640) is implemented to set up a plurality of descriptions of objects including different combinations of adjacent, identified straight line sections, identified circular arc segments or identified elliptical arc segments, and
    to select selected descriptions of objects corresponding to at least one comparative shape from the plurality of descriptions of objects.

10. The device (1000; 1600) according to one of claims 6 to 9, wherein the shape detector (1040; 1640) is implemented to detect two identified straight line sections, circular arc segments or elliptical arc segments as adjacent, identified straight line sections, circular arc segments or elliptical arc segments, when a distance between the identified straight line sections, circular arc segments or elliptical arc segments is smaller than a predetermined minimum distance.

11. The device (1000; 1600) according to one of claims I to 10, wherein the device includes an edge detector (1020; 1620) which is implemented to detect edges in the image (1010; 1610), and to generate an edge image (1022; 1622) based on the image;
    wherein the Hough transformer (1030; 1630) is implemented to identify circular arc segments or elliptical arc segments in the edge image, to obtain a location information about the identified circular arc segments or elliptical arc segments, and
    to identify a plurality of straight line sections running in different directions through the edge image in the edge image to obtain a location information about the identified straight line sections;
    wherein the device further includes an ellipse detector (1660; 1700) which is implemented to detect a location of an ellipse in the image based on the location information about the identified circular arc segments or elliptical arc segments and to provide location information about the detected ellipse;
    wherein the shape detector (1040; 1640) is implemented to determine relative location parameters based on a plurality of selected identified line sections from a entirety of identified line sections, describing a relative location of the selected identified line sections with regard to each other,
    to compare the relative location parameters of the selected identified line sections to relative location parameters of comparative shapes to be identified, wherein the comparative shapes describe contours of traffic signs,
    to detect a comparative shape in the edge image, when the relative location parameters of the selected identified line sections deviate from the relative location parameters of the comparative shapes to be identified by no more than a predetermined maximum admissible deviation, and
    to obtain the location information (1042; 1642) about the comparative shape detected in the edge image based on the location information about the identified straight line sections;
    wherein the pattern identifier (1050; 1650) is implemented to select an image section of the image corresponding to the identified ellipse or the identified comparative shape depending on the fact whether in the edge image an ellipse or a comparative shape was identified, and
    to compare the image section or a mapped image section resulting from a mapping of the image section to one or several comparative images, to provide information (1052; 1652) with regard to the fact whether the image section or the mapped image section shows a traffic sign depending on how well the image section matches the at least one comparative image.

12. The device (3800) according to one of claims 1 to 11, wherein the pattern identifier comprises a writing detector, wherein the writing detector includes a character description generator which is implemented to acquire a character description describing the location of the identified straight line sections, the identified circular arc segments or the identified elliptical arc segments based on information provided by the Hough transformer (1030; 1630) about straight line sections, identified circular arc segments or identified elliptical arc segments passing through the image; wherein the writing detector includes a database comparator which is implemented to compare the character description to a plurality of comparative character descriptions to which character codes are associated to provide a character code of a detected character as a result of the comparison; and wherein the device is implemented to use the character code for an identification of a traffic sign.

13. A method (2600) of identifying traffic signs in an image (2612), comprising:

   Hough transforming (2610) the image or an edge image derived from same to identify circular arc segments or elliptical arc segments;

   detecting (2620) a shape corresponding to a traffic sign in the image or an edge image derived from same based on the identified circular arc segments or elliptical arc segments; and

   identifying (2630) a traffic sign in an image section corresponding to the detected shape using a comparative image pattern,

   wherein the section of the image and the comparative image pattern are adapted to each other with respect to a shape by mapping;

   wherein detecting a shape corresponding to a traffic sign comprises detecting a location of an ellipse in the image or in the edge image derived from same based on the identified circular arc segments or elliptical arc segments;

   wherein Hough transforming includes determining extreme points (1812a - 1812h) of circular arc segments or of elliptical arc segments, and

   wherein detecting the ellipse comprises selecting a first set of four extreme points from the extreme points determined by the Hough transformer, and a second set of four extreme points (1812a, 1812c, 1812d, 1812f) from the extreme points determined by the Hough transformer, wherein the first set of four extreme points is different from the second set of four extreme points,

   wherein detecting the ellipse comprises determining parameters of a first fit ellipse (1840) by the four extreme points of the first set of extreme points,

   determining a deviation (d) of the four extreme points of the first set of extreme points from the first fit ellipse,

   determining parameters of a second fit ellipse (1840) by the four extreme points of the second set of extreme points,

   determining a deviation (D) of the four extreme points of the second set of extreme points from the fit ellipse, and

   determining, using the deviation (d) of the four extreme points of the first set of extreme points from the first fit ellipse and using the deviation (D) of the four extreme points of the second set of extreme points from the second fit ellipse, whether the four extreme points of the first set of extreme points belong to an ellipse in the image, and whether the four extreme points of the second set of extreme points belong to an ellipse in the image.

14. The method according to claim 13, the method including selecting an image section whose shape corresponds to the detected shape and identifying a traffic sign in the image section corresponding to the detected shape.

15. A computer program for executing the method according to claim 13 or 14, when the computer program is executed on a computer.

## Revendications

1. Dispositif (1000; 1600) pour identifier un signal routier (1060; 1310; 1510) dans une image (1010, 1150; 1300; 1500; 1610), aux caractéristiques suivantes:

   un transformateur de Hough (1030; 1630), qui est conçu pour identifier, dans l'image ou dans une image de bords (1022; 1622) dérivée de cette dernière, une pluralité de trajets s'étendant dans différentes directions dans l'image (1010; 1610);

   un identificateur de forme (1040; 1200; 1640), qui est conçu pour identifier, sur base des trajets identifiés, une forme correspondant à un signal routier dans l'image ou dans l'image de bords dérivée de cette dernière; et

   un identificateur de modèle (1050, 1650), qui est conçu pour sélectionner, sur base de la forme identifiée, une découpe d'image correspondant à la forme identifiée, dont la forme correspond à la forme identifiée par l'identificateur de forme, et pour identifier, sur base de la découpe d'image sélectionnée, un signal routier à l'aide d'un modèle d'image de comparaison,

l'identificateur de modèle (1050; 1650) étant conçu pour adapter, en ce qui concerne la forme, la découpe de l'image (1010; 1610) et le modèle d'image de comparaison l'un à côté de l'autre par une reproduction;

le transformateur de Hough (1630) étant par ailleurs conçu pour identifier, dans l'image (1610) ou dans une image de bords (1622) dérivée de cette dernière, des segments d'arc de cercle ou des segments d'arc d'ellipse, et le dispositif comportant par ailleurs un identificateur d'ellipse (1660; 1700) qui est conçu pour identifier, sur base des segments d'arc de cercle ou segments d'arc d'ellipse identifiés, une position d'une ellipse dans l'image ou l'image de bords dérivée de cette dernière;

le transformateur de Hough (1630) étant conçu pour déterminer des points extrêmes (1812a à 1812h) de segments d'arc de cercle ou de segments d'arc d'ellipse, et

l'identificateur d'ellipse (1660; 1700) étant conçu pour sélectionner au moins un premier ensemble de quatre points extrêmes (1812a, 1812b, 1812c, 1812d) parmi les points extrêmes déterminés par le transformateur de Hough et un deuxième ensemble (1812a, 1812c, 1812d, 1812f) de quatre points extrêmes parmi les points extrêmes déterminés par le transformateur de Hough, le premier ensemble de quatre points extrêmes étant différent du deuxième ensemble de quatre points extrêmes,

pour déterminer les paramètres d'une première ellipse adaptée (1840) par les quatre points extrêmes du premier ensemble de points extrêmes,

pour déterminer un écart (d) des quatre points extrêmes du premier ensemble de points extrêmes par rapport à la première ellipse adaptée,

pour déterminer les paramètres d'une deuxième ellipse adaptée (1840) par les quatre points extrêmes du deuxième ensemble de points extrêmes,

pour déterminer un écart (D) des quatre points extrêmes du deuxième ensemble de points extrêmes par rapport à l'ellipse adaptée, et

pour déterminer, à l'aide de l'écart (d) des quatre points extrêmes du premier ensemble de points extrêmes par rapport à la première ellipse adaptée et à l'aide de l'écart (D) des quatre points extrêmes du deuxième ensemble de points extrêmes par rapport à la deuxième ellipse adaptée, si les quatre points extrêmes du premier ensemble de points extrêmes appartiennent à une ellipse dans l'image, et si les quatre points extrêmes du deuxième ensemble de points extrêmes appartiennent à une ellipse dans l'image.

2. Dispositif selon la revendication 1, dans lequel l'identificateur de modèle est conçu pour sélectionner, sur base de la forme identifiée, la découpe d'image de sorte que sa forme corresponde à la forme identifiée par l'identificateur de forme.

3. Dispositif (1000; 1600) selon la revendication 1 ou 2, dans lequel l'identificateur de forme (1040; 1200; 1640) est conçu pour identifier, sur base d'une position relative des trajets identifiés, la forme prédéterminée dans l'image (1010; 1610) ou dans l'image de bords (1022; 1622) dérivée de cette dernière.

4. Dispositif (1000; 1600) selon l'une des revendications 1 à 3, dans lequel l'identificateur de forme (1040; 1200; 1640) est conçu pour sélectionner, parmi un ensemble (1312, 1314a, 1314b, 1314c, 1316) de trajets identifiés, une quantité partielle (1312, 1314a, 1314b, 1314c, 1316) de trajets identifiés sélectionnés,

pour déterminer, pour les trajets identifiés sélectionnés, des paramètres de position relative (1410; 1420) qui décrivent une position relative des trajets identifiés sélectionnés l'un par rapport à l'autre ou une position relative d'intersections des trajets identifiés sélectionnés, et

pour décider, sur base des paramètres de position relative, si les trajets identifiés sélectionnés décrivent une forme de comparaison prédéterminée.

5. Dispositif (1000; 1600) selon la revendication 4, dans lequel l'identificateur de forme (1040; 1200; 1640) est conçu pour comparer les paramètres de position relative (1410; 1420) pour les trajets identifiés sélectionnés (1314a, 1314b, 1314c) avec les paramètres de position relative de formes de comparaison à identifier, pour obtenir une description quantitative d'un écart entre les paramètres de position relative des trajets identifiés sélectionnés et les paramètres de position relative des formes de comparaison à identifier, et

pour identifier une forme correspondant à la forme de comparaison dans l'image ou dans l'image de bords dérivée de cette dernière lorsque les paramètres de position relative des trajets identifiés sélectionnés s'écartent des paramètres de position relative des formes de comparaison de tout au plus un écart admissible maximum prédéterminé.

6. Dispositif (1000; 1600) selon l'une des revendications 1 à 5, dans lequel le transformateur de Hough (1030; 1630) est conçu pour identifier les segments d'arc de cercle ou segments d'arc d'ellipse dans l'image (1010; 1610) ou dans une image de bords dérivée de cette dernière (1022; 1622), et

dans lequel l'identificateur de forme (1040; 1640) est conçu pour décrire une description d'un objet sous forme de liste de trajets droits identifiés adjacents et de segments d'arc de cercle ou de segments d'arc d'ellipse identifiés.

**7.** Dispositif (1000; 1600) selon la revendication 6, dans lequel la liste comprend des informations sur une longueur, une direction, une position ou un rayon de courbure du trajet droit identifié et les segments d'arc de cercle ou segments d'arc d'ellipse identifiés.

**8.** Dispositif (1000; 1600) selon la revendication 6 ou 7, dans lequel l'identificateur de forme (1040; 1640) est conçu pour comparer les informations de la liste avec une description d'une forme de comparaison à identifier, pour déterminer une mesure de différence entre l'objet décrit par la liste et la forme de comparaison, et pour décider, sur base de la mesure de la différence, si l'objet décrit par la liste correspond à la forme de comparaison.

**9.** Dispositif (1000; 1600) selon l'une des revendications 6 à 8, dans lequel l'identificateur de forme (1040; 1640) est conçu pour établir une pluralité de descriptions d'objets qui comprennent les différentes combinaisons de trajets droits identifiés adjacents, de segments d'arc de cercle identifiés ou de segments d'arc d'ellipse identifiés, et pour sélectionner, parmi la pluralité de descriptions d'objets, des descriptions d'objets sélectionnées qui correspondent au moins à une forme de comparaison.

**10.** Dispositif (1000; 1600) selon l'une des revendications 6 à 9, dans lequel l'identificateur de forme (1040; 1640) est conçu pour identifier deux trajets droits identifiés, segments d'arc de cercle ou segments d'arc d'ellipse comme trajets droits, segments d'arc de cercle ou segments d'arc d'ellipse identifiés adjacents lorsqu'une distance entre les trajets droits, segments d'arc de cercle ou segments d'arc d'ellipse identifiés est inférieure à une distance minimale prédéterminée.

**11.** Dispositif (1000; 1600) selon l'une des revendications 6 à 10, dans lequel le dispositif comporte un identificateur de bords (1020; 1620) qui est conçu pour identifier des bords dans l'image (1010; 1610), et pour générer, sur base de l'image, une image de bords (1022; 1622);

dans lequel le transformateur de Hough (1030; 1630) est conçu pour identifier des segments d'arc de cercle ou segments d'arc d'ellipse dans l'image de bords, pour obtenir une information de position sur les segments d'arc de cercle ou segments d'arc d'ellipse identifiés, et

pour identifier dans l'image de bords une pluralité de trajets droits s'étendant dans des directions différentes dans l'image de bords, pour obtenir une information de position sur les trajets droits identifiés;

dans lequel le dispositif comporte par ailleurs un identificateur d'ellipse (1660; 1700) qui est conçu pour identifier, sur base de l'information de position sur les segments d'arc de cercle ou segments d'arc d'ellipse identifiés, une position d'une ellipse dans l'image, et pour mettre à disposition une information de position sur l'ellipse identifiée;

dans lequel l'identificateur de forme (1040; 1640) est conçu pour déterminer, sur base d'une pluralité de trajets identifiés sélectionnés parmi un ensemble de trajets identifiés, des paramètres de position relative qui décrivent une position relative des trajets identifiés sélectionnés l'un par rapport à l'autre,

pour comparer les paramètres de position relative des trajets identifiés sélectionnés avec des paramètres de position relative de formes de comparaison à identifier,

les formes de comparaison décrivant des pourtours de signaux routiers,

pour identifier une forme de comparaison dans l'image de bords lorsque les paramètres de position relative des trajets identifiés sélectionnés diffèrent des paramètres de position relative des formes de comparaison à identifier de tout au plus un écart admissible maximum prédéterminé, et

pour obtenir l'information de position (1042; 1642) sur la forme de comparaison identifiée dans l'image de bords sur base de l'information de position sur les trajets droits identifiés;

dans lequel l'identificateur de modèle (1050; 1650) est conçu pour sélectionner, en fonction de s'il a été identifié une ellipse ou une forme de comparaison dans l'image de bords, une découpe de l'image correspondant à l'ellipse identifiée ou à la forme de comparaison identifiée, et

pour comparer la découpe d'image ou une découpe d'image reproduite issue de la reproduction de la découpe d'image avec une ou plusieurs images de comparaison, pour mettre à disposition, en fonction du degré de coïncidence de la découpe d'image avec l'au moins une image de comparaison, une information (1052; 1652) sur si la découpe d'image ou la découpe d'image reproduite montre un signal routier.

**12.** Dispositif (3800) selon l'une des revendications 1 à 11, dans lequel l'identificateur de modèle présente un identificateur d'écriture,

dans lequel l'identificateur d'écriture comporte un créateur de description de caractères qui est conçu pour obtenir, sur base d'une information, fournie par le transformateur de Hough (1030; 1630), sur les trajets droits identifiés s'étendant dans l'image, les segments d'arc de cercle identifiés ou les segments d'arc d'ellipse identifiés, une description de caractères qui décrit la position des trajets droits identifiés, des segments d'arc de cercle identifiés ou des segments d'arc d'ellipse identifiés;

dans lequel l'identificateur d'écriture comporte un comparateur de banque de données qui est conçu pour comparer la description de caractères avec une pluralité de descriptions de caractères de comparaison auxquelles sont associés de codes de caractère, pour fournir, comme résultat de la comparaison, un code de caractère d'un caractère identifié; et

dans lequel le dispositif est conçu pour utiliser le code de caractère pour une identification d'un signal routier.

13. Procédé (2600) pour identifier des signaux routiers dans une image (2612), aux étapes suivantes consistant à:

effectuer une transformation de Hough (2610) de l'image ou d'une image de bords dérivée de cette dernière, pour identifier des segments d'arc de cercle ou des segments d'arc d'ellipse;

identifier (2620) une forme correspondant à un signal routier dans l'image ou dans l'image de bords dérivée de cette dernière sur base des segments d'arc de cercle ou segments d'arc d'ellipse identifiés; et

identifier (2630) un signal routier dans une découpe d'image correspondant à la forme identifiée à l'aide d'un modèle d'image de comparaison,

dans lequel la découpe de l'image et le modèle d'image de comparaison étant adaptés l'un à l'autre en ce qui concerne une forme par une reproduction,

dans lequel l'identification (2620) d'une forme correspondant à un signal routier comprend une identification d'une position d'une ellipse dans l'image ou dans l'image de bords dérivée de cette dernière sur base des segments d'arc de cercle ou segments d'arc d'ellipse identifiés;

dans lequel la transformation de Hough comprend une détermination de points extrêmes (1812a à 1812h) de segments d'arc de cercle ou de segments d'arc d'ellipse; et

dans lequel l'identification de l'ellipse comprend une sélection d'un premier ensemble de quatre points extrêmes (1812a, 1812b, 1812c, 1812d) parmi les points extrêmes déterminés par le transformateur de Hough et d'un deuxième ensemble (1812a, 1812c, 1812d, 1812f) de quatre points extrêmes parmi les points extrêmes déterminés par le transformateur de Hough, le premier ensemble de quatre points extrêmes étant différent du deuxième ensemble de quatre points extrêmes,

dans lequel l'identification de l'ellipse comprend une détermination de paramètres d'une première ellipse adaptée (1840) par les quatre points extrêmes du premier ensemble de points extrêmes,

une détermination d'un écart (d) des quatre points extrêmes du premier ensemble de points extrêmes par rapport à la première ellipse adaptée,

une détermination de paramètres d'une deuxième ellipse adaptée (1840) par les quatre points extrêmes du deuxième ensemble de points extrêmes,

une détermination d'un écart (D) des quatre points extrêmes du deuxième ensemble de points extrêmes par rapport à l'ellipse adaptée, et

une détermination de si les quatre points extrêmes du premier ensemble de points extrêmes appartiennent à une première ellipse dans l'image, et de si les quatre points extrêmes du deuxième ensemble de points extrêmes appartiennent à une ellipse dans l'image, à l'aide de l'écart (d) des quatre points extrêmes par rapport au premier ensemble de points extrêmes de la première ellipse adaptée et à l'aide de l'écart (D) des quatre points extrêmes du deuxième ensemble de points extrêmes par rapport à la deuxième ellipse adaptée.

14. Procédé selon la revendication 13, dans lequel le procédé comprend une sélection d'une découpe d'image dont la forme correspond à la forme identifiée, et une identification d'un signal routier dans la découpe d'image correspondant à la forme identifiée.

15. Programme d'ordinateur pour réaliser le procédé selon la revendication 13 ou 14 lorsque le programme d'ordinateur est exécuté sur un ordinateur.

100

Bild

132 Richtung 2

130

Richtung 1

$(x_3{}', y_3{}')$

138

148

140

160

$(x_4{}', y_4{}')$

150
optional

$\mu$ ×

142

$(x_m{}', y_m{}')$

134

$(x_2{}', y_2{}')$

152

146

136

$(x_1{}', y_1{}')$

112

Bilddaten

Koordinatenbestimmungs-einrichtung

110

Koordinaten
$(x_1{}', y_1{}')$, $(x_3{}', y_3{}')$,     $x_4{}'$ oder $y_4{}'$

114

optional

Ellipsenberechnungs-einrichtung

120

Ellipsenparameter
$x_m{}', y_m{}', a', b', \alpha'$

122

optional

FIG 1

FIG 2A

FIG 2B

$$X_y = X_2 - X_m$$

$$X_y = y_2 - y_m$$

$$X_x = X_3 - X_m$$

$$y_x = y_3 - y_m$$

FIG 3

Zeilennummer

400

Gerastertes Bild

410

| optional: | Bildausschnitt-Auswahleinrichtung | 412 |

414 Bild oder Bildausschnitt

| Mustererkennungseinrichtung | 420 |
| Ähnlichkeit | |

Menge von
Referenz-Kurven-
Verlaufen

Parameter eines identifizierten
gebogenen Liniensegments

| optional: | Koordinatenberechnungseinrichtung | 430 |

Koordinaten eines
440 Ellipsenpunktes

# FIG 4A

FIG 4B

$r_1$

450

452

$r_2$

454

$r_3$

456

FIG 5A

## FIG 5B

FIG 6

# FIG 7A

FIG 7B

FIG 8

800

Videoquelle, Kamera ~810

~812

FPGA

Vorverarbeitung
Binarisierung,
Kantendetektion ~814

Kantenbild

90° 0°

822~ ~820

840 842 830 832

| Hough vorwärts | Hough rückwärts | Hough vorwärts | Hough rückwärts |

846 847 844 845
Extrempunkte

Ellipsenparameter
Blickrichtung ~850 PC

FIG 9

910

↓

Bild oder
Bildausschnitt

930

erste Rasterzeile
zuerst

erste Rasterzeile
zuerst

Mustererkennungseinrichtung 1

Mustererkennungseinrichtung 2

920

922

950

↓

Bild oder
Bildausschnitt

980

erste Rasterzeile
zuerst

letzte Rasterzeile
zuerst

Mustererkennungseinrichtung 1´

Mustererkennungseinrichtung 2´

990

992

# FIG 10

1000

Bild ∼ 1010

1020 ∼ optional: Kantenerkenner

Bild oder Kantenbild ∼ ∼ 1022

1030 ∼ Hough-Transformator

1032 ∼ Information über durch das Bild verlaufende Strecken

1040 ∼ Formen-erkenner

1042 ∼ Information über eine in dem Bild erkannte Form

1050 ∼ Musteridenti-fizierer

1052 ∼ Information über ein identifiziertes Verkehrszeichen

# FIG 11A

1100

↓

Bild ⁓ 1110

Kantenerkenner

1120 ⁓ | Schwellwertbilder | ← 1122

Monochrom-
Bild

1124 ⁓

Konturerkenner ⁓ 1130

⁓ 1132

Kantenbild

FIG 11B

1150

1160

1164

1162

1166

FIG 11C

1170

1192  1180

1190

1188  1186

## FIG 12

1200

$\downarrow$

Information über Kreisbögen
oder Ellipsenbögen in dem Bild

Information über durch das (optional)

Bild verlaufende gerade Strecken ┌~1212

1210~

| | Formenerkenner |
| --- | --- |

| Steuerung | | Elementauswähler | ~1220 |

1260

1222~ Satz von ausgewählten geraden
Strecken/Kreisbögen/Ellipsenbögen

| Relativ-Beschreibungs-Erzeuger | ~1230 |

Formen-
Datenbank

1232~ Relativ-Positions-Beschreibung
der ausgewählten Elemente

1242~

| Datenbank-Vergleicher | |

1240

Beschreibungen
von Formen als Sätze
von geraden Strecken/
Kreisbögen/Ellipsenbögen

~1244

| Übereinstimmungsermittler | ~1250 |

1262~ Information
über erkannte Form

## FIG 13A

1300

1310

1316

1314b

1314c

1314a

1312

Länge 3
120° links

1314b

1314a

Länge 2
30° rechts

1312

Länge1

Länge 3
120° rechts
1314c

Länge 2
120° links
1314b

Länge 1

1314a

1314b

Länge 2
120° links

Länge 3
120° links

Länge 1

1314a

1314c

## FIG 13B          FIG 13C          FIG 13D

1410

1420

$$
\begin{pmatrix}
\text{Länge 1} \\
\text{Winkel 1}{\rightarrow}2 \\
\text{Länge 2} \\
\text{Winkel 2}{\rightarrow}3 \\
\text{Länge 3}
\end{pmatrix}
\quad \text{oder} \quad
\begin{pmatrix}
1 \\
\text{Winkel 1}{\rightarrow}2 \\
\text{Länge 2: Länge 1} \\
\text{Winkel 2}{\rightarrow}3 \\
\text{Länge 3: Länge 1}
\end{pmatrix}
$$

## FIG 14A

$$
\begin{pmatrix}
1 \\
120° \text{ links} \\
1 \\
120° \text{ links} \\
1
\end{pmatrix}
\quad
\begin{array}{l}
\text{gleichseitiges} \\
\text{Dreieck}
\end{array}
$$

## FIG 14B

# FIG 15

1500

1510

Hough-Transformation ⁓1030

Formenerkennung ⁓1040

Information über
in dem Bild erkannte Form ⁓1042

Auswahl
Bildausschnitt ⁓1570

⁓1530

1540

Abbildung ⁓1572

1550

Mustererkennung ⁓1574

Information über
identifiziertes Verkehrszeichen ⁓1052

# FIG 16

Bild —1610

1600

1620

Bild oder
Kantenbild

optional:
Kantenerkenner

1622

Hough-Transformator

| Erkennung gerader Strecken | Erkennung von Extrempunkten von Kreisen oder Ellipsen |

~1630

1632

Information über
durch das Bild
verlaufende
Strecken

optional

Information über
Kreisbögen oder
Ellipsenbögen in
dem Bild

1634

1640 — Formenerkenner

Ellipsenerkenner —1660

Information über eine
in dem Bild erkannte
(allgemeine) Form

1642

Information über eine
in dem Bild erkannte
elliptische Form

~1662

Musteridentifizierer

~1650

Information über
identifiziertes Verkehrszeichen
1652

**FIG 17**

1700

Information über Extrempunkte
1710 — von Kreisbögen oder Ellipsenbögen in
dem Bild

Ellipsenerkenner

Extrempunkt-
Auswähler — 1720

1722 — Satz von
ausgewählten
Extrempunkten

Ellipsenfilter — 1730

Information über
an die ausgewählten
1732 — Extrempunkte
angefittete Ellipse

Abweichungs-
Bestimmer — 1740

Information über
Abweichung der
angefitteten Ellipse
1742 — von den Extrempunkten

Extrempunkt-
Ellipsen-Zuordner — 1750

Information über
Extrempunkte, die
1752 — zu einer Ellipse gehören

Ellipsen-Information-
Bereitsteller — 1760

Information über
1762 — Kreis oder Ellipse in dem Bild

## FIG 18

FIG 19

Bild von Kamera — 1910, 1912
Video-Stream

Schwellwertbildung und Ausschneiden — 1920, 1922
- Schwellwertbildung des Bildes
- Ausschneiden unerwünschter Regionen wie Himmel

Konturbild — 1930, 1932
Kontur-extraktion

Maskierung — 1940, 1942
- Maskieren der Verkehrszeichen mit Hough
- Trennen der maskierten Region

Vergleichen mit Datenbank — 1950, 1952
Vergleichen der maskierten Region mit Verkehrszeichen-Datenbank

wahrscheinlichstes Verkehrszeichen — 1960
Ergebniss ist eine Ähnlichkeitswahrscheinlichkeit mit der Datenbank

Platzierung und Ähnlichkeit

1. Platz (99,5%)
2. Platz (80%)
3. Platz (70%)
— 1970
n-ter Platz (70%)

EP 2 100 258 B1

2000

FIG 20A

2050

FIG 20B

2100

FIG 21A

2140

FIG 21B

2180

FIG 21C

2200

FIG 22A

2250

B)"Crisp" Histogramm (64 Farben: m=1,1)

FIG 22B

FIG 23A

FIG 23B

2400

FIG 24A

2450

FIG 24B

2500

FIG 25A

2550

FIG 25B

# FIG 26

2600
↓

Bild oder Kantenbild

⌐~2612

| Hough-Transformieren des Bildes oder des davon abgeleiteten Kantenbildes | ~2610 |

2614~⌐ Information über durch das Bild verlaufende gerade Strecken

| Erkennen einer vorgegebenen Form in dem Bild oder in dem davon abgeleiteten Kantenbild, basierend auf den identifizierten Strecken | ~2620 |

Information über
2622~⌐ die erkannte Form

| Identifizieren eines Verkehrszeichens in einem der erkannten vorgegeben Form entsprechenden Bildausschnitt | ~2630 |

Information über
2632~⌐ erkanntes Verkehrszeichen

# FIG 27

2700

Bild ⟋ 1010

1020 ⟋ optional:
Kantenerkenner

Bild oder
Kantenbild ⟋ 1022

1030 ⟋ Hough-
Transformator

1032 ⟋ Information über
durch das Bild
verlaufende Strecken

1040 ⟋ Formenerkenner

1042 ⟋ Information über
eine in dem Bild
erkannte Form

1050 ⟋ Musteridentifizierer

1052 ⟋ Information über
ein identifiziertes
Verkehrszeichen

# FIG 28

2800
↓

Bild ∼2808
↓

optional:
Bildvorverarbeitung ∼2810

2812∼ Bild oder vorverarbeitete
Version des Bildes
↓

Hough-Transformator ∼2820

2822∼ Information über
identifizierte Schriftelemente

Schriftzeichen-
Beschreibungs-
Ersteller ∼2830

Schriftzeichenbeschreibung

2832∼

Vergleichs-
Schriftzeichen-
Beschreibungen 2844

2840∼ Datenbank-Vergleicher ← · 2842

2846∼ Schriftzeichen-Code
eines erkannten
Schriftzeichens

## FIG 29

2900

Bild ~2908

optional

2958

| Bildvorverarbeitung: Binarisierung Kantenerkennung Schriftzeichentrennung | ~2910 |

optional

2912~ Vorverarbeitete Version des Bildes

optional
Gauß-
Konnektivitätszahl-
Berechner

Hough-Transformator ~2920

Information über 2922
identifizierte
Schriftelemente

2960

Schriftlinienerkenner ~2926

2928

~2962

Information über
Schriftlinien

optional

Schriftzeichen-
Beschreibungs-Ersteller ~2930

Vergleichs-
Schriftzeichen-
Beschreibungen

2944

2940    2932~

2970

Datenbank-Vergleicher

2942

optional
Schriftzeichen-
Überprüfer

2972

2946~

optional

~2974

Schriftzeichen-Code
eines erkannten
Schriftzeichens

Schriftzeichen-
Zuverlässigkeits-
Information

optional: Schriftzeichens
Gauß´sche
Konnektivitätszahl
eines identifizierten
Schriftzeichens

EP 2 100 258 B1

**FIG 30A**

1. Bogen: nach unten
    Position x, y; Krümmungsradius r

2. Bogen: nach rechts
    Position x, y; Krümmungsradius r

3. Bogen: nach oben
    Position x, y; Krümmungsradius r

1. gerade Strecke: nach rechts oben (Winkel 80° gegen Horizontale)
    Position x, y; Länge l

2. gerade Strecke: vertikal (Winkel 90° gegen Horizontale)
    Position x, y; Länge l

**FIG 30B**

FIG 31

3200

x=-0.5

x=0

3216 —Oberlinie

Intervall Ⅲ

3230

1

0

3214 —Mittellinie

y

1

Intervall Ⅱ

0

3212 —Grundlinie

Schriftlinien

Intervall Ⅰ

3232 3234

1

0

3210 —Unterlinie

x=-0.1

x

## FIG 32A

⟶ Bogen: •Richtung (nach oben, nach unten, nach links, nach rechts)
Extremum:
•Position x
•Position y relativ zu Schriftlinien

( Intervall Ⅰ, Intervall Ⅱ, Intervall Ⅲ
auf Schriftlinie
zusätzlich optional genauere Beschreibung )

•Krümmungsradius (optional)
⟶ Gerade Strecke:
•Richtung (z.B. Winkel gegen Horizontale bzw. gegen Schriftlinie)
•Anfangspunkt und Endpunkt oder
Länge und Mittelpunkt

## FIG 32B

3280

↓

Beispiel: "a"

Bogen 1: nach unten, Extremum: x=0;  auf Mittellinie
Bogen 2: nach rechts, Extremum: x= - 0.5: Intervall II, y=0.5
Bogen 3: nach oben, Extremum: x=-0.1; auf Grundlinie

Gerade Strecke 1: nach rechts oben, Winkel 80°
Anfangspunkt x=0.4, Intervall II, y=0.2
Endpunkt x=0.5, auf Mittellinie

# FIG 32C

# FIG 33

3300

↓

3322

Bogen 1, Lageparameter 1
Bogen 2, Lageparameter 2
Bogen 3, Lageparameter 3
Gerade Strecke 1, Lageparameter 4

identifizierte
Schriftelemente
(Kreisbögen/Ellipsenbögen und
gerade Strecken)

Schriftzeichen-Beschreibungs-
Ersteller

3340 — optional:
Schriftelement-Auswähler

3342 —

3350 — Schriftelement-
Kombinationsersteller

~3330

~3352

LP = Lageparameter

$$\begin{pmatrix} \text{Bogen 1, LP1} \\ \text{Bogen 2, LP2} \\ \text{Bogen 3, LP3} \\ \text{Gerade Strecke 1, LP4} \end{pmatrix}, \begin{pmatrix} \text{Bogen 1, LP1} \\ \text{Bogen 3, LP3} \\ \text{Bogen 2, LP2} \\ \text{Gerade Strecke 1, LP4} \end{pmatrix}, \begin{pmatrix} \text{Bogen 1, LP1} \\ \text{Gerade Strecke 1, LP4} \\ \text{Bogen 2, LP2} \\ \text{Bogen 3, LP3} \end{pmatrix}, \ldots$$

## FIG 34

3400

Bogen 1, Lageparameter 1
Bogen 2, Lageparameter 2
Bogen 3, Lageparameter 3
Bogen 4, Lageparameter 4
Bogen 5, Lageparameter 5
Gerade Strecke1, Lageparameter 6
Gerade Strecke 2, Lageparameter 7

identifizierte
Schriftelemente
(Kreisbögen/Ellipsenbögen und
gerade Strecken)

~3422

3460

Schriftzeichen-Beschreibungs-
Ersteller

3340~ | Schriftelement-Ordner | ~3440        ~3430

3452~ | Schriftzeichen-        LP = Lageparameter
Beschreibug

Bogen 1, LP1
Bogen 2, LP2
Bogen 3, LP3
Gerade Strecke 1, LP6
Bogen 4, LP4
Bogen 5, LP5
Gerade Strecke 1, LP7

~3462

# FIG 35

3500
↓

Bogen 1
3510

Bogen 2
3512

Bogen 3
3514

Gerade Strecke 1
←3520

Gerade Strecke 2
3522

3518

Bogen 5
Bogen 4
3516

FIG 36

3600

Hough-Transformieren eines Bildes oder einer vorverarbeiteten Version des Bildes, um identifizierte Schriftelemente zu identifizieren — 3610

Erstellen einer Schriftzeichen-Beschreibung basierend auf den identifizierten Schriftelementen — 3620

Vergleichen der Schriftzeichen-Beschreibung mit einer Mehrzahl von Vergleichs-Schriftzeichen-Beschreibungen, denen Schriftzeichen-Codes zugeordnet sind, um als Ergebnis des Vergleichens einen Schriftzeichencode eines erkannten Schriftzeichens zu liefern — 3630

FIG 37

3700

↓

FIG 37

# FIG 38

3800
↓

Bild ～1010

optional:
Kantenerkenner ～1020

Hough-Transformator ～1030

Information über Kreisbögen
und/oder Ellipsenbögen in dem Bild

Formenerkenner

1040

1042～ Information über eine
in dem Bild erkannte
allgemeine Form

Ellipsenerkenner ～1660

Information über eine
in dem Bild erkannte
elliptische Form

1662～

Musteridentifizierer

Bildausschnitt-
Auswähler ～3860

3850

Bildausschnitt
～3862

Schrifterkenner ～3870

optional:
Information über
Schrift in dem
Verkehrszeichen

Information über
identifiziertes
Verkehrszeichen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M.A. Garcia-Garrido.** Fast traffic sign detection and recognition under chancing lighting conditions. *Proceedings of the IEEE ITSC 2006, 2006 IEEE intelligent transportation systems conference, Toronto, Kanada, September 17 - 20, 2006,* 17. September 2006
- **J. Miura.** An active vision system für real-time traffic sign recognition. *2000 IEEE intelligent transportation systems, Conference Proceedings, Dearborn (MI), USA, October 1- 3, 2000,* 01. Oktober 2000
- **G. Loy ; N. Barns.** Fast shape-based road sign detection for a driver assistance system. *Proceedings of 2004 IEEE/RSJ International Conference on Intelligent Robots and Systems, September 28 - October 2, 2004 Sendai, Japan,* 28. September 2004
- **J. Hatzidimos.** Automatic traffic sign recognition in digital images. *Proceedings of the international conference on Theory and Applications of Mathematics and Informatics- ICTAMI 2004, Thessaloniki, Greece,* 2004
- A neural net for 2D-Slope and sinusoidal shape detections. **A. Brückmann ; F. Klefenz ; A. Wünsche.** International Scientific Journal of Computing. 2004, vol. 3, 21-26
- A neural net for 2D-slope and sinusoidal shape detection. **A. Brückmann ; F. Klevenz ; A. Wünsche.** International Scientific Journal of Computing. 2004, vol. 3, 21-25
- **V. Ferrari.** Object detection by contour segment networks. *European Conference von Computer vision (ECCV),* Mai 2006
- **J. Katzmann.** Echtzeitfähige, auf der Hough-Transformation basierende Methoden der Bildverarbeitung zur Detektion von Ellipsen. *Diplomarbeit an der Universität Ilmenau,* 2005
- **A. Brückmann ; F. Klefenz ; A. Wünsche.** A neural net for 2D slope and sinusoidal shape detection. *International scientific journal of computing,* 2004, vol. 3 (1), 21-26
- **von V. Ferrari.** Object detection by contour segment networks. *European conference on computer vision (ECDB), Graz,* Mai 2006
- **B. V. Funt ; G. D. Finlayson.** Color constant color indexing. *IEEE Transactions on Pattern Analysis and Machine Intelligence,* 1995, vol. 17 (5), 522-529
- **J. Kludas.** Color indexing, constant color indexing. *Hauptseminar, TU-Ilmenau,* 2005
- **P. Lambert ; N. Hervey ; H. Grecu.** Image retrieval using spatial chromatic histograms. Imaging and Vision. *CGIV 2004 - Second European Conference on Color in Graphics,* 2004, 343-347
- **G. Ciocca ; R. Schettini ; L. Cinque.** Image indexing and retrieval using spatial chromatic histograms and signatures. Imaging and Vision. *CGIV 2002 - First European Conference on Color in Graphics, University of Poitiers (France),* 02. April 2002